(19) Europäisches Patentamt
European Patent Office
Office européen des brevets

(11) EP 4 582 498 A1

# (12) EUROPEAN PATENT APPLICATION

published in accordance with Art. 153(4) EPC

(43) Date of publication:
**09.07.2025 Bulletin 2025/28**

(21) Application number: **23860284.1**

(22) Date of filing: **28.08.2023**

(51) International Patent Classification (IPC):
***C09D 11/037*** *(2014.01)* ***B41M 1/04*** *(2006.01)*
***B41M 1/10*** *(2006.01)* ***B41M 1/30*** *(2006.01)*

(52) Cooperative Patent Classification (CPC):
**B41J 2/00; B41M 1/04; B41M 1/10; B41M 1/30; B41M 5/00; C09D 11/02; C09D 11/037**

(86) International application number:
**PCT/JP2023/030996**

(87) International publication number:
**WO 2024/048522 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022 JP 2022136010**
**03.04.2023 JP 2023059717**

(71) Applicants:
- **Artience Co., Ltd.**
  **Chuo-ku**
  **Tokyo 104-8377 (JP)**
- **TOYOCOLOR CO., LTD.**
  **Tokyo 104-8381 (JP)**

(72) Inventor: **SAKAMOTO Shohei**
**Tokyo 104-8381 (JP)**

(74) Representative: **Becker, Eberhard**
**Becker Kurig & Partner**
**Patentanwälte mbB**
**Bavariastraße 7**
**80336 München (DE)**

## (54) PRINTING INK SET, PRINTED MATTER, AND PACKAGING MATERIAL

(57) A printing ink set comprising: a yellow ink comprising an isoindoline compound represented by general formula (1) or C.I. Pigment Yellow 180 and a dispersion medium; a cyan ink comprising a phthalocyanine pigment and a dispersion medium; a magenta ink A comprising C.I. Pigment Red 122 or C.I. Pigment Violet 19 and a dispersion medium; and a magenta ink B comprising a diketopyrrolopyrrole pigment represented by general formula (101) or a perylene pigment represented by general formula (201) and a dispersion medium.

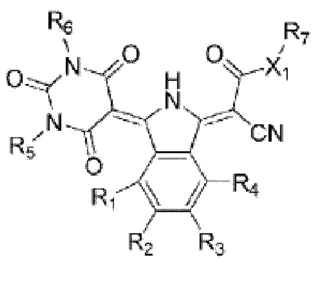

(1)

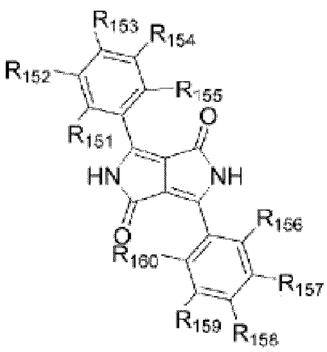

(101)

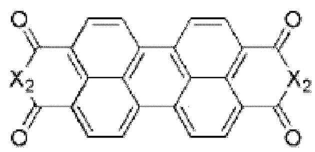

(201)

EP 4 582 498 A1

## Description

### Technical Field

Embodiments of the present invention relate to a printing ink set including printing inks of at least three primary colors, a printed matter, and a packaging material.

### Related Art

A printing ink includes a pigment and a dispersion medium as main materials, and is used to form a printing layer on various substrates such as plastics and paper. Printing inks are broadly classified from the viewpoint of printing methods or applications thereof. For example, from the viewpoint of printing methods, there are offset printing ink, flexo printing ink, gravure printing ink, and silk screen printing ink.

In addition, printing inks are configured according to various applications, and can also be broadly classified according to the form of the dispersion medium. For example, there are solvent-free (active energy ray curable) printing ink including a resin as a dispersion medium, and solvent-based printing ink including an organic solvent as a dispersion medium. Furthermore, water-based printing ink including a resin and water as a dispersion medium can be mentioned.

In this way, printing inks are used in various printing methods, and are configured in various forms. Examples of applications of printing inks include printed matters and packaging materials using the printed matters. Examples of the printed matters include posters, labels, and medicine boxes, which have a printing layer formed on a substrate. Besides, examples of the packaging materials include packaging materials for packaging items such as food products, beverages, daily necessities, cultural goods, and electronic components.

The printing ink used for printed matter and packaging material applications is required to have at least color reproducibility. However, in recent years, the expansion of applications for printed matters and packaging materials has been remarkable, and the forms of use for printed matters and packaging materials are diverse. Therefore, various performance requirements are also demanded for the printing ink used in applications for printed matter and packaging material.

For example, in addition to the function of maintaining the quality of the contents and improving transportation efficiency, a packaging material is required to have a function of appropriately displaying product information of the contents. To appropriately display product information, a printing layer is formed on the packaging material for the purposes of decoration, imparting aesthetic appeal, and displaying contents, expiration date, manufacturer, or seller. Such display provided by the printing layer is very important information for logistics personnel and consumers. Brand marks or brand colors may be used as product information, and in this case, high design properties are required for printed matter and packaging material, including the imparting of aesthetic appeal. Therefore, a printing ink with color reproducibility that can be suitably used for printed matter and packaging material applications is necessary.

In addition, when a printed matter or a packaging material is used outdoors, for example, problems such as discoloration or fading due to sunlight may arise. Furthermore, the packaging material and packaged item may be stored under light exposure for a long period of time. Even under such storage conditions, fading may occur, causing a problem that the appearance deviates from the intended packaging design. Also, in packaging material applications, the cohesive strength or adhesive strength of the printing layer may decrease due to the influence of radicals generated by light exposure during storage, which may result in reduced laminate strength. As a result, problems such as interlayer delamination of the laminate may occur when opening the packaged item and packaging material that have been stored for a long period of time under light exposure.

From such a viewpoint, the printing ink used for printed matter or packaging material applications is desirable to have excellent durability such as weather resistance and light resistance, in addition to excellent color reproducibility. In particular, regarding light exposure during storage, while sunlight or fluorescent lamps are conventionally common as light sources for lighting, the use of white LEDs for indoor lighting has increased significantly in recent years. Therefore, the printing ink may be required to have durability such as light resistance that differs from conventional requirements.

As mentioned above, as representative performance of a printing ink, excellent color reproducibility and durability such as weather resistance and light resistance are required, and various studies are being conducted.

For example, methods for imparting light resistance to packaging materials are being studied. For instance, Patent Literature 1 discloses that a packaging material with excellent light resistance can be provided by using a printing ink including a specific pigment and a polyurethane resin. Further, Patent Literature 2 discloses that by using a printing ink with a certain amount of ultraviolet absorber or light stabilizer added, degradation of the coating film due to light exposure can be suppressed, and a packaging material with excellent light resistance can be provided.

### Citation List

Patent Literatures

Patent Literature 1: Japanese Patent Application Laid-Open No. 2012-136582
Patent Literature 2: Japanese Patent Application Laid-Open No. 2006-70190

SUMMARY OF INVENTION

Problems to be Solved by the Invention

However, when using a specific pigment as in the method of Patent Literature 1, there is a tendency for the reproducible color gamut to decrease compared to representative printing inks used in packaging materials, making it difficult to obtain the desired design properties. Additionally, in the method of Patent Literature 2, the manufacturing cost of the printing ink is high because the ultraviolet absorber or light stabilizer used is expensive. Furthermore, when an ultraviolet absorber or light stabilizer is added to the printing ink, the stability of the ink over time may decrease, potentially causing gelation.

Thus, further studies are desired towards the realization of a printing ink that has excellent color reproducibility and excellent durability such as weather resistance and light resistance. In particular, studies are desired for a printing ink set, a printed matter, and a packaging material that have excellent color reproducibility and excellent light resistance under both sunlight exposure and white LED lighting exposure. Additionally, for applications requiring highly sophisticated design properties, such as packaging materials, there is an increasing need for an ink set that can reproduce a wider color gamut and have less color change over time.

Therefore, in view of the above situation, the present invention provides a printing ink set that has excellent light resistance and excellent color reproducibility. Furthermore, the present invention provides a printed matter and a packaging material that have excellent design properties, light resistance, and excellent adhesion of a printing layer by using the printing ink set. Means for Solving the Problems

The embodiments of the present invention relate to the following. However, the embodiments of the present invention are not limited to the following and include various embodiments.

[1] A printing ink set, including:

a yellow ink including an isoindoline compound represented by the following general formula (1) or C.I. Pigment Yellow 180 and a dispersion medium;
a cyan ink including a phthalocyanine pigment and a dispersion medium;
a magenta ink A including C.I. Pigment Red 122 or C.I. Pigment Violet 19 and a dispersion medium; and
a magenta ink B including a diketopyrrolopyrrole pigment represented by the following general formula (101) or a perylene pigment represented by the following general formula (201) and a dispersion medium.

[Chemical Formula 1]

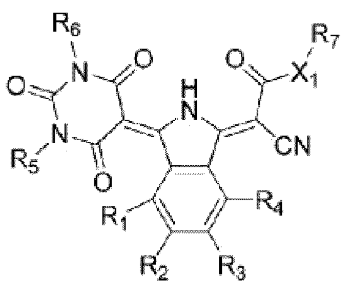

(1)

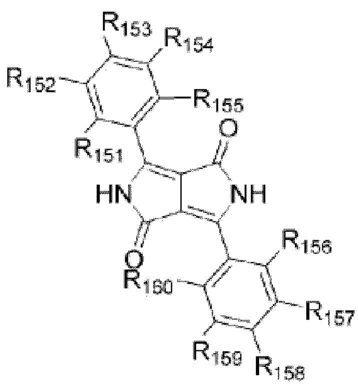

(101)

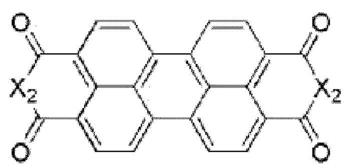

(201)

In general formula (1), $R_1$ to $R_4$ each independently represent a hydrogen atom, an alkyl group, or an alkoxy group. $R_5$ and $R_6$ each independently represent a hydrogen atom or an alkyl group. $X_1$ represents -O- or -NH-, and $R_7$ represents a hydrogen atom, an alkyl group, or an aryl group.

In general formula (101), $R_{151}$ to $R_{160}$ each independently represent a hydrogen atom, a halogen atom, an alkyl group, an alkoxy group, an alkylthio group, a cyano group, or an aryl group.

In general formula (201), $X_2$ represents -O- or -$NR_{201}$-, and $R_{201}$ represents a hydrogen atom, an alkyl group, or an aryl group which may have a substituent.

[2] The printing ink set according to [1], wherein the isoindoline compound represented by the general formula (1) includes at least one compound selected from a group consisting of the following formulas (4) and (5).

[Chemical Formula 2]

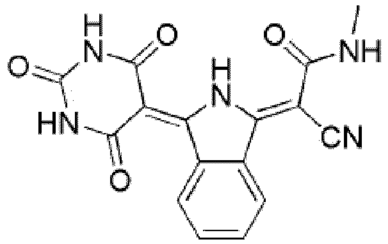

(4)

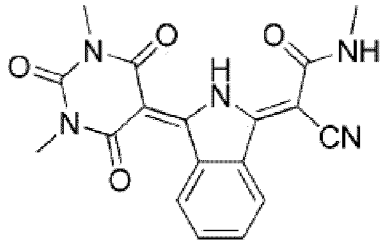

(5)

[3] The printing ink set according to [1] or [2], which is used for gravure printing.
[4] The printing ink set according to [1] or [2], which is used for flexo printing.
[5] A printed matter, having a substrate and a printing layer formed from the printing ink set according to any one of [1] to [4].
[6] A packaging material, including the printed matter according to [5].
[7] A printed matter, having at least four types of image areas including yellow, cyan, and two types of magenta on a substrate, the printed matter including:

a yellow image area including an isoindoline compound represented by the following general formula (1) or C.I. Pigment Yellow 180 and a dispersion medium;
a cyan image area including a phthalocyanine pigment and a dispersion medium;
a magenta image area A including C.I. Pigment Red 122 or C.I. Pigment Violet 19 and a dispersion medium; and
a magenta image area B including a diketopyrrolopyrrole pigment represented by the following general formula (101) or a perylene pigment represented by the following general formula (201) and a dispersion medium.

[Chemical Formula 2A]

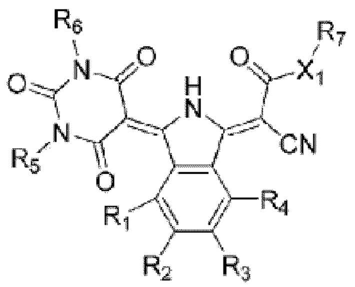

(1)

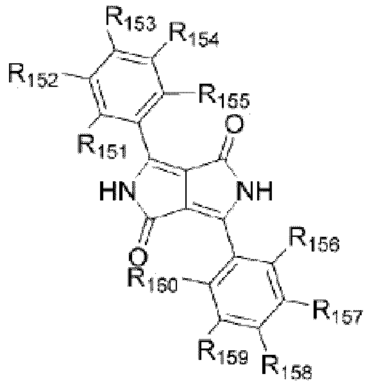

(101)

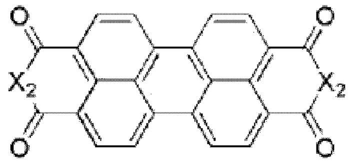

(201)

[In general formula (1), $R_1$ to $R_4$ each independently represent a hydrogen atom, an alkyl group, or an alkoxy group. $R_5$ and $R_6$ each independently represent a hydrogen atom or an alkyl group. $X_1$ represents -O- or -NH-, and $R_7$ represents a hydrogen atom, an alkyl group, or an aryl group.

In general formula (101), $R_{151}$ to $R_{160}$ each independently represent a hydrogen atom, a halogen atom, an alkyl group, an alkoxy group, an alkylthio group, a cyano group, or an aryl group.

In general formula (201), $X_2$ represents -O- or $-NR_{201}-$, and $R_{201}$ represents a hydrogen atom, an alkyl group, or an aryl group which may have a substituent.]

[8] A packaging material, including the printed matter according to [7].

The disclosure of this application is related to the subject matters described in Japanese Patent Application No. 2022-136010 filed on August 29, 2022, and Japanese Patent Application No. 2023-59717 filed on April 3, 2023, the entire disclosed contents of which are incorporated herein by reference.

Effects of the Invention

According to the present invention, it is possible to provide a printing ink set that has a color gamut equivalent to or greater than conventional printing ink sets, excellent light resistance, and high color reproducibility. Furthermore, it is possible to provide a printed matter and a packaging material that have excellent design properties and excellent light resistance by using the printing ink set.

DESCRIPTION OF EMBODIMENTS

The terms used in this specification will be defined first. Unless otherwise specified, in the case where "(meth) acryloyl" or "(meth)acrylic" is written, it means "acryloyl and/or methacryloyl" or "acrylic and/or methacrylic". Similarly, in the case where "(meth)acrylic acid", "(meth)acrylate", or "(meth)acrylamide" is written, it means "acrylic acid and/or methacrylic acid", "acrylate and/or methacrylate", or "acrylamide and/or methacrylamide".

Further, "C.I." means Color Index (C.I.).

In this specification, a numerical range specified using "~" includes the numerical values stated before and after "~" as the lower limit value and the upper limit value of the range.

Unless specifically noted otherwise, the various components described in this specification may be used independently, either alone or in combination of two or more types.

It should be noted that the average primary particle diameter of a pigment is a value directly measured from the size of primary particles in electron microscope photographs using a transmission electron microscope (TEM).

These can be measured by the method described in the [Examples] section.

Furthermore, the numerical values specified in this specification are values obtained by the method disclosed in the embodiments or examples.

The embodiments of the present invention will be described hereinafter. However, the present invention is not limited to the following description, and includes various embodiments.

<Printing Ink Set>

An embodiment of the present invention relates to a printing ink set (hereinafter also simply referred to as ink set) including printing inks of at least three primary colors. The printing ink set includes a yellow ink including an isoindoline

compound represented by general formula (1) or C.I. Pigment Yellow 180 and a dispersion medium, a cyan ink including a phthalocyanine pigment and a dispersion medium, a magenta ink A including C.I. Pigment Red 122 or C.I. Pigment Violet 19 and a dispersion medium, and a magenta ink B including a diketopyrrolopyrrole pigment represented by general formula (101) or a perylene pigment represented by general formula (201) and a dispersion medium.

In an embodiment, the printing ink set may further include other inks such as black ink, white ink, and special color inks, in addition to the four printing inks mentioned above.

The printing ink set of this embodiment can be applied to various printing methods. The printing ink set of this embodiment can be used in printing methods such as offset printing, flexo printing, gravure printing, and screen printing. Among these, a printing ink set for gravure printing (hereinafter referred to as gravure printing ink set) and a printing ink set for flexo printing (hereinafter referred to as flexo printing ink set) are preferable, and these can be suitably used for printing applications of a packaging material. The printing ink set of this embodiment has high color reproducibility even without using special color inks or the like, as the printing ink set uses the above-mentioned four printing inks. Therefore, the process of changing plates or colors each time to use special color inks or color-adjusted inks becomes unnecessary, especially in gravure printing and flexo printing. As a result, the effect of reducing the overall number of processes related to printing and enabling efficient printing can also be achieved.

The following describes the ink of each color in the printing ink set of this embodiment.

<Yellow Ink>

The yellow ink in the printing ink set includes an isoindoline compound represented by general formula (1) (isoindoline compound (1)) or C.I. Pigment Yellow 180 and a dispersion medium which will be described later. The yellow ink forms a yellow image area on a printed matter by printing.

[Isoindoline Compound (1)]

Hereinafter, the isoindoline compound represented by general formula (1) is also referred to as isoindoline compound (1).

[Chemical Formula 3]

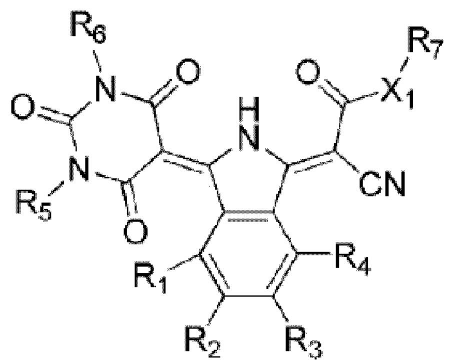

(1)

In general formula (1), $R_1$ to $R_4$ each independently represent a hydrogen atom, an alkyl group, or an alkoxy group. $R_5$ and $R_6$ each independently represent a hydrogen atom or an alkyl group. $X_1$ represents -O- or -NH-, and $R_7$ represents a hydrogen atom, an alkyl group, or an aryl group.

The isoindoline compound (1) can be used alone or in combination of two or more types.

In general formula (1), the number of carbon atoms in the alkyl group (-R) in $R_1$ to $R_4$ is preferably 1 to 20, more preferably 1 to 10, further preferably 1 to 4, and even more preferably 1 to 3. An alkyl group with 1 or 2 carbon atoms is most preferable.

The alkyl group may be any of a linear structure, a branched structure, a monocyclic structure, or a fused polycyclic structure.

Examples of the alkyl group include a methyl group, an ethyl group, a propyl group, a butyl group, a pentyl group, a

hexyl group, a heptyl group, an octyl group, a nonyl group, a decyl group, a dodecyl group, an octadecyl group, an isopropyl group, an isobutyl group, an isopentyl group, a 2-ethylhexyl group, a 2-hexyldodecyl group, a sec-butyl group, a tert-butyl group, a sec-pentyl group, a tert-pentyl group, a tert-octyl group, a neopentyl group, a cyclopropyl group, a cyclobutyl group, a cyclopentyl group, a cyclohexyl group, an adamantyl group, a norbornyl group, a bornyl group, or a 4-decylcyclohexyl group.

The above alkyl group may have at least one hydrogen atom substituted with other substituents such as a halogen atom, a hydroxyl group, an alkoxy group, a carboxyl group, an ester group, a sulfo group, a sulfanyl group, a sulfamoyl group, an amino group, an alkylamino group, and an amide group. Multiple substituents may also be present. It should be noted that the substituents are not limited to the aforementioned.

The above alkyl group may have a structure in which two or more alkyl groups (however, one becomes an alkylene group) are bonded to each other via a linking group. Specific examples of the linking group include an ester bond (-COO-), an ether bond (-O-), a sulfide bond (-S-), etc. In other words, in this specification, examples of the alkyl group include a group represented by "-R'-O-R" (R' represents an atomic group obtained by removing one hydrogen atom from the above alkyl group). A specific example is $-C_2H_4-O-C_2H_5$.

In general formula (1), the alkoxy group in $R_1$ to $R_4$ is a group (-OR) in which an oxygen atom is bonded to the above alkyl group (-R).

In an embodiment, in general formula (1), $R_1$ to $R_4$ are each preferably a hydrogen atom.

In general formula (1), the alkyl group (-R) in $R_5$ to $R_7$ is the same as the alkyl group in $R_1$ to $R_4$. In other words, in an embodiment, in general formula (1), the number of carbon atoms in the alkyl group (-R) in $R_5$ to $R_7$ may be 1 to 20, and it is most preferable that the number of carbon atoms is 1 or 2.

In general formula (1), the aryl group (-Ar) in $R_7$ is an atomic group obtained by removing one hydrogen atom from an aromatic hydrocarbon. The number of carbon atoms is preferably 6 to 30, and more preferably 6 to 20.

Examples of the above aryl group include a phenyl group, a tolyl group, a biphenylyl group, a terphenylyl group, a quaterphenylyl group, a pentalenyl group, an indenyl group, a naphthyl group, a binaphthylenyl group, a ternaphthylenyl group, a quaternaphthylenyl group, an azulenyl group, a heptalenyl group, a biphenylene group, an indacenyl group, a fluoranthenyl group, an acephenanthrylenyl group, an aceanthrylenyl group, a phenalenyl group, a fluorenyl group, an anthryl group, a bianthracenyl group, a teranthracenyl group, a quateranthracenyl group, an anthraquinolyl group, a phenanthryl group, a triphenylenyl group, a pyrenyl group, a chrysenyl group, a naphthacenyl group, a pleiadenyl group, a picenyl group, a perylenyl group, a pentaphenyl group, a pentacenyl group, a tetraphenylenyl group, a hexaphenyl group, a hexacenyl group, a rubicenyl group, a coronenyl group, a trinaphthylenyl group, a heptaphenyl group, a heptacenyl group, a pyranthryl group, or an ovalenyl group. Among these, a phenyl group and a tolyl group are preferable.

The above aryl group may have at least one hydrogen atom substituted with other substituents such as a halogen atom, a hydroxyl group, an alkoxy group, a carboxyl group, an ester group, a sulfo group, a sulfanyl group, a sulfamoyl group, an amino group, an alkylamino group, and an amide group. Multiple substituents may also be present. It should be noted that the substituents are not limited to the aforementioned.

In an embodiment, $R_5$ and $R_6$ are each preferably a hydrogen atom, a methyl group, or an ethyl group. $R_7$ is preferably an alkyl group, and more preferably a methyl group or an ethyl group.

In general formula (1), $X_1$ represents -O- or -NH-, and is preferably -NH-.

In an embodiment, the isoindoline compound represented by general formula (1) preferably includes at least one compound selected from the group consisting of the following formulas (4) and (5).

[Chemical Formula 4]

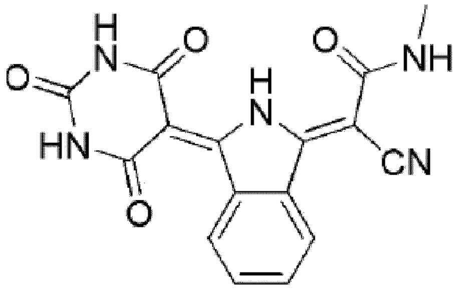

(4)

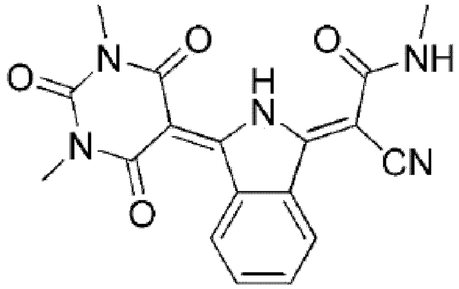

(5)

By using the isoindoline compound represented by the above formula (4) (hereinafter also referred to as isoindoline compound (4)), or the isoindoline compound represented by the above formula (5) (hereinafter also referred to as isoindoline compound (5)), it is possible to achieve both higher color reproducibility and light resistance. The isoindoline compound (1) can be manufactured according to known methods. The isoindoline compound (1) can also be obtained as a commercially available product. For example, C.I. Pigment Yellow 185 can be used as a pigment including the above isoindoline compound (4). Examples of commercially available C.I. Pigment Yellow 185 include Paliotol Yellow D1155 manufactured by BASF C&E and TCY18501NS manufactured by Trustchem.

[Manufacturing Method of Isoindoline Compound (1)]

The isoindoline compound (1) can be synthesized using 1,3-diiminoisoindoline represented by formula (6) (hereinafter also referred to as compound (6)) as a starting material, as shown in the following Scheme 1.

The synthesis method will be described below according to specific examples of the isoindoline compound (1). In the following description, the numbers shown in each formula are used as compound numbers.

(Scheme 1-1)

[Chemical Formula 5]

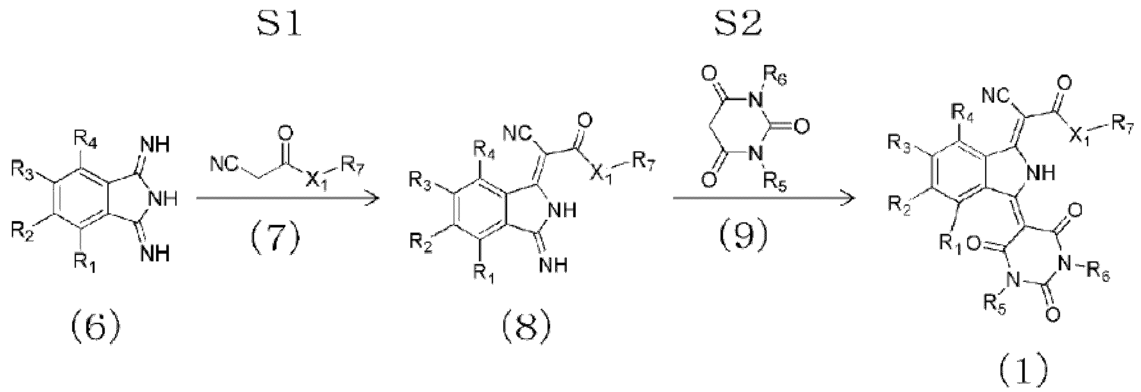


(6) (8) (1)

Scheme 1-1 may include a first step (S1) of reacting compound (6) with compound (7) in the presence of an aqueous ammonia solution; and then a second step (S2) of reacting compound (8) with compound (9) in the presence of acetic acid.

In the first step (S1) of Scheme 1-1, in the case of using a 28% aqueous ammonia solution, the usage amount of aqueous ammonia solution is preferably 1 to 20 times, and more preferably 1 to 5 times, per 100 parts by mass of compound (6).

The reaction temperature in each step of Scheme 1-1 is preferably about 10°C to 100°C.

In the case where the relationship between substituents $R_1$ and $R_4$, the relationship between substituents $R_2$ and $R_3$, or the relationship between substituents $R_5$ and $R_6$ of the isoindoline compound (1) is asymmetric, the final product is obtained as a mixture including isomers. The isoindoline compound (1) may be any of a mixture including isomers and individual single compounds.

A pigment is preferably prepared by subjecting the isoindoline compound (1) to particle size adjustment treatment or surface treatment using known methods. Examples of the methods include a dissolution-precipitation method represented by acid pasting, solvent salt milling, dry milling, etc.

[C.I. Pigment Yellow 180]

C.I. Pigment Yellow 180 is a pigment composed of a compound represented by the following formula (10), and is manufactured by known methods. C.I. Pigment Yellow 180 can also be obtained as a commercially available product. Examples include Novoperm Yellow PH-G manufactured by Clariant.

[Chemical Formula 6]

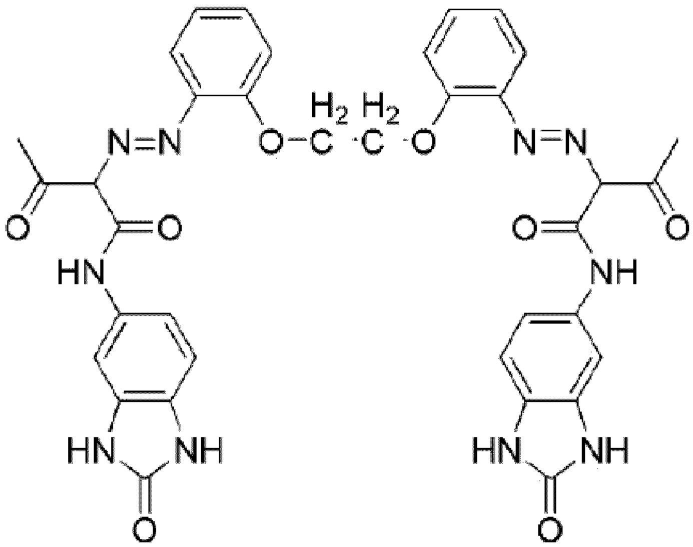

(10)

The average primary particle diameter of C.I. Pigment Yellow 180 is preferably 70 nm to 250 nm, and more preferably 100 nm to 200 nm. By setting the average primary particle diameter to 250 nm or less, transparency is improved, and high color reproducibility can be obtained. Additionally, by setting the average primary particle diameter to 70 nm or more, light resistance is further improved.

The yellow ink may further include, to an extent that does not impair the effects of the present invention, yellow pigments other than the above pigments (hereinafter referred to as other yellow pigments), resins, organic solvents, pigment dispersants, and other additives.

[Other Yellow Pigments]

Examples of other yellow pigments include isoindoline compounds represented by the following general formulas (2-1) and (2-2), C.I. Pigment Yellow 12, C.I. Pigment Yellow 13, C.I. Pigment Yellow 14, C.I. Pigment Yellow 17, C.I. Pigment Yellow 83, C.I. Pigment Yellow 93, C.I. Pigment Yellow 95, C.I. Pigment Yellow 109, C.I. Pigment Yellow 110, C.I. Pigment Yellow 120, C.I. Pigment Yellow 138, C.I. Pigment Yellow 151, C.I. Pigment Yellow 155, C.I. Pigment Yellow 174, etc.

However, it is advisable to minimize the use of these other yellow pigments as there is a risk of reducing light resistance or color gamut reproduction.

[Chemical Formula 7]

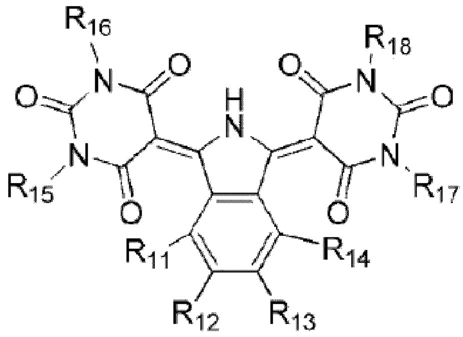

(2-1)

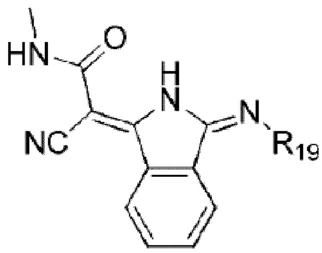

(2-2)

In general formula (2-1), $R_{11}$ to $R_{14}$ each independently represent a hydrogen atom, an alkyl group, or an alkoxy group. $R_{15}$ to $R_{18}$ each independently represent a hydrogen atom or an alkyl group.

In addition, in general formula (2-2), $R_{19}$ represents an alkyl group which may have a substituent.

In general formula (2-1), the alkyl group (-R) and alkoxy group in $R_{11}$ to $R_{14}$ are the same as the alkyl group and alkoxy group in $R_1$ to $R_4$ in general formula (1). Additionally, in general formula (2-1), the alkyl group (-R) in $R_{15}$ to $R_{18}$ is the same as the alkyl group in $R_5$ to $R_6$ in general formula (1).

Furthermore, in general formula (2-2), the alkyl group (-R) in $R_{19}$ is the same as the alkyl group in $R_1$ to $R_4$ in general formula (1), and the substituents are also the same.

From the viewpoint of color reproducibility, based on the total pigments included in the yellow ink as a reference (100 mass%), the content ratio of the isoindoline compound (1) and C.I. Pigment Yellow 180 is preferably higher. Specifically, the above content ratio is preferably 70 mass% or more, more preferably 80 mass% or more, even more preferably 90 mass% or more, and particularly preferably 95 mass% or more. In the case where the yellow ink includes both the isoindoline compound (1) and C.I. Pigment Yellow 180, it is preferable that the total content is at or above the above content ratio.

<Cyan Ink>

The cyan ink in the printing ink set includes a phthalocyanine pigment and a dispersion medium which will be described later. The cyan ink forms a cyan image area on the printed matter by printing.

[Phthalocyanine Pigment]

The phthalocyanine pigment is a pigment composed of a compound represented by the following general formula (3), and can be manufactured by known methods.

[Chemical Formula 8]

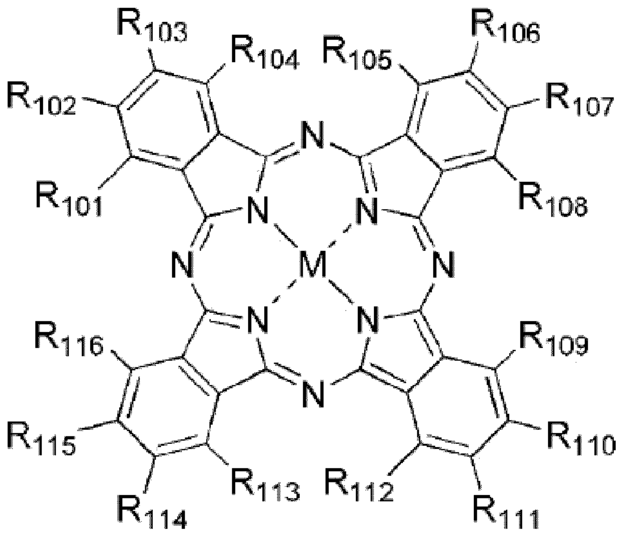

(3)

In general formula (3), $R_{101}$ to $R_{116}$ each independently represent a hydrogen atom, a halogen atom, and an alkyl group, an aryl group, an alkoxy group, and an aryloxy group which may have substituents. M represents two hydrogen atoms, two monovalent metal atoms, a divalent metal atom, a trivalent substituted metal atom, a tetravalent substituted metal atom, or an oxidized metal atom. In an embodiment, the phthalocyanine pigment is preferably a metal phthalocyanine pigment. That is, M is preferably two monovalent metal atoms, a divalent metal atom, a trivalent substituted metal atom, a tetravalent substituted metal atom, or an oxidized metal atom. M is more preferably a divalent metal atom, a trivalent substituted metal atom, a tetravalent substituted metal atom, or an oxidized metal atom, and even more preferably a divalent metal atom. In an embodiment, a copper phthalocyanine pigment in which M is a copper atom is preferable.

Examples of the alkyl group include linear or branched chain alkyl groups. Specific examples include a methyl group, an ethyl group, a propyl group, a butyl group, a pentyl group, a hexyl group, a heptyl group, an octyl group, a nonyl group, a decyl group, a dodecyl group, an octadecyl group, an isopropyl group, an isobutyl group, an isopentyl group, a 2-ethylhexyl group, a sec-butyl group, a tert-butyl group, a sec-pentyl group, a tert-pentyl group, a tert-octyl group, a neopentyl group, etc. The number of carbon atoms in the alkyl group is preferably in the range of 1 to 30.

Examples of substituents in the above alkyl group include halogen atoms such as fluorine, chlorine, and bromine, a hydroxyl group, an amino group, a nitro group, a formyl group, a cyano group, a carboxyl group, as well as an aryl group, a cycloalkyl group, and a heterocyclic group which will be described later. In addition, substituents also include those in which a part of the structure is substituted with an ester bond (-COO-) or an ether bond (-O-).

Therefore, a substituted alkyl group means an alkyl group substituted with the above substituents. The alkyl group may be substituted with one or two or more substituents. For example, specific examples of an alkyl group substituted with halogen atoms include a trifluoromethyl group, a 2,2,2-trifluoroethyl group, $-(CF_2)_4CF_3$, $-(CF_2)_5CF_3$, $-(CF_2)_6CF_3$, $-(CF_2)_7CF_3$, $-(CF_2)_8CF_3$, a trichloromethyl group, a 2,2-dibromoethyl group, etc.

Examples of the aryl group include monocyclic or fused polycyclic aryl groups. Examples include a phenyl group, a 1-naphthyl group, a 2-naphthyl group, a p-biphenyl group, a m-biphenyl group, a 2-anthryl group, a 9-anthryl group, a 2-phenanthryl group, a 3-phenanthryl group, a 9-phenanthryl group, a 2-fluorenyl group, a 3-fluorenyl group, a 9-fluorenyl group, a 1-pyrenyl group, a 2-pyrenyl group, a 3-perylenyl group, an o-tolyl group, a m-tolyl group, a p-tolyl group, a 4-methylbiphenyl group, a terphenyl group, a 4-methyl-1-naphthyl group, a 4-tert-butyl-1-naphthyl group, a 4-naphthyl-1-naphthyl group, a 6-phenyl-2-naphthyl group, a 10-phenyl-9-anthryl group, a spirofluorenyl group, a 2-benzocyclobutenyl group, etc. The number of carbon atoms in the aryl group is preferably in the range of 6 to 18. Examples of substituents for a substituted aryl group include the same substituents as those for the alkyl group described above.

Examples of the alkoxy group include linear or branched chain alkoxy groups. Specific examples include a methoxy group, an ethoxy group, a propoxy group, an isopropoxy group, a n-butoxy group, an isobutoxy group, a tert-butoxy group, a neopentyloxy group, a 2,3-dimethyl-3-pentyloxy group, a n-hexyloxy group, a n-octyloxy group, a stearyloxy group, a 2-ethylhexyloxy group, etc. The number of carbon atoms in the alkoxy group is preferably in the range of 1 to 6. Examples of substituents for a substituted alkoxy group include the same substituents as those for the alkyl group described above.

Examples of the aryloxy group include monocyclic or fused polycyclic aryloxy groups. Specific examples include a phenoxy group, a p-methylphenoxy group, a naphthyloxy group, an anthryloxy group, etc. The aryloxy group is preferably a monocyclic aryloxy group. In addition, an aryloxy group with 6 to 12 carbon atoms is preferable.

Examples of monovalent metal atoms for M include Na, K, Li, etc.

Examples of metal atoms included in divalent metal atoms, trivalent substituted metal atoms, tetravalent substituted metal atoms, or oxidized metal atoms for M include metal atoms belonging to Groups 2 to 15 of the periodic table. Specific examples include Cu, Zn, Fe, Co, Ni, Ru, Pb, Rh, Pd, Pt, Mn, Sn, Pb, Ca, Mg, etc.

Examples of trivalent substituted metal atoms include metal atoms such as Al, Ga, In, Tl, Cr, Mn, Fe, and Ru bonded with substituents such as halogen atoms (-F, -Cl, -Br, -I), a hydroxyl group, an aryl group which may have a substituent, an aryloxy group, a silyloxy group, a phosphinyl group, a phosphonyl group, etc.

Examples of tetravalent substituted metal atoms include metal atoms such as Cr, Si, Zr, Ge, Sn, Ti, and Mn bonded with two substituents such as halogen atoms (-F, -Cl, -Br, -I), a hydroxyl group, an aryl group which may have a substituent, an aryloxy group, a silyloxy group, a phosphinyl group, a phosphonyl group, etc.

Examples of oxidized metal atoms include VO, MnO, TiO, etc.

M is preferably Cu, Zn, Fe, Ca, Mg, Al-OH, or TiO, more preferably Cu, Al-OH, or TiO, and even more preferably Cu.

Among general formula (3), copper phthalocyanine (compound (11)) where M is Cu, aluminum phthalocyanine (compound (12)) where M is Al-OH, and titanyl phthalocyanine (compound (13)) where M is TiO are preferable.

[Chemical Formula 9]

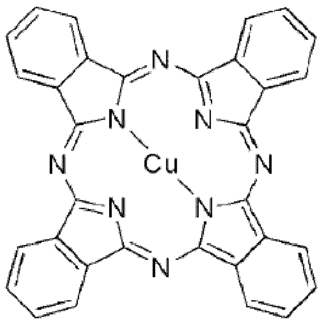

(1 1)

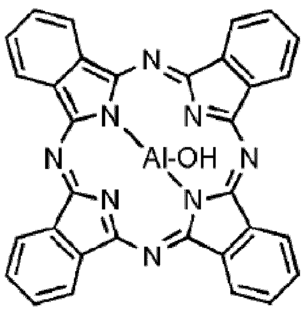

(1 2)

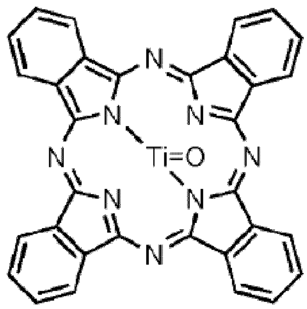

(1 3)

Examples of the phthalocyanine pigment include C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, C.I. Pigment Blue 16, etc. Among these, it is preferable to include at least one copper phthalocyanine pigment selected from the group consisting of C.I. Pigment Blue 15:3, C.I. Pigment Blue 15:4, and C.I. Pigment Blue 15:6, and it is more preferable to include C.I. Pigment Blue 15:3 or C.I. Pigment Blue 15:4.

The cyan ink can further include, to an extent that does not impair the effects of the present invention, blue pigments other than the above pigments (hereinafter referred to as other blue pigments), resins, organic solvents, pigment dispersants, and other additives.

Examples of other blue pigments include C.I. Pigment Blue 60, etc.

In the pigments included in the cyan ink, the content ratio of the phthalocyanine pigment is preferably higher. Specifically, the content ratio is preferably 70 mass% or more, more preferably 80 mass% or more, even more preferably 90 mass% or more, and particularly preferably 95 mass% or more.

The printing ink set of this embodiment is characterized by including two types of magenta inks as magenta inks: magenta ink A and magenta ink B, which will be described later.

<Magenta Ink A>

The magenta ink A in the printing ink set of this embodiment includes C.I. Pigment Red 122 or C.I. Pigment Violet 19, and a dispersion medium which will be described later. The magenta ink A forms a magenta image area A on the printed matter by printing.

The pigments included in the magenta ink A are not limited as long as the pigments include at least one of C.I. Pigment Red 122 and C.I. Pigment Violet 19, but it is preferable to use C.I. Pigment Red 122 alone or C.I. Pigment Violet 19 alone.

[C.I. Pigment Red 122]

C.I. Pigment Red 122 may be a mixed crystal with other quinacridone compounds such as C.I. Pigment Red 202, C.I. Pigment Red 209, and C.I. Pigment Violet 19. However, to maximize the effects of the present invention, it is preferable to use C.I. Pigment Red 122 alone as the pigment.

The average primary particle diameter of C.I. Pigment Red 122 is preferably 50 nm to 150 nm, and more preferably 60 nm to 130 nm. By setting the average primary particle diameter to 150 nm or less, transparency is improved, and high color reproducibility can be obtained. In addition, by setting the average primary particle diameter to 50 nm or more, light resistance is further improved.

[C.I. Pigment Violet 19]

C.I. Pigment Violet 19 has crystal polymorphism, but the crystal form is preferably $\gamma$-type.

C.I. Pigment Violet 19 may be a mixed crystal with other quinacridone compounds such as C.I. Pigment Red 122, C.I. Pigment Red 202, and C.I. Pigment Red. However, to maximize the effects of the present invention, it is preferable to use C.I. Pigment Violet 19 alone as the pigment.

The average primary particle diameter of C.I. Pigment Violet 19 is preferably 30 nm to 120 nm, and more preferably 40 nm to 100 nm. By setting the average primary particle diameter to 120 nm or less, transparency is improved, and high color reproducibility can be obtained. In addition, by setting the average primary particle diameter to 30 nm or more, light resistance can be further improved.

From the viewpoint of color reproducibility, based on the total pigments included in the magenta ink A as a reference (100 mass%), the content ratio of C.I. Pigment Red 122 and C.I. Pigment Violet 19 is preferably higher. Specifically, the above content ratio is preferably 70 mass% or more, more preferably 80 mass% or more, even more preferably 90 mass% or more, and particularly preferably 95 mass% or more. In the case where the magenta ink includes both C.I. Pigment Red 122 and C.I. Pigment Violet 19, it is preferable that the total content is at or above the above content ratio.

<Magenta Ink B>

The magenta ink B in the printing ink set of this embodiment includes a diketopyrrolopyrrole pigment represented by the following general formula (101) or a perylene pigment represented by the following general formula (201), and a dispersion medium which will be described later. The magenta ink B forms a magenta image area B on the printed matter by printing.

The pigments included in the magenta ink B are not limited as long as the pigments include at least one of the diketopyrrolopyrrole pigment represented by general formula (101) and the perylene pigment represented by general formula (201). It is preferable to use the diketopyrrolopyrrole pigment represented by general formula (101) alone or the perylene pigment represented by general formula (201) alone.

Further, even in the case where the pigments include C.I. Pigment Red 122 or C.I. Pigment Violet 19, if the main pigment is at least one of the diketopyrrolopyrrole pigment represented by general formula (101) and the perylene pigment represented by general formula (201), it is considered as the magenta ink B. However, in the case where the content ratio of C.I. Pigment Red 122 and C.I. Pigment Violet 19 is the same as the content ratio of the diketopyrrolopyrrole pigment represented by general formula (101) and the perylene pigment represented by general formula (201), it is defined as the magenta ink A.

It should be noted that the main pigment refers to the pigment with the largest formulation amount among all pigments.

[Diketopyrrolopyrrole Pigment (101)]

Hereinafter, the diketopyrrolopyrrole pigment represented by general formula (101) is also referred to as diketopyrrolopyrrole pigment (101) or DPP pigment (101).

[Chemical Formula 10]

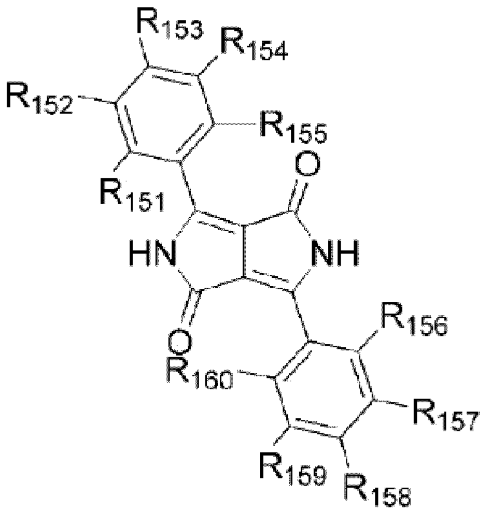

(1 0 1)

In general formula (101), $R_{151}$ to $R_{160}$ each independently represent a hydrogen atom, a halogen atom, an alkyl group, an alkoxy group, an alkylthio group, a cyano group, or an aryl group.

DPP pigment (101) can be used alone or in combination of two or more types.

In general formula (101), examples of the halogen atom in $R_{151}$ to $R_{160}$ include fluorine, chlorine, bromine, etc.

In general formula (101), the alkyl group in $R_{151}$ to $R_{160}$ is the same as the alkyl group in $R_1$ to $R_4$ in general formula (1).

In general formula (101), the alkoxy group in $R_{151}$ to $R_{160}$ is a group (-OR) in which an oxygen atom is bonded to the above alkyl group (-R).

In general formula (101), the alkylthio group in $R_{151}$ to $R_{160}$ is a group (-SR) in which a sulfur atom is bonded to the above alkyl group (-R).

In general formula (101), the aryl group in $R_{151}$ to $R_{160}$ is the same as the aryl group in $R_7$ in general formula (1).

The method for manufacturing DPP pigment (101) used in the present invention is not particularly limited, but for example, as disclosed in Japanese Patent Application Laid-Open No. S58-210084, DPP pigment (101) can be manufactured by reacting corresponding aromatic nitrile with succinic acid diester in an organic solvent.

Preferable examples of DPP pigment (101) include DPP pigments (102) to (119) represented by the following formulas (102) to (119).

[Chemical Formula 11]

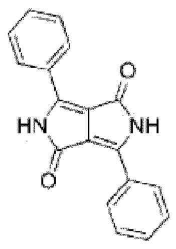

(1 0 2)

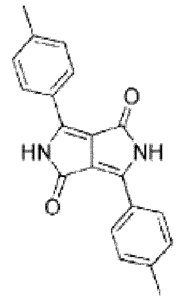

(1 0 3)

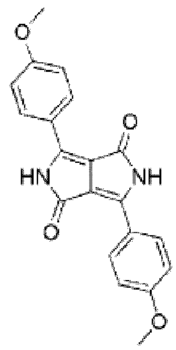

(1 0 4)

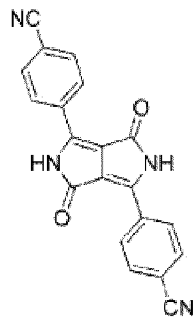

(1 0 5)

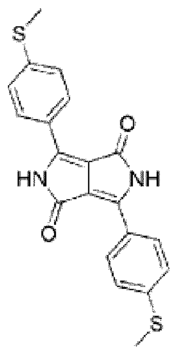

(1 0 6)

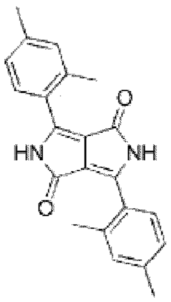

(1 0 7)

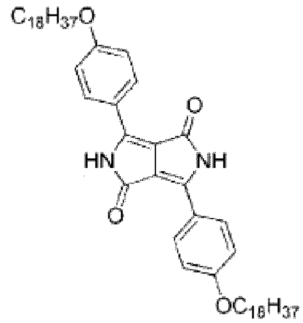

(1 0 8)

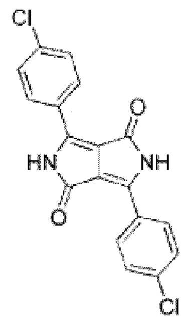

(1 0 9)

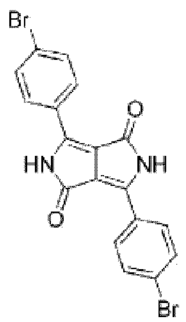

(1 1 0)

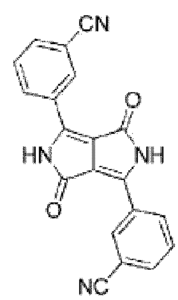

(1 1 1)

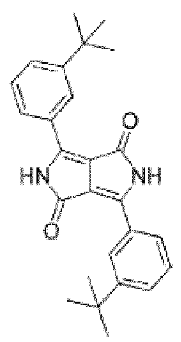

(1 1 2)

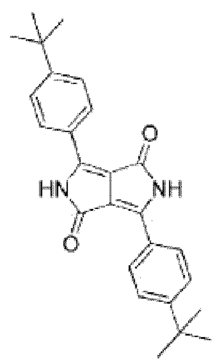

(1 1 3)

[Chemical Formula 12]

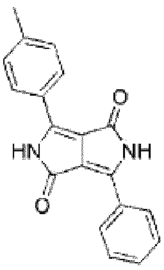
(114)

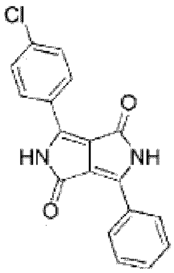
(115)

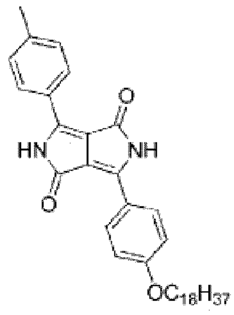
(116)

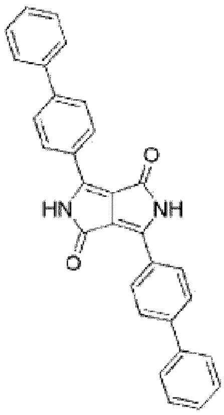
(117)

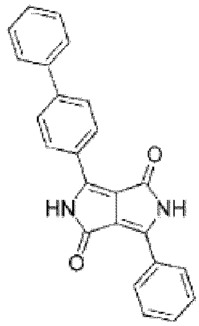
(118)

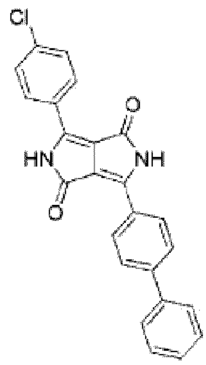
(119)

Moreover, examples of DPP pigment (101) include C.I. Pigment Red 254, C.I. Pigment Red 255, C.I. Pigment Red 264, C.I. Pigment Red 272, C.I. Pigment Red 283, C.I. Pigment Red 291, C.I. Pigment Orange 71, C.I. Pigment Orange 73, etc.

Among these, it is preferable to include at least one DPP pigment (101) selected from the group consisting of C.I. Pigment Red 254, C.I. Pigment Red 255, C.I. Pigment Red 264, C.I. Pigment Red 272, C.I. Pigment Red 291, C.I. Pigment Orange 71, and C.I. Pigment Orange 73. It is more preferable to include C.I. Pigment Red 254, C.I. Pigment Red 255, C.I. Pigment Red 264, C.I. Pigment Red 272, and C.I. Pigment Orange 73.

By using such DPP pigment (101), an ink set with wider color reproducibility and higher light resistance can be obtained when combined with a yellow ink including the isoindoline compound (1) or C.I. Pigment Yellow 180.

The average primary particle diameter of DPP pigment (101) is preferably 30 nm to 350 nm, and more preferably 50 nm to 150 nm. By setting the average primary particle diameter to 350 nm or less, transparency is improved, and high color reproducibility can be obtained. Additionally, by setting the average primary particle diameter to 30 nm or more, light resistance is further improved.

Moreover, the average primary particle diameter of C.I. Pigment Red 254 is preferably 30 nm to 250 nm, and more preferably 60 nm to 130 nm. By setting the average primary particle diameter to 250 nm or less, transparency is improved, and high color reproducibility can be obtained. Additionally, by setting the average primary particle diameter to 30 nm or more, light resistance is further improved.

The average primary particle diameter of C.I. Pigment Red 264 is preferably 30 nm to 250 nm, and more preferably 40 nm to 150 nm. By setting the average primary particle diameter to 250 nm or less, transparency is improved, and high color reproducibility can be obtained. Additionally, by setting the average primary particle diameter to 30 nm or more, light resistance is further improved.

[Perylene Pigment (201)]

Hereinafter, the perylene pigment represented by general formula (201) is also referred to as perylene pigment

(201).

[Chemical Formula 13]

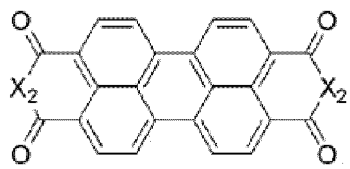

(201)

$X_2$ represents -O- or $-NR_{201}-$, and $R_{201}$ represents a hydrogen atom, an alkyl group, or an aryl group which may have a substituent. Two $X_2$ within the molecule may be independently selected, and may be the same as or different from each other. In an embodiment, the two $X_2$ are preferably the same as each other.

The perylene pigment (201) can be used alone or in combination of two or more types.

In general formula (201), the alkyl group in $X_2$ is the same as the alkyl group in $R_1$ to $R_4$ in general formula (1).

In general formula (201), the aryl group in $X_2$ may have a substituent, and is the same as the aryl group in $R_7$ in general formula (1).

The method for manufacturing the perylene pigment (201) used in the present invention is not particularly limited, but examples include pigments described in W. Herbst, K. Hunger, Industrial Organic Pigments: Production, Properties, Applications, 1993, p467 to p480. The method for manufacturing the perylene pigment is not limited to this method.

The perylene pigment (201) is preferably perylene pigments (202) to (214) represented by the following formulas (202) to (214).

[Chemical Formula 14]

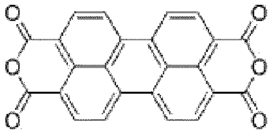

(202)

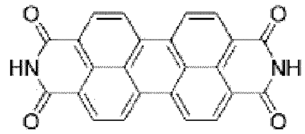

(203)

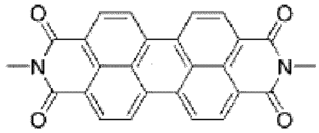

(204)

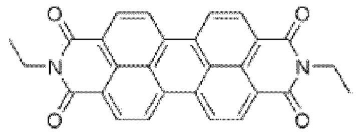

(205)

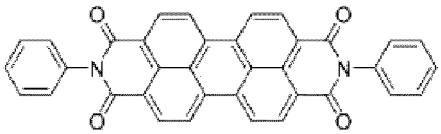

(206)

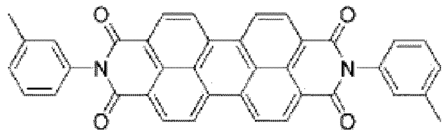

(207)

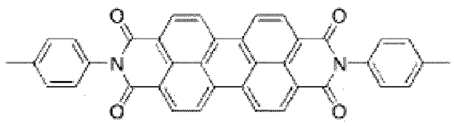

(208)

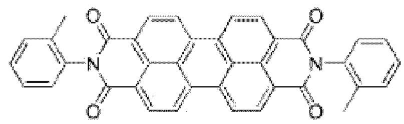

(209)

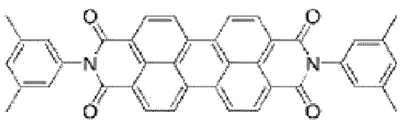

(210)

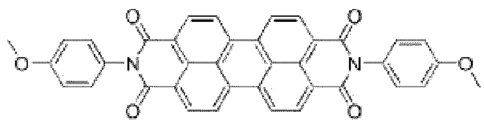

(211)

[Chemical Formula 15]

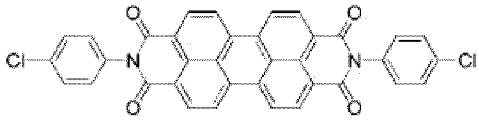

(2 1 2)

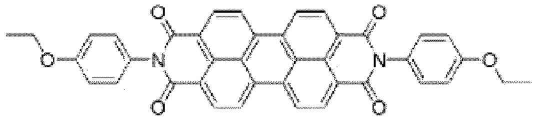

(2 1 3)

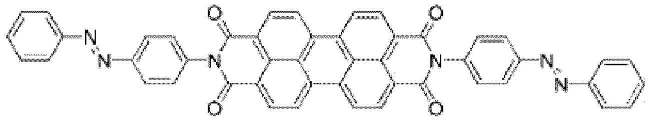

(2 1 4)

Moreover, examples of the perylene pigment (201) include C.I. Pigment Red 123, C.I. Pigment Red 149, C.I. Pigment Red 178, C.I. Pigment Red 179, C.I. Pigment Red 189, C.I. Pigment Red 190, C.I. Pigment Red 224, C.I. Pigment Violet 29, etc. Among these, it is preferable to include at least one perylene pigment (201) selected from the group consisting of C.I. Pigment Red 149, C.I. Pigment Red 179, C.I. Pigment Red 190, and C.I. Pigment Red 224, and it is more preferable to include C.I. Pigment Red 149 and C.I. Pigment Red 179.

It is preferable to use such perylene pigment (201) because an ink set with wider color reproducibility and higher light resistance can be obtained when combined with a yellow ink including the isoindoline compound (1) or C.I. Pigment Yellow 180.

The average primary particle diameter of the perylene pigment (201) is preferably 20 nm to 200 nm, and more preferably 40 nm to 150 nm. By setting the average primary particle diameter to 200 nm or less, transparency is improved, and high color reproducibility can be obtained. Additionally, by setting the average primary particle diameter to 20 nm or more, light resistance is further improved.

From the viewpoint of color reproducibility, based on the total pigments included in the magenta ink B as a reference (100 mass%), the content ratio of the diketopyrrolopyrrole pigment (101) and the perylene pigment (201) is preferably higher. Specifically, the content ratio is preferably 70 mass% or more, more preferably 80 mass% or more, even more preferably 90 mass% or more, and particularly preferably 95 mass% or more. In the case where both the diketopyrrolopyrrole pigment (101) and the perylene pigment (201) are included, it is preferable that the total content is at or above the above content ratio.

In an embodiment, the magenta ink A and the magenta ink B may be a combination of inks where the hue angle (H °) calculated based on the following formula (A) is 0° or more and less than 90°, or 300° or more and less than 360°. In formula (A), a* and b* represent the values obtained by measuring a* and b* in the L*a*b* color system specified by CIE (International Commission on Illumination).

The values of a* and b* can be measured, for example, using a spectrophotometer (product name: Spectrolino; manufactured by Gretag Macbeth). Of course, the spectrophotometer used for measuring a* and b* is not limited to the above.

Formula (A)

In the case of $a^* \geq 0$ and $b^* \geq 0$ (first quadrant), $H° = \tan^{-1}(b^*/a^*)$

In the case of $a^* \leq 0$ and $b^* \geq 0$ (second quadrant), $H° = 180 + \tan^{-1}(b^*/a^*)$

In the case of $a^* \leq 0$ and $b^* \leq 0$ (third quadrant), $H° = 180 + \tan^{-1}(b^*/a^*)$

In the case of $a^* \geq 0$ and $b^* \leq 0$ (fourth quadrant), $H° = 360 + \tan^{-1}(b^*/a)$

In addition, in an embodiment, the relationship between the hue angle ($H_A$°) of the magenta ink A and the hue angle ($H_B$°) of the magenta ink B preferably satisfies the following criteria.

(1) In the case of $300 \leq H_A° < 360$ and $300 \leq H_B° < 360$, $H_A° < H_B°$
(2) In the case of $300 \leq H_A° < 360$ and $0 \leq H_B° < 90$, $H_A° > H_B°$
(3) In the case of $0 \leq H_A° < 90$ and $0 \leq H_B° < 90$, $H_A° < H_B°$

The magenta ink A and the magenta ink B may each further include, to an extent that does not impair the effects of the present invention, red pigments other than the above pigments (hereinafter referred to as other red pigments), resins, organic solvents, pigment dispersants, and other additives.
Examples of other red pigments include C.I. Pigment Red 2, C.I. Pigment Red 32, C.I. Pigment Red 48:1, C.I. Pigment Red 48:2, C.I. Pigment Red 48:3, C.I. Pigment Red 53:1, C.I. Pigment Red 57:1, C.I. Pigment Red 63:1, C.I. Pigment Red 81, C.I. Pigment Red 122, C.I. Pigment Red 144, C.I. Pigment Red 146, C.I. Pigment Red 149, C.I. Pigment Red 150, C.I. Pigment Red 166, C.I. Pigment Red 170, C.I. Pigment Red 174, C.I. Pigment Red 178, C.I. Pigment Red 179, C.I. Pigment Red 184, C.I. Pigment Red 185, C.I. Pigment Red 188, C.I. Pigment Red 190, C.I. Pigment Red 202, C.I. Pigment Red 207, C.I. Pigment Red 208, C.I. Pigment Red 209, C.I. Pigment Red 214, C.I. Pigment Red 220, C.I. Pigment Red 221, C.I. Pigment Red 224, C.I. Pigment Red 238, C.I. Pigment Red 242, C.I. Pigment Red 254, C.I. Pigment Red 255, C.I. Pigment Red 260, C.I. Pigment Red 264, C.I. Pigment Red 269, C.I. Pigment Red 272, C.I. Pigment Violet 19, etc.
However, it is advisable to minimize the use of these pigments as there is a risk of reducing light resistance and color gamut reproduction.
Although not particularly limited, in an embodiment, the printing ink set preferably includes:

a yellow ink including one or more selected from the group consisting of the isoindoline compounds (1-1) to (1-12) manufactured in Manufacturing Examples 1-1 to 1-12 described in the examples later, and a dispersion medium;
a cyan ink including a copper phthalocyanine pigment and a dispersion medium;
a magenta ink A including C.I. Pigment Red 122 or C.I. Pigment Violet 19, and a dispersion medium; and
a magenta ink B including the diketopyrrolopyrrole pigment represented by the above general formula (101) or the perylene pigment represented by the above general formula (201), and a dispersion medium.

In the printing ink set of the above embodiment, the yellow ink may include a commercially available isoindoline compound obtainable as C.I. Pigment Yellow 185 instead of the above isoindoline compounds (1-1) to (1-12). Both the above isoindoline compounds (1-1) to (1-12) and C.I. Pigment Yellow 185 include the isoindoline compound (4) and/or the isoindoline compound (5).
The printing ink set of another embodiment may further include, in addition to the above isoindoline compound, one or more isoindoline compounds selected from the group consisting of formulas (2-1) to (2-3) described in the examples later.
In yet another embodiment, in the printing ink set of the above embodiment, the above yellow ink may include C.I. Pigment Yellow 180 instead of the above isoindoline compound. The average primary particle diameter of C.I. Pigment Yellow 180 is not particularly limited. For example, as manufactured in the examples described later, the average primary particle diameter of C.I. Pigment Yellow 180 may be 65 nm or more, and may be 260 nm or less. From the viewpoint of easily obtaining excellent transparency, color reproducibility, and light resistance, the average primary particle diameter of C.I. Pigment Yellow 180 may be 70 nm or more and 250 nm or less.
The following describes components other than the above pigments. The components described below are included in the printing ink of this embodiment, or can be added as needed.

<Pigment>

The printing ink set of this embodiment may further include pigments shown below in addition to the above pigments. Examples of pigments to be added include organic pigments and inorganic pigments other than the above pigments.
It should be noted that the content ratio of pigments in the ink, including the aforementioned pigments, is preferably in the range of 0.1 mass% to 60 mass% based on the mass of the ink, and preferably in the range of 10 mass% to 90 mass% based on the mass of non-volatile content of the ink, in order to ensure the concentration and coloring power of the ink.

[Organic Pigment]

The pigments to be added are preferably organic pigments. Examples of organic pigments include soluble azo, insoluble azo, azo, phthalocyanine, halogenated phthalocyanine, anthraquinone, anthanthrone, dianthroquinonyl, anthrapyrimidine, perylene, perinone, quinacridone, thioindigo, dioxazine, isoindolinone, quinophthalone, azomethine azo, flavanthrone, diketopyrrolopyrrole, isoindoline, indanthrone, etc.

Examples of these organic pigments are shown by C.I. Pigment Numbers.
Examples of purple pigments include C.I. Pigment Violet 23, C.I. Pigment Violet 32, C.I. Pigment Violet 37, etc.
Examples of green pigments include C.I. Pigment Green 7, etc.
Examples of orange pigments include C.I. Pigment Orange 13, C.I. Pigment Orange 34, C.I. Pigment Orange 38, C.I. Pigment Orange 43, C.I. Pigment Orange 64, etc.
Examples of special color inks include inks such as purple, grass green, and vermilion, other than cyan, magenta, and yellow. In an embodiment, the special color inks preferably include the aforementioned purple pigments, green pigments, orange pigments, etc.

[Inorganic Pigment]

Examples of inorganic pigments include white inorganic pigments such as titanium oxide, zinc oxide, zinc sulfide, barium sulfate, calcium carbonate, chromium oxide, silica, lithopone, antimony white, and gypsum; black inorganic pigments such as carbon black, iron black, and copper-chromium complex oxide; aluminum particles, mica, bronze powder, chrome vermilion, yellow lead, cadmium yellow, cadmium red, ultramarine blue, prussian blue, bengala, yellow iron oxide, and zircon.
For black ink, it is preferable to use carbon black from the viewpoint of excellent coloring power, hiding power, chemical resistance, and weather resistance. Examples include C.I. Pigment Black 7, etc. Further, for white ink, it is preferable to use titanium oxide from the viewpoint of excellent coloring power, hiding power, chemical resistance, and weather resistance. From the viewpoint of printing performance, titanium oxide that is surface-treated with silica and/or alumina is preferable.
Each ink can use pigments individually or in combination of two or more types to obtain the desired color tone.
The average primary particle diameter of the pigment is preferably in the range of 10 nm to 200 nm, and more preferably in the range of 50 nm to 150 nm.

[Dye Derivative]

Each ink constituting the printing ink set of this embodiment may include dye derivatives.
Dye derivatives are known compounds having organic dye residues with acidic groups, basic groups, neutral groups, etc. Examples of dye derivatives include compounds having acidic substituents such as sulfo groups, carboxyl groups, and phosphoric acid groups, and amine salts thereof; compounds having basic substituents such as sulfonamide groups and tertiary amino groups at the terminal; and compounds having neutral substituents such as phenyl groups and phthalimidealkyl groups.
Examples of organic dyes include diketopyrrolopyrrole pigments, anthraquinone pigments, quinacridone pigments, dioxazine pigments, perinone pigments, perylene pigments, thiazine indigo pigments, triazine pigments, benzimidazolone pigments, indole pigments such as benzoisoindole, isoindoline pigments, isoindolinone pigments, quinophthalone pigments, naphthol pigments, thioindigo pigments, metal complex pigments, and azo pigments such as azo, disazo, and polyazo.
The dye derivatives may be known dye derivatives, and specific examples are described in the following literatures.

Diketopyrrolopyrrole dye derivatives: Japanese Patent Application Laid-Open No. 2001-220520, WO2009/081930 pamphlet, WO2011/052617 pamphlet, WO2012/102399 pamphlet, and Japanese Patent Application Laid-Open No. 2017-156397
Phthalocyanine dye derivatives: Japanese Patent Application Laid-Open No. 2007-226161, WO2016/163351 pamphlet, Japanese Patent Application Laid-Open No. 2017-165820, and Japanese Patent No. 5753266
Anthraquinone dye derivatives: Japanese Patent Application Laid-Open No. S63-264674, Japanese Patent Application Laid-Open No. H09-272812, Japanese Patent Application Laid-Open No. H10-245501, Japanese Patent Application Laid-Open No. H10-265697, Japanese Patent Application Laid-Open No. 2007-079094, and WO2009/025325 pamphlet
Quinacridone dye derivatives: Japanese Patent Application Laid-Open No. S48-54128, Japanese Patent Application Laid-Open No. H03-9961, and Japanese Patent Application Laid-Open No. 2000-273383
Dioxazine dye derivatives: Japanese Patent Application Laid-Open No. 2011-162662
Thiazine indigo dye derivatives: Japanese Patent Application Laid-Open No. 2007-314785
Triazine dye derivatives: Japanese Patent Application Laid-Open No. S61-246261, Japanese Patent Application Laid-Open No. H11-199796, Japanese Patent Application Laid-Open No. 2003-165922, Japanese Patent Application Laid-Open No. 2003-168208, Japanese Patent Application Laid-Open No. 2004-217842, and Japanese Patent Application Laid-Open No. 2007-314681

Benzoisoindole dye derivatives: Japanese Patent Application Laid-Open No. 2009-57478
Quinophthalone dye derivatives: Japanese Patent Application Laid-Open No. 2003-167112, Japanese Patent Application Laid-Open No. 2006-291194, Japanese Patent Application Laid-Open No. 2008-31281, and Japanese Patent Application Laid-Open No. 2012-226110
Naphthol dye derivatives: Japanese Patent Application Laid-Open No. 2012-208329, and Japanese Patent Application Laid-Open No. 2014-5439
Azo dye derivatives: Japanese Patent Application Laid-Open No. 2001-172520, and Japanese Patent Application Laid-Open No. 2012-172092
Acidic substituents are described in Japanese Patent Application Laid-Open No. 2004-307854. Additionally, basic substituents are described in Japanese Patent Application Laid-Open No. 2002-201377, Japanese Patent Application Laid-Open No. 2003-171594, Japanese Patent Application Laid-Open No. 2005-181383, Japanese Patent Application Laid-Open No. 2005-213404, etc.

It should be noted that in the above-mentioned literatures, dye derivatives may be described as derivatives, pigment derivatives, dispersants, pigment dispersants, or simply compounds. However, compounds having substituents such as acidic groups, basic groups, and neutral groups on the above organic dye residues are synonymous with dye derivatives.
The dye derivatives can be used alone or as a mixture of two or more types.

<Dispersion Medium>

Each ink constituting the printing ink set of this embodiment includes a dispersion medium. The dispersion medium is a medium that appropriately disperses pigments, exhibits performance as an ink, and stabilizes the properties. Specific examples of the dispersion medium include resins, solvents, and polymerizable compounds. The resins may be binder resins and resin-type dispersants, etc. The solvents may be water and organic solvents. The polymerizable compounds may be monomers and oligomers. Additionally, each ink may include, as necessary, low molecular weight dispersants such as surfactants as the dispersion medium.
The dispersion medium can be appropriately selected according to the form of the printing ink.
The following describes the dispersion medium more specifically.

[Resin]

(Binder Resin)

The binder resin may be any resin capable of forming a film by printing. For example, the binder resin may be polyolefin resins, polyester resins, styrene copolymers, acrylic resins, and modified resins thereof.
Specific examples include polyolefin resins such as polyethylene including high-density polyethylene (HDPE), linear low-density polyethylene (L-LDPE), low-density polyethylene (LDPE), and polypropylene; polyester resins such as polyethylene terephthalate; styrene copolymers such as styrene-p-chlorostyrene copolymer, styrene-vinyltoluene copolymer, styrenevinylnaphthalene copolymer, styrene-acrylic acid ester copolymer, styrene-methacrylic acid ester copolymer, styrene-$\alpha$-chloromethyl methacrylate copolymer, styrene-acrylonitrile copolymer, styrene-vinyl methyl ether copolymer, styrene-vinyl ethyl ether copolymer, styrene-vinyl methyl ketone copolymer, styrene-butadiene copolymer, styrene-isoprene copolymer, and styrene-acrylonitrile-indene copolymer; acrylic resins such as acrylic resins and methacrylic resins; polyvinyl chloride, phenolic resins, natural modified phenolic resins, natural resin modified maleic acid resins, silicone resins, polyurethane resins, ethylene-vinyl acetate copolymer resins, vinyl acetate resins, nitrocellulose resins, polyamide resins, epoxy resins, xylene resins, polyvinyl butyral resins, polyvinyl acetal resins, cellulose ester resins, alkyd resins, rosin-based resins, ketone resins, cyclized rubber, chlorinated polyolefin resins, terpene resins, coumarone-indene resins, amino resins, petroleum resins, and modified resins thereof.

(Resin-type Dispersant)

The resin-type dispersant has a pigment-affinity site that adsorbs to the pigment and a relaxation site that has high affinity for components other than the pigment and causes steric repulsion between dispersed particles. The resin-type dispersant has an acidic group or a basic group. Examples of the acidic group include carboxyl groups, sulfo groups, phosphoric acid groups, etc. Examples of the basic group include primary to tertiary amino groups, quaternary ammonium bases, etc.
Examples of acidic resin-type dispersants include urethane-based dispersants such as polyurethane; polycarboxylic acid esters such as polyacrylates; unsaturated polyamides; polycarboxylic acids; polycarboxylic acid (partial)

amine salts; polycarboxylic acid ammonium salts; polycarboxylic acid alkylamine salts; polysiloxanes; long-chain polyaminoamide phosphates; hydroxyl group-containing polycarboxylic acid esters, and modifications thereof; amides formed by the reaction of poly(lower alkylene imine) with polyesters having free carboxyl groups, and salts thereof; (meth) acrylic acid-styrene copolymers, (meth)acrylic acid-(meth)acrylic acid ester copolymers, styrene-maleic acid copolymers, polyvinyl alcohol, polyvinylpyrrolidone, etc.; polyesters, modified polyacrylates, ethylene oxide/propylene oxide adducts, phosphoric acid ester-based compounds, etc.

Examples of basic resin-type dispersants include nitrogen atom-containing graft copolymers, nitrogen atom-containing acrylic block copolymers, or urethane-based polymer dispersants having functional groups including tertiary amino groups, quaternary ammonium bases, nitrogenincluding heterocycles, etc. in the side chains, for resin types such as acrylic resins, polyester resins, and polyurethane resins.

The resin-type dispersants can be obtained as commercially available products. For example, the following can be mentioned.

JONCRYL 67, JONCRYL 678, JONCRYL 586, JONCRYL 611, JONCRYL 683, JONCRYL 690, JONCRYL 57J, JONCRYL 60J, JONCRYL 61J, JONCRYL 62J, JONCRYL 63J, JONCRYL HPD-96J, JONCRYL 501J, JONCRYL PDX-6102B, manufactured by BASF Japan Ltd.,

DISPERBYK 180, DISPERBYK 187, DISPERBYK 190, DISPERBYK 191, DISPERBYK 194, DISPERBYK 2010, DISPERBYK 2015, DISPERBYK 2090, DISPERBYK 2091, DISPERBYK 2095, DISPERBYK 2155, manufactured by BYK-Chemie,

SOLSPERSE 24000, SOLSPERSE 32000, SOLSPERSE 39000, SOLSPERSE 41000, manufactured by Lubrizol Japan Ltd.,

SMA 1000H, SMA 1440H, SMA 2000H, SMA 3000H, SMA 17352H, etc., manufactured by Sartomer.

[Solvent]

(Water)

For water, ion-exchanged water with metal ions, etc. removed, and distilled water are preferable.

(Organic Solvent)

Organic solvents can be classified into water-soluble solvents and non-water-soluble solvents.

Examples of water-soluble solvents include methanol, ethanol, n-propanol, isopropanol, isobutanol, ethylene glycol, diethylene glycol, triethylene glycol, propylene glycol, glycerin, etc.

Examples of non-water-soluble solvents include toluene, xylene, ethyl acetate, n-propyl acetate, butyl acetate, methyl ethyl ketone, methyl isobutyl ketone, butyl alcohol, aliphatic hydrocarbons, etc.

[Polymerizable Compound]

The polymerizable compound is a compound having one or more ethylenically unsaturated bonds in the molecule. The polymerizable compound includes monomers and oligomers.

(Monomer)

Monomers have polymerizable groups such as (meth)acryloyl groups, allyl groups, vinyl groups, and vinyl ether groups in the molecule. In terms of curability, the monomers preferably include a monomer having either a (meth)acryloyl group or a vinyl group, more preferably include a monomer having 3 to 6 (meth)acryloyl groups in the molecule, and even more preferably include a monomer having 6 (meth)acryloyl groups in the molecule.

Specific examples of monomers having (meth)acryloyl groups include the following, but not limited to the following.

Monofunctional (meth)acrylate monomers having one (meth)acryloyl group in the molecule: 2-ethylhexyl (meth) acrylate, 2-hydroxyethyl (meth)acrylate, 2-hydroxypropyl (meth)acrylate, β-carboxyethyl (meth)acrylate, 4-tert-butylcyclohexyl (meth)acrylate, tetrahydrofurfuryl (meth)acrylate, alkoxy-modified tetrahydrofurfuryl acrylate, caprolactone (meth)acrylate, lauryl (meth)acrylate, stearyl (meth)acrylate, isoamyl (meth)acrylate, 2-phenoxyethyl (meth)acrylate, isodecyl (meth)acrylate, 3,3,5-trimethylcyclohexanol (meth)acrylate, cyclohexyl (meth)acrylate, isobornyl (meth)acrylate, norbornyl (meth)acrylate, dicyclopentanyl (meth)acrylate, dicyclopentenyl (oxyethyl) (meth)acrylate, 1,4-cyclohexanedimethanol (meth)acrylate, cyclic trimethylolpropane formal (meth)acrylate, benzyl (meth)acrylate, EO-modified (2) nonylphenol acrylate, (2-methyl-2-ethyl-1,3-dioxolan-4-yl)methyl acrylate, acryloyl morpholine, etc.

Bifunctional (meth)acrylate monomers having two (meth)acryloyl groups in the molecule: 1,3-butylene glycol di(meth)acrylate, 1,4-butanediol di(meth)acrylate, 3-methyl-1,5-pentanediol di(meth)acrylate, 1,6-hexanediol di(meth) acrylate, 1,9-nonanediol di(meth)acrylate, 1,10-decanediol di(meth)acrylate, 1,12-dodecanediol di(meth)acrylate, neopentyl glycol di(meth)acrylate, polyethylene glycol (200) di(meth)acrylate, polyethylene glycol (300) di(meth)acrylate, polyethylene glycol (400) di(meth)acrylate, polyethylene glycol (600) di(meth)acrylate, hydroxypivalic acid neopentyl glycol di(meth)acrylate, dipropylene glycol di(meth)acrylate, tripropylene glycol di(meth)acrylate, EO-modified (2) 1,6-hexanediol di(meth)acrylate, PO-modified (2) neopentyl glycol di(meth)acrylate, (neopentyl glycol-modified) trimethylolpropane di(meth)acrylate, EO-modified (4) bisphenol A di(meth)acrylate, PO-modified (4) bisphenol A di(meth) acrylate, cyclohexanedimethanol di(meth)acrylate, dimethyloltricyclodecane di(meth)acrylate, dicyclopentanyl di(meth)acrylate, etc.

Trifunctional (meth)acrylate monomers having three (meth)acryloyl groups in the molecule: trimethylolpropane tri(meth)acrylate, EO-modified (3) trimethylolpropane tri(meth)acrylate, EO-modified (6) trimethylolpropane tri(meth) acrylate, PO-modified (3) trimethylolpropane tri(meth)acrylate, ε-caprolactone-modified tris-(2-acryloxyethyl) isocyanurate, ethoxylated isocyanuric acid tri(meth)acrylate, tris(2-hydroxyethyl) isocyanurate tri(meth)acrylate, pentaerythritol tri(meth)acrylate, etc.

Tetrafunctional (meth)acrylate monomers having four (meth)acryloyl groups in the molecule: pentaerythritol tetra(meth)acrylate, EO-modified (4) pentaerythritol tetra(meth)acrylate, ditrimethylolpropane tetra(meth)acrylate, etc.

Pentafunctional (meth)acrylate monomers having five (meth)acryloyl groups in the molecule: dipentaerythritol penta(meth)acrylate, etc.

Hexafunctional (meth)acrylate monomers having six (meth)acryloyl groups in the molecule: dipentaerythritol hexa(meth)acrylate, etc.

Specific examples of monomers having vinyl groups include N-vinyl-2-pyrrolidone, N-vinylcaprolactam, etc.

(Oligomer)

Examples of oligomers include urethane (meth)acrylate oligomers such as aliphatic urethane (meth)acrylate oligomers and aromatic urethane (meth)acrylate oligomers, (meth)acryl ester oligomers, polyester (meth)acrylate oligomers, epoxy (meth)acrylate oligomers, etc. The oligomers preferably include about 2 to 16 ethylenically unsaturated bonds. Among these, urethane (meth)acrylate oligomers are preferable, and urethane (meth)acrylate oligomers having 6 to 12 (meth)acryloyl groups are more preferable.

The weight average molecular weight (Mw) of the oligomer is preferably 400 to 10,000, more preferably 500 to 5,000, even more preferably 800 to 4,000, and even more preferably 1,000 to 2,000. Here, the "weight average molecular weight (Mw)" can be determined as a polystyreneequivalent molecular weight by general gel permeation chromatography (hereinafter referred to as GPC).

The above urethane (meth)acrylate oligomers with 6 to 12 functional groups can also be obtained as commercially available products.

Specific examples include EBECRYL1290 (6-functional, Mw 1,000), EBECRYL5129 (6-functional, Mw 800), EBECRYL8254 (6-functional, Mw 1,200), KRM8200 (6-functional, Mw 1,000), KRM8904 (9-functional, Mw 1,800), EBECRYL8602 (9-functional, Mw 2,000), KRM8452 (10-functional, Mw 1,200), EBECRYL225 (10-functional, Mw 1,200), and EBECRYL8415 (10-functional, Mw 1,200), all manufactured by Daicel-Allnex Ltd.

Additionally, examples include MiramerPU5000 (6-functional, Mw 1,800), MiramerPU610 (6-functional, Mw 1,800), MiramerPU6140 (6-functional, Mw 1,500), MiramerMU9800 (9-functional, Mw 3,500), and MiramerMU9500 (10-functional, Mw 3,200), all manufactured by Miwon Specialty Chemical Co., Ltd.

[Other Component]

Each ink constituting the printing ink set of this embodiment may further include other components such as various additives in addition to the above-mentioned components, according to the applications, to the extent that the effects of the present invention are not reduced. Examples of other components include extender pigments, waxes, anti-blocking agents, surfactants, leveling agents, defoaming agents, preservatives, pH adjusting agents, ultraviolet absorbers, flame retardants, antioxidants, etc. These various additives can be further added to the ink as needed.

Examples of extender pigments include calcium carbonate, magnesium carbonate, kaolin, barium sulfate, aluminum hydroxide, silica, clay, talc, mica, etc. By adding extender pigments, anti-blocking properties, laminate strength, drying properties, and film hiding properties can be improved.

Examples of waxes include natural waxes and synthetic waxes. Examples of natural waxes include carnauba wax, wood wax, lanolin, montan wax, paraffin wax, microcrystalline wax, etc. Examples of synthetic waxes include Fischer-Tropsch wax, polyethylene wax, polypropylene wax, polytetrafluoroethylene wax, polyamide wax, silicone compounds, etc. By adding waxes, abrasion resistance, anti-blocking properties, slip properties, and scratch resistance

can be improved.

Examples of anti-blocking agents include silica particles, polyethylene wax, fatty acid amides, cellulose acetate butyrate resin, cellulose acetate propionate resin, nitrocellulose, etc.

Examples of surfactants include anionic surfactants and nonionic surfactants.

Examples of anionic surfactants include fatty acid salts, alkyl sulfate ester salts, alkyl aryl sulfonate salts, alkyl naphthalene sulfonate salts, dialkyl sulfonate salts, dialkyl sulfosuccinate salts, alkyl diaryl ether disulfonate salts, alkyl phosphate salts, polyoxyethylene alkyl ether sulfate salts, polyoxyethylene alkyl aryl ether sulfate salts, naphthalene sulfonic acid formalin condensates, polyoxyethylene alkyl phosphate ester salts, etc.

Examples of nonionic surfactants include polyoxyethylene alkyl ethers, polyoxyethylene alkyl aryl ethers, polyoxyethylene oxypropylene block copolymers, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene alkylamines, glycerol borate fatty acid esters, polyoxyethylene glycerol fatty acid esters, etc.

Examples of leveling agents include fluorine-based leveling agents, acrylic polymer-based leveling agents, silicone-based leveling agents, etc.

Examples of defoaming agents include mineral oil-based defoaming agents, silicone-based defoaming agents, non-silicone polymer-based defoaming agents, acetylene glycol-based defoaming agents, etc.

Examples of preservatives include sodium dehydroacetate, sodium benzoate, sodium pyrithione-1-oxide, zinc pyrithione-1-oxide, 1,2-benzisothiazolin-3-one, amine salts of 1-benzisothiazolin-3-one, etc.

Examples of pH adjusting agents include various amines, inorganic bases, ammonia, various buffer solutions, etc.

Examples of ultraviolet absorbers include benzotriazole-based ultraviolet absorbers with ethylenic unsaturated bonds, benzophenone-based ultraviolet absorbers, salicylic acid-based ultraviolet absorbers, cyanoacrylate-based ultraviolet absorbers, hindered phenol-based ultraviolet absorbers, triazine-based ultraviolet absorbers, etc.

Examples of flame retardants include phosphorus-based flame retardants, phosphate ester-based flame retardants, boron-based flame retardants, bromine-based flame retardants, etc.

Examples of antioxidants include phenol-based antioxidants, amine-based antioxidants, dithiocarbamate-based antioxidants, etc.

Although not particularly limited, in an embodiment, the combination of each color printing ink in the printing ink set may be:

a yellow ink including an isoindoline compound represented by formula (1) and a dispersion medium;
a cyan ink including a metal phthalocyanine pigment including at least one selected from the group consisting of copper phthalocyanine, aluminum phthalocyanine, and titanyl phthalocyanine as described earlier, and a dispersion medium;
a magenta ink A including C.I. Pigment Red 122 or C.I. Pigment Violet 19 and a dispersion medium; and
a magenta ink B including a DPP pigment including at least one selected from the group consisting of C.I. Pigment Red 254, C.I. Pigment Red 255, C.I. Pigment Red 264, C.I. Pigment Red 272, C.I. Pigment Red 291, C.I. Pigment Orange 71, and C.I. Pigment Orange 73, or a perylene pigment including at least one selected from the group consisting of C.I. Pigment Red 149, C.I. Pigment Red 179, C.I. Pigment Red 190, and C.I. Pigment Red 224, and a dispersion medium.

In another embodiment, the combination of each color printing ink may be:

a yellow ink including C.I. Pigment Yellow 180 and a dispersion medium;
a cyan ink including a metal phthalocyanine pigment including at least one selected from the group consisting of copper phthalocyanine, aluminum phthalocyanine, and titanyl phthalocyanine as described earlier, and a dispersion medium;
a magenta ink A including C.I. Pigment Red 122 or C.I. Pigment Violet 19 and a dispersion medium; and
a magenta ink B including a DPP pigment including at least one selected from the group consisting of C.I. Pigment Red 254, C.I. Pigment Red 255, C.I. Pigment Red 264, C.I. Pigment Red 272, C.I. Pigment Red 291, C.I. Pigment Orange 71, and C.I. Pigment Orange 73, or a perylene pigment including at least one selected from the group consisting of C.I. Pigment Red 149, C.I. Pigment Red 179, C.I. Pigment Red 190, and C.I. Pigment Red 224, and a dispersion medium.

In these embodiments, the metal phthalocyanine pigment in the cyan ink is more preferably copper phthalocyanine.

The combination of pigments (colorants) in these printing inks can easily achieve both excellent light resistance and excellent color reproducibility. In addition, as a particular effect of the combination of magenta ink A and magenta ink B, adhesion of the printing layer (ink film) can also be improved. In the above embodiments, in the case where polyurethane resin is used as the dispersion medium, it becomes easier to enhance the adhesion of the printing layer (ink film).

Furthermore, in the case where polyvinyl butyral is used in addition to polyurethane resin as the dispersion medium, there is a tendency for the adhesion to be further enhanced easily.

<Manufacturing of Printing Ink>

The printing inks constituting the printing ink set of this embodiment can be manufactured by dispersing pigments in a dispersion medium. The printing ink can be manufactured by combining additives, water and/or organic solvents, etc. with the dispersion as needed.

The generally used dispersion machines can be employed as the dispersion machine. Examples include roller mills, ball mills, pebble mills, attritors, sand mills, and other bead mills. Among these, it is preferable to use bead mills. The particle size distribution of the pigment in the pigment dispersion can be adjusted by appropriately adjusting the size of the media beads of the dispersion machine, the filling rate of the media beads, the dispersion time, the outflow rate of the pigment dispersion, the viscosity of the pigment dispersion, etc.

The printing ink set of this embodiment is preferably in the forms of a gravure printing ink set and a flexo printing ink set. As the form of the printing inks constituting these printing ink sets, gravure ink, water-based flexo ink, flexo ink, and active energy ray curable flexo ink are preferable. The following describes these various inks in detail.

<Gravure Ink>

The gravure ink preferably includes pigments, and a binder resin as a dispersion medium, and further includes organic solvents.

(Pigment)

The content ratio of pigments in the gravure ink is not particularly limited, but is preferably 4 mass% to 20 mass%, and more preferably 5 mass% to 15 mass%.

(Binder Resin)

Examples of the binder resin include polyurethane resin, ethylene-vinyl acetate copolymer resin, vinyl acetate resin, nitrocellulose resin, polyamide resin, polyvinyl acetal resin, cellulose ester resin, polystyrene resin, acrylic resin, polyester resin, alkyd resin, rosin-based resin, rosinmodified maleic acid resin, ketone resin, cyclized rubber, butyral resin, petroleum resin, chlorinated polyolefin resin, etc.

The content ratio of the binder resin in the gravure ink is preferably 4 mass% to 25 mass%, and more preferably 6 mass% to 20 mass%.

[Polyurethane Resin]

The binder resin used in the gravure ink is preferably polyurethane resin. It should be noted that the polyurethane resin includes polyurethane urea resin.

As examples of the synthesis of the polyurethane resin,

(1) a two-step method in which a urethane prepolymer having isocyanate groups at terminals thereof is synthesized by reacting a polyol with a diisocyanate compound in a ratio where the isocyanate groups are in excess, and then, the urethane prepolymer having isocyanate groups is reacted with a chain extender and/or a terminal blocking agent having amino groups in a solvent to synthesize the polyurethane resin,
(2) a one-step method in which polypropylene glycol, polyol, a diisocyanate compound, and a chain extender and/or a terminal blocking agent having amino groups are reacted all at once in an appropriate solvent, etc. can be mentioned.

Examples of the solvents used for the synthesis include ester-based solvents such as ethyl acetate, propyl acetate, and butyl acetate; ketone-based solvents such as acetone, methyl ethyl ketone, and methyl isobutyl ketone; alcohol-based solvents such as methanol, ethanol, isopropanol, and n-butanol; hydrocarbon-based solvents such as methylcyclohexane and ethylcyclohexane; or mixed solvents of these.

Among these methods, the two-step method described in (1) above is preferable from the viewpoint of obtaining more uniform polyurethane resin.

In the case of manufacturing the polyurethane resin by the two-step method, the equivalent ratio (moles of isocyanate groups/moles of amino groups) between the isocyanate groups of the urethane prepolymer and the amino groups of the chain extender and the terminal blocking agent is preferably 1/1.3 to 1/0.9. When the equivalent ratio of

isocyanate groups to amino groups is 1/1.3 or more, the chain extender and/or the terminal blocking agent remaining unreacted is reduced, and yellowing of the polyurethane resin and odor after printing can be suppressed. When the equivalent ratio of isocyanate groups to amino groups is 1/0.9 or less, the molecular weight of the obtained polyurethane resin becomes appropriate, and a resin having suitable film strength after printing can be obtained.

The weight average molecular weight of the above polyurethane resin is preferably in the range of 15,000 to 100,000. When the weight average molecular weight of the polyurethane resin is 15,000 or more, the ink excels in blocking resistance, strength of the printed film, and oil resistance. When the weight average molecular weight of the polyurethane resin is 100,000 or less, the viscosity of the obtained ink becomes within an appropriate range, and the gloss of the printed film is excellent.

Furthermore, from the viewpoint of printing suitability and laminate strength, the above polyurethane resin preferably has an amine value. The amine value is preferably 0.5 mgKOH/g to 20 mgKOH/g, and more preferably 1 mgKOH/g to 15 mgKOH/g.

In an embodiment, in the case of using the printing ink set of this embodiment for packaging material applications, the content ratio of the polyurethane resin is preferably 80 mass% or more based on the binder resin in the ink. By setting the content ratio of the polyurethane resin within the above range, boil and retort properties and adhesion to polyester films can be easily improved.

[Polyvinyl Butyral Resin]

In an embodiment, the binder resin used in the gravure ink preferably further includes polyvinyl butyral resin. According to such an embodiment, there is a tendency to easily further enhance the adhesion of the ink film to the substrate.

The polyvinyl butyral resin can be obtained by acetalizing polyvinyl alcohol with butyl aldehyde or formaldehyde.

The content ratio of acetyl groups in the polyvinyl butyral resin is preferably 4 mass% or less. Additionally, the content ratio of hydroxyl groups is preferably 1 mass% to 30 mass%, and more preferably 1 mass% to 25 mass%. The weight average molecular weight of the polyvinyl butyral resin is preferably 10,000 to 50,000.

The content ratio of the polyvinyl butyral resin is preferably in the range of 1.0 mass% to 15.0 mass% based on the binder resin in the ink. By setting the content ratio of polyvinyl butyral resin in the binder resin to 1.0 mass% or more, the blocking resistance of the obtained printing ink and adhesion to polyester films can be easily improved. Additionally, by setting the above content ratio to 15.0 mass% or less, the storage stability of the ink can be easily improved.

(Organic Solvent)

Examples of the organic solvents used in the gravure ink include aromatic organic solvents such as toluene and xylene; ketone-based organic solvents such as acetone, methyl ethyl ketone, and methyl isobutyl ketone; ester-based organic solvents such as ethyl acetate, n-propyl acetate, butyl acetate, and propylene glycol monomethyl ether acetate; alcohol-based organic solvents such as methanol, ethanol, n-propanol, isopropanol, and n-butanol; glycol ether-based solvents such as ethylene glycol monopropyl ether and propylene glycol monomethyl ether; aliphatic organic solvents such as methylcyclohexane; and the like. It is preferable to use a mixture of two or more of these organic solvents.

In the gravure ink, it is preferable to use a mixed solvent of an ester-based organic solvent and an alcohol-based organic solvent. The mass ratio of the ester-based organic solvent to the alcohol-based organic solvent (mass of ester-based organic solvent:mass of alcohol-based organic solvent) is preferably 95:5 to 40:60, and more preferably 90:10 to 50:50.

The content ratio of the organic solvent in the ink is preferably 60 mass% to 90 mass%, and more preferably in the range of 70 mass% to 85 mass%, based on the mass of the ink.

(Water)

In an embodiment, the gravure ink can further include water. By including a predetermined amount of water, the pigment dispersibility due to the polyurethane resin is improved, and printing suitability such as highlight transferability, plate staining resistance, and trapping properties is enhanced.

The content ratio of water is preferably 0.1 mass% to 10 mass%, more preferably 0.5 mass% to 7 mass%, even more preferably 0.5 mass% to 5 mass%, and particularly preferably 0.5 mass% to 4 mass%, based on the mass of the gravure ink.

(Silica Particle)

In an embodiment, the gravure ink can further include silica particles. By including silica particles, the wetting and

spreading of the ink during overprinting are promoted, the trapping properties are improved, and the highlight transferability is also maintained.

The silica particles may be either natural or synthetic. Besides, the silica particles may be either crystalline or amorphous, or either hydrophobic or hydrophilic. There are dry and wet methods for synthesizing silica particles. In the dry method, combustion method and arc method are known, while in the wet method, precipitation method and gel method are known, and silica particles synthesized by any of these methods can be used. The silica particles may also be hydrophilic silica having hydrophilic functional groups on the surface. Alternatively, the silica particles may be hydrophobic silica obtained by modifying hydrophilic functional groups with alkyl silane or the like to become hydrophobic. Hydrophilic silica is preferable.

Such silica particles can also be obtained as commercially available products. Examples include the Nipsil series and Nipgel series manufactured by Tosoh Silica Corporation, as well as the Mizukasil series manufactured by Mizusawa Chemical Industries, Ltd.

To create unevenness on the surface of the ink layer, the silica particles preferably have an average particle diameter of 1 μm to 10 μm, more preferably 1 μm to 8 μm, and even more preferably 1 μm to 6 μm. The average particle diameter of the silica particles refers to the particle diameter at the cumulative value of 50% ($D_{50}$) in the particle size distribution, and can be determined by the Coulter counter method.

The specific surface area of the silica particles is preferably 50 $m^2/g$ to 600 $m^2/g$ as measured by the BET method, and more preferably 100 $m^2/g$ to 450 $m^2/g$. The silica particles used in the gravure ink can be a combination of two or more types with different average particle diameters or BET specific surface areas.

The content ratio of silica particles in the gravure ink is preferably 0.1 mass% to 3 mass%, more preferably 0.2 mass% to 2.5 mass%, even more preferably 0.2 mass% to 2 mass%, and particularly preferably 0.2 mass% to 1.5 mass%.

(Other Components)

The gravure ink may further include other components such as various additives in addition to the above components as needed. Examples of other components include various additives such as extender pigments, pigment dispersants, waxes, anti-blocking agents, leveling agents, defoaming agents, plasticizers, antistatic agents, infrared absorbers, and ultraviolet absorbers, fragrances, flame retardants, etc. These various additives may be further added to the ink as needed.

The viscosity of the gravure ink may preferably be 10 mPa·s or more from the viewpoint of preventing pigment sedimentation and adequately dispersing the pigment. On the other hand, from the viewpoint of workability efficiency during ink manufacturing or printing, the viscosity of the gravure ink may preferably be 1,000 mPa·s or less. The above viscosity is a value measured at 25°C using a B-type viscometer manufactured by Tokimec Inc.

<Gravure Printing Method and Printed Matter>

The gravure printing method can be appropriately selected from known methods. That is, a gravure printing machine capable of printing multiple colors, equipped with a rotating intaglio plate (gravure plate) and a doctor blade in contact thereto, is used, and the gravure ink is supplied from an ink container (ink pan). A dedicated viscosity controller may be used for viscosity adjustment. Additionally, the substrate for printing is supplied in a roll-to-roll manner, and the printed matter passes through a drying unit after printing. The temperature of the drying unit is preferably 30°C to 100°C. Furthermore, the printing speed is preferably 50 m/minute to 250 m/minute.

Gravure printing methods are broadly classified into surface printing and reverse printing. For example, in surface printing, in the case where the substrate is white paper or a white film, a printed matter can be obtained by printing yellow ink, magenta ink, cyan ink, and black ink in this order on the substrate.

Additionally, for example, in reverse printing, in the case where the substrate is a transparent film, it is preferable to produce the printed matter by printing black ink, cyan ink, magenta ink, yellow ink, and white ink in this order on the substrate.

The thickness of the printing layer can be appropriately selected according to the applications, the type and number of inks used, and the number of times of overprinting. In an embodiment, the thickness of the printing layer may typically be in the range of 0.5 μm to 10 μm.

[Substrate]

Examples of the substrate include polyolefin substrates such as polyethylene and polypropylene; polycarbonate substrates; polyester substrates such as polyethylene terephthalate and polylactic acid; polystyrene substrates; polystyrene-based resin substrates such as AS and ABS; polyamide substrates such as nylon; polyvinyl chloride substrates; polyvinylidene chloride substrates; cellophane substrates; paper substrates; aluminum foil substrates; composite substrates composed of these composite materials, etc. The substrate may be in the shape of either a film or a sheet. Among these, polyester substrates and polyamide substrates with high glass transition temperatures are suitably used.

The surface of the above substrate may be vapor-deposited with metal oxide, etc., or may be coated with polyvinyl alcohol, etc. Examples of substrates with such surface treatment include GL-AE manufactured by Toppan Printing Co., Ltd. and IB-PET-PXB manufactured by Dai Nippon Printing Co., Ltd., which have aluminum oxide vapor-deposited on surfaces thereof. The substrate may be treated with additives such as antistatic agents and ultraviolet light inhibitors as needed, and may also be subjected to corona treatment or low-temperature plasma treatment.

The thickness of the substrate is not particularly limited, and may typically be in the range of 5 μm to 100 μm.

<Water-based Flexo Ink>

The water-based flexo ink includes a pigment and a binder resin as a dispersion medium, and preferably further includes a water-based solvent.

(Pigment)

The content ratio of the pigment in the water-based flexo ink is not particularly limited, but is preferably 10 mass% to 30 mass%, and more preferably 15 mass% to 25 mass%.

(Binder Resin)

The water-based flexo ink preferably includes a binder resin. Examples of the binder resin include water-based resins such as water-based polyurethane resin, water-based acrylic urethane resin, polyester resin, acrylic resin, styrene-acrylic resin, styrene-maleic anhydride resin, rosin-modified maleic acid resin, cellulose-based resin, and chlorinated polyolefin. Among these, it is preferable to include at least a water-based polyurethane resin. The binder resin can be used alone or in combination of two or more types.

[Water-based Polyurethane Resin]

The polyurethane resin is generally a resin obtained by reacting a polyisocyanate having two or more isocyanate groups in one molecule with a hydroxyl group-containing compound having two or more hydroxyl groups in one molecule. In an embodiment, the water-based polyurethane resin includes the structure described below. Such a structure can be preferably introduced by appropriately selecting the structure and type of the hydroxyl group-containing compound.

The number of urethane bonds (mmol/g) in the water-based polyurethane resin is not particularly limited. In an embodiment, from the viewpoint of adjusting the molecular weight of the water-based polyurethane resin and the hardness of the coating film, the number of urethane bonds is preferably 2.2 mmol/g to 3.0 mmol/g, and more preferably 2.3 mmol/g to 2.9 mmol/g. The number of urethane bonds can be set to a desired range by appropriately adjusting the amount of the hydroxyl group-containing compound and polyisocyanate, as well as the reaction conditions.

The glass transition temperature (Tg) of the water-based polyurethane resin is not particularly limited, but is preferably -70°C or lower, and more preferably -70°C to -90°C. By setting the Tg of the water-based polyurethane resin to -70°C or lower, the film-forming properties of the ink are improved, and the adhesion of the coating film is improved.

The weight average molecular weight of the water-based polyurethane resin (measured by GPC, converted to standard polystyrene) is not particularly limited, but is preferably 10,000 to 100,000, and more preferably 30,000 to 70,000.

The hydroxyl value (mgKOH/g) of the water-based polyurethane resin is not particularly limited, but from the viewpoint of water resistance, etc., the hydroxyl value is preferably 35 mgKOH/g or less, and more preferably 20 mgKOH/g or less. In an embodiment, the above hydroxyl value (mgKOH/g) may be 0 mgKOH/g.

The water-based polyurethane resin may be water-soluble or a water-based emulsion, but is preferably water-soluble. Here, a water-based emulsion refers to a resin solution in which a resin that is poorly soluble in water is stabilized in a particulate state as an emulsion in water.

The content ratio of the water-based polyurethane resin is preferably 3 mass% or more, more preferably 5 mass% or more, and even more preferably 7 mass% or more, based on the total mass of the water-based flexo ink. On the other hand, the content ratio of the water-based polyurethane resin is preferably 25 mass% or less, more preferably 20 mass% or less, and even more preferably 17 mass% or less, based on the total mass of the water-based flexo ink.

[Polyvinyl Butyral Resin]

In an embodiment, the binder resin used in the water-based flexo ink preferably further includes polyvinyl butyral resin. According to such an embodiment, there is a tendency to easily further enhance the adhesion of the ink film to the

substrate. As the polyvinyl butyral resin, the polyvinyl butyral resin described in the explanation of the gravure ink above is preferable.

(Water-based Solvent)

The water-based flexo ink includes a water-based solvent. Examples of the water-based solvent include water; alcohol solvents such as n-propanol and isopropanol; glycol solvents such as propylene glycol, butylene glycol, dipropylene glycol, and tripropylene glycol; glycol monoalkyl ether solvents such as propylene glycol monoethyl ether and propylene glycol monopropyl ether, etc.
The content ratio of the water-based solvent is preferably 40 mass% to 70 mass% based on the total mass of the water-based flexo ink.

(Other Components)

The water-based flexo ink may further include other components such as various additives in addition to the above components as needed. Examples of other components include known various additives such as extender pigments, pigment dispersants, waxes, leveling agents, surfactants, defoaming agents, preservatives, thickeners, pH adjusting agents, curing agents, ultraviolet absorbers, etc. These various additives may be further added to the ink as needed. In addition, non-aqueous solvents other than alcohol solvents (for example, ketone-based solvents and ester-based solvents) may be added to the extent that the problem can be solved. The content ratio of the non-aqueous solvent is preferably 20 mass% or less, and more preferably 10 mass% or less, based on the total mass of the ink.

<Flexo Printing Method and Printed Matter>

The flexo printing method is not particularly limited and can be appropriately selected from known methods. Examples include two-roll method, doctor method, doctor chamber method, etc. In the doctor method and doctor chamber method, a flexo ink is supplied to an anilox roll with cells formed on the surface thereof, and after a process of scraping off excess flexo ink on the anilox roll surface with a doctor blade, the ink is finally printed (applied) to the substrate through a resin plate.
As the anilox used for flexo printing, ceramic anilox rolls with cell engraving, chrome-plated anilox rolls, etc. can be used. The cell shapes include honeycomb pattern, diamond pattern, helical pattern, etc., and any of these patterns can be used.
Examples of the plate used for flexo printing include photosensitive resin plates utilizing ultraviolet curing with UV light sources, and elastomer material plates using a direct laser engraving method. As for the sleeve and cushion tape on which the plate is attached, any suitable ones can be used.
As the flexo printing machine, there are CI-type multicolor flexo printing machines and unit-type multicolor flexo printing machines. As for the ink supply method, chamber method and two-roll method can be mentioned. Printing machines that appropriately combine these can be used.

[Substrate]

Examples of the substrate include plastic films such as polyethylene, polypropylene, polyethylene terephthalate, and nylon, cellophane, paper, aluminum foil, or films, sheets, etc. composed of composite materials of these. As paper substrates, it is preferable to use paper substrates selected from uncoated paper, glassine kraft paper with one side of the substrate treated, bleached kraft paper, unbleached kraft paper, etc. Other plastic films and other substrates can be the same as those used for gravure ink printed matter.

<Flexo Ink>

The flexo ink includes a pigment and a binder resin as a dispersion medium, and preferably further includes an organic solvent.

(Pigment)

The content ratio of the pigment in the flexo ink is not particularly limited, but is preferably 4 mass% to 25 mass%, and more preferably 5 mass% to 20 mass%.

(Binder Resin)

Examples of the binder resin include polyurethane resin, polyvinyl acetal resin, cellulose ester resin, polyamide resin, ethylene-vinyl acetate copolymer resin, vinyl acetate resin, polystyrene resin, acrylic resin, polyester resin, alkyd resin, rosin-based resin, rosin-modified maleic acid resin, ketone resin, cyclized rubber, butyral resin, petroleum resin, chlorinated polyolefin resin, etc.
Among these, it is preferable that the binder resin includes polyurethane resin, polyvinyl acetal resin, and cellulose ester resin.
As for polyurethane resin and polyvinyl acetal resin, the polyurethane resin and polyvinyl acetal resin described in the explanation of the gravure ink above are preferable.
As for cellulose ester resin, nitrocellulose resin, cellulose acetate propionate resin, or cellulose acetate butyrate resin is preferable.
Nitrocellulose resin is obtained by esterifying (nitrating) a part or a large part of the hydroxyl groups of cellulose with a mixed acid of sulfuric acid and nitric acid. The solubility of nitrocellulose resin to solvents varies depending on the degree of nitration. Generally, resins with a high degree of nitration are used with hydrocarbon-based solvents or ester-based solvents. In addition, resins with a low degree of nitration are used with alcohol-based solvents.
Cellulose acetate propionate resin is obtained by triesterifying cellulose with acetic acid and propionic acid, followed by hydrolysis. Generally, resins with 0.6 mass% to 2.5 mass% acetylation, 42 mass% to 46 mass% propionation, and 1.8 mass% to 5 mass% hydroxyl groups are commercially available. In an embodiment of the present invention, from the viewpoint of compatibility with polyurethane resin, it is preferable to use cellulose acetate propionate resin with a propionyl group content ratio of 40 mass% to 50 mass% (median value 45%), an acetyl group content ratio of 0.5 mass% to 3 mass% (median value 2.5%), a hydroxyl group content ratio of 2 mass% to 6 mass% (median value 2.5%), and a viscosity of 0.05 Pa·s to 0.2 Pa·s.
Cellulose acetate butyrate resin is obtained by triesterifying cellulose with acetic acid and butyric acid, followed by hydrolysis. Generally, resins with 2 mass% to 30 mass% acetylation, 17 mass% to 53 mass% butyrylation, and 1 mass% to 5 mass% hydroxyl groups are commercially available.

(Organic Solvent)

Examples of the organic solvents used in flexo ink include ester-based organic solvents such as ethyl acetate, n-propyl acetate, butyl acetate, and propylene glycol monomethyl ether acetate; alcohol-based organic solvents such as methanol, ethanol, n-propanol, isopropanol, and n-butanol; glycol ether-based solvents such as ethylene glycol monopropyl ether and propylene glycol monomethyl ether; aliphatic organic solvents such as methylcyclohexane, etc. It is preferable to use a mixture of two or more of these organic solvents.

(Other Components)

The flexo ink may include other components such as various additives in addition to the above components as needed. Examples of other components include various additives such as extender pigments, pigment dispersants, waxes, anti-blocking agents, leveling agents, defoaming agents, plasticizers, antistatic agents, infrared absorbers, ultraviolet absorbers, fragrances, and flame retardants. These various additives may be further added to the ink as needed.

<Active Energy Ray Curable Flexo Ink>

The active energy ray curable flexo ink includes a pigment and a polymerizable compound as a dispersion medium, and preferably includes a photoinitiator.

(Pigment)

The content ratio of the pigment in the active energy ray curable flexo ink is not particularly limited, but is preferably 5 mass% to 30 mass%, and more preferably 10 mass% to 25 mass%.

(Polymerizable Compound)

The polymerizable compound is as described above as a dispersion medium.
The polymerizable compound can be used alone or in combination of two or more types.
The content ratio of the polymerizable compound is preferably 25 mass% to 90 mass%, and more preferably 35

mass% to 80 mass%, with respect to the total mass of the active energy ray curable flexo ink.

(Polymerization Initiator)

The active energy ray curable flexo ink includes a polymerization initiator. As the polymerization initiator, it is preferable to include a radical polymerization initiator, and more preferable to include a photoinitiator. The polymerization initiator is a compound that undergoes chemical changes and generates radicals through the action of light or interaction with the electronically excited state of a sensitizing dye. Among these, a photo-radical initiator is preferable for initiating polymerization by means of light exposure.
The photo-radical initiator is not particularly limited, and known compounds can be used. Specific examples include benzophenone-based compounds, dialkoxyacetophenone-based compounds, α-hydroxyalkylphenone-based compounds, α-aminoalkylphenone-based compounds, acylphosphine oxide-based compounds, thioxanthone-based compounds, etc.
Examples of the above benzophenone-based compounds include benzophenone, 4-methylbenzophenone, 4-phenylbenzophenone, 4,4'-bis(diethylamino)benzophenone, 4,4'-bis(dimethylamino)benzophenone, [4-(methylphenylthio)phenyl]-phenylmethanone, etc.
Examples of the above dialkoxyacetophenone-based compounds include 2,2-dimethoxy-2-phenylacetophenone, dimethoxyacetophenone, diethoxyacetophenone, etc.
Examples of the above α-hydroxyalkylphenone-based compounds include 1-hydroxycyclohexylphenylketone, 2-hydroxy-2-methyl-1-phenyl-propan-1-one, 1-[4-(2-hydroxymethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, etc.
Examples of the above α-aminoalkylphenone-based compounds include 2-methyl-1-[4-(methylthio)-phenyl]-2-morpholinopropan-1-one, 2-benzyl-2-(dimethylamino)-1-(4-morpholinophenyl)-1-butanone, 2-(dimethylamino)-2-[(4-methylphenyl)methyl]-1-[4-(4-morpholinyl)phenyl]-1-butanone, etc.
Examples of the above acylphosphine oxide-based compounds include diphenylacylphenylphosphine oxide, 2,4,6-trimethylbenzoyl-diphenylphosphine oxide, bis(2,4,6-trimethylbenzoyl)-phenylphosphine oxide, etc.
Examples of the above thioxanthone-based compounds include 2-isopropylthioxanthone, 2,4-dimethylthioxanthone, 2,4-diethylthioxanthone, etc.
The above-mentioned polymerization initiators can be used alone or in combination of two or more types.
The content ratio of the polymerization initiator is preferably 0.5 mass% to 20 mass%, and more preferably 5 mass% to 15 mass%, with respect to the total mass of the active energy ray curable flexo ink.

(Polymerization Initiator Auxiliary)

The active energy ray curable flexo ink can also include a polymerization initiator auxiliary. By including a polymerization initiator auxiliary, the curability can be further enhanced. Examples of the polymerization initiator auxiliary include triethanolamine, methyldiethanolamine, triisopropanolamine, aliphatic amines, ethyl 2-dimethylaminobenzoate, ethyl 4-dimethylaminobenzoate, isoamyl 4-dimethylaminobenzoate, dibutyl ethanolamine, etc.
The content ratio of the above polymerization initiator auxiliary is preferably 0.1 mass% to 5 mass%, and more preferably 0.5 mass% to 3 mass%, with respect to the total mass of the active energy ray curable flexo ink.

(Dispersant)

The active energy ray curable flexo ink preferably further includes a dispersant to further improve the pigment dispersibility. There is no particular limitation on the dispersant, and known dispersants can be used.
Specific examples include high molecular weight dispersants mainly composed of polyoxyalkylene polyalkylene polyamine, vinyl-based polymers and copolymers, acrylic-based polymers and copolymers, polyesters, polyamides, polyimides, polyurethanes, amine-based polymers, etc. Among these, from the viewpoint of pigment dispersion stability, pigment dispersants containing basic functional groups with block structures or comb-like structures are preferable.
Such pigment dispersants can also be obtained as commercially available products. Examples include the Ajisper series (Ajisper PB821, PB822, PB824, etc.) manufactured by Ajinomoto Fine-Techno Co., Inc., the Solsperse series (SOLSPERSE 24000, SOLSPERSE 32000, SOLSPERSE 38500, SOLSPERSE 39000, etc.) manufactured by Lubrizol Japan Ltd., the Disperbyk series (BYK-162, BYK-168, BYK-183, etc.) manufactured by BYK-Chemie, etc.
The content ratio of the above dispersant is preferably 0.1 mass% to 10 mass% with respect to the total mass of the active energy ray curable flexo ink.

(Wax)

The active energy ray curable flexo ink preferably includes a wax to further enhance abrasion resistance, anti-blocking properties, slip properties, and scratch resistance. There is no particular limitation on the wax, and known waxes can be used. For example, there are natural waxes and synthetic waxes. Natural waxes include, for example, carnauba wax, Japan wax, lanolin, montan wax, paraffin wax, microcrystalline wax, etc. Synthetic waxes include, for example, Fischer-Tropsch wax, polyethylene wax, polypropylene wax, polytetrafluoroethylene wax, polyamide wax, silicone compounds, etc.

The content ratio of the above wax is preferably 0.1 mass% to 5 mass%, and more preferably 0.5 mass% to 4 mass%, with respect to the total mass of the active energy ray curable flexo ink from the viewpoint of balance among abrasion resistance, gloss, and piling.

(Binder Resin)

The active energy ray curable flexo ink may include a binder resin. By including a binder resin, the curing shrinkage of the coating film that occurs during curing is mitigated, curling of the substrate is suppressed, and furthermore, adhesion to the substrate is improved.

Examples of the binder resin include polyvinyl chloride, poly(meth)acrylic acid ester, epoxy resin, polyester resin, polyurethane resin, cellulose derivatives (for example, ethyl cellulose, cellulose acetate, nitrocellulose), vinyl chloride-vinyl acetate copolymer, polyamide resin, polyvinyl acetal resin, diallyl phthalate resin, alkyd resin, rosin-modified alkyd resin, petroleum resin, urea resin, synthetic rubbers such as butadiene-acrylonitrile copolymer, etc. Among these, diallyl phthalate resin and polyester resin are preferable. Diallyl phthalate resin is more preferable.

The weight average molecular weight of the binder resin is preferably 1,000 to 100,000, and more preferably 2,000 to 70,000.

The above binder resin can be used alone or in combination of two or more types. Additionally, from the viewpoint of curability, the content ratio of the binder resin is preferably 1 mass% to 15 mass%, and more preferably 1 mass% to 5 mass%, with respect to the total mass of the active energy ray curable flexo ink.

(Polymerization Inhibitor)

The active energy ray curable flexo ink may include a polymerization inhibitor. Examples of the polymerization inhibitor include 4-methoxyphenol, hydroquinone, methylhydroquinone, t-butylhydroquinone, 2,6-di-t-butyl-4-methylphenol, phenothiazine, aluminum salt of N-nitrosophenylhydroxylamine, etc.

The content ratio of the polymerization inhibitor is preferably 0.01 mass% to 2 mass% with respect to the total mass of the active energy ray curable flexo ink from the viewpoint of maintaining curability while improving the storage stability of the active energy ray curable flexo ink.

(Other Components)

The active energy ray curable flexo ink may include other components such as various additives in addition to the above components as needed, to the extent that the effects of the present invention are not reduced. Various additives such as extender pigments, leveling agents, surfactants, defoaming agents, ultraviolet absorbers, antistatic agents, and antioxidants can be added to the ink as needed.

It is preferable that the active energy ray curable flexo ink does not substantially include water. "Does not substantially include" means that the content ratio of water is 1 mass% or less with respect to the total mass of the ink composition.

<Printing Method and Printed Matter of Active Energy Ray Curable Flexo Ink>

The active energy ray curable flexo ink can be printed on a recording medium by flexographic printing method and cured by active energy rays to form a printed matter. There is no particular limitation on the above-mentioned recording medium, and known media can be used. Specific examples include coated paper such as art paper, coat paper, and cast paper; uncoated paper such as high-quality paper, medium-quality paper, and newsprint paper; synthetic paper such as Yupo paper; plastic films such as PET (polyethylene terephthalate), PP (polypropylene), and OPP (biaxially stretched polypropylene), etc.

There is no particular limitation on the method of curing the active energy ray curable flexo ink, and known methods can be used. For example, the ink can be cured by irradiating the ink with $\alpha$-rays, $\gamma$-rays, electron beams, X-rays, ultraviolet rays, visible light, or infrared light. Among these, ultraviolet rays and electron beams are preferable, and

ultraviolet rays are more preferable. The peak wavelength of the active energy rays is preferably 200 nm to 600 nm, and more preferably 350 nm to 420 nm.

There is no particular limitation on the active energy ray source, and known ray sources can be used. Specific examples include mercury lamps, xenon lamps, metal halide lamps, ultraviolet light-emitting diodes (UV-LEDs), ultraviolet laser diodes (UV-LDs) and other LEDs (light-emitting diodes), gas and solid-state lasers, etc. Among these, ultraviolet light-emitting diodes (UV-LEDs) are preferable in terms of being compact, long-lasting, highly efficient, and low-cost.

<Packaging Material>

An embodiment of the present invention relates to a packaging material. The packaging material includes a printed matter in at least a part thereof. The printed matter in the packaging material may be formed using the printing ink set of the above-described embodiments according to various printing methods as described earlier. The printed matter in the packaging material may be formed using individual inks without using the printing ink set of the above-described embodiments, so that a specific combination of pigments can be obtained. Therefore, in an embodiment, the printed matter includes a substrate and a printing layer formed on the substrate and including at least four types of image areas, wherein the four types of image areas are composed of a yellow image area including an isoindoline compound represented by the above general formula (1) or C.I. Pigment Yellow 180, a cyan image area including a phthalocyanine pigment and a dispersion medium, a magenta image area A including C.I. Pigment Red 122 or C.I. Pigment Violet 19, and a magenta image area B including a diketopyrrolopyrrole pigment represented by the above general formula (101) or a perylene pigment represented by the above general formula (201). Here, the substrate is as described earlier.

In an embodiment, the packaging material can be used in the form of the printed matter itself, which is formed by forming a printing layer on the substrate. Examples of such a packaging material include seals and labels. In another embodiment, the packaging material may have, for example, at least a laminated structure in which the printed matter, an adhesive layer, and a sealant substrate are sequentially laminated. By processing the packaging material having such a laminated structure, a package can be obtained.

Examples of the package include four-side sealed packages, three-side sealed packages, pillow packages, stick bags, gusset bags, square bottom bags, standing pouches, deep-drawn containers, vacuum packages, skin packs, zipper bags, spout pouches, twist wraps, wrap packages, shrink packages, labels, liquid paper packs, paper trays, etc. In an embodiment, the packaging material can be suitably used for packages having various shapes.

Examples of items packaged in the packaging material include foodstuffs (for example, rice grains, confectionery, seasonings, edible oils and fats, prepared foods, etc.), beverages (for example, alcoholic beverages, soft drinks, mineral water, etc.), daily necessities and cultural goods (for example, pharmaceuticals, cosmetics, stationery, etc.), and electronic components.

The following describes in more detail the packaging material having the above-mentioned laminated structure.

[Adhesive Layer]

In the packaging material having the above-mentioned laminated structure, adhesive components that can be used for forming the adhesive layer include laminate adhesives, hot melt adhesives, and thermoplastic resins. Among the above adhesive components, examples of laminate adhesives and hot melt adhesives include polyether-based adhesives; polyurethane-based adhesives; epoxy-based adhesives; polyvinyl acetate-based adhesives; cellulose-based adhesives; and (meth)acrylic-based adhesives. Among these adhesive components, polyurethane-based adhesives are preferably used.

The adhesive components can be used alone or in combination of two or more types.

The above polyurethane-based adhesives are reactive adhesives including polyols and polyisocyanates, and may have releasability. Examples of polyurethane adhesives having releasability include the laminate adhesive described in Japanese Patent Application Laid-Open No. 2020-084130.

Such polyurethane adhesives having releasability preferably have an acid value of 5 mgKOH/g to 45 mgKOH/g. Additionally, it is preferable that the polyols constituting the polyurethane-based adhesives include polyester polyols, and the polyisocyanates include one type selected from the group consisting of aliphatic polyisocyanates and aromatic aliphatic polyisocyanates.

The thickness of the adhesive layer may typically be in the range of 1 $\mu$m to 6 $\mu$m.

[Sealant Substrate]

In the packaging material having the above-mentioned laminated structure, the sealant substrate is a substrate constituting the innermost layer of the laminate film. As the sealant substrate, a resin material that can be fused to each other by heat (having heat-sealability) is used. Examples of the above sealant substrate include non-stretched polypropylene (CPP), vapor-deposited non-stretched polypropylene film (VMCPP), low-density polyethylene (LDPE), linear low-density polyethylene (LLDPE), ethylene-vinyl acetate copolymer (EVA), etc.

The thickness of the sealant substrate is not particularly limited. Considering the processability into packaging materials and heat-sealability, the above thickness is preferably in the range of 10 μm to 200 μm, and more preferably in the range of 15 μm to 150 μm. Additionally, by providing unevenness with a height difference of 5 μm to 20 μm on the sealant substrate, it is possible to impart characteristics such as slip properties and packaging material tear resistance to the sealant substrate.

In addition, the method of laminating the sealant substrate is not particularly limited. Examples of the method include a method of laminating the adhesive layer and the sealant substrate film with heat (thermal laminate, dry laminate), or a method of extruding a molten sealant substrate resin onto the adhesive layer and cooling and solidifying the resin to form a laminate (extrusion lamination method).

Conventional printing inks used in a packaging material may not have sufficient light resistance to various light sources. Therefore, there may be a decrease in design properties, such as fading. Additionally, due to the influence of radicals generated by light exposure during storage, there may be a decrease in the cohesive strength or adhesive strength of the printing layer, leading to a reduction in laminate strength. Consequently, when opening the packaged item and packaging material that have been stored for a long period of time under light exposure, problems such as interlayer delamination of the laminate may occur. In contrast thereto, the packaging material of this embodiment can maintain high design properties due to the excellent color reproducibility of the printing ink set. Furthermore, as the printing layer formed using the printing ink set has excellent light resistance and excellent adhesion, it is possible to suppress the occurrence of defects such as interlayer delamination observed in conventional packaging materials. From this viewpoint, in an embodiment, the printing ink set of the above embodiments can be suitably used for applications in packaging materials having laminated structures. According to such an embodiment, a packaging material with high laminate strength can be easily provided.

## Examples

The embodiments of the present invention will be described in detail below with examples, but the embodiments of the present invention are not limited to the following examples. It should be noted that "parts" means "parts by mass" and "%" means "mass%".

In addition, the formulation amounts in the tables are in parts by mass, and except for solvents, the formulation amounts are values converted to non-volatile content. It should be noted that blank spaces in the tables indicate that the component was not included in the formulation.

Furthermore, when the color difference reference color data in the L*a*b* color system is denoted as (L*t, a*t, b*t) and the measured value of the sample is denoted as (L*, a*, b*), the values of ΔL*, Δa*, Δb*, color difference ΔE*ab, hue difference ΔH*, and chroma difference ΔC* are calculated using the following formulas.

$$\Delta L^* = L^* - L^*t$$

$$\Delta a^* = a^* - a^*t$$

$$\Delta b^* = b^* - b^*t$$

$$\Delta E^*ab = \{(\Delta L^*)^2 + (\Delta a^*)^2 + (\Delta b^*)^2\}^{1/2}$$

$$\Delta H^* = \{(\Delta a^*)^2 + (\Delta b^*)^2 - (\Delta C^*)^2\}^{1/2}$$

$$\Delta C^* = \{(a^*)^2 + (b^*)^2\}^{1/2} - \{(a^*t)^2 + (b^*t)^2\}^{1/2}$$

(Average Primary Particle Diameter of Pigment)

The average primary particle diameter of the pigment was measured by directly measuring the size of primary particles from electron microscope photographs using a transmission electron microscope (TEM). Specifically, the short axis diameter and long axis diameter of individual primary particles of the pigment were measured, and the average was taken as the particle diameter of the primary particles of that pigment. Then, for 100 pigment particles or more, the volume

was calculated by approximating the particle diameter obtained for each as a cube, and the volume average particle diameter was taken as the average primary particle diameter.

<Manufacturing of Isoindoline Compound>

(Manufacturing Example 1-1)

(Step 1)

To a 4-neck flask equipped with a reflux condenser, a dropping funnel, and a stirrer, 800 parts of water, 60 parts of 1,3-diiminoisoindoline, and 120 parts of 28% ammonia water were added in this order and stirred. A solution of 42.58 parts of 2-cyano-N-methylacetamide dissolved in 160 parts of water was added dropwise over 30 minutes using the dropping funnel. The mixture was heated and stirred at 30°C until the raw material 1,3-diiminoisoindoline disappeared. This reaction slurry was filtered using a Buchner funnel. Furthermore, the residue was added to 1600 parts of water, and stirred at 40°C for 30 minutes to remove unreacted 2-cyano-N-methylacetamide. The slurry was filtered to obtain non-volatile matter. The disappearance of 1,3-diiminoisoindoline was confirmed by UPLC (Ultra Performance Liquid Chromatography manufactured by Waters Corporation).

(Step 2)

To a 4-neck flask equipped with a reflux condenser, a dropping funnel, and a stirrer, 60 parts equivalent of the above non-volatile matter and 480 parts of water were added and stirred. Separately, to a glass flask, 461 parts of water, 194 parts of 80% acetic acid, and 35.67 parts of barbituric acid were added and stirred at 65°C. This heated mixture solution was charged into the stirred solution of the above non-volatile matter, and to complete the reaction, the temperature was raised to 85°C and stirring was performed. Heating and stirring were performed until the non-volatile matter used as the raw material disappeared. The disappearance of the raw material was confirmed by UPLC.

Subsequently, the slurry was filtered, washed three times with 2400 parts of water, and non-volatile matter was obtained. This non-volatile matter was dried in a hot air dryer at 80°C, and 89.45 parts of isoindoline compound (1-1) were obtained.

(Manufacturing Example 1-2)

The reaction operation was carried out in the same manner as in Manufacturing Example 1-1 except that 35.67 parts of barbituric acid in Step 2 of Manufacturing Example 1-1 were changed to 43.48 parts of 1,3-dimethylbarbituric acid, and 92.05 parts of isoindoline compound (1-2) were obtained.

(Manufacturing Example 1-3)

The reaction operation was carried out in the same manner as in Manufacturing Example 1-1 except that 35.67 parts of barbituric acid in Step 2 of Manufacturing Example 1-1 were changed to 33.89 parts of barbituric acid and 2.17 parts of 1,3-dimethylbarbituric acid, and 85.34 parts of isoindoline compound (1-3) were obtained.

(Manufacturing Example 1-4)

(Step 1)

To a 4-neck flask equipped with a reflux condenser, a dropping funnel, and a stirrer, 800 parts of water, 60 parts of 1,3-diiminoisoindoline, and 120 parts of 28% ammonia water were added in this order and stirred. A solution of 42.58 parts of 2-cyano-N-methylacetamide dissolved in 160 parts of water was added dropwise over 30 minutes using the dropping funnel. The mixture was heated and stirred at 30°C until the raw material 1,3-diiminoisoindoline disappeared. This reaction slurry was filtered using a Buchner funnel. Furthermore, the residue was added to 1600 parts of water, stirred at 40°C for 30 minutes to remove unreacted 2-cyano-N-methylacetamide. The slurry was filtered to obtain non-volatile matter. The disappearance of 1,3-diiminoisoindoline was confirmed by UPLC.

(Step 2)

To a 4-neck flask equipped with a reflux condenser, a dropping funnel, and a stirrer, 60 parts equivalent of the non-volatile matter obtained in the previous preparation as the raw material, 480 parts of water, and 162 parts of 80% acetic acid

were added and stirred. Separately, to a glass flask, 480 parts of water and 162 parts of 80% acetic acid were added, then 33.89 parts of barbituric acid were added and stirred at 65°C. This heated mixture solution was charged into the stirred solution of the above non-volatile matter, and stirred at 30°C for 3 hours. To another separately prepared glass flask, 48 parts of water and 16 parts of 80% acetic acid were added, then 2.17 parts of 1,3-dimethylbarbituric acid were added and stirred at 65°C. This heated mixture solution was charged into the previous reaction stirred solution, and to complete the reaction, the temperature was raised to 85°C and stirring was performed. Heating and stirring were performed until the non-volatile matter used as the raw material disappeared. The disappearance of the raw material was confirmed by UPLC.

Subsequently, the slurry was filtered, washed three times with 2400 parts of water, and non-volatile matter was obtained. This non-volatile matter was dried in a hot air dryer at 80°C, and 85.45 parts of isoindoline compound (1-4) were obtained.

(Manufacturing Example 1-5)

In Step 1 of Manufacturing Example 1-1, 42.58 parts of 2-cyano-N-methylacetamide were changed to 40.45 parts of 2-cyano-N-methylacetamide and 1.82 parts of 2-cyano-acetamide, and in Step 2, 60 parts equivalent of non-volatile matter were changed to 59.81 parts equivalent. Except for these changes, the reaction operations were performed in the same manner as in Manufacturing Example 1-1, and 84.81 parts of isoindoline compound (1-5) were obtained.

(Manufacturing Example 1-6)

In Step 1 of Manufacturing Example 1-1, 42.58 parts of 2-cyano-N-methylacetamide were changed to 40.45 parts of 2-cyano-N-methylacetamide and 3.48 parts of 2-cyano-N-phenylacetamide, and in Step 2, 60 parts equivalent of non-volatile matter were changed to 60.82 parts equivalent. Except for these changes, the reaction operations were performed in the same manner as in Manufacturing Example 1-1, and 85.76 parts of isoindoline compound (1-6) were obtained.

(Manufacturing Example 1-7)

In Step 1 of Manufacturing Example 1-1, 42.58 parts of 2-cyano-N-methylacetamide were changed to 40.45 parts of 2-cyano-N-methylacetamide and 3.50 parts of phenyl cyanoacetate, and in Step 2, 60 parts equivalent of non-volatile matter were changed to 60.84 parts equivalent. Except for these changes, the reaction operations were performed in the same manner as in Manufacturing Example 1-1, and 85.78 parts of isoindoline compound (1-7) were obtained.

(Manufacturing Example 1-8)

In Step 1 of Manufacturing Example 1-1, 60 parts of 1,3-diiminoisoindoline were changed to 57 parts of 1,3-diiminoisoindoline and 3.29 parts of 5-methyl-1,3-diiminoisoindoline, and in Step 2, 60 parts equivalent of non-volatile matter were changed to 60.19 parts equivalent. Except for these changes, the reaction operations were performed in the same manner as in Manufacturing Example 1-1, and 85.16 parts of isoindoline compound (1-8) were obtained.

(Manufacturing Example 1-9)

In Step 1 of Manufacturing Example 1-1, 60 parts of 1,3-diiminoisoindoline were changed to 57 parts of 1,3-diiminoisoindoline and 3.62 parts of 5-methoxy-1,3-diiminoisoindoline, and in Step 2, 60 parts equivalent of non-volatile matter were changed to 60.40 parts equivalent. Except for these changes, the reaction operations were performed in the same manner as in Manufacturing Example 1-1, and 85.36 parts of isoindoline compound (1-9) were obtained.

(Manufacturing Example 1-10)

In Step 1 of Manufacturing Example 1-1, 60 parts of 1,3-diiminoisoindoline were changed to 57 parts of 1,3-diiminoisoindoline and 3.62 parts of 4-methoxy-1,3-diiminoisoindoline, and in Step 2, 60 parts equivalent of non-volatile matter were changed to 60.40 parts equivalent. Except for these changes, the reaction operations were performed in the same manner as in Manufacturing Example 1-1, and 85.36 parts of isoindoline compound (1-10) were obtained.

(Manufacturing Example 1-11)

In Step 2 of Manufacturing Example 1-1, 35.67 parts of barbituric acid were changed to 33.89 parts of barbituric acid and 1.98 parts of 1-methylbarbituric acid. Except for this change, the reaction operations were performed in the same manner as in Manufacturing Example 1-1, and 85.16 parts of isoindoline compound (1-11) were obtained.

(Manufacturing Example 1-12)

In Step 2 of Manufacturing Example 1-1, 35.67 parts of barbituric acid were changed to 33.89 parts of barbituric acid and 2.56 parts of 1,3-diethylbarbituric acid. Except for this change, the reaction operations were performed in the same manner as in Manufacturing Example 1-1, and 85.34 parts of isoindoline compound (1-12) were obtained.

The structures of the isoindoline compounds obtained in Manufacturing Examples 1-1 to 1-12 are shown in Table 1. The structures are represented by general formula (1). In addition, in the table, H represents a hydrogen atom, Me represents a methyl group, Et represents an ethyl group, Ph represents a phenyl group, and OMe represents a methoxy group.

The isoindoline compounds obtained in Manufacturing Examples 1-3 to 1-12 were mixtures of the isoindoline compounds shown in Table 1 (1)-1 and (1)-2, respectively.

[Table 1]

| Table 1 | Isoindoline compound | (1)-1 | | | | | | | | | | | (1)-2 | | | | | | | | | | |
|---|---|---|---|---|---|---|---|---|---|---|---|---|---|---|---|---|---|---|---|---|---|---|---|
| | | $R_1$ | $R_4$ | $R_2$ | $R_3$ | $R_5$ | $R_6$ | $R_7$ | $X_1$ | Theoretical molecular weight | Measured value | Content | $R_1$ | $R_4$ | $R_2$ | $R_3$ | $R_5$ | $R_6$ | $R_7$ | $X_1$ | Theoretical molecular weight | Measured value | Content |
| Manufacturing Example 1-1 | (1-1) | H | H | H | H | H | H | Me | NH | 337 | 336 | 100% | - | - | - | - | - | - | - | - | - | - | - |
| Manufacturing Example 1-2 | (1-2) | H | H | H | H | Me | Me | Me | NH | 365 | 364 | 100% | - | - | - | - | - | - | - | - | - | - | - |
| Manufacturing Example 1-3 | (1-3) | H | H | H | H | H | H | Me | NH | 337 | 336 | 95% | H | H | H | H | Me | Me | Me | NH | 365 | 364 | 5% |
| Manufacturing Example 1-4 | (1-4) | H | H | H | H | H | H | Me | NH | 337 | 336 | 95% | H | H | H | H | Me | Me | Me | NH | 365 | 364 | 5% |
| Manufacturing Example 1-5 | (1-5) | H | H | H | H | H | H | Me | NH | 337 | 336 | 95% | H | H | H | H | H | H | H | NH | 323 | 322 | 5% |
| Manufacturing Example 1-6 | (1-6) | H | H | H | H | H | H | Me | NH | 337 | 336 | 95% | H | H | H | H | H | H | Ph | NH | 399 | 398 | 5% |
| Manufacturing Example 1-7 | (1-7) | H | H | H | H | H | H | Me | NH | 337 | 336 | 95% | H | H | H | H | H | H | Ph | O | 400 | 399 | 5% |
| Manufacturing Example 1-8 | (1-8) | H | H | H | H | H | H | Me | NH | 337 | 336 | 95% | H | H | Me | H | H | H | Me | NH | 351 | 350 | 5% |
| Manufacturing Example 1-9 | (1-9) | H | H | H | H | H | H | Me | NH | 337 | 336 | 95% | H | H | OMe | H | H | H | Me | NH | 367 | 366 | 5% |
| Manufacturing Example 1-10 | (1-10) | H | H | H | H | H | H | Me | NH | 337 | 336 | 95% | OMe | H | H | H | H | H | Me | NH | 367 | 366 | 5% |
| Manufacturing Example 1-11 | (1-11) | H | H | H | H | H | H | Me | NH | 337 | 336 | 95% | H | H | H | H | Me | H | Me | NH | 351 | 350 | 5% |
| Manufacturing Example 1-12 | (1-12) | H | H | H | H | H | H | Me | NH | 337 | 336 | 95% | H | H | H | H | Et | Et | Me | NH | 365 | 364 | 5% |

The identification of the obtained isoindoline compounds was carried out by comparing the molecular ion peaks of the mass spectra with the mass numbers (theoretical values) obtained by calculation. The measurement of the molecular ion peaks in the mass spectra was performed using ACQUITY UPLS H-Class manufactured by Waters Corporation (column used: ACQUITY UPLC BEH C18 Column 130Å, 1.7 μm, 2.1 mm × 50 mm)/Ms TAP XEVO TQD. Table 1 shows the theoretical molecular weights and the measured values obtained by mass spectrometry for the isoindoline compounds (Manufacturing Examples 1-1 to 1-12). Due to the nature of the measurement, the H (proton) of the compound is eliminated, so if the measured value is the value of the mass number of the theoretical molecular weight minus 1, the compound matches.

(Manufacturing Example 1-13)

95 parts of isoindoline compound (1-1), 5 parts of isoindoline compound (1-2), 1000 parts of sodium chloride, and 150 parts of diethylene glycol were charged into a stainless steel 1-gallon kneader (manufactured by Inoue Seisakusho) and kneaded at 60°C for 8 hours. Next, the kneaded mixture was added to warm water at about 70°C and stirred for 1 hour into a slurry (form a slurry). After repeating filtration and water washing to remove sodium chloride and diethylene glycol, the obtained solid was dried at 80°C for one day and night and then pulverized to obtain 95 parts of isoindoline compound (1-13).

(Manufacturing Example 2-1)

To a 4-neck flask equipped with a reflux condenser, a dropping funnel, and a stirrer, 800 parts of water and 800

parts of 80% acetic acid were added and stirred. To this, 111.18 parts of barbituric acid were added and stirred at 65°C to dissolve the barbituric acid. Separately, to a glass flask, 800 parts of water and 60.00 parts of 1,3-diiminoisoindoline were added and stirred at 30°C. This stirred solution was charged into the above heated solution, and to complete the reaction, the temperature was raised to 85°C and stirring was performed. Heating and stirring were performed until the non-volatile matter used as the raw material disappeared. The disappearance of the raw material was confirmed by UPLC.

Subsequently, the mixture was washed three times with 2000 parts of water, and non-volatile matter was obtained. The non-volatile matter was dried in a hot air dryer at 80°C, and 133.59 parts of isoindoline compound (2-1) were obtained.

(Manufacturing Example 2-2)

The reaction operation was carried out in the same manner as in Manufacturing Example 2-1 except that 111.18 parts of barbituric acid were changed to 135.53 parts of 1,3-dimethylbarbituric acid, and 154.00 parts of isoindoline compound (2-2) were obtained.

(Manufacturing Example 2-3)

(Step 1)

To a 4-neck flask equipped with a reflux condenser, a dropping funnel, and a stirrer, 800 parts of water, 60 parts of 1,3-diiminoisoindoline, and 120 parts of 28% ammonia water were added in this order and stirred. A solution of 42.58 parts of 2-cyano-N-methylacetamide dissolved in 160 parts of water was added dropwise over 30 minutes using the dropping funnel. The mixture was heated and stirred at 30°C until the raw material 1,3-diiminoisoindoline disappeared. The slurry formed by this reaction was filtered using a Buchner funnel to obtain non-volatile matter. The disappearance of 1,3-diiminoisoindoline was confirmed by UPLC (Ultra Performance Liquid Chromatography manufactured by Waters Corporation).

(Step 2)

To a 4-neck flask equipped with a reflux condenser, a dropping funnel, and a stirrer, 60 parts equivalent of the non-volatile matter and 480 parts of water were added and stirred. Then, 53.54 parts of 40% methylamine aqueous solution were added and stirred at 40°C. Stirring was performed until the non-volatile matter used as the raw material disappeared. The disappearance of the raw material was confirmed by UPLC.

Subsequently, the mixture was washed three times with 2400 parts of water, and non-volatile matter was obtained. This non-volatile matter was dried in a hot air dryer at 80°C, and 58.62 parts of isoindoline compound (2-3) were obtained.

The structures of the isoindoline compounds obtained in Manufacturing Examples 2-1, 2-2, and 2-3 are shown in Table 2. The structures of isoindoline compounds (2-1) and (2-2) are represented by general formula (2-1), and the structure of isoindoline compound (2-3) is represented by general formula (2-2). In the table, H represents a hydrogen atom and Me represents a methyl group.

[Table 2]

| Table 2 | Isoindoline compound | (2-1) | | | | | | | | | |
|---|---|---|---|---|---|---|---|---|---|---|---|
| | | $R_{11}$ | $R_{14}$ | $R_{12}$ | $R_{13}$ | $R_{15}$ | $R_{16}$ | $R_{17}$ | $R_{18}$ | Theoretical molecular weight | Measured value |
| Manufacturing Example 2-1 | (2-1) | H | H | H | H | H | H | H | H | 367 | 366 |
| Manufacturing Example 2-2 | (2-2) | H | H | H | H | Me | Me | Me | Me | 423 | 422 |

| Table 2 | Isoindoline compound | (2-2) | | | | | | | | | |
|---|---|---|---|---|---|---|---|---|---|---|---|
| | | $R_{19}$ | | | | | | | | Theoretical molecular weight | Measured value |
| Manufacturing Example 2-3 | (2-3) | Me | | | | | | | | 240 | 239 |

The identification of the obtained isoindoline compounds was carried out by comparing the molecular ion peaks of the mass spectra with the mass numbers (theoretical values) obtained by calculation, as described above.

<Manufacturing of C.I. Pigment Yellow 180>

(Manufacturing Example 3-1) PY180-2

While stirring 1300 parts of water, 100 parts of 1,2-bis(2-aminophenoxy)ethane were added and dispersed. After 1 hour, 223.9 parts of 35% hydrochloric acid were added. After stirring for another hour, ice was added to adjust the temperature to 0°C to 5°C, and 148.7 parts of 38% sodium nitrite aqueous solution were added to perform the diazotization reaction. To remove excess nitrite, sulfamic acid was added and stirred for 30 minutes or more to obtain the diazo component.

On the other hand, 190.9 parts of 5-acetoacetylaminobenzimidazolone were dispersed in 1500 parts of methanol, then 393.0 parts of 25% sodium hydroxide aqueous solution were added to dissolve. Furthermore, 4.4 parts of sodium dialkyl sulfosuccinate (Pelex OT-P, manufactured by Kao Corporation) were added to obtain the coupler component.

Separately, 500 parts of ice were added to 813.5 parts of 80% acetic acid aqueous solution, and while stirring, 223.9 parts of 25% sodium hydroxide aqueous solution were added to prepare an acetic acid-sodium acetate buffer solution. The diazo component and the coupler component were simultaneously added dropwise while stirring the buffer solution maintained at 20°C to perform the coupling reaction. The dropping speed was adjusted so that both the diazo component and the coupler component were completely added over a period of 2 hours. After the coupling reaction was completed, it was confirmed that no unreacted diazo component remained in the reaction solution, and then it was heated to 90°C and maintained for 30 minutes. Subsequently, filtration and water washing were performed to obtain a wet cake including water.

The entire amount of the above-mentioned wet cake including water was charged into a pressurizable reaction vessel equipped with a stirring device. Water was added to make the mass inside the vessel 3500 parts and stirred. Then, 200 parts of ortho-xylene and 20 parts of coconut oil fatty acid diethanolamide (Tohohl N-220, manufactured by Toho Chemical Industry Co., Ltd.) were added, and then the mixture was heated at 150°C for 2 hours in an autoclave under self-pressure. After removing ortho-xylene by steam distillation, filtration and water washing were performed, followed by drying at 80°C and pulverizing to obtain 257.9 parts of PY180-2. The average primary particle diameter was 260 nm.

(Manufacturing Example 3-2) PY180-3

The entire amount of the wet cake including water obtained in Manufacturing Example 3-1 was charged into a pressurizable reaction vessel equipped with a stirring device. Water was added to make the mass inside the vessel 3500 parts and stirred. Then, 1800 parts of isobutanol were added, and then the mixture was heated at 110°C for 2 hours in an autoclave under self-pressure. After removing isobutanol by steam distillation, filtration and water washing were performed, followed by drying at 80°C and pulverizing to obtain 258.2 parts of PY180-3. The average primary particle diameter was 208 nm.

(Manufacturing Example 3-3) PY180-4

100 parts of PY180-2, 1000 parts of sodium chloride, and 150 parts of diethylene glycol were charged into a stainless steel 1-gallon kneader (manufactured by Inoue Seisakusho) and kneaded at 80°C for 8 hours. Next, the kneaded mixture was charged into warm water at about 70°C and stirred for 1 hour to form a slurry. After repeating filtration and water washing to remove sodium chloride and diethylene glycol, the mixture was dried at 80°C for one day and night, and then pulverized to obtain 95 parts of PY180-4. The average primary particle diameter was 93 nm.

(Manufacturing Example 3-4) PY180-5

100 parts of PY180-3, 1000 parts of sodium chloride, and 150 parts of diethylene glycol were charged into a stainless steel 1-gallon kneader (manufactured by Inoue Seisakusho) and kneaded at 60°C for 8 hours. Next, the kneaded mixture was charged into warm water at about 70°C and stirred for 1 hour to form a slurry. After repeating filtration and water washing to remove sodium chloride and diethylene glycol, the mixture was dried at 80°C for one day and night, and then pulverized to obtain 95 parts of PY180-5. The average primary particle diameter was 65 nm.

<Manufacturing of Phthalocyanine Pigment>

(Manufacturing Example 4-1) Aluminum Phthalocyanine

In a reaction vessel, 1250 parts of n-amyl alcohol, 225 parts of phthalodinitrile, and 78 parts of anhydrous aluminum chloride were added and mixed with stirring. To this, 266 parts of DBU (1,8-diazabicyclo[5.4.0]undec-7-ene) were added, the temperature was raised, and the mixture was refluxed at 136°C for 5 hours. The reaction solution, which was cooled to 30°C while stirring, was injected into a mixed solvent composed of 5000 parts of methanol and 10000 parts of water while stirring to obtain a blue slurry. This slurry was filtered, washed with a mixed solvent composed of 2000 parts of methanol and 4000 parts of water, and dried to obtain 135 parts of chloroaluminum phthalocyanine represented by the following chemical formula (14).

[Chemical Formula 16]

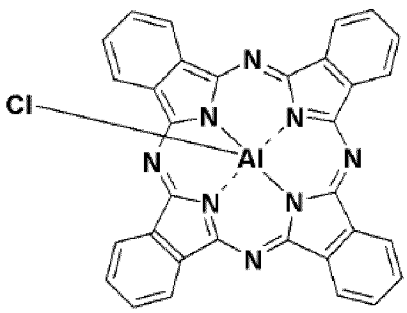

(1 4)

Next, 1500 parts of concentrated sulfuric acid were added to a reaction vessel, followed by the addition of 100 parts of the above chloroaluminum phthalocyanine in an ice bath, and stirred at 25°C for 4 hours. Subsequently, this sulfuric acid solution was injected into 9000 parts of cold water at 3°C, and the resulting precipitate was filtered, washed with water, washed with 1% sodium hydroxide aqueous solution, washed with water in this order, and dried to obtain 98 parts of aluminum phthalocyanine represented by the following chemical formula (12).

[Chemical Formula 17]

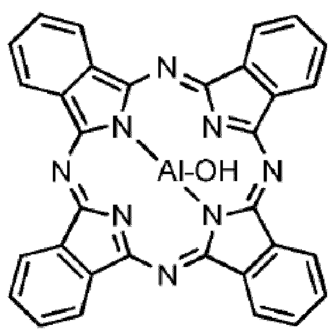

(1 2)

(Manufacturing Example 4-2) Titanyl Phthalocyanine

In a reaction vessel, 1280 parts of 1-hexanol, 320 parts of quinoline, 320 parts of 1,3-diiminoisoindoline, and 206.3 parts of tetrabutyl orthotitanate were added and mixed with stirring. The temperature was raised to 155°C and refluxed for 8 hours. The n-butanol generated in the system was collected so as not to return to the system. To the reaction solution cooled to 60°C while stirring, 1000 parts of methanol were added, and the formed slurry was filtered. The solid obtained after filtration was washed in the order of 1000 parts of methanol, 500 parts of N-methylpyrrolidone, and 1000 parts of methanol, and dried to obtain 250 parts of titanyl phthalocyanine crude represented by the following chemical formula (13).

[Chemical Formula 18]

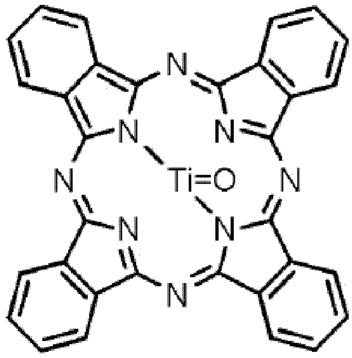

(13)

Next, 1500 parts of concentrated sulfuric acid were added to a reaction vessel, followed by the addition of 100 parts of the above titanyl phthalocyanine crude in an ice bath, and stirred at 25°C for 4 hours. Subsequently, this sulfuric acid solution was injected into 9000 parts of cold water at 3°C, and the resulting precipitate was filtered, washed with water, washed with 1% sodium hydroxide aqueous solution, washed with water in this order to obtain a cake. Then, 1000 parts of diethylene glycol and the cake obtained as described above were added to a reaction vessel and stirred to form a slurry, which was stirred at 120°C for 3 hours. The slurry cooled to 60°C was filtered, washed with 5000 parts of water, and dried to obtain 87 parts of titanyl phthalocyanine.

<Manufacturing of C.I. Pigment Red 122>

(Manufacturing Example 5-1) PR122-3

In a 1-liter pressure-resistant glass autoclave, 45.60 parts (0.2 mol) of well-dried 1,4-cyclohexanedione-2,5-di(carboxylic acid methyl ester), 53.5 parts (0.5 mol) of p-toluidine, 500 parts of methanol, and 4.65 parts (0.045 mol) of 35% hydrochloric acid were measured and sealed. After sufficiently replacing the oxygen in the reaction vessel with nitrogen gas, the gauge pressure was set to 0 kg/$cm^2$. While stirring vigorously, the temperature was raised from room temperature to 100°C in 15 minutes, and then the reaction was carried out for 3 hours. The pressure in the reaction vessel during the reaction was at a maximum of 3.8 kg/$cm^2$.

After the reaction, the mixture was cooled to 30°C or below, then released to atmospheric pressure, and 18 parts of 10% sodium hydroxide aqueous solution were charged and stirred for 10 minutes, after which the product was recovered by filtration. The cake obtained by filtration was thoroughly washed with methanol heated to 60°C. The yield of the resulting 2,5-di-p-toluidino-3,6-dihydroterephthalic acid dimethyl ester was 75.07 parts, which was 99.3% of the theoretical yield. The purity was 99.5%.

Next, 30 parts of the 2,5-di-p-toluidino-3,6-dihydroterephthalic acid dimethyl ester obtained above and 150 parts of a mixture of dimethylnaphthalene isomers were placed in a 200 mL flask with an outlet valve at the bottom, and heated to 120°C to 170°C while stirring under a nitrogen gas atmosphere. Separately, 150 parts of a mixture of dimethylnaphthalene isomers were placed in a 500 mL flask and heated to 280°C or higher while stirring under a nitrogen gas atmosphere. The above heated mixture was introduced over 20 to 40 minutes, and then the mixture was maintained at 280°C to 283°C (reflux) for 30 minutes. The 2,5-dianilino-3,6-dihydroterephthalic acid dimethyl ester and the mixture of dimethylnaphthalene isomers at 120°C to 170°C were introduced into the boiling mixture of dimethylnaphthalene isomers. From the

moment of introduction, the reaction to form 2,9-dimethyl-6,13-dihydroquinacridone began, accompanied by the generation of methanol, which almost ceased immediately after the start of reflux at 283°C. After cooling to 100°C, the nitrogen gas atmosphere was removed, the contents were filtered, washed with 500 parts of hot methanol, and dried to obtain 24.44 parts (96.71 % of the theoretical amount) of 2,9-dimethyl-6,13-dihydroquinacridone.

10 parts of the 2,9-dimethyl-6,13-dihydroquinacridone obtained above and 80 parts of methanol were charged into a 200 mL flask equipped with a reflux condenser and stirred. 12 parts of 50% sodium hydroxide aqueous solution were added and stirred at 40°C for 30 minutes, then 26 parts of 10% sulfuric acid were added dropwise, and after hydrolysis, 10 parts of sodium m-nitrobenzenesulfonate were immediately added, followed by the addition of 3 parts of 50% sodium hydroxide aqueous solution, and then refluxed for 4 hours. The mixture was filtered, washed with water, dried, and pulverized to obtain 9.60 parts of crude 2,9-dimethyl-quinacridone.

Next, the mixture was cooled to 10°C or below in an ice bath, and 9 parts of the crude 2,9-dimethyl-quinacridone obtained above were added to 90 parts of 98% sulfuric acid stirred in the flask, taking care not to exceed a temperature of 30°C. After adding the entire amount, the mixture was stirred for 1 hour at 30°C or below. The above sulfuric acid solution was added dropwise to 1000 parts of water stirred at 10°C, taking care to avoid sudden boiling. After completing the dropwise addition, the mixture was filtered, washed with water until neutral, and a press cake was obtained. Water was added to the obtained press cake, and the pH was adjusted to 9.0 with sodium hydroxide. Then, 0.09 parts of a condensation product of stearoyl chloride and taurine were added, and water and isobutanol were added to make a 4% suspension of pigment solid content in a 35% isobutanol-water mixed solution. This suspension was refluxed for 4 hours, and then isobutanol was distilled off until the liquid temperature reached 99°C. After cooling to 70°C, the mixture was filtered, washed with 60°C warm water, dried, and pulverized to obtain 8.9 parts of PR122-3. The average primary particle diameter was 163 nm.

(Manufacturing Example 5-2) PR122-4

100 parts of PR122-3, 1000 parts of sodium chloride, and 150 parts of diethylene glycol were charged into a 1-gallon stainless steel kneader (manufactured by Inoue Seisakusho) and kneaded at 140°C for 4 hours. Next, the kneaded mixture was charged into warm water at about 70°C, stirred for 1 hour to form a slurry, and after repeated filtration and water washing to remove the sodium chloride and diethylene glycol, the mixture was dried at 80°C for one day and night, and pulverized to obtain 95 parts of PR122-4. The average primary particle diameter was 140 nm.

(Manufacturing Example 5-3) PR122-5

100 parts of PR122-3, 1000 parts of sodium chloride, and 150 parts of diethylene glycol were charged into a 1-gallon stainless steel kneader (manufactured by Inoue Seisakusho) and kneaded at 90°C for 8 hours. Next, the kneaded mixture was charged into warm water at about 70°C, stirred for 1 hour to form a slurry, and after repeated filtration and water washing to remove the sodium chloride and diethylene glycol, the mixture was dried at 80°C for one day and night, and pulverized to obtain 95 parts of PR122-4. The average primary particle diameter was 55 nm.

(Manufacturing Example 5-4) PR122-6

In an ice bath cooled to 10°C or below, 9.5 parts of crude 2,9-dimethyl-quinacridone obtained in Manufacturing Example 5-1 and 0.5 parts of PV19-3 obtained in Manufacturing Example 6-1 described later were added to 90 parts of 98% sulfuric acid stirred in a flask, taking care not to exceed a temperature of 30°C. After adding the entire amount, the mixture was stirred at 30°C or below for 1 hour. The above sulfuric acid solution was added dropwise to 1000 parts of water stirred at 10°C, taking care to avoid sudden boiling. After completing the dropwise addition, the mixture was filtered and washed with water until neutral to obtain a press cake. Water was added to the obtained press cake, and the pH was adjusted to 9.0 with sodium hydroxide. Next, 0.09 parts of a condensation product of stearoyl chloride and taurine were added, along with water and isobutanol to make a 4% suspension of pigment solid content in a 35% isobutanol-water mixed solution. This suspension was refluxed for 2 hours, after which isobutanol was distilled off until the liquid temperature reached 99°C. After cooling to 70°C, the mixture was filtered, washed with 60°C warm water, dried, and pulverized to obtain 8.9 parts of PR122-6. The average primary particle diameter was 44 nm.

<Manufacturing of C.I. Pigment Violet 19>

(Manufacturing Example 6-1) PV19-3

45.6 parts (0.2 mol) of well-dried 1,4-cyclohexanedione-2,5-di(carboxylic acid methyl ester), 46.57 parts (0.5 mol) of aniline, 500 parts of methanol, and 4.65 parts (0.045 mol) of 35% hydrochloric acid were measured into a 1-liter

pressure-resistant glass autoclave. After sealing, the oxygen in the reaction vessel was sufficiently replaced with nitrogen gas, and the gauge pressure was set to 0 $kg/cm^2$. While stirring vigorously, the temperature was raised from room temperature to 100°C in 15 minutes, and then the reaction was carried out for 3 hours. The pressure in the reaction vessel during the reaction was at a maximum of 3.8 $kg/cm^2$. After the reaction, the mixture was cooled to 30°C or below, then released to atmospheric pressure, and 18 parts of 10% sodium hydroxide aqueous solution were added and stirred for 10 minutes, after which the product was filtered. The filtered cake was thoroughly washed with methanol heated to 60°C. The yield of the resulting 2,5-dianilino-3,6-dihydroterephthalic acid dimethyl ester was 75.07 parts, which was 99.3% of the theoretical yield. The purity was 99.5%.

Next, 30 parts of the 2,5-dianilino-3,6-dihydroterephthalic acid dimethyl ester obtained above and 150 parts of a mixture of dimethylnaphthalene isomers were placed in a 200 mL flask with an outlet valve at the bottom, and heated to 120°C to 170°C while stirring under a nitrogen gas atmosphere. Separately, 150 parts of a mixture of dimethylnaphthalene isomers were placed in a 500 mL flask and heated to 280°C or higher while stirring under a nitrogen gas atmosphere. The above heated mixture was introduced over 20 to 40 minutes, and then the mixture was maintained at 280°C to 283°C (reflux) for 30 minutes. From the moment the 120°C to 170°C 2,5-dianilino-3,6-dihydroterephthalic acid dimethyl ester and the mixture of dimethylnaphthalene isomers were introduced into the boiling mixture of dimethylnaphthalene isomers, the reaction to form 6,13-dihydroquinacridone began, accompanied by the generation of methanol, which almost ceased immediately after the start of reflux at 283°C. After cooling to 100°C, the nitrogen gas atmosphere was removed, the contents were filtered, washed with 500 parts of hot methanol, and dried to obtain 24.47 parts (98.2% of the theoretical amount) of 6,13-dihydroquinacridone. The purity was 99% or higher according to IR and absorbance.

10 parts of the 6,13-dihydroquinacridone obtained above and 80 parts of methanol were charged into a 200 mL flask equipped with a reflux condenser and stirred. 12 parts of 50% sodium hydroxide aqueous solution were added and stirred at 40°C for 30 minutes, then 26 parts of 10% sulfuric acid were added dropwise, and after hydrolysis, 10 parts of sodium m-nitrobenzenesulfonate were promptly added, followed immediately by 3 parts of 50% sodium hydroxide aqueous solution, and then refluxed for 4 hours. The mixture was filtered, washed with water, dried, and pulverized to obtain 9.82 parts of PV19-3. The average primary particle diameter was 130 nm.

(Manufacturing Example 6-2) PV19-4

100 parts of PV19-3, 1000 parts of sodium chloride, and 150 parts of diethylene glycol were charged into a 1-gallon stainless steel kneader (manufactured by Inoue Seisakusho) and kneaded at 120°C for 4 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PV19-4 were obtained. The average primary particle diameter was 108 nm.

(Manufacturing Example 6-3) PV19-5

95 parts of PV19-3, 5 parts of PR122-5, 1000 parts of sodium chloride, and 150 parts of diethylene glycol were charged into a 1-gallon stainless steel kneader (manufactured by Inoue Seisakusho) and kneaded at 60°C for 4 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PV19-5 were obtained. The average primary particle diameter was 31 nm.

<Manufacturing of C.I. Pigment Red 254>

(Manufacturing Example 7-1) PR254-7

300 parts of Cinilex DPP Red SR2P (manufactured by Sinic Chemicals), 1000 parts of sodium chloride, and 400 parts of diethylene glycol were charged into a 1-gallon stainless steel kneader (manufactured by Inoue Seisakusho) and kneaded at 100°C for 6 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 290 parts of PR254-7 were obtained. The average primary particle diameter was 115 nm.

(Manufacturing Example 7-2) PR254-8

200 parts of Cinilex DPP Red SR2P (manufactured by Sinic Chemicals), 1000 parts of sodium chloride, and 250 parts of diethylene glycol were charged into a 1-gallon stainless steel kneader (manufactured by Inoue Seisakusho) and kneaded at 65°C for 8 hours. Next, the kneaded mixture was charged into warm water at about 70°C, stirred for 1 hour to

form a slurry, and then filtration and water washing were repeated to remove the sodium chloride and diethylene glycol. After drying for one day and night at 80°C and pulverizing, 190 parts of PR254-8 were obtained. The average primary particle diameter was 63 nm.

<Manufacturing of C.I. Pigment Red 272>

(Manufacturing Example 8-1) PR272-3

100 parts of Irgazin Flame Red K3800 (manufactured by BASF C&E), 1000 parts of sodium chloride, and 150 parts of diethylene glycol were charged into a 1-gallon stainless steel kneader (manufactured by Inoue Seisakusho) and kneaded at 60°C for 8 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PR272-3 were obtained. The average primary particle diameter was 47 nm.

<Manufacturing of C.I. Pigment Red 255>

(Manufacturing Example 9-1) PR255-2

200 parts of Irgazin Scarlet L3550HD (manufactured by BASF C&E), 1000 parts of sodium chloride, and 250 parts of diethylene glycol were charged into a 1-gallon stainless steel kneader (manufactured by Inoue Seisakusho) and kneaded at 100°C for 8 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 190 parts of PR255-2 were obtained. The average primary particle diameter was 123 nm.

(Manufacturing Example 9-2) PR255-3

100 parts of Irgazin Scarlet L3550HD (manufactured by BASF C&E), 1000 parts of sodium chloride, and 150 parts of diethylene glycol were charged into a 1-gallon stainless steel kneader (manufactured by Inoue Seisakusho) and kneaded at 60°C for 8 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PR255-3 were obtained. The average primary particle diameter was 46 nm.

<Manufacturing of C.I. Pigment Orange 73>

(Manufacturing Example 10-1) PO73-3

100 parts of Irgazin Orange L2990HD (manufactured by BASF C&E), 1000 parts of sodium chloride, and 150 parts of diethylene glycol were charged into a 1-gallon stainless steel kneader (manufactured by Inoue Seisakusho) and kneaded at 100°C for 8 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PO73-3 were obtained. The average primary particle diameter was 116 nm.

<Manufacturing of C.I. Pigment Red 179>

(Manufacturing Example 11-1) PR179-5

100 parts of Paliogen Red K4180 (manufactured by BASF C&E), 1000 parts of sodium chloride, and 150 parts of diethylene glycol were charged into a 1-gallon stainless steel kneader (manufactured by Inoue Seisakusho) and kneaded at 80°C for 8 hours. Next, the kneaded mixture was charged into warm water at about 70°C, stirred for 1 hour to form a slurry, and then filtration and water washing were repeated to remove the sodium chloride and diethylene glycol. After drying for one day and night at 80°C and pulverizing, 95 parts of PR179-5 were obtained. The average primary particle diameter was 78 nm.

<1>Evaluation of Gravure Printing Ink Set

First, the method for measuring the resin is described below.

(Hydroxyl Value)

The hydroxyl value was determined according to JIS K0070.

(Acid Value)

The acid value was determined according to JIS K0070.

(Amine Value)

The amine value was determined according to the following method in accordance with JIS K0070, as the number of mg of potassium hydroxide equivalent to the amount of hydrochloric acid required to neutralize the amino groups included in 1 g of resin.

A sample weighing 0.5 g to 2 g was precisely weighed (non-volatile content of the sample: S g). The precisely weighed sample was dissolved in 50 mL of a mixed solution of methanol/methyl ethyl ketone = 60/40 (mass ratio). Bromophenol blue was added to the obtained solution as an indicator, and the obtained solution was titrated with 0.2 mol/L ethanolic hydrochloric acid solution (titer: f). The endpoint was determined when the color of the solution changed from green to yellow, and the titration volume (A mL) at this point was used to calculate the amine value according to the following formula.

$$\text{Amine Value} = (A \times f \times 0.2 \times 56.108)/S \text{ [mg KOH/g]}$$

(Weight Average Molecular Weight)

The weight average molecular weight was determined as a converted molecular weight using polystyrene as a standard substance by measuring the molecular weight distribution using a GPC (gel permeation chromatography) apparatus (HLC-8220 manufactured by Tosoh Corporation). The measurement conditions are shown below.

Column: The following columns were connected in series and used.

Guard Column HXL-H manufactured by Tosoh Corporation
TSKgel G5000HXL manufactured by Tosoh Corporation
TSKgel G4000HXL manufactured by Tosoh Corporation
TSKgel G3000HXL manufactured by Tosoh Corporation
TSKgel G2000HXL manufactured by Tosoh Corporation

Detector: RI (Differential Refractometer)
Measurement conditions: Column temperature 40°C
Eluent: Tetrahydrofuran
Flow rate: 1.0 mL/min

(Glass Transition Temperature)

The glass transition temperature (Tg) was determined by DSC (Differential Scanning Calorimetry Measurement). The measurement was performed using a measuring device DSC8231 manufactured by Rigaku Corporation, with a measurement temperature range of -70°C to 250°C and a heating rate of 10°C/min, and the midpoint between the endothermic temperature and the end temperature due to the glass transition in the DSC curve was taken as the glass transition temperature.

(Synthesis Example 1) Polyurethane Resin Solution [PU1]

54.719 parts of a polyester diol with a number average molecular weight of 2,000 obtained from adipic acid and 3-methyl-1,5-pentanediol, 3.989 parts of isophorone diisocyanate (hereinafter referred to as "IPDI"), and 10.0 parts of n-propyl acetate (hereinafter referred to as "nPAc") were reacted at 85°C for 3 hours under nitrogen flow. Then, 10.0 parts of nPAc were added and cooled to obtain 78.708 parts of a solvent solution of terminal isocyanate prepolymer. Subsequently, a mixture of 1.031 parts of isophorone diamine (hereinafter referred to as "IPDA"), 0.261 parts of di-n-butylamine, 72.96 parts of nPAc, and 47.04 parts of isopropanol (hereinafter referred to as "IPA") was gradually added to 78.708 parts of the obtained terminal isocyanate prepolymer solvent solution at room temperature, followed by reaction at 50°C for 1 hour to obtain a polyurethane resin solution [PU1] with 30% non-volatile content, a weight average molecular weight of 60,000, and an amine value of 3.0 mgKOH/g.

(Synthesis Example 2) Polyurethane Resin Solution [PU2]

200 parts of polypropylene glycol with a number average molecular weight of 700 (hereinafter referred to as "PPG700"), 127 parts of IPDI, and 81.8 parts of ethyl acetate were reacted at 80°C for 4 hours under nitrogen flow to obtain a resin solution of terminal isocyanate urethane prepolymer. Subsequently, a mixture of 49.5 parts of IPDA, 3 parts of 2-ethanolamine, and 803.9 parts of a mixed solvent of ethyl acetate/isopropanol (hereinafter referred to as "IPA") = 50/50 (mass ratio) was gradually added to the obtained terminal isocyanate urethane prepolymer resin solution at 40°C, followed by reaction at 80°C for 1 hour to obtain a polyurethane resin solution [PU2] with 30% non-volatile content, an amine value of 3.5 mgKOH/g, a hydroxyl value of 7.3 mgKOH/g, and a weight average molecular weight of 40,000. The glass transition temperature was -32°C.

(Preparation of Polyvinyl Butyral Resin Solution [PVB1])

A polyvinyl butyral resin (weight average molecular weight 19,000) including vinyl alcohol units, vinyl acetate units, and vinyl butyral units, with 73 mass% of butyral ring groups and 26 mass% of hydroxyl groups, was dissolved in a mixed solvent of ethyl acetate/IPA = 1/1 (mass ratio) to prepare a polyvinyl butyral resin solution [PVB1] with 30% solid content.

(Preparation of Polyvinyl Butyral Resin Solution [PVB2])

A polyvinyl butyral resin (weight average molecular weight 33,000) including vinyl alcohol units, vinyl acetate units, and vinyl butyral units, with 77 mass% of butyral ring groups and 21 mass% of hydroxyl groups, was dissolved in a mixed solvent of ethyl acetate/IPA = 1/1 (mass ratio) to prepare a polyvinyl butyral resin solution [PVB2] with 30% solid content.

(Preparation of Polyvinyl Butyral Resin Solution [PVB3])

A polyvinyl butyral resin (weight average molecular weight 33,000) including vinyl alcohol units, vinyl acetate units, and vinyl butyral units, with 84 mass% of butyral ring groups and 14 mass% of hydroxyl groups, was dissolved in a mixed solvent of ethyl acetate/IPA = 1/1 (mass ratio) to prepare a polyvinyl butyral resin solution [PVB3] with 30% solid content.

[Manufacturing of Gravure Ink]

(Manufacturing Example Y1-1)

[Preparation of Yellow Ink [Y1-1]]

7.0 parts of isoindoline compound (1-1), 29.5 parts of polyurethane resin solution [PU1], 5.0 parts of polyurethane resin solution [PU2], 20 parts of nPAc, and 5 parts of IPA were mixed and stirred, then kneaded using a sand mill. Subsequently, 20 parts of polyurethane resin solution [PU2], 11 parts of nPAc, and 3 parts of IPA were further added and mixed by stirring to obtain yellow ink [Y1-1].

(Manufacturing Examples Y1-2 to Y1-32, C1-1 to C1-5, M1-1 to M1-44)

[Preparation of Yellow Inks [Y1-2] to [Y1-32], Cyan Inks [C1-1] to [C1-5], Magenta Inks [M1-1] to [M1-44]]

The inks described in Table 3 were obtained in the same manner as in Manufacturing Example Y1-1 except that 7.0 parts of isoindoline compound (1-1) were changed to the compounds shown in Table 3 and the amounts described in Table 3 in the preparation method of yellow ink [Y1-1] described in Manufacturing Example Y1-1.

[Table 3-1]

| Table 3-1 | Pigment | | Obtained ink |
|---|---|---|---|
| | Compound name Pigment name | Charged amount [parts] | |
| Manufacturing Example Y1-1 | Isoindoline compound (1-1) | 7.00 | Yellow ink [Y1-1] |
| Manufacturing Example Y1-2 | Isoindoline compound (1-2) | 7.00 | Yellow ink [Y1-2] |
| Manufacturing Example Y1-3 | Isoindoline compound (1-3) | 7.00 | Yellow ink [Y1-3] |
| Manufacturing Example Y1-4 | Isoindoline compound (1-4) | 7.00 | Yellow ink [Y1-4] |
| Manufacturing Example Y1-5 | Isoindoline compound (1-5) | 7.00 | Yellow ink [Y1-5] |
| Manufacturing Example Y1-6 | Isoindoline compound (1-6) | 7.00 | Yellow ink [Y1-6] |
| Manufacturing Example Y1-7 | Isoindoline compound (1-7) | 7.00 | Yellow ink [Y1-7] |
| Manufacturing Example Y1-8 | Isoindoline compound (1-8) | 7.00 | Yellow ink [Y1-8] |
| Manufacturing Example Y1-9 | Isoindoline compound (1-9) | 7.00 | Yellow ink [Y1-9] |
| Manufacturing Example Y1-10 | Isoindoline compound (1-10) | 7.00 | Yellow ink [Y1-10] |
| Manufacturing Example Y1-11 | Isoindoline compound (1-11) | 7.00 | Yellow ink [Y1-11] |
| Manufacturing Example Y1-12 | Isoindoline compound (1-12) | 7.00 | Yellow ink [Y1-12] |
| Manufacturing Example Y1-13 | Isoindoline compound (1-13) | 7.00 | Yellow ink [Y1-13] |
| Manufacturing Example Y1-14 | Isoindoline compound (1-1)<br>Isoindoline compound (1-2) | 6.65<br>0.35 | Yellow ink [Y1-14] |
| Manufacturing Example Y1-15 | Isoindoline compound (1-1)<br>Isoindoline compound (2-1) | 6.86<br>0.14 | Yellow ink [Y1-15] |
| Manufacturing Example Y1-16 | Isoindoline compound (1-1)<br>Isoindoline compound (2-2) | 6.86<br>0.14 | Yellow ink [Y1-16] |
| Manufacturing Example Y1-17 | Isoindoline compound (1-1)<br>Isoindoline compound (2-3) | 6.86<br>0.14 | Yellow ink [Y1-17] |
| Manufacturing Example Y1-18 | PY185-1 | 7.00 | Yellow ink [Y1-18] |
| Manufacturing Example Y1-19 | PY185-2 | 7.00 | Yellow ink [Y1-19] |
| Manufacturing Example Y1-20 | PY180-1 | 7.00 | Yellow ink [Y1-20] |
| Manufacturing Example Y1-21 | PY180-2 | 7.00 | Yellow ink [Y1-21] |
| Manufacturing Example Y1-22 | PY180-3 | 7.00 | Yellow ink [Y1-22] |
| Manufacturing Example Y1-23 | PY180-4 | 7.00 | Yellow ink [Y1-23] |
| Manufacturing Example Y1-24 | PY180-5 | 7.00 | Yellow ink [Y1-24] |
| Manufacturing Example Y1-25 | PY14 | 7.00 | Yellow ink [Y1-25] |
| Manufacturing Example Y1-26 | PY74 | 7.00 | Yellow ink [Y1-26] |
| Manufacturing Example Y1-27 | PY83 | 7.00 | Yellow ink [Y1-27] |
| Manufacturing Example Y1-28 | PY93 | 7.00 | Yellow ink [Y1-28] |
| Manufacturing Example C1-1 | PB15:3 | 6.50 | Cyan ink [C1-1] |
| Manufacturing Example C1-2 | PB 15:4 | 6.50 | Cyan ink [C1-2] |
| Manufacturing Example C1-3 | PB15:6 | 6.70 | Cyan ink [C1-3] |
| Manufacturing Example C1-4 | Aluminum phthalocyanine | 7.00 | Cyan ink [C1-4] |
| Manufacturing Example C1-5 | Titanyl phthalocyanine | 7.00 | Cyan ink [C1-5] |
| Manufacturing Example Y1-29 | PY110 | 7.00 | Yellow ink [Y1-29] |
| Manufacturing Example Y1-30 | PY128 | 7.00 | Yellow ink [Y1-30] |

(continued)

| Table 3-1 | Pigment | | Obtained ink |
|---|---|---|---|
| | Compound name Pigment name | Charged amount [parts] | |
| Manufacturing Example Y1-31 | PY 147 | 7.00 | Yellow ink [Y1-31] |
| Manufacturing Example Y1-32 | PY213 | 7.00 | Yellow ink [Y1-32] |

[Table 3-2]

| Table 3-2 | Pigment | | Obtained ink |
|---|---|---|---|
| | Compound name Pigment name | Charged amount [parts] | |
| Manufacturing Example M1-1 | PR122-1 | 7.40 | Magenta ink [M1-1] |
| Manufacturing Example M1-2 | PR122-2 | 7.40 | Magenta ink [M1-2] |
| Manufacturing Example M1-3 | PR122-3 | 7.40 | Magenta ink [M1-3] |
| Manufacturing Example M1-4 | PR122-4 | 7.40 | Magenta ink [M1-4] |
| Manufacturing Example M1-5 | PR122-5 | 7.40 | Magenta ink [M1-5] |
| Manufacturing Example M1-6 | PR122-6 | 7.40 | Magenta ink [M1-6] |
| Manufacturing Example M1-7 | PV19-1 | 7.40 | Magenta ink [M1-7] |
| Manufacturing Example M1-8 | PV 19-2 | 7.40 | Magenta ink [M1-8] |
| Manufacturing Example M1-9 | PV19-3 | 7.40 | Magenta ink [M1-9] |
| Manufacturing Example M1-10 | PV 19-4 | 7.40 | Magenta ink [M1-10] |
| Manufacturing Example M1-11 | PV19-5 | 7.40 | Magenta ink [M1-11] |
| Manufacturing Example M1-12 | PR122-1<br>PV19-1 | 3.70<br>3.70 | Magenta ink [M1-12] |
| Manufacturing Example M1-13 | PR254-1 | 7.00 | Magenta ink [M1-13] |
| Manufacturing Example M1-14 | PR254-2 | 7.00 | Magenta ink [M1-14] |
| Manufacturing Example M1-15 | PR254-3 | 7.00 | Magenta ink [M1-15] |
| Manufacturing Example M1-16 | PR254-4 | 7.00 | Magenta ink [M1-16] |
| Manufacturing Example M1-17 | PR254-5 | 7.00 | Magenta ink [M1-17] |
| Manufacturing Example M1-18 | PR254-6 | 7.00 | Magenta ink [M1-18] |
| Manufacturing Example M1-19 | PR254-7 | 7.00 | Magenta ink [M1-19] |
| Manufacturing Example M1-20 | PR254-8 | 7.00 | Magenta ink [M1-20] |
| Manufacturing Example M1-21 | PR264-1 | 7.00 | Magenta ink [M1-21] |
| Manufacturing Example M1-22 | PR264-2 | 7.00 | Magenta ink [M1-22] |
| Manufacturing Example M1-23 | PR264-3 | 7.00 | Magenta ink [M1-23] |
| Manufacturing Example M1-24 | PR264-4 | 7.00 | Magenta ink [M1-24] |
| Manufacturing Example M1-25 | PR272-1 | 7.00 | Magenta ink [M1-25] |
| Manufacturing Example M1-26 | PR272-2 | 7.00 | Magenta ink [M1-26] |
| Manufacturing Example M1-27 | PR272-3 | 7.00 | Magenta ink [M1-27] |
| Manufacturing Example M1-28 | PR255-1 | 7.00 | Magenta ink [M1-28] |
| Manufacturing Example M1-29 | PR255-2 | 7.00 | Magenta ink [M1-29] |
| Manufacturing Example M1-30 | PR255-3 | 7.00 | Magenta ink [M1-30] |
| Manufacturing Example M1-31 | PR291 | 7.00 | Magenta ink [M1-31] |
| Manufacturing Example M1-32 | PO71 | 7.00 | Magenta ink [M1-32] |

(continued)

| Table 3-2 | Pigment | | Obtained ink |
|---|---|---|---|
| | Compound name Pigment name | Charged amount [parts] | |
| Manufacturing Example M1-33 | PO73-1 | 7.00 | Magenta ink [M1-33] |
| Manufacturing Example M1-34 | PO73-2 | 7.00 | Magenta ink [M1-34] |
| Manufacturing Example M1-35 | PO73-3 | 7.00 | Magenta ink [M1-35] |
| Manufacturing Example M1-36 | PR179-1 | 7.00 | Magenta ink [M1-36] |
| Manufacturing Example M1-37 | PR179-2 | 7.00 | Magenta ink [M1-37] |
| Manufacturing Example M1-38 | PR179-3 | 7.00 | Magenta ink [M1-38] |
| Manufacturing Example M1-39 | PR179-4 | 7.00 | Magenta ink [M1-39] |
| Manufacturing Example M1-40 | PR179-5 | 7.00 | Magenta ink [M1-40] |
| Manufacturing Example M1-41 | PR149 | 7.00 | Magenta ink [M1-41] |
| Manufacturing Example M1-42 | PR190 | 7.00 | Magenta ink [MI-42] |
| Manufacturing Example M1-43 | PR224 | 7.00 | Magenta ink [MI-43] |
| Manufacturing Example M1-44 | PR57:1 | 7.00 | Magenta ink [M1-44] |

(Manufacturing Example Y2-1)

[Preparation of Yellow Ink [Y2-1]]

7.0 parts of isoindoline compound (1-3), 29.5 parts of polyurethane resin solution [PU1], 5.0 parts of polyvinyl butyral resin solution [PVB1], 20 parts of nPAc, and 5 parts of IPA were mixed and stirred, then kneaded using a sand mill. Subsequently, 20 parts of polyurethane resin solution [PU2], 11 parts of nPAc, and 3 parts of IPA were further added and mixed by stirring to obtain yellow ink [Y2-1].

(Manufacturing Examples Y2-2 to Y2-5, C2-1 to C2-3, M2-1 to M2-14)

[Preparation of Yellow Inks [Y2-2] to [Y2-5], Cyan Inks [C2-1] to [C2-3], Magenta Inks [M2-1] to [M2-14]]

The inks described in Table 4 were obtained in the same manner as in Manufacturing Example Y2-1 except that 7.0 parts of isoindoline compound (1-3) and 5.0 parts of polyvinyl butyral resin solution [PVB1] were changed to the compounds shown in Table 4, the amounts described in Table 4, and the polyvinyl butyral resin shown in Table 4 in the preparation method of yellow ink [Y2-1] described in Manufacturing Example Y2-1.

[Table 4]

| Table 4 | Pigment | | Polyvinyl butyral resin | Obtained ink |
|---|---|---|---|---|
| | Compound name Pigment name | Charged amount [parts] | | |
| Manufacturing Example Y2-1 | Isoindoline compound (1-3) | 7.00 | [PVB1] | Yellow ink [Y2-1] |
| Manufacturing Example Y2-2 | Isoindoline compound (1-3) | 7.00 | [PVB2] | Yellow ink [Y2-2] |
| Manufacturing Example Y2-3 | Isoindoline compound (1-3) | 7.00 | [PVB3] | Yellow ink [Y2-3] |
| Manufacturing Example Y2-4 | PY180-1 | 7.00 | [PVB1] | Yellow ink [Y2-4] |
| Manufacturing Example Y2-5 | PY14 | 7.00 | [PVB1] | Yellow ink [Y2-5] |
| Manufacturing Example C2-1 | PB15:3 | 6.50 | [PVB1] | Cyan ink [C2-1] |
| Manufacturing Example C2-2 | PB15:3 | 6.50 | [PVB2] | Cyan ink [C2-2] |
| Manufacturing Example C2-3 | PB15:3 | 6.50 | [PVB3] | Cyan ink [C2-3] |
| Manufacturing Example M2-1 | PR122-1 | 7.40 | [PVB1] | Magenta ink [M2-1] |

(continued)

| Table 4 | Pigment | | Polyvinyl butyral resin | Obtained ink |
|---|---|---|---|---|
| | Compound name Pigment name | Charged amount [parts] | | |
| Manufacturing Example M2-2 | PR122-1 | 7.40 | [PVB2] | Magenta ink [M2-2] |
| Manufacturing Example M2-3 | PR122-1 | 7.40 | [PVB3] | Magenta ink [M2-3] |
| Manufacturing Example M2-4 | PV19-1 | 7.40 | [PVB1] | Magenta ink [M2-4] |
| Manufacturing Example M2-5 | PV19-1 | 7.40 | [PVB2] | Magenta ink [M2-5] |
| Manufacturing Example M2-6 | PV19-1 | 7.40 | [PVB3] | Magenta ink [M2-6] |
| Manufacturing Example M2-7 | PR254-7 | 7.00 | [PVB1] | Magenta ink [M2-7] |
| Manufacturing Example M2-8 | PR254-7 | 7.00 | [PVB2] | Magenta ink [M2-8] |
| Manufacturing Example M2-9 | PR254-7 | 7.00 | [PVB3] | Magenta ink [M2-9] |
| Manufacturing Example M2-10 | PR264-1 | 7.00 | [PVB1] | Magenta ink [M2-10] |
| Manufacturing Example M2-11 | PR264-1 | 7.00 | [PVB2] | Magenta ink [M2-11] |
| Manufacturing Example M2-12 | PR264-1 | 7.00 | [PVB3] | Magenta ink [M2-12] |
| Manufacturing Example M2-13 | PR272-2 | 7.00 | [PVB1] | Magenta ink [M2-13] |
| Manufacturing Example M2-14 | PR57:1 | 7.00 | [PVB1] | Magenta ink [M2-14] |

The pigments used in the manufacturing of the inks are shown in Table 5.

[Table 5-1]

Table 5-1

| Pigment | Product name | Particle diameter (nm) |
|---|---|---|
| PY185-1 | Paliotol Yellow D1155 (manufactured by BASF C&E) | - |
| PY185-2 | TCY18501NS (manufactured by Trustchem) | - |
| PY180-1 | Novoperm Yellow PH-G (manufactured by Clariant) | 151 |
| PY180-2 | PY 180-2 of Manufacturing Example 3-1 | 260 |
| PY180-3 | PY 180-3 of Manufacturing Example 3-2 | 208 |
| PY180-4 | PY 180-4 of Manufacturing Example 3-3 | 93 |
| PY180-5 | PY 180-5 of Manufacturing Example 3-4 | 65 |
| PY14 | LIONOL YELLOW TT-1405G (manufactured by Toyo Color) | - |
| PY74 | LIONOGEN YELLOW 0390 (manufactured by Toyo Color) | - |
| PY83 | LIONOL Yellow NBR-J (manufactured by Toyo Color) | - |
| PY93 | Cromophtal Yellow D1040 (manufactured by BASF C&E) | - |
| PB15:3 | LIONOL BLUE FG-7358-G (manufactured by Toyo Color) | - |
| PB15:4 | LIONOL BLUE FG-7400-G (manufactured by Toyo Color) | - |
| PB15:6 | LIONOL BLUE E (manufactured by Toyo Color) | - |
| Aluminum phthalocyanine | Aluminum phthalocyanine of Manufacturing Example 4-1 | - |
| Titanyl phthalocyanine | Titanyl phthalocyanine of Manufacturing Example 4-2 | - |
| | | |

(continued)

| Pigment | Product name | Particle diameter (nm) |
|---|---|---|
| PY110 | Lysopac Yellow 1010C (manufactured by Ferro) | - |
| PY128 | Cromophtal Yellow 8G (manufactured by BASF C&E) | - |
| PY 147 | Oracet Yellow 140 NQ (manufactured by BASF C&E) | - |
| PY213 | Hostaperm Yellow H5G (manufactured by Clariant) | - |

[Table 5-2]

Table 5-2

| Pigment | Product name | Particle diameter (nm) |
|---|---|---|
| PR122-1 | FASTOGEN SUPER MAGENTA RGT (manufactured by DIC) | 103 |
| PR122-2 | Cinquasia Pink K4430FP (manufactured by BASF C&E) | 86 |
| PR122-3 | PR122-3 of Manufacturing Example 5-1 | 163 |
| PR122-4 | PR122-4 of Manufacturing Example 5-2 | 140 |
| PR122-5 | PR122-5 of Manufacturing Example 5-3 | 55 |
| PR122-6 | PR122-6 of Manufacturing Example 5-4 | 44 |
| PV19-1 | Inkjet Magenta E5B02 (manufactured by Clariant) | 70 |
| PV 19-2 | FASTGEN SUPER MAGENTA JM2120 (manufactured by DIC) | 43 |
| PV19-3 | PV 19-3 of Manufacturing Example 6-1 | 130 |
| PV 19-4 | PV 19-4 of Manufacturing Example 6-2 | 108 |
| PV19-5 | PV 19-5 of Manufacturing Example 6-3 | 31 |
| PR254-1 | Fastogen Super Red 254 226-0200 (manufactured by DIC) | 256 |
| PR254-2 | Irgazin Red L3670HD (manufactured by BASF C&E) | 187 |
| PR254-3 | Cinilex DPP Red SR2P (manufactured by Sinic Chemicals) | 141 |
| PR254-4 | Irgazin Red L3630 (manufactured by BASF C&E) | 51 |
| PR254-5 | Cinilex DPP Red ST (manufactured by Sinic Chemicals) | 41 |
| PR254-6 | Cinilex DPP Red MT (manufactured by Sinic Chemicals) | 34 |
| PR254-7 | PR254-7 of Manufacturing Example 7-1 | 115 |
| PR254-8 | PR254-8 of Manufacturing Example 7-2 | 63 |
| PR264-1 | Cinilex DPP Rubine SR5H (manufactured by Sinic Chemicals) | 95 |
| PR264-2 | Irgazin Rubine K4085 (manufactured by BASF C&E) | 54 |
| PR264-3 | Cinilex DPP Rubine SR6T (manufactured by Sinic Chemicals) | 43 |
| PR264-4 | Irgazin Rubine L4030 (manufactured by BASF C&E) | 38 |
| PR272-1 | Irgazin Flame Red K3800 (manufactured by BASF C&E) | 164 |
| PR272-2 | Cinilex DPP Red SR9H (manufactured by Sinic Chemicals) | 116 |
| PR272-3 | PR272-3 of Manufacturing Example 8-1 | 47 |
| PR255-1 | Irgazin Scarlet L3550HD (manufactured by BASF C&E) | 311 |
| PR255-2 | PR255-2 of Manufacturing Example 9-1 | 123 |
| PR255-3 | PR255-3 of Manufacturing Example 9-2 | 46 |
| PR291 | Cinilex DPP Red MT-CF (manufactured by Sinic Chemicals) | 33 |

(continued)

| Pigment | Product name | Particle diameter (nm) |
|---|---|---|
| PO71 | Irgazin Orange D2905 (manufactured by BASF C&E) | 62 |
| PO73-1 | Irgazin Orange L2990HD (manufactured by BASF C&E) | 295 |
| PO73-2 | Cinilex DPP Orange SJ1C (manufactured by Sinic Chemicals) | 285 |
| PO73-3 | PO73-3 of Manufacturing Example 10-1 | 116 |
| PR179-1 | Paliogen Red K4180 (manufactured by BASF C&E) | 135 |
| PR179-2 | Paliogen Red L4120 (manufactured by BASF C&E) | 110 |
| PR179-3 | PERRINDO MAROON 179 229-6438 (manufactured by DIC) | 42 |
| PR179-4 | PERRINDO MAROON 179 229-8801 (manufactured by DIC) | 33 |
| PR179-5 | PR179-5 of Manufacturing Example 11-1 | 78 |
| PR149 | Paliogen Red K3580 (manufactured by BASF C&E) | 36 |
| PR190 | Perylene Brilliant Red S-0529 (manufactured by Liaoning LianGang Pigment and Dyestuff Chemicals Co., Ltd.) | 104 |
| PR224 | PERRINDO RED 224 229-6420 (manufactured by DIC) | 102 |
| PR57:1 | LIONOL RED 6B FG-4306-G (manufactured by Toyo Color) | - |

<Evaluation of Printing Ink Set>

(Examples AS-1 to AS-83, Comparative Examples AS-1 to AS-15)

The obtained inks were combined as described in Table 6 to form ink sets A1 to A98. The obtained printing ink sets were evaluated for gamut, light resistance, and adhesion by the following methods. The results are shown in Table 7, Table 8, and Table 9.

[Table 6-1]

| Table 6-1 | Ink set | Yellow ink | Cyan ink | Magenta ink A | Magenta ink B |
|---|---|---|---|---|---|
| Example AS-1 | Ink set A1 | [Y1-1] | [C1-1] | [M1-1] | [M1-19] |
| Example AS-2 | Ink set A2 | [Y1-2] | [C1-1] | [M1-1] | [M1-19] |
| Example AS-3 | Ink set A3 | [Y1-3] | [C1-1] | [M1-1] | [M1-19] |
| Example AS-4 | Ink set A4 | [Y1-4] | [C1-1] | [M1-1] | [M1-19] |
| Example AS-5 | Ink set A5 | [Y1-5] | [C1-1] | [M1-1] | [M1-19] |
| Example AS-6 | Ink set A6 | [Y1-6] | [C1-1] | [M1-1] | [M1-19] |
| Example AS-7 | Ink set A7 | [Y1-7] | [C1-1] | [M1-1] | [M1-19] |
| Example AS-8 | Ink set A8 | [Y1-8] | [C1-1] | [M1-1] | [M1-19] |
| Example AS-9 | Ink set A9 | [Y1-9] | [C1-1] | [M1-1] | [M1-19] |
| Example AS-10 | Ink set A10 | [Y1-10] | [C1-1] | [M1-1] | [M1-19] |
| Example AS-11 | Ink set A11 | [Y1-11] | [C1-1] | [M1-1] | [M1-19] |
| Example AS-12 | Ink set A12 | [Y1-12] | [C1-1] | [M1-1] | [M1-19] |
| Example AS-13 | Ink set A13 | [Y1-13] | [C1-1] | [M1-1] | [M1-19] |
| Example AS-14 | Ink set A14 | [Y1-14] | [C1-1] | [M1-1] | [M1-19] |
| Example AS-15 | Ink set A15 | [Y1-15] | [C1-1] | [M1-1] | [M1-19] |
| Example AS-16 | Ink set A16 | [Y1-16] | [C1-1] | [M1-1] | [M1-19] |
| Example AS-17 | Ink set A17 | [Y1-17] | [C1-1] | [M1-1] | [M1-19] |

(continued)

| Table 6-1 | Ink set | Yellow ink | Cyan ink | Magenta ink A | Magenta ink B |
|---|---|---|---|---|---|
| Example AS-18 | Ink set A18 | [Y1-18] | [C1-1] | [M1-1] | [M1-19] |
| Example AS-19 | Ink set A19 | [Y1-19] | [C1-1] | [M1-1] | [M1-19] |
| Example AS-20 | Ink set A20 | [Y1-20] | [C1-1] | [M1-1] | [M1-19] |
| Example AS-21 | Ink set A21 | [Y1-21] | [C1-1] | [M1-1] | [M1-19] |
| Example AS-22 | Ink set A22 | [Y1-22] | [C1-1] | [M1-1] | [M1-19] |
| Example AS-23 | Ink set A23 | [Y1-23] | [C1-1] | [M1-1] | [M1-19] |
| Example AS-24 | Ink set A24 | [Y1-24] | [C1-1] | [M1-1] | [M1-19] |
| Example AS-25 | Ink set A25 | [Y1-1] | [C1-2] | [M1-1] | [M1-19] |
| Example AS-26 | Ink set A26 | [Y1-1] | [C1-3] | [M1-1] | [M1-19] |
| Example AS-27 | Ink set A27 | [Y1-1] | [C1-4] | [M1-1] | [M1-19] |
| Example AS-28 | Ink set A28 | [Y1-1] | [C1-5] | [M1-1] | [M1-19] |
| Example AS-29 | Ink set A29 | [Y1-1] | [C1-1] | [M1-2] | [M1-19] |
| Example AS-30 | Ink set A30 | [Y1-1] | [C1-1] | [M1-3] | [M1-19] |
| Example AS-31 | Ink set A31 | [Y1-1] | [C1-1] | [M1-4] | [M1-19] |
| Example AS-32 | Ink set A32 | [Y1-1] | [C1-1] | [M1-5] | [M1-19] |
| Example AS-33 | Ink set A33 | [Y1-1] | [C1-1] | [M1-6] | [M1-19] |
| Example AS-34 | Ink set A34 | [Y1-1] | [C1-1] | [M1-7] | [M1-19] |
| Example AS-35 | Ink set A35 | [Y1-1] | [C1-1] | [M1-8] | [M1-19] |
| Example AS-36 | Ink set A36 | [Y1-1] | [C1-1] | [M1-9] | [M1-19] |
| Example AS-37 | Ink set A37 | [Y1-1] | [C1-1] | [M1-10] | [M1-19] |
| Example AS-38 | Ink set A38 | [Y1-1] | [C1-1] | [M1-11] | [M1-19] |
| Example AS-39 | Ink set A39 | [Y1-1] | [C1-1] | [M1-12] | [M1-19] |
| Example AS-40 | Ink set A40 | [Y1-1] | [C1-1] | [M1-1] | [M1-13] |
| Example AS-41 | Ink set A41 | [Y1-1] | [C1-1] | [M1-1] | [M1-14] |
| Example AS-42 | Ink set A42 | [Y1-1] | [C1-1] | [M1-1] | [M1-15] |
| Example AS-43 | Ink set A43 | [Y1-1] | [C1-1] | [M1-1] | [M1-16] |
| Example AS-44 | Ink set A44 | [Y1-1] | [C1-1] | [M1-1] | [M1-17] |
| Example AS-45 | Ink set A45 | [Y1-1] | [C1-1] | [M1-1] | [M1-18] |
| Example AS-46 | Ink set A46 | [Y1-1] | [C1-1] | [M1-1] | [M1-20] |

[Table 6-2]

| Table 6-2 | Ink set | Yellow ink | Cyan ink | Magenta ink A | Magenta ink B |
|---|---|---|---|---|---|
| Example AS-47 | Ink set A47 | [Y1-1] | [C1-1] | [M1-1] | [M1-21] |
| Example AS-48 | Ink set A48 | [Y1-1] | [C1-1] | [M1-1] | [M1-22] |
| Example AS-49 | Ink set A49 | [Y1-1] | [C1-1] | [M1-1] | [M1-23] |
| Example AS-50 | Ink set A50 | [Y1-1] | [C1-1] | [M1-1] | [M1-24] |
| Example AS-51 | Ink set A51 | [Y1-1] | [C1-1] | [M1-1] | [M1-25] |
| Example AS-52 | Ink set A52 | [Y1-1] | [C1-1] | [M1-1] | [M1-26] |
| Example AS-53 | Ink set A53 | [Y1-1] | [C1-1] | [M1-1] | [M1-27] |

(continued)

| Table 6-2 | Ink set | Yellow ink | Cyan ink | Magenta ink A | Magenta ink B |
|---|---|---|---|---|---|
| Example AS-54 | Ink set A54 | [Y1-1] | [C1-1] | [M1-1] | [M1-28] |
| Example AS-55 | Ink set A55 | [Y1-1] | [C1-1] | [M1-1] | [M1-29] |
| Example AS-56 | Ink set A56 | [Y1-1] | [C1-1] | [M1-1] | [M1-30] |
| Example AS-57 | Ink set A57 | [Y1-1] | [C1-1] | [M1-1] | [M1-31] |
| Example AS-58 | Ink set A58 | [Y1-1] | [C1-1] | [M1-1] | [M1-32] |
| Example AS-59 | Ink set A59 | [Y1-1] | [C1-1] | [M1-1] | [M1-33] |
| Example AS-60 | Ink set A60 | [Y1-1] | [C1-1] | [M1-1] | [M1-34] |
| Example AS-61 | Ink set A61 | [Y1-1] | [C1-1] | [M1-1] | [M1-35] |
| Example AS-62 | Ink set A62 | [Y1-1] | [C1-1] | [M1-1] | [M1-36] |
| Example AS-63 | Ink set A63 | [Y1-1] | [C1-1] | [M1-1] | [M1-37] |
| Example AS-64 | Ink set A64 | [Y1-1] | [C1-1] | [M1-1] | [M1-38] |
| Example AS-65 | Ink set A65 | [Y1-1] | [C1-1] | [M1-1] | [M1-39] |
| Example AS-66 | Ink set A66 | [Y1-1] | [C1-1] | [M1-1] | [M1-40] |
| Example AS-67 | Ink set A67 | [Y1-1] | [C1-1] | [M1-1] | [M1-41] |
| Example AS-68 | Ink set A68 | [Y1-1] | [C1-1] | [M1-1] | [M1-42] |
| Example AS-69 | Ink set A69 | [Y1-1] | [C1-1] | [M1-1] | [M1-43] |
| Example AS-70 | Ink set A70 | [Y1-3] | [C1-1] | [M1-7] | [M1-19] |
| Example AS-71 | Ink set A71 | [Y1-3] | [C1-1] | [M1-1] | [M1-21] |
| Example AS-72 | Ink set A72 | [Y1-3] | [C1-1] | [M1-1] | [M1-26] |
| Example AS-73 | Ink set A73 | [Y2-1] | [C2-1] | [M2-1] | [M2-7] |
| Example AS-74 | Ink set A74 | [Y2-2] | [C2-2] | [M2-2] | [M2-8] |
| Example AS-75 | Ink set A75 | [Y2-3] | [C2-3] | [M2-3] | [M2-9] |
| Example AS-76 | Ink set A76 | [Y2-1] | [C2-1] | [M2-4] | [M2-7] |
| Example AS-77 | Ink set A77 | [Y2-2] | [C2-2] | [M2-5] | [M2-8] |
| Example AS-78 | Ink set A78 | [Y2-3] | [C2-3] | [M2-6] | [M2-9] |
| Example AS-79 | Ink set A79 | [Y2-1] | [C2-1] | [M2-1] | [M2-10] |
| Example AS-80 | Ink set A80 | [Y2-2] | [C2-2] | [M2-2] | [M2-1 1] |
| Example AS-81 | Ink set A81 | [Y2-3] | [C2-3] | [M2-3] | [M2-12] |
| Example AS-82 | Ink set A82 | [Y2-1] | [C2-1] | [M2-1] | [M2-13] |
| Example AS-83 | Ink set A83 | [Y2-4] | [C2-1] | [M2-1] | [M2-7] |
| Comparative Example AS-1 | Ink set A84 | [Y1-25] | [C1-1] | [M1-44] | - |
| Comparative Example AS-2 | Ink set A85 | [Y1-26] | [C1-1] | [M1-44] | - |
| Comparative Example AS-3 | Ink set A86 | [Y1-27] | [C1-1] | [M1-44] | - |
| Comparative Example AS-4 | Ink set A87 | [Y1-28] | [C1-1] | [M1-44] | - |
| Comparative Example AS-5 | Ink set A88 | [Y1-25] | [C1-1] | [M1-1] | - |
| Comparative Example AS-6 | Ink set A89 | [Y1-25] | [C1-1] | [M1-19] | - |
| Comparative Example AS-7 | Ink set A90 | [Y1-25] | [C1-1] | [M1-1] | [M1-44] |
| Comparative Example AS-8 | Ink set A91 | [Y1-25] | [C1-1] | [M1-44] | [M1-19] |
| Comparative Example AS-9 | Ink set A92 | [Y2-5] | [C2-1] | [M2-14] | - |

(continued)

| Table 6-2 | Ink set | Yellow ink | Cyan ink | Magenta ink A | Magenta ink B |
|---|---|---|---|---|---|
| Comparative Example AS-10 | Ink set A93 | [Y1-25] | [C1-1] | [M1-1] | [M1-19] |
| Comparative Example AS-11 | Ink set A94 | [Y1-26] | [C1-1] | [M1-1] | [M1-19] |
| Comparative Example AS-12 | Ink set A95 | [Y1-29] | [C1-1] | [M1-1] | [M1-19] |
| Comparative Example AS-13 | Ink set A96 | [Y1-30] | [C1-1] | [M1-1] | [M1-19] |
| Comparative Example AS-14 | Ink set A97 | [Y1-31] | [C1-1] | [M1-1] | [M1-19] |
| Comparative Example AS-15 | Ink set A98 | [Y1-32] | [C1-1] | [M1-1] | [M1-19] |

[Initial Gamut Evaluation]

Yellow ink, cyan ink, and magenta ink were each diluted using mixed solvent 1 (methyl ethyl ketone:nPAc:IPA = 40:40:20) to achieve a viscosity of 16 seconds (25°C, Zahn cup No. 3).

Using the diluted inks, printing was performed in the order of cyan, magenta A, magenta B, and yellow to obtain a printed matter having solid color areas (cyan, magenta A, magenta B, and yellow) and solid color overprint areas (yellow × cyan, cyan × magenta A, yellow × magenta B, or yellow × magenta A). The printing conditions are shown below.

(Printing Conditions)

Printing machine: Fuji Machinery 5-color machine
Cyan plate: Helio 175L/inch, stylus angle 120°, elongate
Magenta plate: Helio 175L/inch, stylus angle 120°, compressed
Yellow plate: Helio 175L/inch, stylus angle 120°, compressed
Printing speed: 150 m/min
Substrate: Corona-treated biaxially stretched polypropylene (OPP) film (Toyobo Co., Ltd. Pylen P-2161, 20 μm)
Drying temperature: 50°C

The density values of the solid color areas (yellow, magenta A, magenta B, and cyan) of the obtained printed matter were measured using a Gretag Macbeth D196. In addition, a SpectroEye manufactured by Gretag Macbeth was used as the measuring device to measure the colorimetric values of the solid color areas and overprint areas under the following conditions: D50 light source, 2-degree observer angle, white backing (using a standard white plate), and without filters.

In a two-dimensional space with a* as the horizontal axis and b* as the vertical axis, the a* versus b* values for a total of 6 or 7 colors, including solid color areas (yellow, magenta A, magenta B, and cyan), and solid color overprint areas (yellow × cyan, cyan × magenta A, yellow × magenta B, or yellow × magenta A) were plotted, and the area was calculated. The area ratio was calculated with the area of Comparative Example AS-1 serving as the reference set as 100%, and the area ratio was evaluated according to the following criteria. The results are shown in Table 7. The practical level is 3 or higher.

(Evaluation Criteria)

6: The area ratio is 115% or higher
5: The area ratio is 110% or higher and less than 115%
4: The area ratio is 105% or higher and less than 110%
3: The area ratio is 100% or higher and less than 105%
2: The area ratio is 98% or higher and less than 100%
1: The area ratio is less than 98%

[Light Resistance Evaluation 1]

(Ultraviolet Irradiation Test Using Fade-O-Meter)

The printed matter obtained as described above was subjected to ultraviolet irradiation for 48 hours using a Fade-O-Meter (ultraviolet carbon arc lamp type light resistance tester), and colorimetric measurements were performed after the test in the same manner as described above. The ultraviolet irradiation conditions followed JIS L0842:2004 and JIS B7751:2007.

(Gamut)

Using the printed matter after the ultraviolet irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the ultraviolet irradiation test by the area of the initial evaluation. The area ratio was evaluated according to the following criteria. The results are shown in Table 7. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the ultraviolet irradiation test was determined and evaluated according to the following criteria. The results are shown in Table 7. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the ultraviolet irradiation test was determined and evaluated according to the following criteria. The results are shown in Table 7. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5
5: ΔH* is 0.5 or higher and less than 0.75
4: ΔH* is 0.75 or higher and less than 1.0

3: ΔH* is 1.0 or higher and less than 1.5
2: ΔH* is 1.5 or higher and less than 3.0
1: ΔH* is 3.0 or higher

[Light Resistance Evaluation 2]

(White LED Irradiation Test)

The printed matter obtained as described above was subjected to a white LED irradiation test according to the following test method. After the test, colorimetric measurements were performed in the same manner as described above, and the stability of the hue under white LED irradiation was evaluated.

(Test Method)

Tester: Illuminated incubator FLI-2010H-LED (manufactured by Tokyo Rikakikai)
Light source: White LED
Illuminance: 15000 Lux
Irradiation temperature: 10°C
Irradiation humidity: 70% RH
Irradiation duration: 96 hours

(Gamut)

Using the printed matter after the white LED irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the white LED irradiation test by the area of the initial evaluation. The area ratio was evaluated according to the following criteria. The results are shown in Table 8. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the white LED irradiation test was determined and evaluated according to the following criteria. The results are shown in Table 8. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the white LED irradiation test was determined and evaluated according to the following criteria. The results are shown in Table 8. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5

5: ΔH* is 0.5 or higher and less than 0.75

4: ΔH* is 0.75 or higher and less than 1.0

3: ΔH* is 1.0 or higher and less than 1.5

2: ΔH* is 1.5 or higher and less than 3.0

1: ΔH* is 3.0 or higher

[Table 7-1]

| Table 7-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-1 | 6 | 6 | 6 | 6 | 6 | 6 | 6+ | 6- | 6+ | - |
| Example AS-2 | 6 | 6 | 6 | 6 | 6 | 6 | 6+ | 6- | 6+ | - |
| Example AS-3 | 6 | 6 | 6 | 6 | 6 | 6 | 6+ | 6- | 6+ | - |
| Example AS-4 | 6 | 6 | 6 | 6 | 6 | 6 | 6+ | 6- | 6+ | - |
| Example AS-5 | 6 | 4 | 4 | 6 | 6 | 6 | 5+ | 6- | 5- | - |
| Example AS-6 | 4 | 4 | 4 | 6 | 6 | 6 | 5+ | 6- | 5- | - |
| Example AS-7 | 3 | 3 | 3 | 6 | 6 | 6 | 3+ | 6- | 3- | - |
| Example AS-8 | 4 | 4 | 4 | 6 | 6 | 6 | 5+ | 6- | 5- | - |
| Example AS-9 | 4 | 4 | 4 | 6 | 6 | 6 | 5+ | 6- | 5- | - |
| Example AS-10 | 4 | 4 | 4 | 6 | 6 | 6 | 5+ | 6- | 5- | - |
| Example AS-11 | 5 | 5 | 5 | 6 | 6 | 6 | 5+ | 6- | 5- | - |
| Example AS-12 | 5 | 5 | 5 | 6 | 6 | 6 | 5+ | 6- | 5- | - |
| Example AS-13 | 6 | 6 | 6 | 6 | 6 | 6 | 6+ | 6- | 6+ | - |
| Example AS-14 | 5 | 6 | 6 | 6 | 6 | 6 | 6+ | 6- | 6+ | - |
| Example AS-15 | 4 | 5 | 5 | 6 | 6 | 6 | 5+ | 6- | 5- | - |
| Example AS-16 | 4 | 5 | 5 | 6 | 6 | 6 | 5+ | 6- | 5- | - |
| Example AS-17 | 6 | 6 | 6 | 6 | 6 | 6 | 6+ | 6- | 6+ | - |
| Example AS-18 | 5 | 5 | 5 | 6 | 6 | 6 | 5+ | 6- | 5- | - |
| Example AS-19 | 4 | 4 | 4 | 6 | 6 | 6 | 5+ | 6- | 5- | - |

(continued)

| Table 7-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-20 | 5 | 6 | 6 | 6 | 6 | 6 | 6+ | 6- | 6+ | - |
| Example AS-21 | 3 | 6 | 6 | 6 | 6 | 6 | 6+ | 6- | 6- | - |
| Example AS-22 | 4 | 5 | 5 | 6 | 6 | 6 | 5+ | 6- | 5- | - |
| Example AS-23 | 5 | 4 | 4 | 6 | 6 | 6 | 4+ | 6- | 4- | - |
| Example AS-24 | 5 | 3 | 3 | 6 | 6 | 6 | 3+ | 6- | 3- | - |
| Example AS-25 | 6 | 6 | 6 | 6 | 6 | 6 | 6+ | 6- | 6- | - |
| Example AS-26 | 3 | 6 | 6 | 6 | 6 | 6 | 6+ | 6- | 6+ | - |
| Example AS-27 | 3 | 4 | 6 | 4 | 6 | 6 | 4+ | 4- | 6+ | - |
| Example AS-28 | 3 | 4 | 6 | 4 | 6 | 6 | 4+ | 4- | 6+ | - |
| Example AS-29 | 6 | 6 | 6 | 6 | 6 | 6 | 6+ | 6- | 6+ | - |
| Example AS-30 | 4 | 6 | 6 | 6 | 6 | 6 | 6+ | 6- | 6+ | - |
| Example AS-31 | 5 | 6 | 6 | 6 | 6 | 6 | 6+ | 6- | 6+ | - |
| Example AS-32 | 5 | 5 | 6 | 6 | 5 | 6 | 6+ | 5- | 6+ | - |
| Example AS-33 | 4 | 4 | 6 | 6 | 4 | 6 | 6+ | 4- | 6+ | - |
| Example AS-34 | 6 | 6 | 6 | 6 | 6 | 6 | 6+ | 6- | 6+ | - |
| Example AS-35 | 5 | 5 | 6 | 6 | 5 | 6 | 6+ | 5- | 6+ | - |
| Example AS-36 | 4 | 6 | 6 | 6 | 6 | 6 | 6+ | 6- | 6+ | - |
| Example AS-37 | 5 | 5 | 6 | 6 | 5 | 6 | 6+ | 5- | 6+ | - |
| Example AS-38 | 5 | 4 | 6 | 6 | 4 | 6 | 6+ | 4- | 6+ | - |
| Example AS-39 | 4 | 6 | 6 | 6 | 6 | 6 | 6+ | 6- | 6+ | - |
| Example AS-40 | 3 | 6 | 6 | 6 | 6 | 6 | 6+ | 6- | 6+ | - |
| Example AS-41 | 4 | 5 | 6 | 6 | 6 | 5 | 6+ | 6- | 5+ | - |
| Example AS-42 | 4 | 5 | 6 | 6 | 6 | 5 | 6+ | 6- | 5+ | - |
| Example AS-43 | 5 | 4 | 6 | 6 | 6 | 4 | 6+ | 6- | 4+ | - |
| Example AS-44 | 5 | 4 | 6 | 6 | 6 | 4 | 6+ | 6- | 4+ | - |
| Example AS-45 | 5 | 4 | 6 | 6 | 6 | 4 | 6+ | 6- | 4+ | - |
| Example AS-46 | 6 | 6 | 6 | 6 | 6 | 6 | 6+ | 6- | 6+ | - |

[Table 7-2]

| Table 7-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-47 | 5 | 5 | 6 | 6 | 6 | 5 | 6+ | 6- | 5+ | - |
| Example AS-48 | 5 | 4 | 6 | 6 | 6 | 4 | 6+ | 6- | 4+ | - |
| Example AS-49 | 5 | 4 | 6 | 6 | 6 | 4 | 6+ | 6- | 4+ | - |
| Example AS-50 | 5 | 3 | 6 | 6 | 6 | 3 | 6+ | 6- | 3+ | - |
| Example AS-51 | 4 | 5 | 6 | 6 | 6 | 5 | 6+ | 6- | 5+ | - |

(continued)

| Table 7-2 | Initial gamut | Light resistance 1 (carbon arc) | | | | | | | | | |
|---|---|---|---|---|---|---|---|---|---|---|---|
| | | Gamut | ΔE | | | | ΔH | | | | |
| | | | Y | C | MA | MB | Y×C | C×MA | Y×MB | Y×MA |
| Example AS-52 | 5 | 5 | 6 | 6 | 6 | 5 | 6+ | 6- | 5+ | - |
| Example AS-53 | 5 | 4 | 6 | 6 | 6 | 4 | 6+ | 6- | 4+ | - |
| Example AS-54 | 4 | 5 | 6 | 6 | 6 | 5 | 6+ | 6- | 5+ | - |
| Example AS-55 | 5 | 5 | 6 | 6 | 6 | 5 | 6+ | 6- | 5+ | - |
| Example AS-56 | 5 | 4 | 6 | 6 | 6 | 4 | 6+ | 6- | 4+ | - |
| Example AS-57 | 5 | 4 | 6 | 6 | 6 | 4 | 6+ | 6- | 4+ | - |
| Example AS-58 | 4 | 5 | 6 | 6 | 6 | 5 | 6+ | 6- | 5+ | - |
| Example AS-59 | 3 | 5 | 6 | 6 | 6 | 5 | 6+ | 6- | 5+ | - |
| Example AS-60 | 3 | 5 | 6 | 6 | 6 | 5 | 6+ | 6- | 5+ | - |
| Example AS-61 | 5 | 5 | 6 | 6 | 6 | 5 | 6+ | 6- | 5+ | - |
| Example AS-62 | 4 | 5 | 6 | 6 | 6 | 5 | 6+ | 6- | 5+ | - |
| Example AS-63 | 4 | 5 | 6 | 6 | 6 | 5 | 6+ | 6- | 5+ | - |
| Example AS-64 | 5 | 5 | 6 | 6 | 6 | 5 | 6+ | 6- | 5+ | - |
| Example AS-65 | 5 | 4 | 6 | 6 | 6 | 4 | 6+ | 6- | 4+ | - |
| Example AS-66 | 5 | 5 | 6 | 6 | 6 | 5 | 6+ | 6- | 5+ | - |
| Example AS-67 | 5 | 4 | 6 | 6 | 6 | 4 | 6+ | 6- | 4+ | - |
| Example AS-68 | 4 | 5 | 6 | 6 | 6 | 5 | 6+ | 6- | 5+ | - |
| Example AS-69 | 4 | 5 | 6 | 6 | 6 | 5 | 6+ | 6- | 5+ | - |
| Example AS-70 | 6 | 6 | 6 | 6 | 6 | 6 | 6+ | 6- | 6+ | - |
| Example AS-71 | 5 | 5 | 6 | 6 | 6 | 5 | 6+ | 6- | 5+ | - |
| Example AS-72 | 5 | 5 | 6 | 6 | 6 | 5 | 6+ | 6- | 5+ | - |
| Example AS-73 | 6 | 6 | 6 | 6 | 6 | 6 | 6+ | 6- | 6+ | - |
| Example AS-74 | 6 | 6 | 6 | 6 | 6 | 6 | 6+ | 6- | 6+ | - |
| Example AS-75 | 6 | 6 | 6 | 6 | 6 | 6 | 6+ | 6- | 6+ | - |
| Example AS-76 | 6 | 6 | 6 | 6 | 6 | 6 | 6+ | 6- | 6+ | - |
| Example AS-77 | 6 | 6 | 6 | 6 | 6 | 6 | 6+ | 6- | 6+ | - |
| Example AS-78 | 6 | 6 | 6 | 6 | 6 | 6 | 6+ | 6- | 6+ | - |
| Example AS-79 | 5 | 5 | 6 | 6 | 6 | 5 | 6+ | 6- | 5+ | - |
| Example AS-80 | 5 | 5 | 6 | 6 | 6 | 5 | 6+ | 6- | 5+ | - |
| Example AS-81 | 5 | 5 | 6 | 6 | 6 | 5 | 6+ | 6- | 5+ | - |
| Example AS-82 | 5 | 5 | 6 | 6 | 6 | 5 | 6+ | 6- | 5+ | - |
| Example AS-83 | 5 | 6 | 6 | 6 | 6 | 6 | 6+ | 6- | 6+ | - |
| Comparative Example AS-1 | Reference | 1 | 1 | 6 | 2 | - | 1+ | 2- | - | 1- |
| Comparative Example AS-2 | 2 | 1 | 1 | 6 | 2 | - | 1+ | 2- | - | 1- |
| Comparative Example AS-3 | 1 | 2 | 2 | 6 | 2 | - | 2+ | 2- | - | 2- |
| Comparative Example AS-4 | 1 | 1 | 2 | 6 | 2 | - | 2+ | 2- | - | 2- |
| Comparative Example AS-5 | 2 | 1 | 1 | 6 | 6 | - | 1+ | 6- | - | 1- |

(continued)

| Table 7-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Comparative Example AS-6 | 1 | 1 | 1 | 6 | 6 | - | 1+ | 5- | - | 1- |
| Comparative Example AS-7 | 4 | 1 | 1 | 6 | 6 | 2 | 1+ | 6- | 1- | - |
| Comparative Example AS-8 | 4 | 1 | 1 | 6 | 2 | 6 | 1+ | 2- | 6+ | - |
| Comparative Example AS-9 | 2 | 1 | 1 | 6 | 2 | - | 1+ | 2- | - | 1- |
| Comparative Example AS-10 | 4 | 1 | 1 | 6 | 6 | 6 | 1+ | 6- | 1- | - |
| Comparative Example AS-11 | 4 | 1 | 1 | 6 | 6 | 6 | 1+ | 6- | 1- | - |
| Comparative Example AS-12 | 1 | 1 | 6 | 6 | 6 | 6 | 6+ | 6- | 6+ | - |
| Comparative Example AS-13 | 1 | 1 | 3 | 6 | 6 | 6 | 3+ | 6- | 3- | - |
| Comparative Example AS-14 | 1 | 1 | 4 | 6 | 6 | 6 | 4+ | 6- | 4- | - |
| Comparative Example AS-15 | 2 | 2 | 3 | 6 | 6 | 6 | 3+ | 6- | 3- | - |

[Table 8-1]

| Table 8-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-1 | 6 | 6 | 6 | 6 | 6 | 6 | 6+ | 6- | 6+ | - |
| Example AS-2 | 6 | 6 | 6 | 6 | 6 | 6 | 6+ | 6- | 6+ | - |
| Example AS-3 | 6 | 6 | 6 | 6 | 6 | 6 | 6+ | 6- | 6+ | - |
| Example AS-4 | 6 | 6 | 6 | 6 | 6 | 6 | 6+ | 6- | 6+ | - |
| Example AS-5 | 6 | 4 | 4 | 6 | 6 | 6 | 5+ | 6- | 5- | - |
| Example AS-6 | 4 | 4 | 4 | 6 | 6 | 6 | 5+ | 6- | 5- | - |
| Example AS-7 | 3 | 3 | 3 | 6 | 6 | 6 | 3+ | 6- | 3- | - |
| Example AS-8 | 4 | 4 | 4 | 6 | 6 | 6 | 5+ | 6- | 5- | - |
| Example AS-9 | 4 | 4 | 4 | 6 | 6 | 6 | 5+ | 6- | 5- | - |
| Example AS-10 | 4 | 4 | 4 | 6 | 6 | 6 | 5+ | 6- | 5- | - |
| Example AS-11 | 5 | 5 | 5 | 6 | 6 | 6 | 5+ | 6- | 5- | - |
| Example AS-12 | 5 | 5 | 5 | 6 | 6 | 6 | 5+ | 6- | 5- | - |
| Example AS-13 | 6 | 6 | 6 | 6 | 6 | 6 | 6+ | 6- | 6+ | - |
| Example AS-14 | 5 | 6 | 6 | 6 | 6 | 6 | 6+ | 6- | 6+ | - |
| Example AS-15 | 4 | 5 | 5 | 6 | 6 | 6 | 5+ | 6- | 5- | - |
| Example AS-16 | 4 | 5 | 5 | 6 | 6 | 6 | 5+ | 6- | 5- | - |
| Example AS-17 | 6 | 6 | 6 | 6 | 6 | 6 | 6+ | 6- | 6+ | - |
| Example AS-18 | 5 | 5 | 5 | 6 | 6 | 6 | 5+ | 6- | 5- | - |
| Example AS-19 | 4 | 4 | 4 | 6 | 6 | 6 | 5+ | 6- | 5- | - |
| Example AS-20 | 5 | 6 | 6 | 6 | 6 | 6 | 6+ | 6- | 6+ | - |
| Example AS-21 | 3 | 6 | 6 | 6 | 6 | 6 | 6+ | 6- | 6- | - |
| Example AS-22 | 4 | 5 | 5 | 6 | 6 | 6 | 5+ | 6- | 5- | - |

(continued)

| Table 8-1 | Initial gamut | Light resistance 2 (white LED) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-23 | 5 | 4 | 4 | 6 | 6 | 6 | 4+ | 6- | 4- | - |
| Example AS-24 | 5 | 3 | 3 | 6 | 6 | 6 | 3+ | 6- | 3- | - |
| Example AS-25 | 6 | 6 | 6 | 6 | 6 | 6 | 6+ | 6- | 6- | - |
| Example AS-26 | 3 | 6 | 6 | 6 | 6 | 6 | 6+ | 6- | 6+ | - |
| Example AS-27 | 3 | 4 | 6 | 4 | 6 | 6 | 4+ | 4- | 6+ | - |
| Example AS-28 | 3 | 4 | 6 | 4 | 6 | 6 | 4+ | 4- | 6+ | - |
| Example AS-29 | 6 | 6 | 6 | 6 | 6 | 6 | 6+ | 6- | 6+ | - |
| Example AS-30 | 4 | 6 | 6 | 6 | 6 | 6 | 6+ | 6- | 6+ | - |
| Example AS-31 | 5 | 6 | 6 | 6 | 6 | 6 | 6+ | 6- | 6+ | - |
| Example AS-32 | 5 | 5 | 6 | 6 | 5 | 6 | 6+ | 5- | 6+ | - |
| Example AS-33 | 4 | 4 | 6 | 6 | 4 | 6 | 6+ | 4- | 6+ | - |
| Example AS-34 | 6 | 6 | 6 | 6 | 6 | 6 | 6+ | 6- | 6+ | - |
| Example AS-35 | 5 | 5 | 6 | 6 | 5 | 6 | 6+ | 5- | 6+ | - |
| Example AS-36 | 4 | 6 | 6 | 6 | 6 | 6 | 6+ | 6- | 6+ | - |
| Example AS-37 | 5 | 5 | 6 | 6 | 5 | 6 | 6+ | 5- | 6+ | - |
| Example AS-38 | 5 | 4 | 6 | 6 | 4 | 6 | 6+ | 4- | 6+ | - |
| Example AS-39 | 4 | 6 | 6 | 6 | 6 | 6 | 6+ | 6- | 6+ | - |
| Example AS-40 | 3 | 6 | 6 | 6 | 6 | 6 | 6+ | 6- | 6+ | - |
| Example AS-41 | 4 | 5 | 6 | 6 | 6 | 5 | 6+ | 6- | 5+ | - |
| Example AS-42 | 4 | 5 | 6 | 6 | 6 | 5 | 6+ | 6- | 5+ | - |
| Example AS-43 | 5 | 4 | 6 | 6 | 6 | 4 | 6+ | 6- | 4+ | - |
| Example AS-44 | 5 | 4 | 6 | 6 | 6 | 4 | 6+ | 6- | 4+ | - |
| Example AS-45 | 5 | 4 | 6 | 6 | 6 | 4 | 6+ | 6- | 4+ | - |
| Example AS-46 | 6 | 6 | 6 | 6 | 6 | 6 | 6+ | 6- | 6+ | - |

[Table 8-2]

| Table 8-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-47 | 5 | 5 | 6 | 6 | 6 | 5 | 6+ | 6- | 5+ | - |
| Example AS-48 | 5 | 4 | 6 | 6 | 6 | 4 | 6+ | 6- | 4+ | - |
| Example AS-49 | 5 | 4 | 6 | 6 | 6 | 4 | 6+ | 6- | 4+ | - |
| Example AS-50 | 5 | 3 | 6 | 6 | 6 | 3 | 6+ | 6- | 3+ | - |
| Example AS-51 | 4 | 5 | 6 | 6 | 6 | 5 | 6+ | 6- | 5+ | - |
| Example AS-52 | 5 | 5 | 6 | 6 | 6 | 5 | 6+ | 6- | 5+ | - |
| Example AS-53 | 5 | 4 | 6 | 6 | 6 | 4 | 6+ | 6- | 4+ | - |
| Example AS-54 | 4 | 5 | 6 | 6 | 6 | 5 | 6+ | 6- | 5+ | - |

(continued)

| Table 8-2 | Initial gamut | Light resistance 2 (white LED) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example AS-55 | 5 | 5 | 6 | 6 | 6 | 5 | 6+ | 6- | 5+ | - |
| Example AS-56 | 5 | 4 | 6 | 6 | 6 | 4 | 6+ | 6- | 4+ | - |
| Example AS-57 | 5 | 4 | 6 | 6 | 6 | 4 | 6+ | 6- | 4+ | - |
| Example AS-58 | 4 | 5 | 6 | 6 | 6 | 5 | 6+ | 6- | 5+ | - |
| Example AS-59 | 3 | 5 | 6 | 6 | 6 | 5 | 6+ | 6- | 5+ | - |
| Example AS-60 | 3 | 5 | 6 | 6 | 6 | 5 | 6+ | 6- | 5+ | - |
| Example AS-61 | 5 | 5 | 6 | 6 | 6 | 5 | 6+ | 6- | 5+ | - |
| Example AS-62 | 4 | 5 | 6 | 6 | 6 | 5 | 6+ | 6- | 5+ | - |
| Example AS-63 | 4 | 5 | 6 | 6 | 6 | 5 | 6+ | 6- | 5+ | - |
| Example AS-64 | 5 | 5 | 6 | 6 | 6 | 5 | 6+ | 6- | 5+ | - |
| Example AS-65 | 5 | 4 | 6 | 6 | 6 | 4 | 6+ | 6- | 4+ | - |
| Example AS-66 | 5 | 5 | 6 | 6 | 6 | 5 | 6+ | 6- | 5+ | - |
| Example AS-67 | 5 | 4 | 6 | 6 | 6 | 4 | 6+ | 6- | 4+ | - |
| Example AS-68 | 4 | 5 | 6 | 6 | 6 | 5 | 6+ | 6- | 5+ | - |
| Example AS-69 | 4 | 5 | 6 | 6 | 6 | 5 | 6+ | 6- | 5+ | - |
| Example AS-70 | 6 | 6 | 6 | 6 | 6 | 6 | 6+ | 6- | 6+ | - |
| Example AS-71 | 5 | 5 | 6 | 6 | 6 | 5 | 6+ | 6- | 5+ | - |
| Example AS-72 | 5 | 5 | 6 | 6 | 6 | 5 | 6+ | 6- | 5+ | - |
| Example AS-73 | 6 | 6 | 6 | 6 | 6 | 6 | 6+ | 6- | 6+ | - |
| Example AS-74 | 6 | 6 | 6 | 6 | 6 | 6 | 6+ | 6- | 6+ | - |
| Example AS-75 | 6 | 6 | 6 | 6 | 6 | 6 | 6+ | 6- | 6+ | - |
| Example AS-76 | 6 | 6 | 6 | 6 | 6 | 6 | 6+ | 6- | 6+ | - |
| Example AS-77 | 6 | 6 | 6 | 6 | 6 | 6 | 6+ | 6- | 6+ | - |
| Example AS-78 | 6 | 6 | 6 | 6 | 6 | 6 | 6+ | 6- | 6+ | - |
| Example AS-79 | 5 | 5 | 6 | 6 | 6 | 5 | 6+ | 6- | 5+ | - |
| Example AS-80 | 5 | 5 | 6 | 6 | 6 | 5 | 6+ | 6- | 5+ | - |
| Example AS-81 | 5 | 5 | 6 | 6 | 6 | 5 | 6+ | 6- | 5+ | - |
| Example AS-82 | 5 | 5 | 6 | 6 | 6 | 5 | 6+ | 6- | 5+ | - |
| Example AS-83 | 5 | 6 | 6 | 6 | 6 | 6 | 6+ | 6- | 6+ | - |
| Comparative Example AS-1 | Reference | 1 | 2 | 6 | 1 | - | 2+ | 1- | - | 1+ |
| Comparative Example AS-2 | 2 | 1 | 2 | 6 | 1 | - | 2+ | 1- | - | 1+ |
| Comparative Example AS-3 | 1 | 1 | 2 | 6 | 1 | - | 2+ | 1- | - | 1+ |
| Comparative Example AS-4 | 1 | 1 | 2 | 6 | 1 | - | 2+ | 1- | - | 1+ |
| Comparative Example AS-5 | 2 | 1 | 2 | 6 | 6 | - | 2+ | 6- | - | 1- |
| Comparative Example AS-6 | 1 | 1 | 2 | 6 | 6 | - | 2+ | 5- | - | 1- |
| Comparative Example AS-7 | 4 | 1 | 2 | 6 | 6 | 1 | 2+ | 6- | 1+ | - |
| Comparative Example AS-8 | 4 | 1 | 2 | 6 | 1 | 6 | 2+ | 1- | 6+ | - |

(continued)

| Table 8-2 | Initial gamut | Light resistance 2 (white LED) | | | | | | | | | |
|---|---|---|---|---|---|---|---|---|---|---|---|
| | | Gamut | ΔE | | | | ΔH | | | | |
| | | | Y | C | MA | MB | Y×C | C×MA | Y×MB | Y×MA |
| Comparative Example AS-9 | 2 | 1 | 2 | 6 | 1 | - | 2+ | 1- | - | 1+ |
| Comparative Example AS-10 | 4 | 1 | 2 | 6 | 6 | 6 | 2+ | 6- | 1- | - |
| Comparative Example AS-11 | 4 | 1 | 2 | 6 | 6 | 6 | 2+ | 6- | 1- | - |
| Comparative Example AS-12 | 1 | 1 | 6 | 6 | 6 | 6 | 6+ | 6- | 6+ | - |
| Comparative Example AS-13 | 1 | 1 | 3 | 6 | 6 | 6 | 3+ | 6- | 3- | - |
| Comparative Example AS-14 | 1 | 1 | 4 | 6 | 6 | 6 | 4+ | 6- | 4- | - |
| Comparative Example AS-15 | 2 | 2 | 3 | 6 | 6 | 6 | 3+ | 6- | 3- | - |

In Table 7 and Table 8, Y represents the solid color area of yellow, C represents the solid color area of cyan, MA represents the solid color area of magenta A, and MB represents the solid color area of magenta B. Additionally, Y×C represents the solid color overprint area of yellow × cyan, C×MA represents the solid color overprint area of cyan × magenta A, Y×MB represents the solid color overprint area of yellow × magenta B, and Y×MA represents the solid color overprint area of yellow × magenta A.

From the results in Table 7 and Table 8, it was confirmed that the gravure printing ink set of an embodiment of the present invention has high color reproducibility and good light resistance. In particular, when using a yellow ink including isoindoline compound (4) or isoindoline compound (5), the color reproducibility was higher and the light resistance was better. Additionally, when using a yellow ink including C.I. Pigment Yellow 180 with an optimal particle diameter, the color reproducibility was higher and the light resistance was better.

Moreover, when using a cyan ink including C.I. Pigment Blue 15:3 or C.I. Pigment Blue 15:4, the color reproducibility was higher and the light resistance was better.

Furthermore, when using magenta ink A including C.I. Pigment Red 122 with an optimal particle diameter or C.I. Pigment Violet 19 with an optimal particle diameter, the color reproducibility was higher and the light resistance was better.

Additionally, when using magenta ink B including DPP pigment with an optimal particle diameter or perylene pigment with an optimal particle diameter, the color reproducibility was higher and the light resistance was better.

In particular, in the yellow × magenta region, the printing ink set of the comparative example showed a significant change in hue towards blue (decrease in hue angle) in the light resistance test with ultraviolet irradiation, while in the light resistance test with white LED irradiation, the hue changed significantly towards yellow (increase in hue angle). In other words, it can be understood that the printing ink set of the comparative example exhibits different hue changes over time depending on the light source, making it difficult to obtain sufficient light resistance. In contrast, it can be understood that the printing ink set of the embodiment of the present invention achieves good light resistance regardless of the light source.

[Adhesion]

For the printed matters obtained as described above using ink sets A3, A20, A70 to A83, and A92, adhesion tests were performed 3 hours after printing. A 12 mm wide adhesive tape (Cellophane tape manufactured by Nichiban Co., Ltd.) was applied to the printed surface, and the degree of peeling of the ink film was visually evaluated when the tape was rapidly pulled off. The evaluation criteria were as follows. The results are shown in Table 9. The practical level is 2 or higher.

(Evaluation Criteria)

5: The peeling area of the ink film on the printed surface is less than 1%, or no peeling at all

4: The peeling area of the ink film is 1% or higher and less than 2%

3: The peeling area of the ink film is 2% or higher and less than 3%

2: The peeling area of the ink film is 3% or higher and less than 5%

1: The peeling area of the ink film is 5% or higher

[Table 9]

| Table 9 | Ink set | Yellow ink | Cyan ink | Magenta ink A | Magenta ink B | Adhesion |
|---|---|---|---|---|---|---|
| Example AS-3 | Ink set A3 | [Y1-3] | [C1-1] | [M1-1] | [M1-19] | 2 |
| Example AS-70 | Ink set A70 | [Y1-3] | [C1-1] | [M1-7] | [M1-19] | 2 |
| Example AS-71 | Ink set A71 | [Y1-3] | [C1-1] | [M1-1] | [M1-21] | 2 |
| Example AS-72 | Ink set A72 | [Y1-3] | [C1-1] | [M1-1] | [M1-26] | 2 |
| Example AS-73 | Ink set A73 | [Y2-1] | [C2-1] | [M2-1] | [M2-7] | 3 |
| Example AS-74 | Ink set A74 | [Y2-2] | [C2-2] | [M2-2] | [M2-8] | 4 |
| Example AS-75 | Ink set A75 | [Y2-3] | [C2-3] | [M2-3] | [M2-9] | 5 |
| Example AS-76 | Ink set A76 | [Y2-1] | [C2-1] | [M2-4] | [M2-7] | 3 |
| Example AS-77 | Ink set A77 | [Y2-2] | [C2-2] | [M2-5] | [M2-8] | 4 |
| Example AS-78 | Ink set A78 | [Y2-3] | [C2-3] | [M2-6] | [M2-9] | 5 |
| Example AS-79 | Ink set A79 | [Y2-1] | [C2-1] | [M2-1] | [M2-10] | 3 |
| Example AS-80 | Ink set A80 | [Y2-2] | [C2-2] | [M2-2] | [M2-11] | 4 |
| Example AS-81 | Ink set A81 | [Y2-3] | [C2-3] | [M2-3] | [M2-12] | 5 |
| Example AS-82 | Ink set A82 | [Y2-1] | [C2-1] | [M2-1] | [M2-13] | 3 |
| Example AS-20 | Ink set A20 | [Y1-20] | [C1-1] | [M1-1] | [M1-19] | 2 |
| Example AS-83 | Ink set A83 | [Y2-4] | [C2-1] | [M2-1] | [M2-7] | 3 |
| Comparative Example AS-9 | Ink set A92 | [Y2-5] | [C2-1] | [M2-14] | - | 1 |

As can be understood from the results in Table 9, the printing ink set including polyvinyl butyral resin exhibited better adhesion. In particular, the ink set including polyvinyl butyral resin with a hydroxyl group content ratio of 25% or less showed even better adhesion. In the printing ink set of the comparative example, even though it included polyvinyl butyral resin, good adhesion was not obtained.

<Manufacturing of Packaging Material>

(Example BP-1)

[Preparation of Packaging Material B1]

Cyan ink [C1-1], magenta ink [M1-1], magenta ink [M1-19], and yellow ink [Y1-1] were diluted with the above-mentioned mixed solvent 1 to achieve a viscosity of 16 seconds (25°C, Zahn cup No. 3).

Using the diluted inks, a gravure proofing 6-color machine equipped with a gravure plate with a depth of 20 μm, and an ink set B1 including black ink (LIOALPHA R92 black (manufactured by Toyo Ink Co., Ltd.)), cyan ink [C1-1], magenta ink [M1-1], magenta ink [M1-19], yellow ink [Y1-1], and white ink ((LIOALPHA R631 white (manufactured by Toyo Ink Co., Ltd.)), overprinting was performed on a 20 μm thick corona-treated stretched polypropylene film (OPP substrate) in the order of black ink, cyan ink [C1-1], magenta ink [M1-1], magenta ink [M1-19], yellow ink [Y1-1], and white ink. Each unit was dried at 50°C, and a printed matter with the structure "OPP substrate/black, cyan, magenta A, magenta B, yellow, or white printing layer" was obtained.

Subsequently, on the printing layer of the obtained printed matter, a urethane-based laminate adhesive (TM320/CAT13B manufactured by Toyo Morton Co., Ltd., 30% non-volatile ethyl acetate solution) was applied and dried to achieve a coating amount of 2.0 g/$m^2$ after drying. Then, a 50 μm thick non-stretched polyethylene (PE) film was laminated on the adhesive layer to obtain packaging material B1 with the structure "OPP substrate/5-color overprint layer/adhesive layer/PE substrate".

(Examples BP-2 to BP-83, Comparative Examples BP-1 to BP-7)

[Preparation of Packaging Materials B2 to B90]

Packaging materials B2 to B90 were obtained in the same manner as in Example BP-1 except that the ink set B1 used in Example BP-1 was changed to the ink sets shown in Table 10.

[Table 10-1]

| Table 10-1 | Packaging material | Ink set | Black ink | Yellow ink | Cyan ink | Magenta ink A | Magenta ink B | White ink |
|---|---|---|---|---|---|---|---|---|
| Example BP-1 | Packaging material B1 | Ink set B1 | LIOALPHA R92 black | [Y1-1] | [C1-1] | [M1-1] | [M1-19] | LIOALPHA R631 white |
| Example BP-2 | Packaging material B2 | Ink set B2 | | [Y1-2] | [C1-1] | [M1-1] | [M1-19] | |
| Example BP-3 | Packaging material B3 | Ink set B3 | | [Y1-3] | [C1-1] | [M1-1] | [M1-19] | |
| Example BP-4 | Packaging material B4 | Ink set B4 | | [Y1-4] | [C1-1] | [M1-1] | [M1-19] | |
| Example BP-5 | Packaging material B5 | Ink set B5 | | [Y1-5] | [C1-1] | [M1-1] | [M1-19] | |
| Example BP-6 | Packaging material B6 | Ink set B6 | | [Y1-6] | [C1-1] | [M1-1] | [M1-19] | |
| Example BP-7 | Packaging material B7 | Ink set B7 | | [Y1-7] | [C1-1] | [M1-1] | [M1-19] | |
| Example BP-8 | Packaging material B8 | Ink set B8 | | [Y1-8] | [C1-1] | [M1-1] | [M1-19] | |
| Example BP-9 | Packaging material B9 | Ink set B9 | | [Y1-9] | [C1-1] | [M1-1] | [M1-19] | |
| Example BP-10 | Packaging material B10 | Ink set B10 | | [Y1-10] | [C1-1] | [M1-1] | [M1-19] | |
| Example BP-11 | Packaging material B11 | Ink set B11 | | [Y1-11] | [C1-1] | [M1-1] | [M1-19] | |
| Example BP-12 | Packaging material B12 | Ink set B12 | | [Y1-12] | [C1-1] | [M1-1] | [M1-19] | |
| Example BP-13 | Packaging material B13 | Ink set B13 | | [Y1-13] | [C1-1] | [M1-1] | [M1-19] | |
| Example BP-14 | Packaging material B14 | Ink set B14 | | [Y1-14] | [C1-1] | [M1-1] | [M1-19] | |

(continued)

| Table 10-1 | Packaging material | Ink set | Black ink | Yellow ink | Cyan ink | Magenta ink A | Magenta ink B | White ink |
|---|---|---|---|---|---|---|---|---|
| Example BP-15 | Packaging material B15 | Ink set B15 | | [Y1-15] | [C1-1] | [M1-1] | [M1-19] | |
| Example BP-16 | Packaging material B16 | Ink set B16 | | [Y1-16] | [C1-1] | [M1-1] | [M1-19] | |
| Example BP-17 | Packaging material B17 | Ink set B17 | | [Y1-17] | [C1-1] | [M1-1] | [M1-19] | |
| Example BP-18 | Packaging material B18 | Ink set B18 | | [Y1-18] | [C1-1] | [M1-1] | [M1-19] | |
| Example BP-19 | Packaging material B19 | Ink set B19 | | [Y1-19] | [C1-1] | [M1-1] | [M1-19] | |
| Example BP-20 | Packaging material B20 | Ink set B20 | | [Y1-20] | [C1-1] | [M1-1] | [M1-19] | |
| Example BP-21 | Packaging material B21 | Ink set B21 | | [Y1-21] | [C1-1] | [M1-1] | [M1-19] | |
| Example BP-22 | Packaging material B22 | Ink set B22 | | [Y1-22] | [C1-1] | [M1-1] | [M1-19] | |
| Example BP-23 | Packaging material B23 | Ink set B23 | | [Y1-23] | [C1-1] | [M1-1] | [M1-19] | |
| Example BP-24 | Packaging material B24 | Ink set B24 | | [Y1-24] | [C1-1] | [M1-1] | [M1-19] | |
| Example BP-25 | Packaging material B25 | Ink set B25 | | [Y1-1] | [C1-2] | [M1-1] | [M1-19] | |
| Example BP-26 | Packaging material B26 | Ink set B26 | | [Y1-1] | [C1-3] | [M1-1] | [M1-19] | |
| Example BP-27 | Packaging material B27 | Ink set B27 | | [Y1-1] | [C1-4] | [M1-1] | [M1-19] | |
| Example BP-28 | Packaging material B28 | Ink set B28 | | [Y1-1] | [C1-5] | [M1-1] | [M1-19] | |
| Example BP-29 | Packaging material B29 | Ink set B29 | | [Y1-1] | [C1-1] | [M1-2] | [M1-19] | |
| Example BP-30 | Packaging material B30 | Ink set B30 | | [Y1-1] | [C1-1] | [M1-3] | [M1-19] | |

(continued)

| Table 10-1 | Packaging material | Ink set | Black ink | Yellow ink | Cyan ink | Magenta ink A | Magenta ink B | White ink |
|---|---|---|---|---|---|---|---|---|
| Example BP-31 | Packaging material B31 | Ink set B31 | | [Y1-1] | [C1-1] | [M1-4] | [M1-19] | |
| Example BP-32 | Packaging material B32 | Ink set B32 | | [Y1-1] | [C1-1] | [M1-5] | [M1-19] | |
| Example BP-33 | Packaging material B33 | Ink set B33 | | [Y1-1] | [C1-1] | [M1-6] | [M1-19] | |
| Example BP-34 | Packaging material B34 | Ink set B34 | | [Y1-1] | [C1-1] | [M1-7] | [M1-19] | |
| Example BP-35 | Packaging material B35 | Ink set B35 | | [Y1-1] | [C1-1] | [M1-8] | [M1-19] | |
| Example BP-36 | Packaging material B36 | Ink set B36 | | [Y1-1] | [C1-1] | [M1-9] | [M1-19] | |
| Example BP-37 | Packaging material B37 | Ink set B37 | | [Y1-1] | [C1-1] | [M1-10] | [M1-19] | |
| Example BP-38 | Packaging material B38 | Ink set B38 | | [Y1-1] | [C1-1] | [M1-11] | [M1-19] | |
| Example BP-39 | Packaging material B39 | Ink set B39 | | [Y1-1] | [C1-1] | [M1-12] | [M1-19] | |
| Example BP-40 | Packaging material B40 | Ink set B40 | | [Y1-1] | [C1-1] | [M1-1] | [M1-13] | |
| Example BP-41 | Packaging material B41 | Ink set B41 | | [Y1-1] | [C1-1] | [M1-1] | [M1-14] | |
| Example BP-42 | Packaging material B42 | Ink set B42 | | [Y1-1] | [C1-1] | [M1-1] | [M1-15] | |
| Example BP-43 | Packaging material B43 | Ink set B43 | | [Y1-1] | [C1-1] | [M1-1] | [M1-16] | |

[Table 10-2]

| Table 10-2 | Packaging material | Ink set | Black ink | Yellow ink | Cyan ink | Magenta ink A | Magenta ink B | White ink |
|---|---|---|---|---|---|---|---|---|
| Example BP-44 | Packaging material B44 | Ink set B44 | LIOALPHA R92 black | [Y1-1] | [C1-1] | [M1-1] | [M1-17] | LIOALPHA R631 white |

(continued)

| Table 10-2 | Packaging material | Ink set | Black ink | Yellow ink | Cyan ink | Magenta ink A | Magenta ink B | White ink |
|---|---|---|---|---|---|---|---|---|
| Example BP-45 | Packaging material B45 | Ink set B45 | | [Y1-1] | [C1-1] | [M1-1] | [M1-18] | |
| Example BP-46 | Packaging material B46 | Ink set B46 | | [Y1-1] | [C1-1] | [M1-1] | [M1-20] | |
| Example BP-47 | Packaging material B47 | Ink set B47 | | [Y1-1] | [C1-1] | [M1-1] | [M1-21] | |
| Example BP-48 | Packaging material B48 | Ink set B48 | | [Y1-1] | [C1-1] | [M1-1] | [M1-22] | |
| Example BP-49 | Packaging material B49 | Ink set B49 | | [Y1-1] | [C1-1] | [M1-1] | [M1-23] | |
| Example BP-50 | Packaging material B50 | Ink set B50 | | [Y1-1] | [C1-1] | [M1-1] | [M1-24] | |
| Example BP-51 | Packaging material B51 | Ink set B51 | | [Y1-1] | [C1-1] | [M1-1] | [M1-25] | |
| Example BP-52 | Packaging material B52 | Ink set B52 | | [Y1-1] | [C1-1] | [M1-1] | [M1-26] | |
| Example BP-53 | Packaging material B53 | Ink set B53 | | [Y1-1] | [C1-1] | [M1-1] | [M1-27] | |
| Example BP-54 | Packaging material B54 | Ink set B54 | | [Y1-1] | [C1-1] | [M1-1] | [M1-28] | |
| Example BP-55 | Packaging material B55 | Ink set B55 | | [Y1-1] | [C1-1] | [M1-1] | [M1-29] | |
| Example BP-56 | Packaging material B56 | Ink set B56 | | [Y1-1] | [C1-1] | [M1-1] | [M1-30] | |
| Example BP-57 | Packaging material B57 | Ink set B57 | | [Y1-1] | [C1-1] | [M1-1] | [M1-31] | |
| Example BP-58 | Packaging material B58 | Ink set B58 | | [Y1-1] | [C1-1] | [M1-1] | [M1-32] | |
| Example BP-59 | Packaging material B59 | Ink set B59 | | [Y1-1] | [C1-1] | [M1-1] | [M1-33] | |
| Example BP-60 | Packaging material B60 | Ink set B60 | | [Y1-1] | [C1-1] | [M1-1] | [M1-34] | |

(continued)

| Table 10-2 | Packaging material | Ink set | Black ink | Yellow ink | Cyan ink | Magenta ink A | Magenta ink B | White ink |
|---|---|---|---|---|---|---|---|---|
| Example BP-61 | Packaging material B61 | Ink set B61 | | [Y1-1] | [C1-1] | [M1-1] | [M1-35] | |
| Example BP-62 | Packaging material B62 | Ink set B62 | | [Y1-1] | [C1-1] | [M1-1] | [M1-36] | |
| Example BP-63 | Packaging material B63 | Ink set B63 | | [Y1-1] | [C1-1] | [M1-1] | [M1-37] | |
| Example BP-64 | Packaging material B64 | Ink set B64 | | [Y1-1] | [C1-1] | [M1-1] | [M1-38] | |
| Example BP-65 | Packaging material B65 | Ink set B65 | | [Y1-1] | [C1-1] | [M1-1] | [M1-39] | |
| Example BP-66 | Packaging material B66 | Ink set B66 | | [Y1-1] | [C1-1] | [M1-1] | [M1-40] | |
| Example BP-67 | Packaging material B67 | Ink set B67 | | [Y1-1] | [C1-1] | [M1-1] | [M1-41] | |
| Example BP-68 | Packaging material B68 | Ink set B68 | | [Y1-1] | [C1-1] | [M1-1] | [M1-42] | |
| Example BP-69 | Packaging material B69 | Ink set B69 | | [Y1-1] | [C1-1] | [M1-1] | [M1-43] | |
| Example BP-70 | Packaging material B70 | Ink set B70 | | [Y1-3] | [C1-1] | [M1-7] | [M1-19] | |
| Example BP-71 | Packaging material B71 | Ink set B71 | | [Y1-3] | [C1-1] | [M1-1] | [M1-21] | |
| Example BP-72 | Packaging material B72 | Ink set B72 | | [Y1-3] | [C1-1] | [M1-1] | [M1-26] | |
| Example BP-73 | Packaging material B73 | Ink set B73 | | [Y2-1] | [C2-1] | [M2-1] | [M2-7] | |
| Example BP-74 | Packaging material B74 | Ink set B74 | | [Y2-2] | [C2-2] | [M2-2] | [M2-8] | |
| Example BP-75 | Packaging material B75 | Ink set B75 | | [Y2-3] | [C2-3] | [M2-3] | [M2-9] | |
| Example BP-76 | Packaging material B76 | Ink set B76 | | [Y2-1] | [C2-1] | [M2-4] | [M2-7] | |

(continued)

| Table 10-2 | Packaging material | Ink set | Black ink | Yellow ink | Cyan ink | Magenta ink A | Magenta ink B | White ink |
|---|---|---|---|---|---|---|---|---|
| Example BP-77 | Packaging material B77 | Ink set B77 | | [Y2-2] | [C2-2] | [M2-5] | [M2-8] | |
| Example BP-78 | Packaging material B78 | Ink set B78 | | [Y2-3] | [C2-3] | [M2-6] | [M2-9] | |
| Example BP-79 | Packaging material B79 | Ink set B79 | | [Y2-1] | [C2-1] | [M2-1] | [M2-10] | |
| Example BP-80 | Packaging material B80 | Ink set B80 | | [Y2-2] | [C2-2] | [M2-2] | [M2-11] | |
| Example BP-81 | Packaging material B81 | Ink set B81 | | [Y2-3] | [C2-3] | [M2-3] | [M2-12] | |
| Example BP-82 | Packaging material B82 | Ink set B82 | | [Y2-1] | [C2-1] | [M2-1] | [M2-13] | |
| Example BP-83 | Packaging material B83 | Ink set B83 | | [Y2-4] | [C2-1] | [M2-1] | [M2-7] | |
| Comparative Example BP-1 | Packaging material B84 | Ink set B84 | | [Y1-25] | [C1-1] | [M1-44] | - | |
| Comparative Example BP-2 | Packaging material B85 | Ink set B85 | | [Y2-5] | [C2-1] | [M2-14] | - | |
| Comparative Example BP-3 | Packaging material B86 | Ink set B86 | LIOALPHA R92 black | [Y1-26] | [C1-1] | [M1-1] | [M1-19] | LIOALPHA R631 white |
| Comparative Example BP-4 | Packaging material B87 | Ink set B87 | | [Y1-29] | [C1-1] | [M1-1] | [M1-19] | |
| Comparative Example BP-5 | Packaging material B88 | Ink set B88 | | [Y1-30] | [C1-1] | [M1-1] | [M1-19] | |
| Comparative Example BP-6 | Packaging material B89 | Ink set B89 | | [Y1-31] | [C1-1] | [M1-1] | [M1-19] | |
| Comparative Example BP-7 | Packaging material B90 | Ink set B90 | | [Y1-32] | [C1-1] | [M1-1] | [M1-19] | |

As described above, packaging materials were prepared by using the gravure printing ink sets of this embodiment and comparative examples.

Among these packaging materials, the laminate strength of packaging materials B3, B20, and B70 to B90 was evaluated according to the following method. The results are shown in Table 11.

[Initial Laminate Strength Evaluation]

Each packaging material was cut to a width of 15 mm, and after delaminating between the printing layer and the adhesive layer, the peel strength was measured using an Intesco 201 universal tensile tester. The evaluation criteria were as follows. The results are shown in Table 11. The practical level is 2 or higher.

(Evaluation Criteria)

5: 2.0 N/15 mm or higher
4: 1.5 N/15 mm or higher, less than 2.0 N/15 mm
3: 1.0 N/15 mm or higher, less than 1.5 N/15 mm
2: 0.5 N/15 mm or higher, less than 1.0 N/15 mm
1: Less than 0.5 N/15 mm

[Laminate Strength Evaluation 1 After Light Resistance Test]

(Ultraviolet Irradiation Test Using Fade-O-Meter)

Each packaging material was subjected to ultraviolet irradiation for 48 hours using a Fade-O-Meter (ultraviolet carbon arc lamp type light resistance tester), and the peel strength was measured in the same manner as described above after the test. The conditions for ultraviolet irradiation were in accordance with JIS L0842:2004 and JIS B7751:2007.

[Laminate Strength Evaluation 2 After Light Resistance Test]

(White LED Irradiation Test)

Each packaging material was subjected to a white LED irradiation test according to the following test method. After the test, the peel strength was measured in the same manner as described above.

(Test Method)

Tester: Illuminated incubator FLI-2010H-LED (manufactured by Tokyo Rikakikai)

Light source: White LED

Illuminance: 15000 Lux

Irradiation temperature: 10°C

Irradiation humidity: 70% RH

Irradiation duration: 96 hours

[Table 11]

| Table 11 | Packaging material | Ink set | Initial laminate strength | Laminate strength 1 after light resistance test (carbon arc) | Laminate strength 2 after light resistance test (White LED) |
|---|---|---|---|---|---|
| Example BS-3 | Packaging material B3 | Ink set B3 | 5 | 2 | 2 |

(continued)

| Table 11 | Packaging material | Ink set | Initial laminate strength | Laminate strength 1 after light resistance test (carbon arc) | Laminate strength 2 after light resistance test (White LED) |
|---|---|---|---|---|---|
| Example BS-70 | Packaging material B70 | Ink set B70 | 5 | 2 | 2 |
| Example BS-71 | Packaging material B71 | Ink set B71 | 5 | 2 | 2 |
| Example BS-72 | Packaging material B72 | Ink set B72 | 5 | 2 | 2 |
| Example BS-73 | Packaging material B73 | Ink set B73 | 5 | 3 | 3 |
| Example BS-74 | Packaging material B74 | Ink set B74 | 5 | 4 | 4 |
| Example BS-75 | Packaging material B75 | Ink set B75 | 5 | 5 | 5 |
| Example BS-76 | Packaging material B76 | Ink set B76 | 5 | 3 | 3 |
| Example BS-77 | Packaging material B77 | Ink set B77 | 5 | 4 | 4 |
| Example BS-78 | Packaging material B78 | Ink set B78 | 5 | 5 | 5 |
| Example BS-79 | Packaging material B79 | Ink set B79 | 5 | 3 | 3 |
| Example BS-80 | Packaging material B80 | Ink set B80 | 5 | 4 | 4 |
| Example BS-81 | Packaging material B81 | Ink set B81 | 5 | 5 | 5 |
| Example BS-82 | Packaging material B82 | Ink set B82 | 5 | 3 | 3 |
| Example BS-20 | Packaging material B20 | Ink set B20 | 5 | 2 | 2 |
| Example BS-83 | Packaging material B83 | Ink set B83 | 5 | 3 | 3 |
| Comparative Example BP-1 | Packaging material B84 | Ink set B84 | 5 | 1 | 1 |
| Comparative Example BP-2 | Packaging material B85 | Ink set B85 | 5 | 1 | 1 |
| Comparative Example BP-3 | Packaging material B86 | Ink set B86 | 5 | 1 | 1 |
| Comparative Example BP-4 | Packaging material B87 | Ink set B87 | 5 | 1 | 1 |
| Comparative Example BP-5 | Packaging material B88 | Ink set B88 | 5 | 1 | 1 |
| Comparative Example BP-6 | Packaging material B89 | Ink set B89 | 5 | 1 | 1 |
| Comparative Example BP-7 | Packaging material B90 | Ink set B90 | 5 | 1 | 1 |

As can be understood from the results shown in Table 11, the packaging material using the printing ink set of this embodiment had good laminate strength even after the light resistance test. The packaging material using the ink set including polyvinyl butyral resin exhibited better laminate strength after the light resistance test. In particular, the packaging material using the printing ink set including polyvinyl butyral resin with a hydroxyl group content of 25% or less showed even better laminate strength after the light resistance test. On the other hand, the packaging material using the printing ink set of the comparative example did not reach a practical level of laminate strength after the light resistance test, and even when including polyvinyl butyral resin, good laminate strength was not obtained.

<2>Evaluation of Water-Based Flexo Printing Ink Set

(Synthesis Example 3)

(Synthesis of Water-Based Polyurethane Resin [PU3])

In a 2000 mL four-neck flask equipped with a reflux condenser, a dropping funnel, a gas introduction tube, a stirring device, and a thermometer, 82.3 parts of polytetramethylene ether glycol with a number average molecular weight of 2,000, 3 parts of polyethylene glycol with a number average molecular weight of 2,000, 13 parts of dimethylolbutanoic acid, and 1.7 parts of 1,4-cyclohexanedimethanol were charged. The flask was purged with dry nitrogen and heated

to 100°C. Under stirring, 33.3 parts of IPDI were added dropwise over 20 minutes, and the temperature was gradually raised to 140°C (NCO/OH = 0.98). The reaction was continued for another 30 minutes to obtain a urethane resin. Next, while cooling, 399.8 parts of distilled water including 5.3 parts of 28% ammonia water were added to obtain water-based polyurethane resin [PU3] (weight average molecular weight of about 40,000, non-volatile content 25%, acid value 36.9 (mgKOH/g), hydroxyl value 11.1 (mgKOH/g)).

(Preparation of Polyvinyl Butyral Resin Solution [PVB4])

A polyvinyl butyral resin (weight average molecular weight 19,000) including vinyl alcohol units, vinyl acetate units, and vinyl butyral units, and including 73 mass% of butyral ring groups and 26 mass% of hydroxyl groups, was dissolved in IPA to prepare a polyvinyl butyral resin solution [PVB4] with 30% solid content.

(Preparation of Polyvinyl Butyral Resin Solution [PVB5])

A polyvinyl butyral resin (weight average molecular weight 33,000) including vinyl alcohol units, vinyl acetate units, and vinyl butyral units, and including 77 mass% of butyral ring groups and 21 mass% of hydroxyl groups, was dissolved in IPA to prepare a polyvinyl butyral resin solution [PVB5] with 30% solid content.

(Preparation of Polyvinyl Butyral Resin Solution [PVB6])

A polyvinyl butyral resin (weight average molecular weight 33,000) including vinyl alcohol units, vinyl acetate units, and vinyl butyral units, and including 84 mass% of butyral ring groups and 14 mass% of hydroxyl groups, was dissolved in IPA to prepare a polyvinyl butyral resin solution [PVB6] with 30% solid content.

[Manufacturing of Water-Based Flexo Ink]

(Manufacturing Example Y3-1)

[Preparation of Yellow Ink [Y3-1]]

45 parts of water-based polyurethane resin [PU3], 15 parts of isoindoline compound (1-1), 2 parts of polyethylene wax (W310 manufactured by Mitsui Chemicals, particle diameter 9.5 μm, softening point 132°C, hardness by needle penetration method 0.8), 0.2 parts of adipic acid dihydrazide, 0.2 parts of ammonia water (28%), 18.8 parts of water, and 18.8 parts of isopropanol were dispersed using an Eiger mill until the particle size became 10 μm or less according to a grind gauge, to manufacture yellow ink [Y3-1].

(Manufacturing Examples Y3-2 to Y3-28, C3-1 to C3-5, M3-1 to M3-44)

[Preparation of Yellow Inks [Y3-2] to [Y3-28], Cyan Inks [C3-1] to [C3-5], Magenta Inks [M3-1] to [M3-44]]

The inks described in Table 12 were obtained in the same manner as Manufacturing Example Y3-1 except that 15 parts of isoindoline compound (1-1) were changed to the compounds shown in Table 12 and the amounts described in Table 12 in the manufacturing method of yellow ink [Y3-1] described in Manufacturing Example Y3-1.

[Table 12-1]

| Table 12-1 | Pigment | | Obtained ink |
|---|---|---|---|
| | Compound name Pigment name | Charged amount [parts] | |
| Manufacturing Example Y3-1 | Isoindoline compound (1-1) | 15.00 | Yellow ink [Y3-1] |
| Manufacturing Example Y3-2 | Isoindoline compound (1-2) | 15.00 | Yellow ink [Y3-2] |
| Manufacturing Example Y3-3 | Isoindoline compound (1-3) | 15.00 | Yellow ink [Y3-3] |
| Manufacturing Example Y3-4 | Isoindoline compound (1-4) | 15.00 | Yellow ink [Y3-4] |
| Manufacturing Example Y3-5 | Isoindoline compound (1-5) | 15.00 | Yellow ink [Y3-5] |
| Manufacturing Example Y3-6 | Isoindoline compound (1-6) | 15.00 | Yellow ink [Y3-6] |
| Manufacturing Example Y3-7 | Isoindoline compound (1-7) | 15.00 | Yellow ink [Y3-7] |

(continued)

| Table 12-1 | Pigment | | Obtained ink |
|---|---|---|---|
| | Compound name Pigment name | Charged amount [parts] | |
| Manufacturing Example Y3-8 | Isoindoline compound (1-8) | 15.00 | Yellow ink [Y3-8] |
| Manufacturing Example Y3-9 | Isoindoline compound (1-9) | 15.00 | Yellow ink [Y3-9] |
| Manufacturing Example Y3-10 | Isoindoline compound (1-10) | 15.00 | Yellow ink [Y3-10] |
| Manufacturing Example Y3-11 | Isoindoline compound (1-11) | 15.00 | Yellow ink [Y3-11] |
| Manufacturing Example Y3-12 | Isoindoline compound (1-12) | 15.00 | Yellow ink [Y3-12] |
| Manufacturing Example Y3-13 | Isoindoline compound (1-13) | 15.00 | Yellow ink [Y3-13] |
| Manufacturing Example Y3-14 | Isoindoline compound (1-1)<br>Isoindoline compound (1-2) | 14.25<br>0.75 | Yellow ink [Y3-14] |
| Manufacturing Example Y3-15 | Isoindoline compound (1-1)<br>Isoindoline compound (2-1) | 14.70<br>0.30 | Yellow ink [Y3-15] |
| Manufacturing Example Y3-16 | Isoindoline compound (1-1)<br>Isoindoline compound (2-2) | 14.70<br>0.30 | Yellow ink [Y3-16] |
| Manufacturing Example Y3-17 | Isoindoline compound (1-1)<br>Isoindoline compound (2-3) | 14.70<br>0.30 | Yellow ink [Y3-17] |
| Manufacturing Example Y3-18 | PY185-1 | 15.00 | Yellow ink [Y3-18] |
| Manufacturing Example Y3-19 | PY185-2 | 15.00 | Yellow ink [Y3-19] |
| Manufacturing Example Y3-20 | PY180-1 | 15.00 | Yellow ink [Y3-20] |
| Manufacturing Example Y3-21 | PY180-2 | 15.00 | Yellow ink [Y3-21] |
| Manufacturing Example Y3-22 | PY180-3 | 15.00 | Yellow ink [Y3-22] |
| Manufacturing Example Y3-23 | PY180-4 | 15.00 | Yellow ink [Y3-23] |
| Manufacturing Example Y3-24 | PY180-5 | 15.00 | Yellow ink [Y3-24] |
| Manufacturing Example Y3-25 | PY14 | 15.00 | Yellow ink [Y3-25] |
| Manufacturing Example Y3-26 | PY74 | 15.00 | Yellow ink [Y3-26] |
| Manufacturing Example Y3-27 | PY83 | 15.00 | Yellow ink [Y3-27] |
| Manufacturing Example Y3-28 | PY93 | 15.00 | Yellow ink [Y3-28] |
| Manufacturing Example C3-1 | PB15:3 | 14.00 | Cyan ink [C3-1] |
| Manufacturing Example C3-2 | PB15:4 | 14.00 | Cyan ink [C3-2] |
| Manufacturing Example C3-3 | PB15:6 | 14.40 | Cyan ink [C3-3] |
| Manufacturing Example C3-4 | Aluminum phthalocyanine | 15.00 | Cyan ink [C3-4] |
| Manufacturing Example C3-5 | Titanyl phthalocyanine | 15.00 | Cyan ink [C3-5] |

[Table 12-2]

| Table 12-2 | Pigment | | Obtained ink |
|---|---|---|---|
| | Compound name Pigment name | Charged amount [parts] | |
| Manufacturing Example M3-1 | PR122-1 | 15.84 | Magenta ink [M3-1] |
| Manufacturing Example M3-2 | PR122-2 | 15.84 | Magenta ink [M3-2] |
| Manufacturing Example M3-3 | PR122-3 | 15.84 | Magenta ink [M3-3] |
| Manufacturing Example M3-4 | PR122-4 | 15.84 | Magenta ink [M3-4] |
| Manufacturing Example M3-5 | PR122-5 | 15.84 | Magenta ink [M3-5] |

(continued)

| Table 12-2 | Pigment | | Obtained ink |
|---|---|---|---|
| | Compound name Pigment name | Charged amount [parts] | |
| Manufacturing Example M3-6 | PR122-6 | 15.84 | Magenta ink [M3-6] |
| Manufacturing Example M3-7 | PV19-1 | 15.84 | Magenta ink [M3-7] |
| Manufacturing Example M3-8 | PV19-2 | 15.84 | Magenta ink [M3-8] |
| Manufacturing Example M3-9 | PV19-3 | 15.84 | Magenta ink [M3-9] |
| Manufacturing Example M3-10 | PV 19-4 | 15.84 | Magenta ink [M3-10] |
| Manufacturing Example M3-11 | PV19-5 | 15.84 | Magenta ink [M3-11] |
| Manufacturing Example M3-12 | PR122-1 PV 19-1 | 7.92 7.92 | Magenta ink [M3-12] |
| Manufacturing Example M3-13 | PR254-1 | 15.00 | Magenta ink [M3-13] |
| Manufacturing Example M3-14 | PR254-2 | 15.00 | Magenta ink [M3-14] |
| Manufacturing Example M3-15 | PR254-3 | 15.00 | Magenta ink [M3-15] |
| Manufacturing Example M3-16 | PR254-4 | 15.00 | Magenta ink [M3-16] |
| Manufacturing Example M3-17 | PR254-5 | 15.00 | Magenta ink [M3-17] |
| Manufacturing Example M3-18 | PR254-6 | 15.00 | Magenta ink [M3-18] |
| Manufacturing Example M3-19 | PR254-7 | 15.00 | Magenta ink [M3-19] |
| Manufacturing Example M3-20 | PR254-8 | 15.00 | Magenta ink [M3-20] |
| Manufacturing Example M3-21 | PR264-1 | 15.00 | Magenta ink [M3-21] |
| Manufacturing Example M3-22 | PR264-2 | 15.00 | Magenta ink [M3-22] |
| Manufacturing Example M3-23 | PR264-3 | 15.00 | Magenta ink [M3-23] |
| Manufacturing Example M3-24 | PR264-4 | 15.00 | Magenta ink [M3-24] |
| Manufacturing Example M3-25 | PR272-1 | 15.00 | Magenta ink [M3-25] |
| Manufacturing Example M3-26 | PR272-2 | 15.00 | Magenta ink [M3-26] |
| Manufacturing Example M3-27 | PR272-3 | 15.00 | Magenta ink [M3-27] |
| Manufacturing Example M3-28 | PR255-1 | 15.00 | Magenta ink [M3-28] |
| Manufacturing Example M3-29 | PR255-2 | 15.00 | Magenta ink [M3-29] |
| Manufacturing Example M3-30 | PR255-3 | 15.00 | Magenta ink [M3-30] |
| Manufacturing Example M3-31 | PR291 | 15.00 | Magenta ink [M3-31] |
| Manufacturing Example M3-32 | PO71 | 15.00 | Magenta ink [M3-32] |
| Manufacturing Example M3-33 | PO73-1 | 15.00 | Magenta ink [M3-33] |
| Manufacturing Example M3-34 | PO73-2 | 15.00 | Magenta ink [M3-34] |
| Manufacturing Example M3-35 | PO73-3 | 15.00 | Magenta ink [M3-35] |
| Manufacturing Example M3-36 | PR179-1 | 15.00 | Magenta ink [M3-36] |
| Manufacturing Example M3-37 | PR179-2 | 15.00 | Magenta ink [M3-37] |
| Manufacturing Example M3-38 | PR179-3 | 15.00 | Magenta ink [M3-38] |
| Manufacturing Example M3-39 | PR179-4 | 15.00 | Magenta ink [M3-39] |
| Manufacturing Example M3-40 | PR179-5 | 15.00 | Magenta ink [M3-40] |
| Manufacturing Example M3-41 | PR149 | 15.00 | Magenta ink [M3-41] |
| Manufacturing Example M3-42 | PR190 | 15.00 | Magenta ink [M3-42] |
| Manufacturing Example M3-43 | PR224 | 15.00 | Magenta ink [M3-43] |

(continued)

| Table 12-2 | Pigment | | Obtained ink |
|---|---|---|---|
| | Compound name Pigment name | Charged amount [parts] | |
| Manufacturing Example M3-44 | PR57:1 | 15.00 | Magenta ink [M3-44] |

(Manufacturing Example Y4-1)

[Preparation of Yellow Ink [Y4-1]]

45 parts of water-based polyurethane resin [PU3], 15 parts of isoindoline compound (1-3), 5 parts of polyvinyl butyral resin solution [PVB4], 2 parts of polyethylene wax (W310 manufactured by Mitsui Chemicals, particle diameter 9.5 μm, softening point 132°C, hardness by needle penetration method 0.8), 0.2 parts of adipic acid dihydrazide, 0.2 parts of ammonia water (28%), 18.8 parts of water, and 18.8 parts of isopropanol were dispersed in an Eiger mill until the particle size became 10 μm or less according to a grind gauge, to manufacture yellow ink [Y4-1].

(Manufacturing Examples Y4-2 to Y4-5, C4-1 to C4-3, M4-1 to M4-14)

[Preparation of Yellow Inks [Y4-2] to [Y4-5], Cyan Inks [C4-1] to [C4-3], Magenta Inks [M4-1] to [M4-14]]

The inks described in Table 13 were obtained in the same manner as in Manufacturing Example Y4-1 except that 15 parts of isoindoline compound (1-3) and 5 parts of polyvinyl butyral resin solution [PVB4] were changed to the compounds shown in Table 13, the amounts described in Table 13, and the polyvinyl butyral resin shown in Table 13 in the preparation method of yellow ink [Y4-1] described in Manufacturing Example Y4-1.

[Table 13]

| Table 13 | Pigment | | Polyvinyl butyral resin | Obtained ink |
|---|---|---|---|---|
| | Compound name Pigment name | Charged amount [parts] | | |
| Manufacturing Example Y4-1 | Isoindoline compound (1-3) | 15.00 | [PVB1] | Yellow ink [Y4-1] |
| Manufacturing Example Y4-2 | Isoindoline compound (1-3) | 15.00 | [PVB2] | Yellow ink [Y4-2] |
| Manufacturing Example Y4-3 | Isoindoline compound (1-3) | 15.00 | [PVB3] | Yellow ink [Y4-3] |
| Manufacturing Example Y4-4 | PY180-1 | 15.00 | [PVB1] | Yellow ink [Y4-4] |
| Manufacturing Example Y4-5 | PY14 | 15.00 | [PVB1] | Yellow ink [Y4-5] |
| Manufacturing Example C4-1 | PB15:3 | 14.00 | [PVB1] | Cyan ink [C4-1] |
| Manufacturing Example C4-2 | PB15:3 | 14.00 | [PVB2] | Cyan ink [C4-2] |
| Manufacturing Example C4-3 | PB15:3 | 14.00 | [PVB3] | Cyan ink [C4-3] |
| Manufacturing Example M4-1 | PR122-1 | 15.84 | [PVB1] | Magenta ink [M4-1] |
| Manufacturing Example M4-2 | PR122-1 | 15.84 | [PVB2] | Magenta ink [M4-2] |
| Manufacturing Example M4-3 | PR122-1 | 15.84 | [PVB3] | Magenta ink [M4-3] |
| Manufacturing Example M4-4 | PV19-1 | 15.84 | [PVB1] | Magenta ink [M4-4] |
| Manufacturing Example M4-5 | PV19-1 | 15.84 | [PVB2] | Magenta ink [M4-5] |
| Manufacturing Example M4-6 | PV19-1 | 15.84 | [PVB3] | Magenta ink [M4-6] |
| Manufacturing Example M4-7 | PR254-7 | 15.00 | [PVB1] | Magenta ink [M4-7] |
| Manufacturing Example M4-8 | PR254-7 | 15.00 | [PVB2] | Magenta ink [M4-8] |
| Manufacturing Example M4-9 | PR254-7 | 15.00 | [PVB3] | Magenta ink [M4-9] |
| Manufacturing Example M4-10 | PR264-1 | 15.00 | [PVB1] | Magenta ink [M4-10] |

(continued)

| Table 13 | Pigment | | Polyvinyl butyral resin | Obtained ink |
|---|---|---|---|---|
| | Compound name Pigment name | Charged amount [parts] | | |
| Manufacturing Example M4-11 | PR264-1 | 15.00 | [PVB2] | Magenta ink [M4-11] |
| Manufacturing Example M4-12 | PR264-1 | 15.00 | [PVB3] | Magenta ink [M4-12] |
| Manufacturing Example M4-13 | PR272-2 | 15.00 | [PVB1] | Magenta ink [M4-13] |
| Manufacturing Example M4-14 | PR57:1 | 15.00 | [PVB1] | Magenta ink [M4-14] |

The pigments used in the manufacturing of the inks are as described in Table 5, which summarizes the pigments used in the manufacturing of gravure inks.

<Evaluation of Printing Ink Set>

(Examples CS-1 to CS-83, Comparative Examples CS-1 to CS-11)

The obtained inks were combined as described in Table 14 to form ink sets C1 to C94. The obtained printing ink sets were evaluated for gamut, light resistance, and adhesion by the following methods. The results are shown in Table 15, Table 16, and Table 17.

[Table 14-1]

| Table 14-1 | Ink set | Yellow ink | Cyan ink | Magenta ink A | Magenta ink B |
|---|---|---|---|---|---|
| Example CS-1 | Ink set C1 | [Y3-1] | [C3-1] | [M3-1] | [M3-19] |
| Example CS-2 | Ink set C2 | [Y3-2] | [C3-1] | [M3-1] | [M3-19] |
| Example CS-3 | Ink set C3 | [Y3-3] | [C3-1] | [M3-1] | [M3-19] |
| Example CS-4 | Ink set C4 | [Y3-4] | [C3-1] | [M3-1] | [M3-19] |
| Example CS-5 | Ink set C5 | [Y3-5] | [C3-1] | [M3-1] | [M3-19] |
| Example CS-6 | Ink set C6 | [Y3-6] | [C3-1] | [M3-1] | [M3-19] |
| Example CS-7 | Ink set C7 | [Y3-7] | [C3-1] | [M3-1] | [M3-19] |
| Example CS-8 | Ink set C8 | [Y3-8] | [C3-1] | [M3-1] | [M3-19] |
| Example CS-9 | Ink set C9 | [Y3-9] | [C3-1] | [M3-1] | [M3-19] |
| Example CS-10 | Ink set C10 | [Y3-10] | [C3-1] | [M3-1] | [M3-19] |
| Example CS-11 | Ink set C11 | [Y3-11] | [C3-1] | [M3-1] | [M3-19] |
| Example CS-12 | Ink set C12 | [Y3-12] | [C3-1] | [M3-1] | [M3-19] |
| Example CS-13 | Ink set C13 | [Y3-13] | [C3-1] | [M3-1] | [M3-19] |
| Example CS-14 | Ink set C14 | [Y3-14] | [C3-1] | [M3-1] | [M3-19] |
| Example CS-15 | Ink set C15 | [Y3-15] | [C3-1] | [M3-1] | [M3-19] |
| Example CS-16 | Ink set C16 | [Y3-16] | [C3-1] | [M3-1] | [M3-19] |
| Example CS-17 | Ink set C17 | [Y3-17] | [C3-1] | [M3-1] | [M3-19] |
| Example CS-18 | Ink set C18 | [Y3-18] | [C3-1] | [M3-1] | [M3-19] |
| Example CS-19 | Ink set C19 | [Y3-19] | [C3-1] | [M3-1] | [M3-19] |
| Example CS-20 | Ink set C20 | [Y3-20] | [C3-1] | [M3-1] | [M3-19] |
| Example CS-21 | Ink set C21 | [Y3-21] | [C3-1] | [M3-1] | [M3-19] |
| Example CS-22 | Ink set C22 | [Y3-22] | [C3-1] | [M3-1] | [M3-19] |

(continued)

| Table 14-1 | Ink set | Yellow ink | Cyan ink | Magenta ink A | Magenta ink B |
|---|---|---|---|---|---|
| Example CS-23 | Ink set C23 | [Y3-23] | [C3-1] | [M3-1] | [M3-19] |
| Example CS-24 | Ink set C24 | [Y3-24] | [C3-1] | [M3-1] | [M3-19] |
| Example CS-25 | Ink set C25 | [Y3-1] | [C3-2] | [M3-1] | [M3-19] |
| Example CS-26 | Ink set C26 | [Y3-1] | [C3-3] | [M3-1] | [M3-19] |
| Example CS-27 | Ink set C27 | [Y3-1] | [C3-4] | [M3-1] | [M3-19] |
| Example CS-28 | Ink set C28 | [Y3-1] | [C3-5] | [M3-1] | [M3-19] |
| Example CS-29 | Ink set C29 | [Y3-1] | [C3-1] | [M3-2] | [M3-19] |
| Example CS-30 | Ink set C30 | [Y3-1] | [C3-1] | [M3-3] | [M3-19] |
| Example CS-31 | Ink set C31 | [Y3-1] | [C3-1] | [M3-4] | [M3-19] |
| Example CS-32 | Ink set C32 | [Y3-1] | [C3-1] | [M3-5] | [M3-19] |
| Example CS-33 | Ink set C33 | [Y3-1] | [C3-1] | [M3-6] | [M3-19] |
| Example CS-34 | Ink set C34 | [Y3-1] | [C3-1] | [M3-7] | [M3-19] |
| Example CS-35 | Ink set C35 | [Y3-1] | [C3-1] | [M3-8] | [M3-19] |
| Example CS-36 | Ink set C36 | [Y3-1] | [C3-1] | [M3-9] | [M3-19] |
| Example CS-37 | Ink set C37 | [Y3-1] | [C3-1] | [M3-10] | [M3-19] |
| Example CS-38 | Ink set C38 | [Y3-1] | [C3-1] | [M3-11] | [M3-19] |
| Example CS-39 | Ink set C39 | [Y3-1] | [C3-1] | [M3-12] | [M3-19] |
| Example CS-40 | Ink set C40 | [Y3-1] | [C3-1] | [M3-1] | [M3-13] |
| Example CS-41 | Ink set C41 | [Y3-1] | [C3-1] | [M3-1] | [M3-14] |
| Example CS-42 | Ink set C42 | [Y3-1] | [C3-1] | [M3-1] | [M3-15] |
| Example CS-43 | Ink set C43 | [Y3-1] | [C3-1] | [M3-1] | [M3-16] |
| Example CS-44 | Ink set C44 | [Y3-1] | [C3-1] | [M3-1] | [M3-17] |
| Example CS-45 | Ink set C45 | [Y3-1] | [C3-1] | [M3-1] | [M3-18] |
| Example CS-46 | Ink set C46 | [Y3-1] | [C3-1] | [M3-1] | [M3-20] |

[Table 14-2]

| Table 14-2 | Ink set | Yellow ink | Cyan ink | Magenta ink A | Magenta ink B |
|---|---|---|---|---|---|
| Example CS-47 | Ink set C47 | [Y3-1] | [C3-1] | [M3-1] | [M3-21] |
| Example CS-48 | Ink set C48 | [Y3-1] | [C3-1] | [M3-1] | [M3-22] |
| Example CS-49 | Ink set C49 | [Y3-1] | [C3-1] | [M3-1] | [M3-23] |
| Example CS-50 | Ink set C50 | [Y3-1] | [C3-1] | [M3-1] | [M3-24] |
| Example CS-51 | Ink set C51 | [Y3-1] | [C3-1] | [M3-1] | [M3-25] |
| Example CS-52 | Ink set C52 | [Y3-1] | [C3-1] | [M3-1] | [M3-26] |
| Example CS-53 | Ink set C53 | [Y3-1] | [C3-1] | [M3-1] | [M3-27] |
| Example CS-54 | Ink set C54 | [Y3-1] | [C3-1] | [M3-1] | [M3-28] |
| Example CS-55 | Ink set C55 | [Y3-1] | [C3-1] | [M3-1] | [M3-29] |
| Example CS-56 | Ink set C56 | [Y3-1] | [C3-1] | [M3-1] | [M3-30] |
| Example CS-57 | Ink set C57 | [Y3-1] | [C3-1] | [M3-1] | [M3-31] |
| Example CS-58 | Ink set C58 | [Y3-1] | [C3-1] | [M3-1] | [M3-32] |

(continued)

| Table 14-2 | Ink set | Yellow ink | Cyan ink | Magenta ink A | Magenta ink B |
|---|---|---|---|---|---|
| Example CS-59 | Ink set C59 | [Y3-1] | [C3-1] | [M3-1] | [M3-33] |
| Example CS-60 | Ink set C60 | [Y3-1] | [C3-1] | [M3-1] | [M3-34] |
| Example CS-61 | Ink set C61 | [Y3-1] | [C3-1] | [M3-1] | [M3-35] |
| Example CS-62 | Ink set C62 | [Y3-1] | [C3-1] | [M3-1] | [M3-36] |
| Example CS-63 | Ink set C63 | [Y3-1] | [C3-1] | [M3-1] | [M3-37] |
| Example CS-64 | Ink set C64 | [Y3-1] | [C3-1] | [M3-1] | [M3-38] |
| Example CS-65 | Ink set C65 | [Y3-1] | [C3-1] | [M3-1] | [M3-39] |
| Example CS-66 | Ink set C66 | [Y3-1] | [C3-1] | [M3-1] | [M3-40] |
| Example CS-67 | Ink set C67 | [Y3-1] | [C3-1] | [M3-1] | [M3-41] |
| Example CS-68 | Ink set C68 | [Y3-1] | [C3-1] | [M3-1] | [M3-42] |
| Example CS-69 | Ink set C69 | [Y3-1] | [C3-1] | [M3-1] | [M3-43] |
| Example CS-70 | Ink set C70 | [Y3-3] | [C3-1] | [M3-7] | [M3-19] |
| Example CS-71 | Ink set C71 | [Y3-3] | [C3-1] | [M3-1] | [M3-21] |
| Example CS-72 | Ink set C72 | [Y3-3] | [C3-1] | [M3-1] | [M3-26] |
| Example CS-73 | Ink set C73 | [Y4-1] | [C4-1] | [M4-1] | [M4-7] |
| Example CS-74 | Ink set C74 | [Y4-2] | [C4-2] | [M4-2] | [M4-8] |
| Example CS-75 | Ink set C75 | [Y4-3] | [C4-3] | [M4-3] | [M4-9] |
| Example CS-76 | Ink set C76 | [Y4-1] | [C4-1] | [M4-4] | [M4-7] |
| Example CS-77 | Ink set C77 | [Y4-2] | [C4-2] | [M4-5] | [M4-8] |
| Example CS-78 | Ink set C78 | [Y4-3] | [C4-3] | [M4-6] | [M4-9] |
| Example CS-79 | Ink set C79 | [Y4-1] | [C4-1] | [M4-1] | [M4-10] |
| Example CS-80 | Ink set C80 | [Y4-2] | [C4-2] | [M4-2] | [M4-11] |
| Example CS-81 | Ink set C81 | [Y4-3] | [C4-3] | [M4-3] | [M4-12] |
| Example CS-82 | Ink set C82 | [Y4-1] | [C4-1] | [M4-1] | [M4-13] |
| Example CS-83 | Ink set C83 | [Y4-4] | [C4-1] | [M4-1] | [M4-7] |
| Comparative Example CS-1 | Ink set C84 | [Y3-25] | [C3-1] | [M3-44] | - |
| Comparative Example CS-2 | Ink set C85 | [Y3-26] | [C3-1] | [M3-44] | - |
| Comparative Example CS-3 | Ink set C86 | [Y3-27] | [C3-1] | [M3-44] | - |
| Comparative Example CS-4 | Ink set C87 | [Y3-28] | [C3-1] | [M3-44] | - |
| Comparative Example CS-5 | Ink set C88 | [Y3-25] | [C3-1] | [M3-1] | - |
| Comparative Example CS-6 | Ink set C89 | [Y3-25] | [C3-1] | [M3-19] | - |
| Comparative Example CS-7 | Ink set C90 | [Y3-25] | [C3-1] | [M3-1] | [M3-44] |
| Comparative Example CS-8 | Ink set C91 | [Y3-25] | [C3-1] | [M3-44] | [M3-19] |
| Comparative Example CS-9 | Ink set C92 | [Y4-5] | [C4-1] | [M4-14] | - |
| Comparative Example CS-10 | Ink set C93 | [Y3-25] | [C3-1] | [M3-1] | [M3-19] |
| Comparative Example CS-11 | Ink set C94 | [Y3-26] | [C3-1] | [M3-1] | [M3-19] |

[Initial Gamut Evaluation]

Using the obtained printing ink set, printing was performed in the order of cyan, magenta A, magenta B, and

yellow under the following printing conditions to obtain a printed matter having solid color areas (cyan, magenta A, magenta B, and yellow) and solid color overprint areas (yellow × cyan, cyan × magenta A, yellow × magenta B, or yellow × magenta A).

(Printing Conditions)

Printing machine: MIRAFLEX CM manufactured by Windmöller & Hölscher
Flexo plate: Photosensitive resin plate FLEXCEL NXH Digital Flexo Plate manufactured by KODAK, plate thickness 1.14 mm, plate line count 150 lpi
Anilox roll: 900 lpi 3 cc/$m^2$
Substrate: Corona-treated polyester (PET) film (E5100 manufactured by Toyobo Co., Ltd., thickness 12 μm)
Speed: 300 m/min
Drying temperature: Inter-color dryer 100°C, tunnel dryer 100°C

The density values of the solid color areas (yellow, magenta A, magenta B, and cyan) of the obtained printed matter were measured using a Gretag Macbeth D196. In addition, a SpectroEye manufactured by Gretag Macbeth was used as the measuring device to measure the colorimetric values of the solid color areas and overprint areas under the following conditions: D50 light source, 2-degree observer angle, white backing (using a standard white plate), and without filters.

In a two-dimensional space with a* as the horizontal axis and b* as the vertical axis, the a* versus b* values for a total of 6 or 7 colors, including solid color areas (yellow, magenta A, magenta B, and cyan), and solid color overprint areas (yellow × cyan, cyan × magenta A, yellow × magenta B, or yellow × magenta A) were plotted, and the area was calculated. The area ratio was calculated with the area of Comparative Example CS-1 serving as the reference set as 100%, and the area ratio was evaluated according to the following criteria. The results are shown in Table 15. The practical level is 3 or higher.

(Evaluation Criteria)

6: The area ratio is 115% or higher
5: The area ratio is 110% or higher and less than 115%
4: The area ratio is 105% or higher and less than 110%
3: The area ratio is 100% or higher and less than 105%
2: The area ratio is 98% or higher and less than 100%
1: The area ratio is less than 98%

[Light Resistance Evaluation 1]

(Ultraviolet Irradiation Test Using Fade-O-Meter)

The printed matter obtained as described above was subjected to ultraviolet irradiation for 48 hours using a Fade-O-Meter (ultraviolet carbon arc lamp type light resistance tester), and colorimetric measurements were performed after the test in the same manner as described above. The ultraviolet irradiation conditions followed JIS L0842:2004 and JIS B7751:2007.

(Gamut)

Using the printed matter after the ultraviolet irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the ultraviolet irradiation test by the area of the initial evaluation. The area ratio was evaluated according to the following criteria. The results are shown in Table 15. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the ultraviolet irradiation test was determined and evaluated according to the following criteria. The results are shown in Table 15. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the ultraviolet irradiation test was determined and evaluated according to the following criteria. The results are shown in Table 15. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5
5: ΔH* is 0.5 or higher and less than 0.75
4: ΔH* is 0.75 or higher and less than 1.0
3: ΔH* is 1.0 or higher and less than 1.5
2: ΔH* is 1.5 or higher and less than 3.0
1: ΔH* is 3.0 or higher

[Light Resistance Evaluation 2]

(White LED Irradiation Test)

The printed matter obtained as described above was subjected to a white LED irradiation test according to the following test method. After the test, colorimetric measurements were performed in the same manner as described above, and the stability of the hue under white LED irradiation was evaluated.

(Test Method)

Tester: Illuminated incubator FLI-2010H-LED (manufactured by Tokyo Rikakikai)
Light source: White LED
Illuminance: 15000 Lux
Irradiation temperature: 10°C
Irradiation humidity: 70% RH
Irradiation duration: 96 hours

(Gamut)

Using the printed matter after the white LED irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the white LED irradiation test by the area of the initial evaluation. The area ratio was evaluated according to the following criteria. The results are shown in Table 16. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the white LED irradiation test was determined and evaluated according to the following criteria. The results are shown in Table 16. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the white LED irradiation test was determined and evaluated according to the following criteria. The results are shown in Table 16. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5

5: ΔH* is 0.5 or higher and less than 0.75

4: ΔH* is 0.75 or higher and less than 1.0

3: ΔH* is 1.0 or higher and less than 1.5

2: ΔH* is 1.5 or higher and less than 3.0

1: ΔH* is 3.0 or higher

[Table 15-1]

| Table 15-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-1 | 6 | 6 | 6 | 6 | 6 | 6 | 6+ | 6- | 6+ | - |
| Example CS-2 | 6 | 6 | 6 | 6 | 6 | 6 | 6+ | 6- | 6+ | - |
| Example CS-3 | 6 | 6 | 6 | 6 | 6 | 6 | 6+ | 6- | 6+ | - |
| Example CS-4 | 6 | 6 | 6 | 6 | 6 | 6 | 6+ | 6- | 6+ | - |
| Example CS-5 | 6 | 4 | 4 | 6 | 6 | 6 | 5+ | 6- | 5- | - |
| Example CS-6 | 4 | 4 | 4 | 6 | 6 | 6 | 5+ | 6- | 5- | - |
| Example CS-7 | 3 | 3 | 3 | 6 | 6 | 6 | 3+ | 6- | 3- | - |
| Example CS-8 | 4 | 4 | 4 | 6 | 6 | 6 | 5+ | 6- | 5- | - |
| Example CS-9 | 4 | 4 | 4 | 6 | 6 | 6 | 5+ | 6- | 5- | - |
| Example CS-10 | 4 | 4 | 4 | 6 | 6 | 6 | 5+ | 6- | 5- | - |
| Example CS-11 | 5 | 5 | 5 | 6 | 6 | 6 | 5+ | 6- | 5- | - |
| Example CS-12 | 5 | 5 | 5 | 6 | 6 | 6 | 5+ | 6- | 5- | - |
| Example CS-13 | 6 | 6 | 6 | 6 | 6 | 6 | 6+ | 6- | 6+ | - |
| Example CS-14 | 5 | 6 | 6 | 6 | 6 | 6 | 6+ | 6- | 6+ | - |
| Example CS-15 | 4 | 5 | 5 | 6 | 6 | 6 | 5+ | 6- | 5- | - |
| Example CS-16 | 4 | 5 | 5 | 6 | 6 | 6 | 5+ | 6- | 5- | - |
| Example CS-17 | 6 | 6 | 6 | 6 | 6 | 6 | 6+ | 6- | 6+ | - |
| Example CS-18 | 5 | 5 | 5 | 6 | 6 | 6 | 5+ | 6- | 5- | - |
| Example CS-19 | 4 | 4 | 4 | 6 | 6 | 6 | 5+ | 6- | 5- | - |
| Example CS-20 | 5 | 6 | 6 | 6 | 6 | 6 | 6+ | 6- | 6+ | - |
| Example CS-21 | 3 | 6 | 6 | 6 | 6 | 6 | 6+ | 6- | 6- | - |
| Example CS-22 | 4 | 5 | 5 | 6 | 6 | 6 | 5+ | 6- | 5- | - |
| Example CS-23 | 5 | 4 | 4 | 6 | 6 | 6 | 4+ | 6- | 4- | - |
| Example CS-24 | 5 | 3 | 3 | 6 | 6 | 6 | 3+ | 6- | 3- | - |
| Example CS-25 | 6 | 6 | 6 | 6 | 6 | 6 | 6+ | 6- | 6- | - |
| Example CS-26 | 3 | 6 | 6 | 6 | 6 | 6 | 6+ | 6- | 6+ | - |
| Example CS-27 | 3 | 4 | 6 | 4 | 6 | 6 | 4+ | 4- | 6+ | - |
| Example CS-28 | 3 | 4 | 6 | 4 | 6 | 6 | 4+ | 4- | 6+ | - |
| Example CS-29 | 6 | 6 | 6 | 6 | 6 | 6 | 6+ | 6- | 6+ | - |
| Example CS-30 | 4 | 6 | 6 | 6 | 6 | 6 | 6+ | 6- | 6+ | - |
| Example CS-31 | 5 | 6 | 6 | 6 | 6 | 6 | 6+ | 6- | 6+ | - |

(continued)

| Table 15-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-32 | 5 | 5 | 6 | 6 | 5 | 6 | 6+ | 5- | 6+ | - |
| Example CS-33 | 4 | 4 | 6 | 6 | 4 | 6 | 6+ | 4- | 6+ | - |
| Example CS-34 | 6 | 6 | 6 | 6 | 6 | 6 | 6+ | 6- | 6+ | - |
| Example CS-35 | 5 | 5 | 6 | 6 | 5 | 6 | 6+ | 5- | 6+ | - |
| Example CS-36 | 4 | 6 | 6 | 6 | 6 | 6 | 6+ | 6- | 6+ | - |
| Example CS-37 | 5 | 5 | 6 | 6 | 5 | 6 | 6+ | 5- | 6+ | - |
| Example CS-38 | 5 | 4 | 6 | 6 | 4 | 6 | 6+ | 4- | 6+ | - |
| Example CS-39 | 4 | 6 | 6 | 6 | 6 | 6 | 6+ | 6- | 6+ | - |
| Example CS-40 | 3 | 6 | 6 | 6 | 6 | 6 | 6+ | 6- | 6+ | - |
| Example CS-41 | 4 | 5 | 6 | 6 | 6 | 5 | 6+ | 6- | 5+ | - |
| Example CS-42 | 4 | 5 | 6 | 6 | 6 | 5 | 6+ | 6- | 5+ | - |
| Example CS-43 | 5 | 4 | 6 | 6 | 6 | 4 | 6+ | 6- | 4+ | - |
| Example CS-44 | 5 | 4 | 6 | 6 | 6 | 4 | 6+ | 6- | 4+ | - |
| Example CS-45 | 5 | 4 | 6 | 6 | 6 | 4 | 6+ | 6- | 4+ | - |
| Example CS-46 | 6 | 6 | 6 | 6 | 6 | 6 | 6+ | 6- | 6+ | - |

[Table 15-2]

| Table 15-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-47 | 5 | 5 | 6 | 6 | 6 | 5 | 6+ | 6- | 5+ | - |
| Example CS-48 | 5 | 4 | 6 | 6 | 6 | 4 | 6+ | 6- | 4+ | - |
| Example CS-49 | 5 | 4 | 6 | 6 | 6 | 4 | 6+ | 6- | 4+ | - |
| Example CS-50 | 5 | 3 | 6 | 6 | 6 | 3 | 6+ | 6- | 3+ | - |
| Example CS-51 | 4 | 5 | 6 | 6 | 6 | 5 | 6+ | 6- | 5+ | - |
| Example CS-52 | 5 | 5 | 6 | 6 | 6 | 5 | 6+ | 6- | 5+ | - |
| Example CS-53 | 5 | 4 | 6 | 6 | 6 | 4 | 6+ | 6- | 4+ | - |
| Example CS-54 | 4 | 5 | 6 | 6 | 6 | 5 | 6+ | 6- | 5+ | - |
| Example CS-55 | 5 | 5 | 6 | 6 | 6 | 5 | 6+ | 6- | 5+ | - |
| Example CS-56 | 5 | 4 | 6 | 6 | 6 | 4 | 6+ | 6- | 4+ | - |
| Example CS-57 | 5 | 4 | 6 | 6 | 6 | 4 | 6+ | 6- | 4+ | - |
| Example CS-58 | 4 | 5 | 6 | 6 | 6 | 5 | 6+ | 6- | 5+ | - |
| Example CS-59 | 3 | 5 | 6 | 6 | 6 | 5 | 6+ | 6- | 5+ | - |
| Example CS-60 | 3 | 5 | 6 | 6 | 6 | 5 | 6+ | 6- | 5+ | - |
| Example CS-61 | 5 | 5 | 6 | 6 | 6 | 5 | 6+ | 6- | 5+ | - |
| Example CS-62 | 4 | 5 | 6 | 6 | 6 | 5 | 6+ | 6- | 5+ | - |
| Example CS-63 | 4 | 5 | 6 | 6 | 6 | 5 | 6+ | 6- | 5+ | - |

(continued)

| Table 15-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-64 | 5 | 5 | 6 | 6 | 6 | 5 | 6+ | 6- | 5+ | - |
| Example CS-65 | 5 | 4 | 6 | 6 | 6 | 4 | 6+ | 6- | 4+ | - |
| Example CS-66 | 5 | 5 | 6 | 6 | 6 | 5 | 6+ | 6- | 5+ | - |
| Example CS-67 | 5 | 4 | 6 | 6 | 6 | 4 | 6+ | 6- | 4+ | - |
| Example CS-68 | 4 | 5 | 6 | 6 | 6 | 5 | 6+ | 6- | 5+ | - |
| Example CS-69 | 4 | 5 | 6 | 6 | 6 | 5 | 6+ | 6- | 5+ | - |
| Example CS-70 | 6 | 6 | 6 | 6 | 6 | 6 | 6+ | 6- | 6+ | - |
| Example CS-71 | 5 | 5 | 6 | 6 | 6 | 5 | 6+ | 6- | 5+ | - |
| Example CS-72 | 5 | 5 | 6 | 6 | 6 | 5 | 6+ | 6- | 5+ | - |
| Example CS-73 | 6 | 6 | 6 | 6 | 6 | 6 | 6+ | 6- | 6+ | - |
| Example CS-74 | 6 | 6 | 6 | 6 | 6 | 6 | 6+ | 6- | 6+ | - |
| Example CS-75 | 6 | 6 | 6 | 6 | 6 | 6 | 6+ | 6- | 6+ | - |
| Example CS-76 | 6 | 6 | 6 | 6 | 6 | 6 | 6+ | 6- | 6+ | - |
| Example CS-77 | 6 | 6 | 6 | 6 | 6 | 6 | 6+ | 6- | 6+ | - |
| Example CS-78 | 6 | 6 | 6 | 6 | 6 | 6 | 6+ | 6- | 6+ | - |
| Example CS-79 | 5 | 5 | 6 | 6 | 6 | 5 | 6+ | 6- | 5+ | - |
| Example CS-80 | 5 | 5 | 6 | 6 | 6 | 5 | 6+ | 6- | 5+ | - |
| Example CS-81 | 5 | 5 | 6 | 6 | 6 | 5 | 6+ | 6- | 5+ | - |
| Example CS-82 | 5 | 5 | 6 | 6 | 6 | 5 | 6+ | 6- | 5+ | - |
| Example CS-83 | 5 | 6 | 6 | 6 | 6 | 6 | 6+ | 6- | 6+ | - |
| Comparative Example CS-1 | Reference | 1 | 1 | 6 | 2 | - | 1+ | 2- | - | 1- |
| Comparative Example CS-2 | 2 | 1 | 1 | 6 | 2 | - | 1+ | 2- | - | 1- |
| Comparative Example CS-3 | 1 | 1 | 2 | 6 | 2 | - | 2+ | 2- | - | 2- |
| Comparative Example CS-4 | 1 | 1 | 2 | 6 | 2 | - | 2+ | 2- | - | 2- |
| Comparative Example CS-5 | 2 | 1 | 1 | 6 | 6 | - | 1+ | 6- | - | 1- |
| Comparative Example CS-6 | 1 | 1 | 1 | 6 | 6 | - | 1+ | 5- | - | 1- |
| Comparative Example CS-7 | 4 | 1 | 1 | 6 | 6 | 2 | 1+ | 6- | 1- | - |
| Comparative Example CS-8 | 4 | 1 | 1 | 6 | 2 | 6 | 1+ | 2- | 6+ | - |
| Comparative Example CS-9 | 2 | 1 | 1 | 6 | 2 | - | 1+ | 2- | - | 1- |
| Comparative Example CS-10 | 4 | 1 | 1 | 6 | 6 | 6 | 1+ | 6- | 1- | - |
| Comparative Example CS-11 | 4 | 1 | 1 | 6 | 6 | 6 | 1+ | 6- | 1- | - |

[Table 16-1]

| Table 16-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-1 | 6 | 6 | 6 | 6 | 6 | 6 | 6+ | 6- | 6+ | - |

(continued)

| Table 16-1 | Initial gamut | Light resistance 2 (white LED) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-2 | 6 | 6 | 6 | 6 | 6 | 6 | 6+ | 6- | 6+ | - |
| Example CS-3 | 6 | 6 | 6 | 6 | 6 | 6 | 6+ | 6- | 6+ | - |
| Example CS-4 | 6 | 6 | 6 | 6 | 6 | 6 | 6+ | 6- | 6+ | - |
| Example CS-5 | 6 | 4 | 4 | 6 | 6 | 6 | 5+ | 6- | 5- | - |
| Example CS-6 | 4 | 4 | 4 | 6 | 6 | 6 | 5+ | 6- | 5- | - |
| Example CS-7 | 3 | 3 | 3 | 6 | 6 | 6 | 3+ | 6- | 3- | - |
| Example CS-8 | 4 | 4 | 4 | 6 | 6 | 6 | 5+ | 6- | 5- | - |
| Example CS-9 | 4 | 4 | 4 | 6 | 6 | 6 | 5+ | 6- | 5- | - |
| Example CS-10 | 4 | 4 | 4 | 6 | 6 | 6 | 5+ | 6- | 5- | - |
| Example CS-11 | 5 | 5 | 5 | 6 | 6 | 6 | 5+ | 6- | 5- | - |
| Example CS-12 | 5 | 5 | 5 | 6 | 6 | 6 | 5+ | 6- | 5- | - |
| Example CS-13 | 6 | 6 | 6 | 6 | 6 | 6 | 6+ | 6- | 6+ | - |
| Example CS-14 | 5 | 6 | 6 | 6 | 6 | 6 | 6+ | 6- | 6+ | - |
| Example CS-15 | 4 | 5 | 5 | 6 | 6 | 6 | 5+ | 6- | 5- | - |
| Example CS-16 | 4 | 5 | 5 | 6 | 6 | 6 | 5+ | 6- | 5- | - |
| Example CS-17 | 6 | 6 | 6 | 6 | 6 | 6 | 6+ | 6- | 6+ | - |
| Example CS-18 | 5 | 5 | 5 | 6 | 6 | 6 | 5+ | 6- | 5- | - |
| Example CS-19 | 4 | 4 | 4 | 6 | 6 | 6 | 5+ | 6- | 5- | - |
| Example CS-20 | 5 | 6 | 6 | 6 | 6 | 6 | 6+ | 6- | 6+ | - |
| Example CS-21 | 3 | 6 | 6 | 6 | 6 | 6 | 6+ | 6- | 6- | - |
| Example CS-22 | 4 | 5 | 5 | 6 | 6 | 6 | 5+ | 6- | 5- | - |
| Example CS-23 | 5 | 4 | 4 | 6 | 6 | 6 | 4+ | 6- | 4- | - |
| Example CS-24 | 5 | 3 | 3 | 6 | 6 | 6 | 3+ | 6- | 3- | - |
| Example CS-25 | 6 | 6 | 6 | 6 | 6 | 6 | 6+ | 6- | 6- | - |
| Example CS-26 | 3 | 6 | 6 | 6 | 6 | 6 | 6+ | 6- | 6+ | - |
| Example CS-27 | 3 | 4 | 6 | 4 | 6 | 6 | 4+ | 4- | 6+ | - |
| Example CS-28 | 3 | 4 | 6 | 4 | 6 | 6 | 4+ | 4- | 6+ | - |
| Example CS-29 | 6 | 6 | 6 | 6 | 6 | 6 | 6+ | 6- | 6+ | - |
| Example CS-30 | 4 | 6 | 6 | 6 | 6 | 6 | 6+ | 6- | 6+ | - |
| Example CS-31 | 5 | 6 | 6 | 6 | 6 | 6 | 6+ | 6- | 6+ | - |
| Example CS-32 | 5 | 5 | 6 | 6 | 5 | 6 | 6+ | 5- | 6+ | - |
| Example CS-33 | 4 | 4 | 6 | 6 | 4 | 6 | 6+ | 4- | 6+ | - |
| Example CS-34 | 6 | 6 | 6 | 6 | 6 | 6 | 6+ | 6- | 6+ | - |
| Example CS-35 | 5 | 5 | 6 | 6 | 5 | 6 | 6+ | 5- | 6+ | - |
| Example CS-36 | 4 | 6 | 6 | 6 | 6 | 6 | 6+ | 6- | 6+ | - |
| Example CS-37 | 5 | 5 | 6 | 6 | 5 | 6 | 6+ | 5- | 6+ | - |
| Example CS-38 | 5 | 4 | 6 | 6 | 4 | 6 | 6+ | 4- | 6+ | - |

(continued)

| Table 16-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-39 | 4 | 6 | 6 | 6 | 6 | 6 | 6+ | 6- | 6+ | - |
| Example CS-40 | 3 | 6 | 6 | 6 | 6 | 6 | 6+ | 6- | 6+ | - |
| Example CS-41 | 4 | 5 | 6 | 6 | 6 | 5 | 6+ | 6- | 5+ | - |
| Example CS-42 | 4 | 5 | 6 | 6 | 6 | 5 | 6+ | 6- | 5+ | - |
| Example CS-43 | 5 | 4 | 6 | 6 | 6 | 4 | 6+ | 6- | 4+ | - |
| Example CS-44 | 5 | 4 | 6 | 6 | 6 | 4 | 6+ | 6- | 4+ | - |
| Example CS-45 | 5 | 4 | 6 | 6 | 6 | 4 | 6+ | 6- | 4+ | - |
| Example CS-46 | 6 | 6 | 6 | 6 | 6 | 6 | 6+ | 6- | 6+ | - |

[Table 16-2]

| Table 16-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-47 | 5 | 5 | 6 | 6 | 6 | 5 | 6+ | 6- | 5+ | - |
| Example CS-48 | 5 | 4 | 6 | 6 | 6 | 4 | 6+ | 6- | 4+ | - |
| Example CS-49 | 5 | 4 | 6 | 6 | 6 | 4 | 6+ | 6- | 4+ | - |
| Example CS-50 | 5 | 3 | 6 | 6 | 6 | 3 | 6+ | 6- | 3+ | - |
| Example CS-51 | 4 | 5 | 6 | 6 | 6 | 5 | 6+ | 6- | 5+ | - |
| Example CS-52 | 5 | 5 | 6 | 6 | 6 | 5 | 6+ | 6- | 5+ | - |
| Example CS-53 | 5 | 4 | 6 | 6 | 6 | 4 | 6+ | 6- | 4+ | - |
| Example CS-54 | 4 | 5 | 6 | 6 | 6 | 5 | 6+ | 6- | 5+ | - |
| Example CS-55 | 5 | 5 | 6 | 6 | 6 | 5 | 6+ | 6- | 5+ | - |
| Example CS-56 | 5 | 4 | 6 | 6 | 6 | 4 | 6+ | 6- | 4+ | - |
| Example CS-57 | 5 | 4 | 6 | 6 | 6 | 4 | 6+ | 6- | 4+ | - |
| Example CS-58 | 4 | 5 | 6 | 6 | 6 | 5 | 6+ | 6- | 5+ | - |
| Example CS-59 | 3 | 5 | 6 | 6 | 6 | 5 | 6+ | 6- | 5+ | - |
| Example CS-60 | 3 | 5 | 6 | 6 | 6 | 5 | 6+ | 6- | 5+ | - |
| Example CS-61 | 5 | 5 | 6 | 6 | 6 | 5 | 6+ | 6- | 5+ | - |
| Example CS-62 | 4 | 5 | 6 | 6 | 6 | 5 | 6+ | 6- | 5+ | - |
| Example CS-63 | 4 | 5 | 6 | 6 | 6 | 5 | 6+ | 6- | 5+ | - |
| Example CS-64 | 5 | 5 | 6 | 6 | 6 | 5 | 6+ | 6- | 5+ | - |
| Example CS-65 | 5 | 4 | 6 | 6 | 6 | 4 | 6+ | 6- | 4+ | - |
| Example CS-66 | 5 | 5 | 6 | 6 | 6 | 5 | 6+ | 6- | 5+ | - |
| Example CS-67 | 5 | 4 | 6 | 6 | 6 | 4 | 6+ | 6- | 4+ | - |
| Example CS-68 | 4 | 5 | 6 | 6 | 6 | 5 | 6+ | 6- | 5+ | - |
| Example CS-69 | 4 | 5 | 6 | 6 | 6 | 5 | 6+ | 6- | 5+ | - |
| Example CS-70 | 6 | 6 | 6 | 6 | 6 | 6 | 6+ | 6- | 6+ | - |

(continued)

| Table 16-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example CS-71 | 5 | 5 | 6 | 6 | 6 | 5 | 6+ | 6- | 5+ | - |
| Example CS-72 | 5 | 5 | 6 | 6 | 6 | 5 | 6+ | 6- | 5+ | - |
| Example CS-73 | 6 | 6 | 6 | 6 | 6 | 6 | 6+ | 6- | 6+ | - |
| Example CS-74 | 6 | 6 | 6 | 6 | 6 | 6 | 6+ | 6- | 6+ | - |
| Example CS-75 | 6 | 6 | 6 | 6 | 6 | 6 | 6+ | 6- | 6+ | - |
| Example CS-76 | 6 | 6 | 6 | 6 | 6 | 6 | 6+ | 6- | 6+ | - |
| Example CS-77 | 6 | 6 | 6 | 6 | 6 | 6 | 6+ | 6- | 6+ | - |
| Example CS-78 | 6 | 6 | 6 | 6 | 6 | 6 | 6+ | 6- | 6+ | - |
| Example CS-79 | 5 | 5 | 6 | 6 | 6 | 5 | 6+ | 6- | 5+ | - |
| Example CS-80 | 5 | 5 | 6 | 6 | 6 | 5 | 6+ | 6- | 5+ | - |
| Example CS-81 | 5 | 5 | 6 | 6 | 6 | 5 | 6+ | 6- | 5+ | - |
| Example CS-82 | 5 | 5 | 6 | 6 | 6 | 5 | 6+ | 6- | 5+ | - |
| Example CS-83 | 5 | 6 | 6 | 6 | 6 | 6 | 6+ | 6- | 6+ | - |
| Comparative Example CS-1 | Reference | 1 | 2 | 6 | 1 | - | 2+ | 1- | - | 1+ |
| Comparative Example CS-2 | 2 | 1 | 2 | 6 | 1 | - | 2+ | 1- | - | 1+ |
| Comparative Example CS-3 | 1 | 1 | 2 | 6 | 1 | - | 2+ | 1- | - | 1+ |
| Comparative Example CS-4 | 1 | 1 | 2 | 6 | 1 | - | 2+ | 1- | - | 1+ |
| Comparative Example CS-5 | 2 | 1 | 2 | 6 | 6 | - | 2+ | 6- | - | 1- |
| Comparative Example CS-6 | 1 | 1 | 2 | 6 | 6 | - | 2+ | 5- | - | 1- |
| Comparative Example CS-7 | 4 | 1 | 2 | 6 | 6 | 1 | 2+ | 6- | 1+ | - |
| Comparative Example CS-8 | 4 | 1 | 2 | 6 | 1 | 6 | 2+ | 1- | 6+ | - |
| Comparative Example CS-9 | 2 | 1 | 2 | 6 | 1 | - | 2+ | 1- | - | 1+ |
| Comparative Example CS-10 | 4 | 1 | 2 | 6 | 6 | 6 | 2+ | 6- | 1- | - |
| Comparative Example CS-11 | 4 | 1 | 2 | 6 | 6 | 6 | 2+ | 6- | 1- | - |

In Table 15 and Table 16, Y represents the solid color area of yellow, C represents the solid color area of cyan, MA represents the solid color area of magenta A, and MB represents the solid color area of magenta B. Additionally, Y×C represents the solid color overprint area of yellow × cyan, C×MA represents the solid color overprint area of cyan × magenta A, Y×MB represents the solid color overprint area of yellow × magenta B, and Y×MA represents the solid color overprint area of yellow × magenta A.

From the results in Table 15 and Table 16, it was confirmed that the water-based flexo printing ink set of the present invention has high color reproducibility and good light resistance. In particular, when using a yellow ink including isoindoline compound (4) or isoindoline compound (5), the color reproducibility was higher and the light resistance was better. Additionally, when using a yellow ink including C.I. Pigment Yellow 180 with an optimal particle diameter, the color reproducibility was higher and the light resistance was better.

Moreover, when using a cyan ink including C.I. Pigment Blue 15:3 or C.I. Pigment Blue 15:4, the color reproducibility was higher and the light resistance was better.

Furthermore, when using magenta ink A including C.I. Pigment Red 122 with an optimal particle diameter or C.I. Pigment Violet 19 with an optimal particle diameter, the color reproducibility was higher and the light resistance was better.

Additionally, when using magenta ink B including DPP pigment with an optimal particle diameter or perylene pigment with an optimal particle diameter, the color reproducibility was higher and the light resistance was better.

In particular, in the yellow × magenta region, the printing ink set of the comparative example showed a significant

change in hue towards blue (decrease in hue angle) in the light resistance test with ultraviolet irradiation, while in the light resistance test with white LED irradiation, the hue changed significantly towards yellow (increase in hue angle). In other words, it can be understood that the printing ink set of the comparative example exhibits different hue changes over time depending on the light source, making it difficult to obtain sufficient light resistance. In contrast, it can be understood that the printing ink set of the embodiment of the present invention achieves good light resistance regardless of the light source.

[Adhesion]

For the printed matters obtained as described above using ink sets C3, C20, C70 to C83, and C92, adhesion tests were performed 3 hours after printing. A 12 mm wide adhesive tape (Cellophane tape manufactured by Nichiban Co., Ltd.) was applied to the printed surface, and the degree of peeling of the ink film was visually evaluated when the tape was rapidly pulled off. The evaluation criteria were as follows. The results are shown in Table 17. The practical level is 2 or higher.

(Evaluation Criteria)

5: The peeling area of the ink film on the printed surface is less than 1%, or no peeling at all
4: The peeling area of the ink film is 1% or higher and less than 2%
3: The peeling area of the ink film is 2% or higher and less than 3%
2: The peeling area of the ink film is 3% or higher and less than 5%
1: The peeling area of the ink film is 5% or higher

[Table 17]

| Table 17 | Ink set | Yellow ink | Cyan ink | Magenta ink A | Magenta ink B | Adhesion |
|---|---|---|---|---|---|---|
| Example CS-3 | Ink set C3 | [Y3-3] | [C3-1] | [M3-1] | [M3-19] | 2 |
| Example CS-70 | Ink set C70 | [Y3-3] | [C3-1] | [M3-7] | [M3-19] | 2 |
| Example CS-71 | Ink set C71 | [Y3-3] | [C3-1] | [M3-1] | [M3-21] | 2 |
| Example CS-72 | Ink set C72 | [Y3-3] | [C3-1] | [M3-1] | [M3-26] | 2 |
| Example CS-73 | Ink set C73 | [Y4-1] | [C4-1] | [M4-1] | [M4-7] | 3 |
| Example CS-74 | Ink set C74 | [Y4-2] | [C4-2] | [M4-2] | [M4-8] | 4 |
| Example CS-75 | Ink set C75 | [Y4-3] | [C4-3] | [M4-3] | [M4-9] | 5 |
| Example CS-76 | Ink set C76 | [Y4-1] | [C4-1] | [M4-4] | [M4-7] | 3 |
| Example CS-77 | Ink set C77 | [Y4-2] | [C4-2] | [M4-5] | [M4-8] | 4 |
| Example CS-78 | Ink set C78 | [Y4-3] | [C4-3] | [M4-6] | [M4-9] | 5 |
| Example CS-79 | Ink set C79 | [Y4-1] | [C4-1] | [M4-1] | [M4-10] | 3 |
| Example CS-80 | Ink set C80 | [Y4-2] | [C4-2] | [M4-2] | [M4-11] | 4 |
| Example CS-81 | Ink set C81 | [Y4-3] | [C4-3] | [M4-3] | [M4-12] | 5 |
| Example CS-82 | Ink set C82 | [Y4-1] | [C4-1] | [M4-1] | [M4-13] | 3 |
| Example CS-20 | Ink set C20 | [Y3-20] | [C3-1] | [M3-1] | [M3-19] | 2 |
| Example CS-83 | Ink set C83 | [Y4-4] | [C4-1] | [M4-1] | [M4-7] | 3 |
| Comparative Example CS-9 | Ink set C92 | [Y4-5] | [C4-1] | [M4-14] | - | 1 |

As can be understood from the results in Table 17, the printing ink set including polyvinyl butyral resin exhibited better adhesion. In particular, the printing ink set including polyvinyl butyral resin with a hydroxyl group content ratio of 25% or less showed even better adhesion. In the printing ink set of the comparative example, even though it included polyvinyl butyral resin, good adhesion was not obtained.

<Manufacturing of Packaging Material>

(Example DP-1)

[Preparation of Packaging Material D1]

Using a flexo printing machine and an ink set D1 including black ink (AQUA LIONA R92F black (manufactured by Toyo Ink Co., Ltd.)), cyan ink [C3-1], magenta ink [M3-1], magenta ink [M3-19], yellow ink [Y3-1], and white ink (AQUA LIONA R63 white (manufactured by Toyo Ink Co., Ltd.)), overprinting was performed on a 20 μm thick corona-treated stretched polypropylene film (OPP substrate) in the order of black ink, cyan ink [C3-1], magenta ink [M3-1], magenta ink [M3-19], yellow ink [Y3-1], and white ink. Each unit was dried at 100°C, and a printed matter with the structure "OPP substrate/black, cyan, magenta A, magenta B, yellow, or white printing layer" was obtained.

Subsequently, on the printing layer of the obtained printed matter, a urethane-based laminate adhesive (TM320/CAT13B manufactured by Toyo Morton Co., Ltd., 30% non-volatile ethyl acetate solution) was applied and dried to achieve a coating amount of 2.0 g/m$^2$ after drying. Then, a 50 μm thick non-stretched polyethylene (PE) film was laminated on the adhesive layer to obtain packaging material D1 with the structure "OPP substrate/color overprint layer/adhesive layer/PE substrate".

(Examples DP-2 to DP-83, Comparative Examples DP-1 to DP-2)

[Preparation of Packaging Materials D2 to D85]

Packaging materials D2 to D85 were obtained in the same manner as in Example DP-1 except that the ink set D1 used in Example DP-1 was changed to the ink sets shown in Table 18.

[Table 18-1]

| Table 18-1 | Packaging material | Ink set | Black ink | Yellow ink | Cyan ink | Magenta ink A | Magenta ink B | White ink |
|---|---|---|---|---|---|---|---|---|
| Example DP-1 | Packaging material D1 | Ink set D1 | AQUA LIONA R92F black | [Y3-1] | [C3-1] | [M3-1] | [M3-19] | AQUA LIONA R63 white |
| Example DP-2 | Packaging material D2 | Ink set D2 | | [Y3-2] | [C3-1] | [M3-1] | [M3-19] | |
| Example DP-3 | Packaging material D3 | Ink set D3 | | [Y3-3] | [C3-1] | [M3-1] | [M3-19] | |
| Example DP-4 | Packaging material D4 | Ink set D4 | | [Y3-4] | [C3-1] | [M3-1] | [M3-19] | |
| Example DP-5 | Packaging material D5 | Ink set D5 | | [Y3-5] | [C3-1] | [M3-1] | [M3-19] | |
| Example DP-6 | Packaging material D6 | Ink set D6 | | [Y3-6] | [C3-1] | [M3-1] | [M3-19] | |
| Example DP-7 | Packaging material D7 | Ink set D7 | | [Y3-7] | [C3-1] | [M3-1] | [M3-19] | |
| Example DP-8 | Packaging material D8 | Ink set D8 | | [Y3-8] | [C3-1] | [M3-1] | [M3-19] | |

(continued)

| Table 18-1 | Packaging material | Ink set | Black ink | Yellow ink | Cyan ink | Magenta ink A | Magenta ink B | White ink |
|---|---|---|---|---|---|---|---|---|
| Example DP-9 | Packaging material D9 | Ink set D9 | | [Y3-9] | [C3-1] | [M3-1] | [M3-19] | |
| Example DP-10 | Packaging material D10 | Ink set D10 | | [Y3-10] | [C3-1] | [M3-1] | [M3-19] | |
| Example DP-11 | Packaging material D11 | Ink set D11 | | [Y3-11] | [C3-1] | [M3-1] | [M3-19] | |
| Example DP-12 | Packaging material D12 | Ink set D12 | | [Y3-12] | [C3-1] | [M3-1] | [M3-19] | |
| Example DP-13 | Packaging material D13 | Ink set D13 | | [Y3-13] | [C3-1] | [M3-1] | [M3-19] | |
| Example DP-14 | Packaging material D14 | Ink set D14 | | [Y3-14] | [C3-1] | [M3-1] | [M3-19] | |
| Example DP-15 | Packaging material D15 | Ink set D15 | | [Y3-15] | [C3-1] | [M3-1] | [M3-19] | |
| Example DP-16 | Packaging material D16 | Ink set D16 | | [Y3-16] | [C3-1] | [M3-1] | [M3-19] | |
| Example DP-17 | Packaging material D17 | Ink set D17 | | [Y3-17] | [C3-1] | [M3-1] | [M3-19] | |
| Example DP-18 | Packaging material D18 | Ink set D18 | | [Y3-18] | [C3-1] | [M3-1] | [M3-19] | |
| Example DP-19 | Packaging material D19 | Ink set D19 | | [Y3-19] | [C3-1] | [M3-1] | [M3-19] | |
| Example DP-20 | Packaging material D20 | Ink set D20 | | [Y3-20] | [C3-1] | [M3-1] | [M3-19] | |
| Example DP-21 | Packaging material D21 | Ink set D21 | | [Y3-21] | [C3-1] | [M3-1] | [M3-19] | |
| Example DP-22 | Packaging material D22 | Ink set D22 | | [Y3-22] | [C3-1] | [M3-1] | [M3-19] | |
| Example DP-23 | Packaging material D23 | Ink set D23 | | [Y3-23] | [C3-1] | [M3-1] | [M3-19] | |
| Example DP-24 | Packaging material D24 | Ink set D24 | | [Y3-24] | [C3-1] | [M3-1] | [M3-19] | |

(continued)

| Table 18-1 | Packaging material | Ink set | Black ink | Yellow ink | Cyan ink | Magenta ink A | Magenta ink B | White ink |
|---|---|---|---|---|---|---|---|---|
| Example DP-25 | Packaging material D25 | Ink set D25 | | [Y3-1] | [C3-2] | [M3-1] | [M3-19] | |
| Example DP-26 | Packaging material D26 | Ink set D26 | | [Y3-1] | [C3-3] | [M3-1] | [M3-19] | |
| Example DP-27 | Packaging material D27 | Ink set D27 | | [Y3-1] | [C3-4] | [M3-1] | [M3-19] | |
| Example DP-28 | Packaging material D28 | Ink set D28 | | [Y3-1] | [C3-5] | [M3-1] | [M3-19] | |
| Example DP-29 | Packaging material D29 | Ink set D29 | | [Y3-1] | [C3-1] | [M3-2] | [M3-19] | |
| Example DP-30 | Packaging material D30 | Ink set D30 | | [Y3-1] | [C3-1] | [M3-3] | [M3-19] | |
| Example DP-31 | Packaging material D31 | Ink set D31 | | [Y3-1] | [C3-1] | [M3-4] | [M3-19] | |
| Example DP-32 | Packaging material D32 | Ink set D32 | | [Y3-1] | [C3-1] | [M3-5] | [M3-19] | |
| Example DP-33 | Packaging material D33 | Ink set D33 | | [Y3-1] | [C3-1] | [M3-6] | [M3-19] | |
| Example DP-34 | Packaging material D34 | Ink set D34 | | [Y3-1] | [C3-1] | [M3-7] | [M3-19] | |
| Example DP-35 | Packaging material D35 | Ink set D35 | | [Y3-1] | [C3-1] | [M3-8] | [M3-19] | |
| Example DP-36 | Packaging material D36 | Ink set D36 | | [Y3-1] | [C3-1] | [M3-9] | [M3-19] | |
| Example DP-37 | Packaging material D37 | Ink set D37 | | [Y3-1] | [C3-1] | [M3-10] | [M3-19] | |
| Example DP-38 | Packaging material D38 | Ink set D38 | | [Y3-1] | [C3-1] | [M3-11] | [M3-19] | |
| Example DP-39 | Packaging material D39 | Ink set D39 | | [Y3-1] | [C3-1] | [M3-12] | [M3-19] | |
| Example DP-40 | Packaging material D40 | Ink set D40 | | [Y3-1] | [C3-1] | [M3-1] | [M3-13] | |

(continued)

| Table 18-1 | Packaging material | Ink set | Black ink | Yellow ink | Cyan ink | Magenta ink A | Magenta ink B | White ink |
|---|---|---|---|---|---|---|---|---|
| Example DP-41 | Packaging material D41 | Ink set D41 | | [Y3-1] | [C3-1] | [M3-1] | [M3-14] | |
| Example DP-42 | Packaging material D42 | Ink set D42 | | [Y3-1] | [C3-1] | [M3-1] | [M3-15] | |
| Example DP-43 | Packaging material D43 | Ink set D43 | | [Y3-1] | [C3-1] | [M3-1] | [M3-16] | |

[Table 18-2]

| Table 18-2 | Packaging material | Ink set | Black ink | Yellow ink | Cyan ink | Magenta ink A | Magenta ink B | White ink |
|---|---|---|---|---|---|---|---|---|
| Example DP-44 | Packaging material D44 | Ink set D44 | AQUALIONA R92F black | [Y3-1] | [C3-1] | [M3-1] | [M3-17] | AQUALIONA R63 white |
| Example DP-45 | Packaging material D45 | Ink set D45 | | [Y3-1] | [C3-1] | [M3-1] | [M3-18] | |
| Example DP-46 | Packaging material D46 | Ink set D46 | | [Y3-1] | [C3-1] | [M3-1] | [M3-20] | |
| Example DP-47 | Packaging material D47 | Ink set D47 | | [Y3-1] | [C3-1] | [M3-1] | [M3-21] | |
| Example DP-48 | Packaging material D48 | Ink set D48 | | [Y3-1] | [C3-1] | [M3-1] | [M3-22] | |
| Example DP-49 | Packaging material D49 | Ink set D49 | | [Y3-1] | [C3-1] | [M3-1] | [M3-23] | |
| Example DP-50 | Packaging material D50 | Ink set D50 | | [Y3-1] | [C3-1] | [M3-1] | [M3-24] | |
| Example DP-51 | Packaging material D51 | Ink set D51 | | [Y3-1] | [C3-1] | [M3-1] | [M3-25] | |
| Example DP-52 | Packaging material D52 | Ink set D52 | | [Y3-1] | [C3-1] | [M3-1] | [M3-26] | |
| Example DP-53 | Packaging material D53 | Ink set D53 | | [Y3-1] | [C3-1] | [M3-1] | [M3-27] | |
| Example DP-54 | Packaging material D54 | Ink set D54 | | [Y3-1] | [C3-1] | [M3-1] | [M3-28] | |

(continued)

| Table 18-2 | Packaging material | Ink set | Black ink | Yellow ink | Cyan ink | Magenta ink A | Magenta ink B | White ink |
|---|---|---|---|---|---|---|---|---|
| Example DP-55 | Packaging material D55 | Ink set D55 | | [Y3-1] | [C3-1] | [M3-1] | [M3-29] | |
| Example DP-56 | Packaging material D56 | Ink set D56 | | [Y3-1] | [C3-1] | [M3-1] | [M3-30] | |
| Example DP-57 | Packaging material D57 | Ink set D57 | | [Y3-1] | [C3-1] | [M3-1] | [M3-31] | |
| Example DP-58 | Packaging material D58 | Ink set D58 | | [Y3-1] | [C3-1] | [M3-1] | [M3-32] | |
| Example DP-59 | Packaging material D59 | Ink set D59 | | [Y3-1] | [C3-1] | [M3-1] | [M3-33] | |
| Example DP-60 | Packaging material D60 | Ink set D60 | | [Y3-1] | [C3-1] | [M3-1] | [M3-34] | |
| Example DP-61 | Packaging material D61 | Ink set D61 | | [Y3-1] | [C3-1] | [M3-1] | [M3-35] | |
| Example DP-62 | Packaging material D62 | Ink set D62 | | [Y3-1] | [C3-1] | [M3-1] | [M3-36] | |
| Example DP-63 | Packaging material D63 | Ink set D63 | | [Y3-1] | [C3-1] | [M3-1] | [M3-37] | |
| Example DP-64 | Packaging material D64 | Ink set D64 | | [Y3-1] | [C3-1] | [M3-1] | [M3-38] | |
| Example DP-65 | Packaging material D65 | Ink set D65 | | [Y3-1] | [C3-1] | [M3-1] | [M3-39] | |
| Example DP-66 | Packaging material D66 | Ink set D66 | | [Y3-1] | [C3-1] | [M3-1] | [M3-40] | |
| Example DP-67 | Packaging material D67 | Ink set D67 | | [Y3-1] | [C3-1] | [M3-1] | [M3-41] | |
| Example DP-68 | Packaging material D68 | Ink set D68 | | [Y3-1] | [C3-1] | [M3-1] | [M3-42] | |
| Example DP-69 | Packaging material D69 | Ink set D69 | | [Y3-1] | [C3-1] | [M3-1] | [M3-43] | |
| Example DP-70 | Packaging material D70 | Ink set D70 | | [Y3-3] | [C3-1] | [M3-7] | [M3-19] | |

(continued)

| Table 18-2 | Packaging material | Ink set | Black ink | Yellow ink | Cyan ink | Magenta ink A | Magenta ink B | White ink |
|---|---|---|---|---|---|---|---|---|
| Example DP-71 | Packaging material D71 | Ink set D71 | | [Y3-3] | [C3-1] | [M3-1] | [M3-21] | |
| Example DP-72 | Packaging material D72 | Ink set D72 | | [Y3-3] | [C3-1] | [M3-1] | [M3-26] | |
| Example DP-73 | Packaging material D73 | Ink set D73 | | [Y4-1] | [C4-1] | [M4-1] | [M4-7] | |
| Example DP-74 | Packaging material D74 | Ink set D74 | | [Y4-2] | [C4-2] | [M4-2] | [M4-8] | |
| Example DP-75 | Packaging material D75 | Ink set D75 | | [Y4-3] | [C4-3] | [M4-3] | [M4-9] | |
| Example DP-76 | Packaging material D76 | Ink set D76 | | [Y4-1] | [C4-1] | [M4-4] | [M4-7] | |
| Example DP-77 | Packaging material D77 | Ink set D77 | | [Y4-2] | [C4-2] | [M4-5] | [M4-8] | |
| Example DP-78 | Packaging material D78 | Ink set D78 | | [Y4-3] | [C4-3] | [M4-6] | [M4-9] | |
| Example DP-79 | Packaging material D79 | Ink set D79 | | [Y4-1] | [C4-1] | [M4-1] | [M4-10] | |
| Example DP-80 | Packaging material D80 | Ink set D80 | | [Y4-2] | [C4-2] | [M4-2] | [M4-11] | |
| Example DP-81 | Packaging material D81 | Ink set D81 | | [Y4-3] | [C4-3] | [M4-3] | [M4-12] | |
| Example DP-82 | Packaging material D82 | Ink set D82 | | [Y4-1] | [C4-1] | [M4-1] | [M4-13] | |
| Example DP-83 | Packaging material D83 | Ink set D83 | | [Y4-4] | [C4-1] | [M4-1] | [M4-7] | |
| Comparative Example DP-1 | Packaging material D84 | Ink set D84 | | [Y3-25] | [C3-1] | [M3-44] | - | |
| Comparative Example DP-2 | Packaging material D85 | Ink set D85 | | [Y4-5] | [C4-1] | [M4-14] | - | |

As described above, packaging materials were prepared by using the water-based flexo printing ink sets of this embodiment and comparative examples.

Among these packaging materials, the laminate strength of packaging materials D3, D20, and D70 to D85 was evaluated according to the following method. The results are shown in Table 19.

[Initial Laminate Strength Evaluation]

Each packaging material was cut to a width of 15 mm, and after delaminating between the printing layer and the adhesive layer, the peel strength was measured using an Intesco 201 universal tensile tester. The evaluation criteria were as follows. The results are shown in Table 19. The practical level is 2 or higher.

(Evaluation Criteria)

5: 2.0 N/15 mm or higher
4: 1.5 N/15 mm or higher, less than 2.0 N/15 mm
3: 1.0 N/15 mm or higher, less than 1.5 N/15 mm
2: 0.5 N/15 mm or higher, less than 1.0 N/15 mm
1: Less than 0.5 N/15 mm

[Laminate Strength Evaluation 1 After Light Resistance Test]

(Ultraviolet Irradiation Test Using Fade-O-Meter)

Each packaging material was subjected to ultraviolet irradiation for 48 hours using a Fade-O-Meter (ultraviolet carbon arc lamp type light resistance tester), and the peel strength was measured in the same manner as described above after the test. The conditions for ultraviolet irradiation were in accordance with JIS L0842:2004 and JIS B7751:2007.

[Laminate Strength Evaluation 2 After Light Resistance Test]

(White LED Irradiation Test)

Each packaging material was subjected to a white LED irradiation test according to the following test method. After the test, the peel strength was measured in the same manner as described above.

(Test Method)

Tester: Illuminated incubator FLI-2010H-LED (manufactured by Tokyo Rikakikai)

Light source: White LED

Illuminance: 15000 Lux

Irradiation temperature: 10°C

Irradiation humidity: 70% RH

Irradiation duration: 96 hours

[Table 19]

| Table 19 | Packaging material | Ink set | Initial laminate strength | Laminate strength 1 after light resistance test (carbon arc) | Laminate strength 2 after light resistance test (White LED) |
|---|---|---|---|---|---|
| Example DP-3 | Packaging material D3 | Ink set D3 | 5 | 2 | 2 |
| Example DP-70 | Packaging material D70 | Ink set D70 | 5 | 2 | 2 |
| Example DP-71 | Packaging material D71 | Ink set D71 | 5 | 2 | 2 |
| Example DP-72 | Packaging material D72 | Ink set D72 | 5 | 2 | 2 |
| Example DP-73 | Packaging material D73 | Ink set D73 | 5 | 3 | 3 |
| Example DP-74 | Packaging material D74 | Ink set D74 | 5 | 4 | 4 |
| Example DP-75 | Packaging material D75 | Ink set D75 | 5 | 5 | 5 |
| Example DP-76 | Packaging material D76 | Ink set D76 | 5 | 3 | 3 |
| Example DP-77 | Packaging material D77 | Ink set D77 | 5 | 4 | 4 |
| Example DP-78 | Packaging material D78 | Ink set D78 | 5 | 5 | 5 |
| Example DP-79 | Packaging material D79 | Ink set D79 | 5 | 3 | 3 |
| Example DP-80 | Packaging material D80 | Ink set D80 | 5 | 4 | 4 |
| Example DP-81 | Packaging material D81 | Ink set D81 | 5 | 5 | 5 |
| Example DP-82 | Packaging material D82 | Ink set D82 | 5 | 3 | 3 |
| Example DP-20 | Packaging material D20 | Ink set D20 | 5 | 2 | 2 |
| Example DP-83 | Packaging material D83 | Ink set D83 | 5 | 3 | 3 |
| Comparative Example DP-1 | Packaging material D84 | Ink set D84 | 5 | 1 | 1 |
| Comparative Example DP-2 | Packaging material D85 | Ink set D85 | 5 | 1 | 1 |

As can be understood from the results shown in Table 19, the packaging material using the printing ink set of the embodiment of the present invention had good laminate strength even after the light resistance test. The packaging material using the printing ink set including polyvinyl butyral resin exhibited better laminate strength after the light resistance test. In particular, the packaging material using the printing ink set including polyvinyl butyral resin with a hydroxyl group content ratio of 25% or less showed even better laminate strength after the light resistance test. For the packaging material using the printing ink set of the comparative example, the laminate strength after the light resistance test did not reach a practical level, and even when including polyvinyl butyral resin, good laminate strength was not obtained.

<3>Evaluation of Flexo Printing Ink Set

(Synthesis Example 4)

(Synthesis of Polyurethane Resin [PU4])

A four-neck flask equipped with a reflux condenser, a dropping funnel, a gas introduction tube, a stirring device, and a thermometer was charged with 219.6 parts of polytetramethylene ether glycol with a number average molecular weight of 2,000 and 56.6 parts of IPDI. While introducing nitrogen gas, the temperature was gradually raised to 90°C, and the reaction was carried out until the NCO% became 4.4%. Next, 11.6 parts of diethylaminoethanol were added to the obtained reaction product, and the reaction was further carried out at 90°C for 3 hours to obtain a prepolymer. Using 115 parts of ethyl acetate, the above prepolymer was transferred to a dropping tank.

Next, the reaction vessel was charged with 12.2 parts of IPDA, 0.002 parts of dibutylamine, 345.0 parts of IPA, and 240.0 parts of ethyl acetate, and the above prepolymer was added dropwise from the dropping tank to the reaction vessel over a period of 30 minutes. After completing the dropwise addition, the reaction was carried out at 40°C for 1 hour to

obtain polyurethane resin [PU4] with a non-volatile content of 30%, a weight average molecular weight of 51,000, and an amine value of 9.5 mgKOH/g.

(Preparation of CAP Varnish)

A CAP varnish was prepared by mixing and dissolving cellulose acetate propionate resin (hereinafter referred to as CAP resin) with various solvents in the composition ratio shown below. "CAP-504-0.2" manufactured by Eastman Chemical Company was used as the CAP resin. This CAP resin had an acetyl group content of 2.5 mass%, a propionyl group content of 45 mass%, a hydroxyl group content of 2.6 mass%, and a glass transition temperature of 142°C.

(Composition Ratio)

CAP resin: 20%
nPAc: 40%
IPA: 40%

(Preparation of Polyvinyl Butyral Resin Solution [PVB7])

A polyvinyl butyral resin solution [PVB7] with 20% solid content was prepared by dissolving a polyvinyl butyral resin (weight average molecular weight 33,000) including vinyl alcohol units, vinyl acetate units, and vinyl butyral units, and including 77 mass% of butyral ring groups and 21 mass% of hydroxyl groups, in a mixed solvent of ethyl acetate/IPA = 1/1 (mass ratio).

<Manufacturing of Flexo Ink>

(Manufacturing Example Y5-1)

[Preparation of Yellow Ink [Y5-1]]

The following materials were preliminarily stirred and mixed using a high-speed mixer until a uniform state was obtained. Then, the obtained mixture was dispersed using a desktop sand mill filled with glass beads of 2 mm diameter to obtain yellow ink [Y5-1].

· Isoindoline compound (1-1): 13.0 parts
· Polyurethane resin [PU4]: 37.6 parts
· CAP varnish: 1.2 parts
· Polyvinyl butyral resin solution [PVB7]: 2.4 parts
· Polyethylene wax (W310 manufactured by Mitsui Chemicals): 0.5 parts
· nPAc: 13.8 parts
· IPA: 31.5 parts

(Manufacturing Examples Y5-2 to Y5-28, C5-1 to C5-5, M5-1 to M5-44)

[Preparation of Yellow Inks [Y5-2] to [Y5-28], Cyan Inks [C5-1] to [C5-5], Magenta Inks [M5-1] to [M5-44]]

The inks described in Table 20 were obtained in the same manner as in Manufacturing Example Y5-1 except that 13.0 parts of isoindoline compound (1-1) were changed to the compounds shown in Table 20 and the amounts described in Table 20 in the preparation method of yellow ink [Y5-1] described in Manufacturing Example Y5-1.

[Table 20-1]

| Table 20-1 | Pigment | | Obtained ink |
|---|---|---|---|
| | Compound name Pigment name | Charged amount [parts] | |
| Manufacturing Example Y5-1 | Isoindoline compound (1-1) | 13.00 | Yellow ink [Y5-1] |
| Manufacturing Example Y5-2 | Isoindoline compound (1-2) | 13.00 | Yellow ink [Y5-2] |

(continued)

| Table 20-1 | Pigment | | Obtained ink |
|---|---|---|---|
| | Compound name Pigment name | Charged amount [parts] | |
| Manufacturing Example Y5-3 | Isoindoline compound (1-3) | 13.00 | Yellow ink [Y5-3] |
| Manufacturing Example Y5-4 | Isoindoline compound (1-4) | 13.00 | Yellow ink [Y5-4] |
| Manufacturing Example Y5-5 | Isoindoline compound (1-5) | 13.00 | Yellow ink [Y5-5] |
| Manufacturing Example Y5-6 | Isoindoline compound (1-6) | 13.00 | Yellow ink [Y5-6] |
| Manufacturing Example Y5-7 | Isoindoline compound (1-7) | 13.00 | Yellow ink [Y5-7] |
| Manufacturing Example Y5-8 | Isoindoline compound (1-8) | 13.00 | Yellow ink [Y5-8] |
| Manufacturing Example Y5-9 | Isoindoline compound (1-9) | 13.00 | Yellow ink [Y5-9] |
| Manufacturing Example Y5-10 | Isoindoline compound (1-10) | 13.00 | Yellow ink [Y5-10] |
| Manufacturing Example Y5-11 | Isoindoline compound (1-11) | 13.00 | Yellow ink [Y5-11] |
| Manufacturing Example Y5-12 | Isoindoline compound (1-12) | 13.00 | Yellow ink [Y5-12] |
| Manufacturing Example Y5-13 | Isoindoline compound (1-13) | 13.00 | Yellow ink [Y5-13] |
| Manufacturing Example Y5-14 | Isoindoline compound (1-1)<br>Isoindoline compound (1-2) | 12.35<br>0.65 | Yellow ink [Y5-14] |
| Manufacturing Example Y5-15 | Isoindoline compound (1-1)<br>Isoindoline compound (2-1) | 12.74<br>0.26 | Yellow ink [Y5-15] |
| Manufacturing Example Y5-16 | Isoindoline compound (1-1)<br>Isoindoline compound (2-2) | 12.74<br>0.26 | Yellow ink [Y5-16] |
| Manufacturing Example Y5-17 | Isoindoline compound (1-1)<br>Isoindoline compound (2-3) | 12.74<br>0.26 | Yellow ink [Y5-17] |
| Manufacturing Example Y5-18 | PY185-1 | 13.00 | Yellow ink [Y5-18] |
| Manufacturing Example Y5-19 | PY185-2 | 13.00 | Yellow ink [Y5-19] |
| Manufacturing Example Y5-20 | PY180-1 | 13.00 | Yellow ink [Y5-20] |
| Manufacturing Example Y5-21 | PY180-2 | 13.00 | Yellow ink [Y5-21] |
| Manufacturing Example Y5-22 | PY180-3 | 13.00 | Yellow ink [Y5-22] |
| Manufacturing Example Y5-23 | PY180-4 | 13.00 | Yellow ink [Y5-23] |
| Manufacturing Example Y5-24 | PY180-5 | 13.00 | Yellow ink [Y5-24] |
| Manufacturing Example Y5-25 | PY14 | 13.00 | Yellow ink [Y5-25] |
| Manufacturing Example Y5-26 | PY74 | 13.00 | Yellow ink [Y5-26] |
| Manufacturing Example Y5-27 | PY83 | 13.00 | Yellow ink [Y5-27] |
| Manufacturing Example Y5-28 | PY93 | 13.00 | Yellow ink [Y5-28] |
| Manufacturing Example C5-1 | PB15:3 | 12.10 | Cyan ink [C5-1] |
| Manufacturing Example C5-2 | PB15:4 | 12.10 | Cyan ink [C5-2] |
| Manufacturing Example C5-3 | PB15:6 | 12.50 | Cyan ink [C5-3] |
| Manufacturing Example C5-4 | Aluminum phthalocyanine | 13.00 | Cyan ink [C5-4] |
| Manufacturing Example C5-5 | Titanyl phthalocyanine | 13.00 | Cyan ink [C5-5] |

[Table 20-2]

| Table 20-2 | Pigment | | Obtained ink |
|---|---|---|---|
| | Compound name Pigment name | Charged amount [parts] | |
| Manufacturing Example M5-1 | PR122-1 | 13.70 | Magenta ink [M5-1] |
| Manufacturing Example M5-2 | PR122-2 | 13.70 | Magenta ink [M5-2] |
| Manufacturing Example M5-3 | PR122-3 | 13.70 | Magenta ink [M5-3] |
| Manufacturing Example M5-4 | PR122-4 | 13.70 | Magenta ink [M5-4] |
| Manufacturing Example M5-5 | PR122-5 | 13.70 | Magenta ink [M5-5] |
| Manufacturing Example M5-6 | PR122-6 | 13.70 | Magenta ink [M5-6] |
| Manufacturing Example M5-7 | PV19-1 | 13.70 | Magenta ink [M5-7] |
| Manufacturing Example M5-8 | PV19-2 | 13.70 | Magenta ink [M5-8] |
| Manufacturing Example M5-9 | PV19-3 | 13.70 | Magenta ink [M5-9] |
| Manufacturing Example M5-10 | PV 19-4 | 13.70 | Magenta ink [M5-10] |
| Manufacturing Example M5-11 | PV19-5 | 13.70 | Magenta ink [M5-11] |
| Manufacturing Example M5-12 | PR122-1 PV 19-1 | 6.85 6.85 | Magenta ink [M5-12] |
| Manufacturing Example M5-13 | PR254-1 | 13.00 | Magenta ink [M5-13] |
| Manufacturing Example M5-14 | PR254-2 | 13.00 | Magenta ink [M5-14] |
| Manufacturing Example M5-15 | PR254-3 | 13.00 | Magenta ink [M5-15] |
| Manufacturing Example M5-16 | PR254-4 | 13.00 | Magenta ink [M5-16] |
| Manufacturing Example M5-17 | PR254-5 | 13.00 | Magenta ink [M5-17] |
| Manufacturing Example M5-18 | PR254-6 | 13.00 | Magenta ink [M5-18] |
| Manufacturing Example M5-19 | PR254-7 | 13.00 | Magenta ink [M5-19] |
| Manufacturing Example M5-20 | PR254-8 | 13.00 | Magenta ink [M5-20] |
| Manufacturing Example M5-21 | PR264-1 | 13.00 | Magenta ink [M5-21] |
| Manufacturing Example M5-22 | PR264-2 | 13.00 | Magenta ink [M5-22] |
| Manufacturing Example M5-23 | PR264-3 | 13.00 | Magenta ink [M5-23] |
| Manufacturing Example M5-24 | PR264-4 | 13.00 | Magenta ink [M5-24] |
| Manufacturing Example M5-25 | PR272-1 | 13.00 | Magenta ink [M5-25] |
| Manufacturing Example M5-26 | PR272-2 | 13.00 | Magenta ink [M5-26] |
| Manufacturing Example M5-27 | PR272-3 | 13.00 | Magenta ink [M5-27] |
| Manufacturing Example M5-28 | PR255-1 | 13.00 | Magenta ink [M5-28] |
| Manufacturing Example M5-29 | PR255-2 | 13.00 | Magenta ink [M5-29] |
| Manufacturing Example M5-30 | PR255-3 | 13.00 | Magenta ink [M5-30] |
| Manufacturing Example M5-31 | PR291 | 13.00 | Magenta ink [M5-31] |
| Manufacturing Example M5-32 | PO71 | 13.00 | Magenta ink [M5-32] |
| Manufacturing Example M5-33 | PO73-1 | 13.00 | Magenta ink [M5-33] |
| Manufacturing Example M5-34 | PO73-2 | 13.00 | Magenta ink [M5-34] |
| Manufacturing Example M5-35 | PO73-3 | 13.00 | Magenta ink [M5-35] |
| Manufacturing Example M5-36 | PR179-1 | 13.00 | Magenta ink [M5-36] |
| Manufacturing Example M5-37 | PR179-2 | 13.00 | Magenta ink [M5-37] |
| Manufacturing Example M5-38 | PR179-3 | 13.00 | Magenta ink [M5-38] |

(continued)

| Table 20-2 | Pigment | | Obtained ink |
|---|---|---|---|
| | Compound name Pigment name | Charged amount [parts] | |
| Manufacturing Example M5-39 | PR179-4 | 13.00 | Magenta ink [M5-39] |
| Manufacturing Example M5-40 | PR179-5 | 13.00 | Magenta ink [M5-40] |
| Manufacturing Example M5-41 | PR149 | 13.00 | Magenta ink [M5-41] |
| Manufacturing Example M5-42 | PR190 | 13.00 | Magenta ink [M5-42] |
| Manufacturing Example M5-43 | PR224 | 13.00 | Magenta ink [M5-43] |
| Manufacturing Example M5-44 | PR57:1 | 13.00 | Magenta ink [M5-44] |

The pigments used in the manufacturing of the inks are as described in Table 5 shown in the manufacturing of gravure inks.

<Evaluation of Printing Ink Set>

(Examples ES-1 to ES-72, Comparative Examples ES-1 to ES-9)

The obtained inks were combined as described in Table 21 to form ink sets E1 to E80. The obtained printing ink sets were evaluated for gamut and light resistance by the following methods. The results are shown in Table 22 and Table 23.

[Table 21-1]

| Table 21-1 | Ink set | Yellow ink | Cyan ink | Magenta ink A | Magenta ink B |
|---|---|---|---|---|---|
| Example ES-1 | Ink set E1 | [Y5-1] | [C5-1] | [M5-1] | [M5-19] |
| Example ES-2 | Ink set E2 | [Y5-2] | [C5-1] | [M5-1] | [M5-19] |
| Example ES-3 | Ink set E3 | [Y5-3] | [C5-1] | [M5-1] | [M5-19] |
| Example ES-4 | Ink set E4 | [Y5-4] | [C5-1] | [M5-1] | [M5-19] |
| Example ES-5 | Ink set E5 | [Y5-5] | [C5-1] | [M5-1] | [M5-19] |
| Example ES-6 | Ink set E6 | [Y5-6] | [C5-1] | [M5-1] | [M5-19] |
| Example ES-7 | Ink set E7 | [Y5-7] | [C5-1] | [M5-1] | [M5-19] |
| Example ES-8 | Ink set E8 | [Y5-8] | [C5-1] | [M5-1] | [M5-19] |
| Example ES-9 | Ink set E9 | [Y5-9] | [C5-1] | [M5-1] | [M5-19] |
| Example ES-10 | Ink set E10 | [Y5-10] | [C5-1] | [M5-1] | [M5-19] |
| Example ES-11 | Ink set E11 | [Y5-11] | [C5-1] | [M5-1] | [M5-19] |
| Example ES-12 | Ink set E12 | [Y5-12] | [C5-1] | [M5-1] | [M5-19] |
| Example ES-13 | Ink set E13 | [Y5-13] | [C5-1] | [M5-1] | [M5-19] |
| Example ES-14 | Ink set E14 | [Y5-14] | [C5-1] | [M5-1] | [M5-19] |
| Example ES-15 | Ink set E15 | [Y5-15] | [C5-1] | [M5-1] | [M5-19] |
| Example ES-16 | Ink set E16 | [Y5-16] | [C5-1] | [M5-1] | [M5-19] |
| Example ES-17 | Ink set E17 | [Y5-17] | [C5-1] | [M5-1] | [M5-19] |
| Example ES-18 | Ink set E18 | [Y5-18] | [C5-1] | [M5-1] | [M5-19] |
| Example ES-19 | Ink set E19 | [Y5-19] | [C5-1] | [M5-1] | [M5-19] |
| Example ES-20 | Ink set E20 | [Y5-20] | [C5-1] | [M5-1] | [M5-19] |
| Example ES-21 | Ink set E21 | [Y5-21] | [C5-1] | [M5-1] | [M5-19] |
| Example ES-22 | Ink set E22 | [Y5-22] | [C5-1] | [M5-1] | [M5-19] |

(continued)

| Table 21-1 | Ink set | Yellow ink | Cyan ink | Magenta ink A | Magenta ink B |
|---|---|---|---|---|---|
| Example ES-23 | Ink set E23 | [Y5-23] | [C5-1] | [M5-1] | [M5-19] |
| Example ES-24 | Ink set E24 | [Y5-24] | [C5-1] | [M5-1] | [M5-19] |
| Example ES-25 | Ink set E25 | [Y5-1] | [C5-2] | [M5-1] | [M5-19] |
| Example ES-26 | Ink set E26 | [Y5-1] | [C5-3] | [M5-1] | [M5-19] |
| Example ES-27 | Ink set E27 | [Y5-1] | [C5-4] | [M5-1] | [M5-19] |
| Example ES-28 | Ink set E28 | [Y5-1] | [C5-5] | [M5-1] | [M5-19] |
| Example ES-29 | Ink set E29 | [Y5-1] | [C5-1] | [M5-2] | [M5-19] |
| Example ES-30 | Ink set E30 | [Y5-1] | [C5-1] | [M5-3] | [M5-19] |
| Example ES-31 | Ink set E31 | [Y5-1] | [C5-1] | [M5-4] | [M5-19] |
| Example ES-32 | Ink set E32 | [Y5-1] | [C5-1] | [M5-5] | [M5-19] |
| Example ES-33 | Ink set E33 | [Y5-1] | [C5-1] | [M5-6] | [M5-19] |
| Example ES-34 | Ink set E34 | [Y5-1] | [C5-1] | [M5-7] | [M5-19] |
| Example ES-35 | Ink set E35 | [Y5-1] | [C5-1] | [M5-8] | [M5-19] |
| Example ES-36 | Ink set E36 | [Y5-1] | [C5-1] | [M5-9] | [M5-19] |
| Example ES-37 | Ink set E37 | [Y5-1] | [C5-1] | [M5-10] | [M5-19] |
| Example ES-38 | Ink set E38 | [Y5-1] | [C5-1] | [M5-11] | [M5-19] |
| Example ES-39 | Ink set E39 | [Y5-1] | [C5-1] | [M5-12] | [M5-19] |
| Example ES-40 | Ink set E40 | [Y5-1] | [C5-1] | [M5-1] | [M5-13] |

[Table 21-2]

| Table 21-2 | Ink set | Yellow ink | Cyan ink | Magenta ink A | Magenta ink B |
|---|---|---|---|---|---|
| Example ES-41 | Ink set E41 | [Y5-1] | [C5-1] | [M5-1] | [M5-14] |
| Example ES-42 | Ink set E42 | [Y5-1] | [C5-1] | [M5-1] | [M5-15] |
| Example ES-43 | Ink set E43 | [Y5-1] | [C5-1] | [M5-1] | [M5-16] |
| Example ES-44 | Ink set E44 | [Y5-1] | [C5-1] | [M5-1] | [M5-17] |
| Example ES-45 | Ink set E45 | [Y5-1] | [C5-1] | [M5-1] | [M5-18] |
| Example ES-46 | Ink set E46 | [Y5-1] | [C5-1] | [M5-1] | [M5-20] |
| Example ES-47 | Ink set E47 | [Y5-1] | [C5-1] | [M5-1] | [M5-21] |
| Example ES-48 | Ink set E48 | [Y5-1] | [C5-1] | [M5-1] | [M5-22] |
| Example ES-49 | Ink set E49 | [Y5-1] | [C5-1] | [M5-1] | [M5-23] |
| Example ES-50 | Ink set E50 | [Y5-1] | [C5-1] | [M5-1] | [M5-24] |
| Example ES-51 | Ink set E51 | [Y5-1] | [C5-1] | [M5-1] | [M5-25] |
| Example ES-52 | Ink set E52 | [Y5-1] | [C5-1] | [M5-1] | [M5-26] |
| Example ES-53 | Ink set E53 | [Y5-1] | [C5-1] | [M5-1] | [M5-27] |
| Example ES-54 | Ink set E54 | [Y5-1] | [C5-1] | [M5-1] | [M5-28] |
| Example ES-55 | Ink set E55 | [Y5-1] | [C5-1] | [M5-1] | [M5-29] |
| Example ES-56 | Ink set E56 | [Y5-1] | [C5-1] | [M5-1] | [M5-30] |
| Example ES-57 | Ink set E57 | [Y5-1] | [C5-1] | [M5-1] | [M5-31] |
| Example ES-58 | Ink set E58 | [Y5-1] | [C5-1] | [M5-1] | [M5-32] |

(continued)

| Table 21-2 | Ink set | Yellow ink | Cyan ink | Magenta ink A | Magenta ink B |
|---|---|---|---|---|---|
| Example ES-59 | Ink set E59 | [Y5-1] | [C5-1] | [M5-1] | [M5-33] |
| Example ES-60 | Ink set E60 | [Y5-1] | [C5-1] | [M5-1] | [M5-34] |
| Example ES-61 | Ink set E61 | [Y5-1] | [C5-1] | [M5-1] | [M5-35] |
| Example ES-62 | Ink set E62 | [Y5-1] | [C5-1] | [M5-1] | [M5-36] |
| Example ES-63 | Ink set E63 | [Y5-1] | [C5-1] | [M5-1] | [M5-37] |
| Example ES-64 | Ink set E64 | [Y5-1] | [C5-1] | [M5-1] | [M5-38] |
| Example ES-65 | Ink set E65 | [Y5-1] | [C5-1] | [M5-1] | [M5-39] |
| Example ES-66 | Ink set E66 | [Y5-1] | [C5-1] | [M5-1] | [M5-40] |
| Example ES-67 | Ink set E67 | [Y5-1] | [C5-1] | [M5-1] | [M5-41] |
| Example ES-68 | Ink set E68 | [Y5-1] | [C5-1] | [M5-1] | [M5-42] |
| Example ES-69 | Ink set E69 | [Y5-1] | [C5-1] | [M5-1] | [M5-43] |
| Example ES-70 | Ink set E70 | [Y5-3] | [C5-1] | [M5-7] | [M5-19] |
| Example ES-71 | Ink set E71 | [Y5-3] | [C5-1] | [M5-1] | [M5-21] |
| Example ES-72 | Ink set E72 | [Y5-3] | [C5-1] | [M5-1] | [M5-26] |
| Comparative Example ES-1 | Ink set E73 | [Y5-25] | [C5-1] | [M5-44] | - |
| Comparative Example ES-2 | Ink set E74 | [Y5-26] | [C5-1] | [M5-44] | - |
| Comparative Example ES-3 | Ink set E75 | [Y5-27] | [C5-1] | [M5-44] | - |
| Comparative Example ES-4 | Ink set E76 | [Y5-28] | [C5-1] | [M5-44] | - |
| Comparative Example ES-5 | Ink set E77 | [Y5-25] | [C5-1] | [M5-1] | - |
| Comparative Example ES-6 | Ink set E78 | [Y5-25] | [C5-1] | [M5-19] | - |
| Comparative Example ES-7 | Ink set E79 | [Y5-25] | [C5-1] | [M5-1] | [M5-44] |
| Comparative Example ES-8 | Ink set E80 | [Y5-25] | [C5-1] | [M5-44] | [M5-19] |

[Initial Gamut Evaluation]

Using the obtained printing ink set, printing was performed in the order of cyan, magenta A, magenta B, and yellow under the following printing conditions to obtain a printed matter having solid color areas (cyan, magenta A, magenta B, and yellow) and solid color overprint areas (yellow × cyan, cyan × magenta A, yellow × magenta B, or yellow × magenta A).

(Printing Conditions)

Printing machine: MIRAFLEX CM manufactured by Windmöller & Hölscher

Flexo plate: Photosensitive resin plate FLEXCEL NXH Digital Flexo Plate manufactured by KODAK, plate thickness 1.14 mm, plate line count 150 lpi

Anilox roll: 900 lpi 3 cc/$m^2$

Substrate: Corona-treated stretched polypropylene (OPP) film (Pylen P2161 manufactured by Toyobo Co., Ltd., thickness 40 μm)

Speed: 300 m/min

Drying temperature: Inter-color dryer 100°C, tunnel dryer 100°C

The density values of the solid color areas (yellow, magenta A, magenta B, and cyan) of the obtained printed matter were measured using a Gretag Macbeth D196. In addition, a SpectroEye manufactured by Gretag Macbeth was used as the measuring device to measure the colorimetric values of the solid color areas and overprint areas under the following conditions: D50 light source, 2-degree observer angle, white backing (using a standard white plate), and without filters.

In a two-dimensional space with a* as the horizontal axis and b* as the vertical axis, the a* versus b* values for a total of 6 or 7 colors, including solid color areas (yellow, magenta A, magenta B, and cyan), and solid color overprint areas (yellow × cyan, cyan × magenta A, yellow × magenta B, or yellow × magenta A) were plotted, and the area was calculated. The area ratio was calculated with the area of Comparative Example ES-1 serving as the reference set as 100%, and the area ratio was evaluated according to the following criteria. The results are shown in Table 22. The practical level is 3 or higher.

(Evaluation Criteria)

6: The area ratio is 115% or higher
5: The area ratio is 110% or higher and less than 115%
4: The area ratio is 105% or higher and less than 110%
3: The area ratio is 100% or higher and less than 105%
2: The area ratio is 98% or higher and less than 100%
1: The area ratio is less than 98%

[Light Resistance Evaluation 1]

(Ultraviolet Irradiation Test Using Fade-O-Meter)

The printed matter obtained as described above was subjected to ultraviolet irradiation for 48 hours using a Fade-O-Meter (ultraviolet carbon arc lamp type light resistance tester), and colorimetric measurements were performed after the test in the same manner as described above. The ultraviolet irradiation conditions followed JIS L0842:2004 and JIS B7751:2007.

(Gamut)

Using the printed matter after the ultraviolet irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the ultraviolet irradiation test by the area of the initial evaluation. The area ratio was evaluated according to the following criteria. The results are shown in Table 22. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the ultraviolet irradiation test was determined and evaluated according to the following criteria. The results are shown in Table 22. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the ultraviolet irradiation test was determined and evaluated according to the following criteria. The results are shown in Table 22. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5
5: ΔH* is 0.5 or higher and less than 0.75
4: ΔH* is 0.75 or higher and less than 1.0
3: ΔH* is 1.0 or higher and less than 1.5
2: ΔH* is 1.5 or higher and less than 3.0
1: ΔH* is 3.0 or higher

[Light Resistance Evaluation 2]

(White LED Irradiation Test)

The printed matter obtained as described above was subjected to a white LED irradiation test according to the following test method. After the test, colorimetric measurements were performed in the same manner as described above, and the stability of the hue under white LED irradiation was evaluated.

(Test Method)

Tester: Illuminated incubator FLI-2010H-LED (manufactured by Tokyo Rikakikai)
Light source: White LED
Illuminance: 15000 Lux
Irradiation temperature: 10°C
Irradiation humidity: 70% RH
Irradiation duration: 96 hours

(Gamut)

Using the printed matter after the white LED irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the white LED irradiation test by the area of the initial evaluation. The area ratio was evaluated according to the following criteria. The results are shown in Table 23. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE* before and after the white LED irradiation test was determined and evaluated according to the following criteria. The results are shown in Table 23. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the white LED irradiation test was determined and evaluated according to the following criteria. The results are shown in Table 23. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5
5: ΔH* is 0.5 or higher and less than 0.75
4: ΔH* is 0.75 or higher and less than 1.0
3: ΔH* is 1.0 or higher and less than 1.5
2: ΔH* is 1.5 or higher and less than 3.0
1: ΔH* is 3.0 or higher

[Table 22-1]

| Table | Initial | Light resistance 1 (carbon arc) | | | | | | | | |
|---|---|---|---|---|---|---|---|---|---|---|
| 22-1 | gamut | Gamut | ΔE | | | | ΔH | | | |
| | | | Y | C | MA | MB | Y×C | C×MA | Y×MB | Y×MA |
| Example ES-1 | 6 | 6 | 6 | 6 | 6 | 6 | 6+ | 6- | 6+ | - |
| Example ES-2 | 6 | 6 | 6 | 6 | 6 | 6 | 6+ | 6- | 6+ | - |
| Example ES-3 | 6 | 6 | 6 | 6 | 6 | 6 | 6+ | 6- | 6+ | - |

(continued)

| Table 22-1 | Initial gamut | Light resistance 1 (carbon arc) | | | | | | | | | |
|---|---|---|---|---|---|---|---|---|---|---|---|
| | | Gamut | ΔE | | | | ΔH | | | | |
| | | | Y | C | MA | MB | Y×C | C×MA | Y×MB | Y×MA |
| Example ES-4 | 6 | 6 | 6 | 6 | 6 | 6 | 6+ | 6- | 6+ | - |
| Example ES-5 | 6 | 4 | 4 | 6 | 6 | 6 | 5+ | 6- | 5- | - |
| Example ES-6 | 4 | 4 | 4 | 6 | 6 | 6 | 5+ | 6- | 5- | - |
| Example ES-7 | 3 | 3 | 3 | 6 | 6 | 6 | 3+ | 6- | 3- | - |
| Example ES-8 | 4 | 4 | 4 | 6 | 6 | 6 | 5+ | 6- | 5- | - |
| Example ES-9 | 4 | 4 | 4 | 6 | 6 | 6 | 5+ | 6- | 5- | - |
| Example ES-10 | 4 | 4 | 4 | 6 | 6 | 6 | 5+ | 6- | 5- | - |
| Example ES-11 | 5 | 5 | 5 | 6 | 6 | 6 | 5+ | 6- | 5- | - |
| Example ES-12 | 5 | 5 | 5 | 6 | 6 | 6 | 5+ | 6- | 5- | - |
| Example ES-13 | 6 | 6 | 6 | 6 | 6 | 6 | 6+ | 6- | 6+ | - |
| Example ES-14 | 5 | 6 | 6 | 6 | 6 | 6 | 6+ | 6- | 6+ | - |
| Example ES-15 | 4 | 5 | 5 | 6 | 6 | 6 | 5+ | 6- | 5- | - |
| Example ES-16 | 4 | 5 | 5 | 6 | 6 | 6 | 5+ | 6- | 5- | - |
| Example ES-17 | 6 | 6 | 6 | 6 | 6 | 6 | 6+ | 6- | 6+ | - |
| Example ES-18 | 5 | 5 | 5 | 6 | 6 | 6 | 5+ | 6- | 5- | - |
| Example ES-19 | 4 | 4 | 4 | 6 | 6 | 6 | 5+ | 6- | 5- | - |
| Example ES-20 | 5 | 6 | 6 | 6 | 6 | 6 | 6+ | 6- | 6+ | - |
| Example ES-21 | 3 | 6 | 6 | 6 | 6 | 6 | 6+ | 6- | 6- | - |
| Example ES-22 | 4 | 5 | 5 | 6 | 6 | 6 | 5+ | 6- | 5- | - |
| Example ES-23 | 5 | 4 | 4 | 6 | 6 | 6 | 4+ | 6- | 4- | - |
| Example ES-24 | 5 | 3 | 3 | 6 | 6 | 6 | 3+ | 6- | 3- | - |
| Example ES-25 | 6 | 6 | 6 | 6 | 6 | 6 | 6+ | 6- | 6- | - |
| Example ES-26 | 3 | 6 | 6 | 6 | 6 | 6 | 6+ | 6- | 6+ | - |
| Example ES-27 | 3 | 4 | 6 | 4 | 6 | 6 | 4+ | 4- | 6+ | - |
| Example ES-28 | 3 | 4 | 6 | 4 | 6 | 6 | 4+ | 4- | 6+ | - |
| Example ES-29 | 6 | 6 | 6 | 6 | 6 | 6 | 6+ | 6- | 6+ | - |
| Example ES-30 | 4 | 6 | 6 | 6 | 6 | 6 | 6+ | 6- | 6+ | - |
| Example ES-31 | 5 | 6 | 6 | 6 | 6 | 6 | 6+ | 6- | 6+ | - |
| Example ES-32 | 5 | 5 | 6 | 6 | 5 | 6 | 6+ | 5- | 6+ | - |
| Example ES-33 | 4 | 4 | 6 | 6 | 4 | 6 | 6+ | 4- | 6+ | - |
| Example ES-34 | 6 | 6 | 6 | 6 | 6 | 6 | 6+ | 6- | 6+ | - |
| Example ES-35 | 5 | 5 | 6 | 6 | 5 | 6 | 6+ | 5- | 6+ | - |
| Example ES-36 | 4 | 6 | 6 | 6 | 6 | 6 | 6+ | 6- | 6+ | - |
| Example ES-37 | 5 | 5 | 6 | 6 | 5 | 6 | 6+ | 5- | 6+ | - |
| Example ES-38 | 5 | 4 | 6 | 6 | 4 | 6 | 6+ | 4- | 6+ | - |
| Example ES-39 | 4 | 6 | 6 | 6 | 6 | 6 | 6+ | 6- | 6+ | - |
| Example ES-40 | 3 | 6 | 6 | 6 | 6 | 6 | 6+ | 6- | 6+ | - |

[Table 22-2]

| Table 22-2 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example ES-41 | 4 | 5 | 6 | 6 | 6 | 5 | 6+ | 6- | 5+ | - |
| Example ES-42 | 4 | 5 | 6 | 6 | 6 | 5 | 6+ | 6- | 5+ | - |
| Example ES-43 | 5 | 4 | 6 | 6 | 6 | 4 | 6+ | 6- | 4+ | - |
| Example ES-44 | 5 | 4 | 6 | 6 | 6 | 4 | 6+ | 6- | 4+ | - |
| Example ES-45 | 5 | 4 | 6 | 6 | 6 | 4 | 6+ | 6- | 4+ | - |
| Example ES-46 | 6 | 6 | 6 | 6 | 6 | 6 | 6+ | 6- | 6+ | - |
| Example ES-47 | 5 | 5 | 6 | 6 | 6 | 5 | 6+ | 6- | 5+ | - |
| Example ES-48 | 5 | 4 | 6 | 6 | 6 | 4 | 6+ | 6- | 4+ | - |
| Example ES-49 | 5 | 4 | 6 | 6 | 6 | 4 | 6+ | 6- | 4+ | - |
| Example ES-50 | 5 | 3 | 6 | 6 | 6 | 3 | 6+ | 6- | 3+ | - |
| Example ES-51 | 4 | 5 | 6 | 6 | 6 | 5 | 6+ | 6- | 5+ | - |
| Example ES-52 | 5 | 5 | 6 | 6 | 6 | 5 | 6+ | 6- | 5+ | - |
| Example ES-53 | 5 | 4 | 6 | 6 | 6 | 4 | 6+ | 6- | 4+ | - |
| Example ES-54 | 4 | 5 | 6 | 6 | 6 | 5 | 6+ | 6- | 5+ | - |
| Example ES-55 | 5 | 5 | 6 | 6 | 6 | 5 | 6+ | 6- | 5+ | - |
| Example ES-56 | 5 | 4 | 6 | 6 | 6 | 4 | 6+ | 6- | 4+ | - |
| Example ES-57 | 5 | 4 | 6 | 6 | 6 | 4 | 6+ | 6- | 4+ | - |
| Example ES-58 | 4 | 5 | 6 | 6 | 6 | 5 | 6+ | 6- | 5+ | - |
| Example ES-59 | 3 | 5 | 6 | 6 | 6 | 5 | 6+ | 6- | 5+ | - |
| Example ES-60 | 3 | 5 | 6 | 6 | 6 | 5 | 6+ | 6- | 5+ | - |
| Example ES-61 | 5 | 5 | 6 | 6 | 6 | 5 | 6+ | 6- | 5+ | - |
| Example ES-62 | 4 | 5 | 6 | 6 | 6 | 5 | 6+ | 6- | 5+ | - |
| Example ES-63 | 4 | 5 | 6 | 6 | 6 | 5 | 6+ | 6- | 5+ | - |
| Example ES-64 | 5 | 5 | 6 | 6 | 6 | 5 | 6+ | 6- | 5+ | - |
| Example ES-65 | 5 | 4 | 6 | 6 | 6 | 4 | 6+ | 6- | 4+ | - |
| Example ES-66 | 5 | 5 | 6 | 6 | 6 | 5 | 6+ | 6- | 5+ | - |
| Example ES-67 | 5 | 4 | 6 | 6 | 6 | 4 | 6+ | 6- | 4+ | - |
| Example ES-68 | 4 | 5 | 6 | 6 | 6 | 5 | 6+ | 6- | 5+ | - |
| Example ES-69 | 4 | 5 | 6 | 6 | 6 | 5 | 6+ | 6- | 5+ | - |
| Example ES-70 | 6 | 6 | 6 | 6 | 6 | 6 | 6+ | 6- | 6+ | - |
| Example ES-71 | 5 | 5 | 6 | 6 | 6 | 5 | 6+ | 6- | 5+ | - |
| Example ES-72 | 5 | 5 | 6 | 6 | 6 | 5 | 6+ | 6- | 5+ | - |
| Comparative Example ES-1 | Reference | 1 | 1 | 6 | 2 | - | 1+ | 2- | - | 1- |
| Comparative Example ES-2 | 2 | 1 | 1 | 6 | 2 | - | 1+ | 2- | - | 1- |
| Comparative Example ES-3 | 1 | 1 | 2 | 6 | 2 | - | 2+ | 2- | - | 2- |
| Comparative Example ES-4 | 1 | 1 | 2 | 6 | 2 | - | 2+ | 2- | - | 2- |
| Comparative Example ES-5 | 2 | 1 | 1 | 6 | 6 | - | 1+ | 6- | - | 1- |

(continued)

| Table 22-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Comparative Example ES-6 | 1 | 1 | 1 | 6 | 6 | - | 1+ | 5- | - | 1- |
| Comparative Example ES-7 | 4 | 1 | 1 | 6 | 6 | 2 | 1+ | 6- | 1- | - |
| Comparative Example ES-8 | 4 | 1 | 1 | 6 | 2 | 6 | 1+ | 2- | 6+ | - |

[Table 23-1]

| Table 23-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example ES-1 | 6 | 6 | 6 | 6 | 6 | 6 | 6+ | 6- | 6+ | - |
| Example ES-2 | 6 | 6 | 6 | 6 | 6 | 6 | 6+ | 6- | 6+ | - |
| Example ES-3 | 6 | 6 | 6 | 6 | 6 | 6 | 6+ | 6- | 6+ | - |
| Example ES-4 | 6 | 6 | 6 | 6 | 6 | 6 | 6+ | 6- | 6+ | - |
| Example ES-5 | 6 | 4 | 4 | 6 | 6 | 6 | 5+ | 6- | 5- | - |
| Example ES-6 | 4 | 4 | 4 | 6 | 6 | 6 | 5+ | 6- | 5- | - |
| Example ES-7 | 3 | 3 | 3 | 6 | 6 | 6 | 3+ | 6- | 3- | - |
| Example ES-8 | 4 | 4 | 4 | 6 | 6 | 6 | 5+ | 6- | 5- | - |
| Example ES-9 | 4 | 4 | 4 | 6 | 6 | 6 | 5+ | 6- | 5- | - |
| Example ES-10 | 4 | 4 | 4 | 6 | 6 | 6 | 5+ | 6- | 5- | - |
| Example ES-11 | 5 | 5 | 5 | 6 | 6 | 6 | 5+ | 6- | 5- | - |
| Example ES-12 | 5 | 5 | 5 | 6 | 6 | 6 | 5+ | 6- | 5- | - |
| Example ES-13 | 6 | 6 | 6 | 6 | 6 | 6 | 6+ | 6- | 6+ | - |
| Example ES-14 | 5 | 6 | 6 | 6 | 6 | 6 | 6+ | 6- | 6+ | - |
| Example ES-15 | 4 | 5 | 5 | 6 | 6 | 6 | 5+ | 6- | 5- | - |
| Example ES-16 | 4 | 5 | 5 | 6 | 6 | 6 | 5+ | 6- | 5- | - |
| Example ES-17 | 6 | 6 | 6 | 6 | 6 | 6 | 6+ | 6- | 6+ | - |
| Example ES-18 | 5 | 5 | 5 | 6 | 6 | 6 | 5+ | 6- | 5- | - |
| Example ES-19 | 4 | 4 | 4 | 6 | 6 | 6 | 5+ | 6- | 5- | - |
| Example ES-20 | 5 | 6 | 6 | 6 | 6 | 6 | 6+ | 6- | 6+ | - |
| Example ES-21 | 3 | 6 | 6 | 6 | 6 | 6 | 6+ | 6- | 6- | - |
| Example ES-22 | 4 | 5 | 5 | 6 | 6 | 6 | 5+ | 6- | 5- | - |
| Example ES-23 | 5 | 4 | 4 | 6 | 6 | 6 | 4+ | 6- | 4- | - |
| Example ES-24 | 5 | 3 | 3 | 6 | 6 | 6 | 3+ | 6- | 3- | - |
| Example ES-25 | 6 | 6 | 6 | 6 | 6 | 6 | 6+ | 6- | 6- | - |
| Example ES-26 | 3 | 6 | 6 | 6 | 6 | 6 | 6+ | 6- | 6+ | - |
| Example ES-27 | 3 | 4 | 6 | 4 | 6 | 6 | 4+ | 4- | 6+ | - |
| Example ES-28 | 3 | 4 | 6 | 4 | 6 | 6 | 4+ | 4- | 6+ | - |
| Example ES-29 | 6 | 6 | 6 | 6 | 6 | 6 | 6+ | 6- | 6+ | - |

(continued)

| Table 23-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example ES-30 | 4 | 6 | 6 | 6 | 6 | 6 | 6+ | 6- | 6+ | - |
| Example ES-31 | 5 | 6 | 6 | 6 | 6 | 6 | 6+ | 6- | 6+ | - |
| Example ES-32 | 5 | 5 | 6 | 6 | 5 | 6 | 6+ | 5- | 6+ | - |
| Example ES-33 | 4 | 4 | 6 | 6 | 4 | 6 | 6+ | 4- | 6+ | - |
| Example ES-34 | 6 | 6 | 6 | 6 | 6 | 6 | 6+ | 6- | 6+ | - |
| Example ES-35 | 5 | 5 | 6 | 6 | 5 | 6 | 6+ | 5- | 6+ | - |
| Example ES-36 | 4 | 6 | 6 | 6 | 6 | 6 | 6+ | 6- | 6+ | - |
| Example ES-37 | 5 | 5 | 6 | 6 | 5 | 6 | 6+ | 5- | 6+ | - |
| Example ES-38 | 5 | 4 | 6 | 6 | 4 | 6 | 6+ | 4- | 6+ | - |
| Example ES-39 | 4 | 6 | 6 | 6 | 6 | 6 | 6+ | 6- | 6+ | - |
| Example ES-40 | 3 | 6 | 6 | 6 | 6 | 6 | 6+ | 6- | 6+ | - |

[Table 23-2]

| Table 23-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example ES-41 | 4 | 5 | 6 | 6 | 6 | 5 | 6+ | 6- | 5+ | - |
| Example ES-42 | 4 | 5 | 6 | 6 | 6 | 5 | 6+ | 6- | 5+ | - |
| Example ES-43 | 5 | 4 | 6 | 6 | 6 | 4 | 6+ | 6- | 4+ | - |
| Example ES-44 | 5 | 4 | 6 | 6 | 6 | 4 | 6+ | 6- | 4+ | - |
| Example ES-45 | 5 | 4 | 6 | 6 | 6 | 4 | 6+ | 6- | 4+ | - |
| Example ES-46 | 6 | 6 | 6 | 6 | 6 | 6 | 6+ | 6- | 6+ | - |
| Example ES-47 | 5 | 5 | 6 | 6 | 6 | 5 | 6+ | 6- | 5+ | - |
| Example ES-48 | 5 | 4 | 6 | 6 | 6 | 4 | 6+ | 6- | 4+ | - |
| Example ES-49 | 5 | 4 | 6 | 6 | 6 | 4 | 6+ | 6- | 4+ | - |
| Example ES-50 | 5 | 3 | 6 | 6 | 6 | 3 | 6+ | 6- | 3+ | - |
| Example ES-51 | 4 | 5 | 6 | 6 | 6 | 5 | 6+ | 6- | 5+ | - |
| Example ES-52 | 5 | 5 | 6 | 6 | 6 | 5 | 6+ | 6- | 5+ | - |
| Example ES-53 | 5 | 4 | 6 | 6 | 6 | 4 | 6+ | 6- | 4+ | - |
| Example ES-54 | 4 | 5 | 6 | 6 | 6 | 5 | 6+ | 6- | 5+ | - |
| Example ES-55 | 5 | 5 | 6 | 6 | 6 | 5 | 6+ | 6- | 5+ | - |
| Example ES-56 | 5 | 4 | 6 | 6 | 6 | 4 | 6+ | 6- | 4+ | - |
| Example ES-57 | 5 | 4 | 6 | 6 | 6 | 4 | 6+ | 6- | 4+ | - |
| Example ES-58 | 4 | 5 | 6 | 6 | 6 | 5 | 6+ | 6- | 5+ | - |
| Example ES-59 | 3 | 5 | 6 | 6 | 6 | 5 | 6+ | 6- | 5+ | - |
| Example ES-60 | 3 | 5 | 6 | 6 | 6 | 5 | 6+ | 6- | 5+ | - |
| Example ES-61 | 5 | 5 | 6 | 6 | 6 | 5 | 6+ | 6- | 5+ | - |

(continued)

| Table 23-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example ES-62 | 4 | 5 | 6 | 6 | 6 | 5 | 6+ | 6- | 5+ | - |
| Example ES-63 | 4 | 5 | 6 | 6 | 6 | 5 | 6+ | 6- | 5+ | - |
| Example ES-64 | 5 | 5 | 6 | 6 | 6 | 5 | 6+ | 6- | 5+ | - |
| Example ES-65 | 5 | 4 | 6 | 6 | 6 | 4 | 6+ | 6- | 4+ | - |
| Example ES-66 | 5 | 5 | 6 | 6 | 6 | 5 | 6+ | 6- | 5+ | - |
| Example ES-67 | 5 | 4 | 6 | 6 | 6 | 4 | 6+ | 6- | 4+ | - |
| Example ES-68 | 4 | 5 | 6 | 6 | 6 | 5 | 6+ | 6- | 5+ | - |
| Example ES-69 | 4 | 5 | 6 | 6 | 6 | 5 | 6+ | 6- | 5+ | - |
| Example ES-70 | 6 | 6 | 6 | 6 | 6 | 6 | 6+ | 6- | 6+ | - |
| Example ES-71 | 5 | 5 | 6 | 6 | 6 | 5 | 6+ | 6- | 5+ | - |
| Example ES-72 | 5 | 5 | 6 | 6 | 6 | 5 | 6+ | 6- | 5+ | - |
| Comparative Example ES-1 | Reference | 1 | 2 | 6 | 1 | - | 2+ | 1- | - | 1+ |
| Comparative Example ES-2 | 2 | 1 | 2 | 6 | 1 | - | 2+ | 1- | - | 1+ |
| Comparative Example ES-3 | 1 | 1 | 2 | 6 | 1 | - | 2+ | 1- | - | 1+ |
| Comparative Example ES-4 | 1 | 1 | 2 | 6 | 1 | - | 2+ | 1- | - | 1+ |
| Comparative Example ES-5 | 2 | 1 | 2 | 6 | 6 | - | 2+ | 6- | - | 1- |
| Comparative Example ES-6 | 1 | 1 | 2 | 6 | 6 | - | 2+ | 5- | - | 1- |
| Comparative Example ES-7 | 4 | 1 | 2 | 6 | 6 | 1 | 2+ | 6- | 1+ | - |
| Comparative Example ES-8 | 4 | 1 | 2 | 6 | 1 | 6 | 2+ | 1- | 6+ | - |

In Table 22 and Table 23, Y represents the solid color area of yellow, C represents the solid color area of cyan, MA represents the solid color area of magenta A, and MB represents the solid color area of magenta B. Additionally, Y×C represents the solid color overprint area of yellow × cyan, C×MA represents the solid color overprint area of cyan × magenta A, Y×MB represents the solid color overprint area of yellow × magenta B, and Y×MA represents the solid color overprint area of yellow × magenta A.

From the results in Table 22 and Table 23, it was confirmed that the flexo printing ink set of the present invention has high color reproducibility and good light resistance. In particular, when using a yellow ink including isoindoline compound (4) or isoindoline compound (5), the color reproducibility was higher and the light resistance was better. Additionally, when using a yellow ink including C.I. Pigment Yellow 180 with an optimal particle diameter, the color reproducibility was higher and the light resistance was better.

Moreover, when using a cyan ink including C.I. Pigment Blue 15:3 or C.I. Pigment Blue 15:4, the color reproducibility was higher and the light resistance was better.

Furthermore, when using magenta ink A including C.I. Pigment Red 122 with an optimal particle diameter or C.I. Pigment Violet 19 with an optimal particle diameter, the color reproducibility was higher and the light resistance was better.

Additionally, when using magenta ink B including DPP pigment with an optimal particle diameter or perylene pigment with an optimal particle diameter, the color reproducibility was higher and the light resistance was better.

In particular, in the yellow × magenta region, the printing ink set of the comparative example showed a significant change in hue towards blue (decrease in hue angle) in the light resistance test with ultraviolet irradiation, while in the light resistance test with white LED irradiation, the hue changed significantly towards yellow (increase in hue angle). In other words, it can be understood that the printing ink set of the comparative example exhibits different hue changes over time depending on the light source, making it difficult to obtain sufficient light resistance. In contrast, it can be understood that the printing ink set of the embodiment of the present invention achieves good light resistance regardless of the light source.

<4>Evaluation of Active Energy Ray Curable Flexo Printing Ink Set

[Manufacturing of Active Energy Ray Curable Flexo Ink]

(Manufacturing Example Y6-1)

[Preparation of Yellow Ink [Y6-1]]

The following materials were stirred and mixed using a butterfly mixer, and then dispersed using a three-roll mill until the maximum particle diameter became 15 μm or less, to obtain yellow ink [Y6-1].

· Isoindoline compound (1-1): 18.0 parts
· EBECRYL225: 8.4 parts (5.0 parts as effective component)
(10-functional urethane acrylate oligomer)
· 4-Acryloylmorpholine: 15.0 parts (monofunctional monomer)
· EO-modified trimethylolpropane triacrylate: 20.0 parts
· Dipentaerythritol pentaacrylate: 5.0 parts
· Dipentaerythritol hexaacrylate: 16.6 parts
· Irgacure 369: 3.0 parts (photoinitiator)
· Chemrk DEABP: 3.0 parts (photoinitiator)
· SB-PI718: 4.0 parts (photoinitiator)
· Ajisper PB821: 3.0 parts (dispersant)
· T wax compound: 4.0 parts (wax)

The details of the materials used are as follows.

[Acrylate Oligomer]

· EBECRYL225: Manufactured by Daicel-Allnex Ltd., 10-functional aliphatic urethane acrylate oligomer, Mw 1,200, effective component 60 mass% [Photoinitiator]
Irgacure 369: Manufactured by BASF, 2-benzyl-2-(dimethylamino)-1-(4-morpholinophenyl)-1-butanone
· Chemrk DEABP: Manufactured by Sort Co., Ltd., 4,4'-bis(diethylamino)benzophenone
· SB-PI718: Manufactured by Sort Co., Ltd., 2,4,6-trimethylbenzoyl-diphenylphosphine oxide

[Dispersant]

· Ajisper PB821: Manufactured by Ajinomoto Fine-Techno Co., Inc., comb-type dispersant including basic functional groups

[Wax]

· T wax compound: Manufactured by Toshin Oil & Fat Co., Ltd., polyethylene wax

(Manufacturing Examples Y6-2 to Y6-28, C6-1 to C6-5, M6-1 to M6-44)

[Preparation of Yellow Inks [Y6-2] to [Y6-28], Cyan Inks [C6-1] to [C6-5], Magenta Inks [M6-1] to [M6-44]]

The inks described in Table 24 were obtained in the same manner as in Manufacturing Example Y6-1 except that 18.0 parts of isoindoline compound (1-1) were changed to the compounds shown in Table 24 and the amounts described in Table 24 in the preparation method of yellow ink [Y6-1] described in Manufacturing Example Y6-1.

[Table 24-1]

| Table 24-1 | Pigment | | Obtained ink |
|---|---|---|---|
| | Compound name Pigment name | Charged amount [parts] | |
| Manufacturing Example Y6-1 | Isoindoline compound (1-1) | 18.00 | Yellow ink [Y6-1] |
| Manufacturing Example Y6-2 | Isoindoline compound (1-2) | 18.00 | Yellow ink [Y6-2] |
| Manufacturing Example Y6-3 | Isoindoline compound (1-3) | 18.00 | Yellow ink [Y6-3] |
| Manufacturing Example Y6-4 | Isoindoline compound (1-4) | 18.00 | Yellow ink [Y6-4] |
| Manufacturing Example Y6-5 | Isoindoline compound (1-5) | 18.00 | Yellow ink [Y6-5] |
| Manufacturing Example Y6-6 | Isoindoline compound (1-6) | 18.00 | Yellow ink [Y6-6] |
| Manufacturing Example Y6-7 | Isoindoline compound (1-7) | 18.00 | Yellow ink [Y6-7] |
| Manufacturing Example Y6-8 | Isoindoline compound (1-8) | 18.00 | Yellow ink [Y6-8] |
| Manufacturing Example Y6-9 | Isoindoline compound (1-9) | 18.00 | Yellow ink [Y6-9] |
| Manufacturing Example Y6-10 | Isoindoline compound (1-10) | 18.00 | Yellow ink [Y6-10] |
| Manufacturing Example Y6-11 | Isoindoline compound (1-11) | 18.00 | Yellow ink [Y6-11] |
| Manufacturing Example Y6-12 | Isoindoline compound (1-12) | 18.00 | Yellow ink [Y6-12] |
| Manufacturing Example Y6-13 | Isoindoline compound (1-13) | 18.00 | Yellow ink [Y6-13] |
| Manufacturing Example Y6-14 | Isoindoline compound (1-1)<br>Isoindoline compound (1-2) | 17.10<br>0.90 | Yellow ink [Y6-14] |
| Manufacturing Example Y6-15 | Isoindoline compound (1-1)<br>Isoindoline compound (2-1) | 17.64<br>0.36 | Yellow ink [Y6-15] |
| Manufacturing Example Y6-16 | Isoindoline compound (1-1)<br>Isoindoline compound (2-2) | 17.64<br>0.36 | Yellow ink [Y6-16] |
| Manufacturing Example Y6-17 | Isoindoline compound (1-1)<br>Isoindoline compound (2-3) | 17.64<br>0.36 | Yellow ink [Y6-17] |
| Manufacturing Example Y6-18 | PY185-1 | 18.00 | Yellow ink [Y6-18] |
| Manufacturing Example Y6-19 | PY185-2 | 18.00 | Yellow ink [Y6-19] |
| Manufacturing Example Y6-20 | PY180-1 | 18.00 | Yellow ink [Y6-20] |
| Manufacturing Example Y6-21 | PY180-2 | 18.00 | Yellow ink [Y6-21] |
| Manufacturing Example Y6-22 | PY180-3 | 18.00 | Yellow ink [Y6-22] |
| Manufacturing Example Y6-23 | PY180-4 | 18.00 | Yellow ink [Y6-23] |
| Manufacturing Example Y6-24 | PY180-5 | 18.00 | Yellow ink [Y6-24] |
| Manufacturing Example Y6-25 | PY14 | 18.00 | Yellow ink [Y6-25] |
| Manufacturing Example Y6-26 | PY74 | 18.00 | Yellow ink [Y6-26] |
| Manufacturing Example Y6-27 | PY83 | 18.00 | Yellow ink [Y6-27] |
| Manufacturing Example Y6-28 | PY93 | 18.00 | Yellow ink [Y6-28] |
| Manufacturing Example C6-1 | PB15:3 | 16.71 | Cyan ink [C6-1] |
| Manufacturing Example C6-2 | **PB 15:4** | 16.71 | Cyan ink [C6-2] |
| Manufacturing Example C6-3 | PB15:6 | 17.23 | Cyan ink [C6-3] |
| Manufacturing Example C6-4 | Aluminum phthalocyanine | 18.00 | Cyan ink [C6-4] |
| Manufacturing Example C6-5 | Titanyl phthalocyanine | 18.00 | Cyan ink [C6-5] |

[Table 24-2]

| Table 24-2 | Pigment | | Obtained ink |
|---|---|---|---|
| | Compound name Pigment name | Charged amount [parts] | |
| Manufacturing Example M6-1 | PR122-1 | 19.00 | Magenta ink [M6-1] |
| Manufacturing Example M6-2 | PR122-2 | 19.00 | Magenta ink [M6-2] |
| Manufacturing Example M6-3 | PR122-3 | 19.00 | Magenta ink [M6-3] |
| Manufacturing Example M6-4 | PR122-4 | 19.00 | Magenta ink [M6-4] |
| Manufacturing Example M6-5 | PR122-5 | 19.00 | Magenta ink [M6-5] |
| Manufacturing Example M6-6 | PR122-6 | 19.00 | Magenta ink [M6-6] |
| Manufacturing Example M6-7 | PV19-1 | 19.00 | Magenta ink [M6-7] |
| Manufacturing Example M6-8 | PV 19-2 | 19.00 | Magenta ink [M6-8] |
| Manufacturing Example M6-9 | PV19-3 | 19.00 | Magenta ink [M6-9] |
| Manufacturing Example M6-10 | PV 19-4 | 19.00 | Magenta ink [M6-10] |
| Manufacturing Example M6-11 | PV19-5 | 19.00 | Magenta ink [M6-11] |
| Manufacturing Example M6-12 | PR122-1 PV19-1 | 9.50 9.50 | Magenta ink [M6-12] |
| Manufacturing Example M6-13 | PR254-1 | 18.00 | Magenta ink [M6-13] |
| Manufacturing Example M6-14 | PR254-2 | 18.00 | Magenta ink [M6-14] |
| Manufacturing Example M6-15 | PR254-3 | 18.00 | Magenta ink [M6-15] |
| Manufacturing Example M6-16 | PR254-4 | 18.00 | Magenta ink [M6-16] |
| Manufacturing Example M6-17 | PR254-5 | 18.00 | Magenta ink [M6-17] |
| Manufacturing Example M6-18 | PR254-6 | 18.00 | Magenta ink [M6-18] |
| Manufacturing Example M6-19 | PR254-7 | 18.00 | Magenta ink [M6-19] |
| Manufacturing Example M6-20 | PR254-8 | 18.00 | Magenta ink [M6-20] |
| Manufacturing Example M6-21 | PR264-1 | 18.00 | Magenta ink [M6-21] |
| Manufacturing Example M6-22 | PR264-2 | 18.00 | Magenta ink [M6-22] |
| Manufacturing Example M6-23 | PR264-3 | 18.00 | Magenta ink [M6-23] |
| Manufacturing Example M6-24 | PR264-4 | 18.00 | Magenta ink [M6-24] |
| Manufacturing Example M6-25 | PR272-1 | 18.00 | Magenta ink [M6-25] |
| Manufacturing Example M6-26 | PR272-2 | 18.00 | Magenta ink [M6-26] |
| Manufacturing Example M6-27 | PR272-3 | 18.00 | Magenta ink [M6-27] |
| Manufacturing Example M6-28 | PR255-1 | 18.00 | Magenta ink [M6-28] |
| Manufacturing Example M6-29 | PR255-2 | 18.00 | Magenta ink [M6-29] |
| Manufacturing Example M6-30 | PR255-3 | 18.00 | Magenta ink [M6-30] |
| Manufacturing Example M6-31 | PR291 | 18.00 | Magenta ink [M6-31] |
| Manufacturing Example M6-32 | PO71 | 18.00 | Magenta ink [M6-32] |
| Manufacturing Example M6-33 | PO73-1 | 18.00 | Magenta ink [M6-33] |
| Manufacturing Example M6-34 | PO73-2 | 18.00 | Magenta ink [M6-34] |
| Manufacturing Example M6-35 | PO73-3 | 18.00 | Magenta ink [M6-35] |
| Manufacturing Example M6-36 | PR179-1 | 18.00 | Magenta ink [M6-36] |
| Manufacturing Example M6-37 | PR179-2 | 18.00 | Magenta ink [M6-37] |
| Manufacturing Example M6-38 | PR179-3 | 18.00 | Magenta ink [M6-38] |

(continued)

| Table 24-2 | Pigment | | Obtained ink |
|---|---|---|---|
| | Compound name Pigment name | Charged amount [parts] | |
| Manufacturing Example M6-39 | PR179-4 | 18.00 | Magenta ink [M6-39] |
| Manufacturing Example M6-40 | PR179-5 | 18.00 | Magenta ink [M6-40] |
| Manufacturing Example M6-41 | PR149 | 18.00 | Magenta ink [M6-41] |
| Manufacturing Example M6-42 | PR190 | 18.00 | Magenta ink [M6-42] |
| Manufacturing Example M6-43 | PR224 | 18.00 | Magenta ink [M6-43] |
| Manufacturing Example M6-44 | PR57:1 | 18.00 | Magenta ink [M6-44] |

The pigments used in the manufacturing of the inks are as described in Table 5 shown in the manufacturing of gravure inks.

<Evaluation of Printing Ink Set>

(Examples FS-1 to FS-72, Comparative Examples FS-1 to FS-9)

The obtained inks were combined as described in Table 25 to form ink sets F1 to F80. The obtained printing ink sets were evaluated for gamut and light resistance by the following methods. The results are shown in Table 26 and Table 27.

[Table 25-1]

| Table 25-1 | Ink set | Yellow ink | Cyan ink | Magenta ink A | Magenta ink B |
|---|---|---|---|---|---|
| Example FS-1 | Ink set F 1 | [Y6-1] | [C6-1] | [M6-1] | [M6-19] |
| Example FS-2 | Ink set F2 | [Y6-2] | [C6-1] | [M6-1] | [M6-19] |
| Example FS-3 | Ink set F3 | [Y6-3] | [C6-1] | [M6-1] | [M6-19] |
| Example FS-4 | Ink set F4 | [Y6-4] | [C6-1] | [M6-1] | [M6-19] |
| Example FS-5 | Ink set F5 | [Y6-5] | [C6-1] | [M6-1] | [M6-19] |
| Example FS-6 | Ink set F6 | [Y6-6] | [C6-1] | [M6-1] | [M6-19] |
| Example FS-7 | Ink set F7 | [Y6-7] | [C6-1] | [M6-1] | [M6-19] |
| Example FS-8 | Ink set F8 | [Y6-8] | [C6-1] | [M6-1] | [M6-19] |
| Example FS-9 | Ink set F9 | [Y6-9] | [C6-1] | [M6-1] | [M6-19] |
| Example FS-10 | Ink set F10 | [Y6-10] | [C6-1] | [M6-1] | [M6-19] |
| Example FS-11 | Ink set F11 | [Y6-11] | [C6-1] | [M6-1] | [M6-19] |
| Example FS-12 | Ink set F12 | [Y6-12] | [C6-1] | [M6-1] | [M6-19] |
| Example FS-13 | Ink set F13 | [Y6-13] | [C6-1] | [M6-1] | [M6-19] |
| Example FS-14 | Ink set F14 | [Y6-14] | [C6-1] | [M6-1] | [M6-19] |
| Example FS-15 | Ink set F15 | [Y6-15] | [C6-1] | [M6-1] | [M6-19] |
| Example FS-16 | Ink set F16 | [Y6-16] | [C6-1] | [M6-1] | [M6-19] |
| Example FS-17 | Ink set F17 | [Y6-17] | [C6-1] | [M6-1] | [M6-19] |
| Example FS-18 | Ink set F18 | [Y6-18] | [C6-1] | [M6-1] | [M6-19] |
| Example FS-19 | Ink set F19 | [Y6-19] | [C6-1] | [M6-1] | [M6-19] |
| Example FS-20 | Ink set F20 | [Y6-20] | [C6-1] | [M6-1] | [M6-19] |
| Example FS-21 | Ink set F21 | [Y6-21] | [C6-1] | [M6-1] | [M6-19] |
| Example FS-22 | Ink set F22 | [Y6-22] | [C6-1] | [M6-1] | [M6-19] |

(continued)

| Table 25-1 | Ink set | Yellow ink | Cyan ink | Magenta ink A | Magenta ink B |
|---|---|---|---|---|---|
| Example FS-23 | Ink set F23 | [Y6-23] | [C6-1] | [M6-1] | [M6-19] |
| Example FS-24 | Ink set F24 | [Y6-24] | [C6-1] | [M6-1] | [M6-19] |
| Example FS-25 | Ink set F25 | [Y6-1] | [C6-2] | [M6-1] | [M6-19] |
| Example FS-26 | Ink set F26 | [Y6-1] | [C6-3] | [M6-1] | [M6-19] |
| Example FS-27 | Ink set F27 | [Y6-1] | [C6-4] | [M6-1] | [M6-19] |
| Example FS-28 | Ink set F28 | [Y6-1] | [C6-5] | [M6-1] | [M6-19] |
| Example FS-29 | Ink set F29 | [Y6-1] | [C6-1] | [M6-2] | [M6-19] |
| Example FS-30 | Ink set F30 | [Y6-1] | [C6-1] | [M6-3] | [M6-19] |
| Example FS-31 | Ink set F31 | [Y6-1] | [C6-1] | [M6-4] | [M6-19] |
| Example FS-32 | Ink set F32 | [Y6-1] | [C6-1] | [M6-5] | [M6-19] |
| Example FS-33 | Ink set F33 | [Y6-1] | [C6-1] | [M6-6] | [M6-19] |
| Example FS-34 | Ink set F34 | [Y6-1] | [C6-1] | [M6-7] | [M6-19] |
| Example FS-35 | Ink set F35 | [Y6-1] | [C6-1] | [M6-8] | [M6-19] |
| Example FS-36 | Ink set F36 | [Y6-1] | [C6-1] | [M6-9] | [M6-19] |
| Example FS-37 | Ink set F37 | [Y6-1] | [C6-1] | [M6-10] | [M6-19] |
| Example FS-38 | Ink set F38 | [Y6-1] | [C6-1] | [M6-11] | [M6-19] |
| Example FS-39 | Ink set F39 | [Y6-1] | [C6-1] | [M6-12] | [M6-19] |
| Example FS-40 | Ink set F40 | [Y6-1] | [C6-1] | [M6-1] | [M6-13] |

[Table 25-2]

| Table 25-2 | Ink set | Yellow ink | Cyan ink | Magenta ink A | Magenta ink B |
|---|---|---|---|---|---|
| Example FS-41 | Ink set F41 | [Y6-1] | [C6-1] | [M6-1] | [M6-14] |
| Example FS-42 | Ink set F42 | [Y6-1] | [C6-1] | [M6-1] | [M6-15] |
| Example FS-43 | Ink set F43 | [Y6-1] | [C6-1] | [M6-1] | [M6-16] |
| Example FS-44 | Ink set F44 | [Y6-1] | [C6-1] | [M6-1] | [M6-17] |
| Example FS-45 | Ink set F45 | [Y6-1] | [C6-1] | [M6-1] | [M6-18] |
| Example FS-46 | Ink set F46 | [Y6-1] | [C6-1] | [M6-1] | [M6-20] |
| Example FS-47 | Ink set F47 | [Y6-1] | [C6-1] | [M6-1] | [M6-21] |
| Example FS-48 | Ink set F48 | [Y6-1] | [C6-1] | [M6-1] | [M6-22] |
| Example FS-49 | Ink set F49 | [Y6-1] | [C6-1] | [M6-1] | [M6-23] |
| Example FS-50 | Ink set F50 | [Y6-1] | [C6-1] | [M6-1] | [M6-24] |
| Example FS-51 | Ink set F51 | [Y6-1] | [C6-1] | [M6-1] | [M6-25] |
| Example FS-52 | Ink set F52 | [Y6-1] | [C6-1] | [M6-1] | [M6-26] |
| Example FS-53 | Ink set F53 | [Y6-1] | [C6-1] | [M6-1] | [M6-27] |
| Example FS-54 | Ink set F54 | [Y6-1] | [C6-1] | [M6-1] | [M6-28] |
| Example FS-55 | Ink set F55 | [Y6-1] | [C6-1] | [M6-1] | [M6-29] |
| Example FS-56 | Ink set F56 | [Y6-1] | [C6-1] | [M6-1] | [M6-30] |
| Example FS-57 | Ink set F57 | [Y6-1] | [C6-1] | [M6-1] | [M6-31] |
| Example FS-58 | Ink set F58 | [Y6-1] | [C6-1] | [M6-1] | [M6-32] |

(continued)

| Table 25-2 | Ink set | Yellow ink | Cyan ink | Magenta ink A | Magenta ink B |
|---|---|---|---|---|---|
| Example FS-59 | Ink set F59 | [Y6-1] | [C6-1] | [M6-1] | [M6-33] |
| Example FS-60 | Ink set F60 | [Y6-1] | [C6-1] | [M6-1] | [M6-34] |
| Example FS-61 | Ink set F61 | [Y6-1] | [C6-1] | [M6-1] | [M6-35] |
| Example FS-62 | Ink set F62 | [Y6-1] | [C6-1] | [M6-1] | [M6-36] |
| Example FS-63 | Ink set F63 | [Y6-1] | [C6-1] | [M6-1] | [M6-37] |
| Example FS-64 | Ink set F64 | [Y6-1] | [C6-1] | [M6-1] | [M6-38] |
| Example FS-65 | Ink set F65 | [Y6-1] | [C6-1] | [M6-1] | [M6-39] |
| Example FS-66 | Ink set F66 | [Y6-1] | [C6-1] | [M6-1] | [M6-40] |
| Example FS-67 | Ink set F67 | [Y6-1] | [C6-1] | [M6-1] | [M6-41] |
| Example FS-68 | Ink set F68 | [Y6-1] | [C6-1] | [M6-1] | [M6-42] |
| Example FS-69 | Ink set F69 | [Y6-1] | [C6-1] | [M6-1] | [M6-43] |
| Example FS-70 | Ink set F70 | [Y6-3] | [C6-1] | [M6-7] | [M6-19] |
| Example FS-71 | Ink set F71 | [Y6-3] | [C6-1] | [M6-1] | [M6-21] |
| Example FS-72 | Ink set F72 | [Y6-3] | [C6-1] | [M6-1] | [M6-26] |
| Comparative Example FS-1 | Ink set F73 | [Y6-25] | [C6-1] | [M6-44] | - |
| Comparative Example FS-2 | Ink set F74 | [Y6-26] | [C6-1] | [M6-44] | - |
| Comparative Example FS-3 | Ink set F75 | [Y6-27] | [C6-1] | [M6-44] | - |
| Comparative Example FS-4 | Ink set F76 | [Y6-28] | [C6-1] | [M6-44] | - |
| Comparative Example FS-5 | Ink set F77 | [Y6-25] | [C6-1] | [M6-1] | - |
| Comparative Example FS-6 | Ink set F78 | [Y6-25] | [C6-1] | [M6-19] | - |
| Comparative Example FS-7 | Ink set F79 | [Y6-25] | [C6-1] | [M6-1] | [M6-44] |
| Comparative Example FS-8 | Ink set F80 | [Y6-25] | [C6-1] | [M6-44] | [M6-19] |

[Initial Gamut Evaluation]

(Solid Color Area)

Using an anilox roller with a line count of 800 lpi and a cell volume of 3.72 $cm^3/m^2$, and a flexo proof machine on coat paper, the ink was printed and then cured with an air-cooled mercury lamp (conditions of an output of 160 $W/cm^2$) at a conveyor speed of 50 m/min to obtain a printed matter for evaluation.

(Solid Color Overprint Area)

Using an anilox roller with a line count of 800 lpi and a cell volume of 3.72 $cm^3/m^2$, and a flexo proof machine on coat paper, the cyan ink was printed and then cured with an air-cooled mercury lamp (conditions of an output of 160 $W/cm^2$) at a conveyor speed of 50 m/min. Subsequently, the magenta ink was printed on top of the cyan ink layer under the same conditions as the cyan ink, to obtain a printed matter for evaluation with layers in the order of substrate, cyan ink layer, and magenta ink layer.

In addition, the yellow ink was used instead of magenta ink, and printed under the same conditions to obtain a printed matter for evaluation with layers in the order of substrate, cyan ink layer, and yellow ink layer.

Furthermore, the magenta ink was used instead of cyan ink, and the yellow ink was used instead of magenta ink, and printed under the same conditions to obtain a printed matter for evaluation with layers in the order of substrate, magenta ink layer, and yellow ink layer.

For the obtained printed matter, the density values of the solid color areas (yellow, magenta A, magenta B, and cyan) of the printed matter were measured using a Gretag Macbeth D196. In addition, a SpectroEye manufactured by Gretag Macbeth was used as the measuring device to measure the colorimetric values of the solid color areas and

overprint areas under the following conditions: D50 light source, 2-degree observer angle, white backing (using a standard white plate), and without filters.

In a two-dimensional space with a* as the horizontal axis and b* as the vertical axis, the a* versus b* values for a total of 6 or 7 colors, including solid color areas (yellow, magenta A, magenta B, and cyan), and solid color overprint areas (yellow × cyan, cyan × magenta A, yellow × magenta B, or yellow × magenta A) were plotted, and the area was calculated. The area ratio was calculated with the area of Comparative Example FS-1 serving as the reference as 100%, and the area ratio was evaluated according to the following criteria. The results are shown in Table 26. The practical level is 3 or higher.

(Evaluation Criteria)

6: The area ratio is 115% or higher
5: The area ratio is 110% or higher and less than 115%
4: The area ratio is 105% or higher and less than 110%
3: The area ratio is 100% or higher and less than 105%
2: The area ratio is 98% or higher and less than 100%
1: The area ratio is less than 98%

[Light Resistance Evaluation 1]

(Ultraviolet Irradiation Test Using Fade-O-Meter)

The printed matter obtained as described above was subjected to ultraviolet irradiation for 48 hours using a Fade-O-Meter (ultraviolet carbon arc lamp type light resistance tester), and colorimetric measurements were performed after the test in the same manner as described above. The ultraviolet irradiation conditions followed JIS L0842:2004 and JIS B7751:2007.

(Gamut)

Using the printed matter after the ultraviolet irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the ultraviolet irradiation test by the area of the initial evaluation. The area ratio was evaluated according to the following criteria. The results are shown in Table 26. The practical level is 3 or higher.

(Evaluation Criteria)

6: The area ratio is 98% or higher
5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the ultraviolet irradiation test was determined and evaluated according to the following criteria. The results are shown in Table 26. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the ultraviolet irradiation test was determined and evaluated according to the following criteria. The results are shown in Table 26. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5
5: ΔH* is 0.5 or higher and less than 0.75
4: ΔH* is 0.75 or higher and less than 1.0
3: ΔH* is 1.0 or higher and less than 1.5
2: ΔH* is 1.5 or higher and less than 3.0
1: ΔH* is 3.0 or higher

[Light Resistance Evaluation 2]

(White LED Irradiation Test)

The printed matter obtained as described above was subjected to a white LED irradiation test according to the following test method. After the test, colorimetric measurements were performed in the same manner as described above, and the stability of the hue under white LED irradiation was evaluated.

(Test Method)

Tester: Illuminated incubator FLI-2010H-LED (manufactured by Tokyo Rikakikai)
Light source: White LED
Illuminance: 15000 Lux
Irradiation temperature: 10°C
Irradiation humidity: 70% RH
Irradiation duration: 96 hours

(Gamut)

Using the printed matter after the white LED irradiation test, colorimetric measurements were performed on the solid color areas and overprint areas in the same manner as the initial gamut evaluation method. The a* versus b* values were plotted, and the area was calculated. For each example and comparative example, the area ratio was calculated by dividing the area after the white LED irradiation test by the area of the initial evaluation. The area ratio was evaluated according to the following criteria. The results are shown in Table 27. The practical level is 3 or higher.

(Evaluation Criteria)

6: The area ratio is 98% or higher

5: The area ratio is 97.5% or higher and less than 98%
4: The area ratio is 97% or higher and less than 97.5%
3: The area ratio is 96.5% or higher and less than 97%
2: The area ratio is 96% or higher and less than 96.5%
1: The area ratio is less than 96%

(Color Difference ΔE*ab)

Based on the colorimetric results of the solid color areas (yellow, magenta A, magenta B, and cyan), the color difference ΔE*ab before and after the white LED irradiation test was determined and evaluated according to the following criteria. The results are shown in Table 27. The practical level is 3 or higher.

(Evaluation Criteria)

6: ΔE*ab is less than 1.0
5: ΔE*ab is 1.0 or higher and less than 1.5
4: ΔE*ab is 1.5 or higher and less than 2.0
3: ΔE*ab is 2.0 or higher and less than 3.0
2: ΔE*ab is 3.0 or higher and less than 5.0
1: ΔE*ab is 5.0 or higher

(Hue Difference ΔH*)

Based on the colorimetric results of the solid color overprint areas (yellow × cyan, cyan × magenta A, yellow × magenta B, or yellow × magenta A), the hue difference ΔH* before and after the white LED irradiation test was determined and evaluated according to the following criteria. The results are shown in Table 27. The practical level is 3 or higher. In addition, when the hue angle (H°) after the test was larger than the H° before the test, "+" was added, and when the hue angle (H°) after the test was smaller than the H° before the test, "-" was added.

(Evaluation Criteria)

6: ΔH* is less than 0.5

5: ΔH* is 0.5 or higher and less than 0.75

4: ΔH* is 0.75 or higher and less than 1.0

3: ΔH* is 1.0 or higher and less than 1.5

2: ΔH* is 1.5 or higher and less than 3.0

1: ΔH* is 3.0 or higher

[Table 26-1]

| Table 26-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-1 | 6 | 6 | 6 | 6 | 6 | 6 | 6+ | 6- | 6+ | - |
| Example FS-2 | 6 | 6 | 6 | 6 | 6 | 6 | 6+ | 6- | 6+ | - |
| Example FS-3 | 6 | 6 | 6 | 6 | 6 | 6 | 6+ | 6- | 6+ | - |

(continued)

| Table 26-1 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-4 | 6 | 6 | 6 | 6 | 6 | 6 | 6+ | 6- | 6+ | - |
| Example FS-5 | 6 | 4 | 4 | 6 | 6 | 6 | 5+ | 6- | 5- | - |
| Example FS-6 | 4 | 4 | 4 | 6 | 6 | 6 | 5+ | 6- | 5- | - |
| Example FS-7 | 3 | 3 | 3 | 6 | 6 | 6 | 3+ | 6- | 3- | - |
| Example FS-8 | 4 | 4 | 4 | 6 | 6 | 6 | 5+ | 6- | 5- | - |
| Example FS-9 | 4 | 4 | 4 | 6 | 6 | 6 | 5+ | 6- | 5- | - |
| Example FS-10 | 4 | 4 | 4 | 6 | 6 | 6 | 5+ | 6- | 5- | - |
| Example FS-11 | 5 | 5 | 5 | 6 | 6 | 6 | 5+ | 6- | 5- | - |
| Example FS-12 | 5 | 5 | 5 | 6 | 6 | 6 | 5+ | 6- | 5- | - |
| Example FS-13 | 6 | 6 | 6 | 6 | 6 | 6 | 6+ | 6- | 6+ | - |
| Example FS-14 | 5 | 6 | 6 | 6 | 6 | 6 | 6+ | 6- | 6+ | - |
| Example FS-15 | 4 | 5 | 5 | 6 | 6 | 6 | 5+ | 6- | 5- | - |
| Example FS-16 | 4 | 5 | 5 | 6 | 6 | 6 | 5+ | 6- | 5- | - |
| Example FS-17 | 6 | 6 | 6 | 6 | 6 | 6 | 6+ | 6- | 6+ | - |
| Example FS-18 | 5 | 5 | 5 | 6 | 6 | 6 | 5+ | 6- | 5- | - |
| Example FS-19 | 4 | 4 | 4 | 6 | 6 | 6 | 5+ | 6- | 5- | - |
| Example FS-20 | 5 | 6 | 6 | 6 | 6 | 6 | 6+ | 6- | 6+ | - |
| Example FS-21 | 3 | 6 | 6 | 6 | 6 | 6 | 6+ | 6- | 6- | - |
| Example FS-22 | 4 | 5 | 5 | 6 | 6 | 6 | 5+ | 6- | 5- | - |
| Example FS-23 | 5 | 4 | 4 | 6 | 6 | 6 | 4+ | 6- | 4- | - |
| Example FS-24 | 5 | 3 | 3 | 6 | 6 | 6 | 3+ | 6- | 3- | - |
| Example FS-25 | 6 | 6 | 6 | 6 | 6 | 6 | 6+ | 6- | 6- | - |
| Example FS-26 | 3 | 6 | 6 | 6 | 6 | 6 | 6+ | 6- | 6+ | - |
| Example FS-27 | 3 | 4 | 6 | 4 | 6 | 6 | 4+ | 4- | 6+ | - |
| Example FS-28 | 3 | 4 | 6 | 4 | 6 | 6 | 4+ | 4- | 6+ | - |
| Example FS-29 | 6 | 6 | 6 | 6 | 6 | 6 | 6+ | 6- | 6+ | - |
| Example FS-30 | 4 | 6 | 6 | 6 | 6 | 6 | 6+ | 6- | 6+ | - |
| Example FS-31 | 5 | 6 | 6 | 6 | 6 | 6 | 6+ | 6- | 6+ | - |
| Example FS-32 | 5 | 5 | 6 | 6 | 5 | 6 | 6+ | 5- | 6+ | - |
| Example FS-33 | 4 | 4 | 6 | 6 | 4 | 6 | 6+ | 4- | 6+ | - |
| Example FS-34 | 6 | 6 | 6 | 6 | 6 | 6 | 6+ | 6- | 6+ | - |
| Example FS-35 | 5 | 5 | 6 | 6 | 5 | 6 | 6+ | 5- | 6+ | - |
| Example FS-36 | 4 | 6 | 6 | 6 | 6 | 6 | 6+ | 6- | 6+ | - |
| Example FS-37 | 5 | 5 | 6 | 6 | 5 | 6 | 6+ | 5- | 6+ | - |
| Example FS-38 | 5 | 4 | 6 | 6 | 4 | 6 | 6+ | 4- | 6+ | - |
| Example FS-39 | 4 | 6 | 6 | 6 | 6 | 6 | 6+ | 6- | 6+ | - |
| Example FS-40 | 3 | 6 | 6 | 6 | 6 | 6 | 6+ | 6- | 6+ | - |

[Table 26-2]

| Table 26-2 | Initial gamut | Light resistance 1 (carbon arc) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-41 | 4 | 5 | 6 | 6 | 6 | 5 | 6+ | 6- | 5+ | - |
| Example FS-42 | 4 | 5 | 6 | 6 | 6 | 5 | 6+ | 6- | 5+ | - |
| Example FS-43 | 5 | 4 | 6 | 6 | 6 | 4 | 6+ | 6- | 4+ | - |
| Example FS-44 | 5 | 4 | 6 | 6 | 6 | 4 | 6+ | 6- | 4+ | - |
| Example FS-45 | 5 | 4 | 6 | 6 | 6 | 4 | 6+ | 6- | 4+ | - |
| Example FS-46 | 6 | 6 | 6 | 6 | 6 | 6 | 6+ | 6- | 6+ | - |
| Example FS-47 | 5 | 5 | 6 | 6 | 6 | 5 | 6+ | 6- | 5+ | - |
| Example FS-48 | 5 | 4 | 6 | 6 | 6 | 4 | 6+ | 6- | 4+ | - |
| Example FS-49 | 5 | 4 | 6 | 6 | 6 | 4 | 6+ | 6- | 4+ | - |
| Example FS-50 | 5 | 3 | 6 | 6 | 6 | 3 | 6+ | 6- | 3+ | - |
| Example FS-51 | 4 | 5 | 6 | 6 | 6 | 5 | 6+ | 6- | 5+ | - |
| Example FS-52 | 5 | 5 | 6 | 6 | 6 | 5 | 6+ | 6- | 5+ | - |
| Example FS-53 | 5 | 4 | 6 | 6 | 6 | 4 | 6+ | 6- | 4+ | - |
| Example FS-54 | 4 | 5 | 6 | 6 | 6 | 5 | 6+ | 6- | 5+ | - |
| Example FS-55 | 5 | 5 | 6 | 6 | 6 | 5 | 6+ | 6- | 5+ | - |
| Example FS-56 | 5 | 4 | 6 | 6 | 6 | 4 | 6+ | 6- | 4+ | - |
| Example FS-57 | 5 | 4 | 6 | 6 | 6 | 4 | 6+ | 6- | 4+ | - |
| Example FS-58 | 4 | 5 | 6 | 6 | 6 | 5 | 6+ | 6- | 5+ | - |
| Example FS-59 | 3 | 5 | 6 | 6 | 6 | 5 | 6+ | 6- | 5+ | - |
| Example FS-60 | 3 | 5 | 6 | 6 | 6 | 5 | 6+ | 6- | 5+ | - |
| Example FS-61 | 5 | 5 | 6 | 6 | 6 | 5 | 6+ | 6- | 5+ | - |
| Example FS-62 | 4 | 5 | 6 | 6 | 6 | 5 | 6+ | 6- | 5+ | - |
| Example FS-63 | 4 | 5 | 6 | 6 | 6 | 5 | 6+ | 6- | 5+ | - |
| Example FS-64 | 5 | 5 | 6 | 6 | 6 | 5 | 6+ | 6- | 5+ | - |
| Example FS-65 | 5 | 4 | 6 | 6 | 6 | 4 | 6+ | 6- | 4+ | - |
| Example FS-66 | 5 | 5 | 6 | 6 | 6 | 5 | 6+ | 6- | 5+ | - |
| Example FS-67 | 5 | 4 | 6 | 6 | 6 | 4 | 6+ | 6- | 4+ | - |
| Example FS-68 | 4 | 5 | 6 | 6 | 6 | 5 | 6+ | 6- | 5+ | - |
| Example FS-69 | 4 | 5 | 6 | 6 | 6 | 5 | 6+ | 6- | 5+ | - |
| Example FS-70 | 6 | 6 | 6 | 6 | 6 | 6 | 6+ | 6- | 6+ | - |
| Example FS-71 | 5 | 5 | 6 | 6 | 6 | 5 | 6+ | 6- | 5+ | - |
| Example FS-72 | 5 | 5 | 6 | 6 | 6 | 5 | 6+ | 6- | 5+ | - |
| Comparative Example FS-1 | Reference | 1 | 1 | 6 | 2 | - | 1+ | 2- | - | 1- |
| Comparative Example FS-2 | 2 | 1 | 1 | 6 | 2 | - | 1+ | 2- | - | 1- |
| Comparative Example FS-3 | 1 | 1 | 2 | 6 | 2 | - | 2+ | 2- | - | 2- |
| Comparative Example FS-4 | 1 | 1 | 2 | 6 | 2 | - | 2+ | 2- | - | 2- |
| Comparative Example FS-5 | 2 | 1 | 1 | 6 | 6 | - | 1+ | 6- | - | 1- |

(continued)

| Table 26-2 | Initial gamut | Light resistance 1 (carbon arc) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Comparative Example FS-6 | 1 | 1 | 1 | 6 | 6 | - | 1+ | 5- | - | 1- |
| Comparative Example FS-7 | 4 | 1 | 1 | 6 | 6 | 2 | 1+ | 6- | 1- | - |
| Comparative Example FS-8 | 4 | 1 | 1 | 6 | 2 | 6 | 1+ | 2- | 6+ | - |

[Table 27-1]

| Table 27-1 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-1 | 6 | 6 | 6 | 6 | 6 | 6 | 6+ | 6- | 6+ | - |
| Example FS-2 | 6 | 6 | 6 | 6 | 6 | 6 | 6+ | 6- | 6+ | - |
| Example FS-3 | 6 | 6 | 6 | 6 | 6 | 6 | 6+ | 6- | 6+ | - |
| Example FS-4 | 6 | 6 | 6 | 6 | 6 | 6 | 6+ | 6- | 6+ | - |
| Example FS-5 | 6 | 4 | 4 | 6 | 6 | 6 | 5+ | 6- | 5- | - |
| Example FS-6 | 4 | 4 | 4 | 6 | 6 | 6 | 5+ | 6- | 5- | - |
| Example FS-7 | 3 | 3 | 3 | 6 | 6 | 6 | 3+ | 6- | 3- | - |
| Example FS-8 | 4 | 4 | 4 | 6 | 6 | 6 | 5+ | 6- | 5- | - |
| Example FS-9 | 4 | 4 | 4 | 6 | 6 | 6 | 5+ | 6- | 5- | - |
| Example FS-10 | 4 | 4 | 4 | 6 | 6 | 6 | 5+ | 6- | 5- | - |
| Example FS-11 | 5 | 5 | 5 | 6 | 6 | 6 | 5+ | 6- | 5- | - |
| Example FS-12 | 5 | 5 | 5 | 6 | 6 | 6 | 5+ | 6- | 5- | - |
| Example FS-13 | 6 | 6 | 6 | 6 | 6 | 6 | 6+ | 6- | 6+ | - |
| Example FS-14 | 5 | 6 | 6 | 6 | 6 | 6 | 6+ | 6- | 6+ | - |
| Example FS-15 | 4 | 5 | 5 | 6 | 6 | 6 | 5+ | 6- | 5- | - |
| Example FS-16 | 4 | 5 | 5 | 6 | 6 | 6 | 5+ | 6- | 5- | - |
| Example FS-17 | 6 | 6 | 6 | 6 | 6 | 6 | 6+ | 6- | 6+ | - |
| Example FS-18 | 5 | 5 | 5 | 6 | 6 | 6 | 5+ | 6- | 5- | - |
| Example FS-19 | 4 | 4 | 4 | 6 | 6 | 6 | 5+ | 6- | 5- | - |
| Example FS-20 | 5 | 6 | 6 | 6 | 6 | 6 | 6+ | 6- | 6+ | - |
| Example FS-21 | 3 | 6 | 6 | 6 | 6 | 6 | 6+ | 6- | 6- | - |
| Example FS-22 | 4 | 5 | 5 | 6 | 6 | 6 | 5+ | 6- | 5- | - |
| Example FS-23 | 5 | 4 | 4 | 6 | 6 | 6 | 4+ | 6- | 4- | - |
| Example FS-24 | 5 | 3 | 3 | 6 | 6 | 6 | 3+ | 6- | 3- | - |
| Example FS-25 | 6 | 6 | 6 | 6 | 6 | 6 | 6+ | 6- | 6- | - |
| Example FS-26 | 3 | 6 | 6 | 6 | 6 | 6 | 6+ | 6- | 6+ | - |
| Example FS-27 | 3 | 4 | 6 | 4 | 6 | 6 | 4+ | 4- | 6+ | - |
| Example FS-28 | 3 | 4 | 6 | 4 | 6 | 6 | 4+ | 4- | 6+ | - |
| Example FS-29 | 6 | 6 | 6 | 6 | 6 | 6 | 6+ | 6- | 6+ | - |

(continued)

| Table 27-1 | Initial gamut | Light resistance 2 (white LED) | | | | | | | | | |
|---|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-30 | 4 | 6 | 6 | 6 | 6 | 6 | 6+ | 6- | 6+ | - |
| Example FS-31 | 5 | 6 | 6 | 6 | 6 | 6 | 6+ | 6- | 6+ | - |
| Example FS-32 | 5 | 5 | 6 | 6 | 5 | 6 | 6+ | 5- | 6+ | - |
| Example FS-33 | 4 | 4 | 6 | 6 | 4 | 6 | 6+ | 4- | 6+ | - |
| Example FS-34 | 6 | 6 | 6 | 6 | 6 | 6 | 6+ | 6- | 6+ | - |
| Example FS-35 | 5 | 5 | 6 | 6 | 5 | 6 | 6+ | 5- | 6+ | - |
| Example FS-36 | 4 | 6 | 6 | 6 | 6 | 6 | 6+ | 6- | 6+ | - |
| Example FS-37 | 5 | 5 | 6 | 6 | 5 | 6 | 6+ | 5- | 6+ | - |
| Example FS-38 | 5 | 4 | 6 | 6 | 4 | 6 | 6+ | 4- | 6+ | - |
| Example FS-39 | 4 | 6 | 6 | 6 | 6 | 6 | 6+ | 6- | 6+ | - |
| Example FS-40 | 3 | 6 | 6 | 6 | 6 | 6 | 6+ | 6- | 6+ | - |

[Table 27-2]

| Table 27-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-41 | 4 | 5 | 6 | 6 | 6 | 5 | 6+ | 6- | 5+ | - |
| Example FS-42 | 4 | 5 | 6 | 6 | 6 | 5 | 6+ | 6- | 5+ | - |
| Example FS-43 | 5 | 4 | 6 | 6 | 6 | 4 | 6+ | 6- | 4+ | - |
| Example FS-44 | 5 | 4 | 6 | 6 | 6 | 4 | 6+ | 6- | 4+ | - |
| Example FS-45 | 5 | 4 | 6 | 6 | 6 | 4 | 6+ | 6- | 4+ | - |
| Example FS-46 | 6 | 6 | 6 | 6 | 6 | 6 | 6+ | 6- | 6+ | - |
| Example FS-47 | 5 | 5 | 6 | 6 | 6 | 5 | 6+ | 6- | 5+ | - |
| Example FS-48 | 5 | 4 | 6 | 6 | 6 | 4 | 6+ | 6- | 4+ | - |
| Example FS-49 | 5 | 4 | 6 | 6 | 6 | 4 | 6+ | 6- | 4+ | - |
| Example FS-50 | 5 | 3 | 6 | 6 | 6 | 3 | 6+ | 6- | 3+ | - |
| Example FS-51 | 4 | 5 | 6 | 6 | 6 | 5 | 6+ | 6- | 5+ | - |
| Example FS-52 | 5 | 5 | 6 | 6 | 6 | 5 | 6+ | 6- | 5+ | - |
| Example FS-53 | 5 | 4 | 6 | 6 | 6 | 4 | 6+ | 6- | 4+ | - |
| Example FS-54 | 4 | 5 | 6 | 6 | 6 | 5 | 6+ | 6- | 5+ | - |
| Example FS-55 | 5 | 5 | 6 | 6 | 6 | 5 | 6+ | 6- | 5+ | - |
| Example FS-56 | 5 | 4 | 6 | 6 | 6 | 4 | 6+ | 6- | 4+ | - |
| Example FS-57 | 5 | 4 | 6 | 6 | 6 | 4 | 6+ | 6- | 4+ | - |
| Example FS-58 | 4 | 5 | 6 | 6 | 6 | 5 | 6+ | 6- | 5+ | - |
| Example FS-59 | 3 | 5 | 6 | 6 | 6 | 5 | 6+ | 6- | 5+ | - |
| Example FS-60 | 3 | 5 | 6 | 6 | 6 | 5 | 6+ | 6- | 5+ | - |
| Example FS-61 | 5 | 5 | 6 | 6 | 6 | 5 | 6+ | 6- | 5+ | - |

(continued)

| Table 27-2 | Initial gamut | Light resistance 2 (white LED) | | | | | | | | |
|---|---|---|---|---|---|---|---|---|---|---|
| | | Gamut | ΔE | | | | ΔH | | | |
| | | | Y | C | MA | MB | Y×C | C×MA | Y×MB | Y×MA |
| Example FS-62 | 4 | 5 | 6 | 6 | 6 | 5 | 6+ | 6- | 5+ | - |
| Example FS-63 | 4 | 5 | 6 | 6 | 6 | 5 | 6+ | 6- | 5+ | - |
| Example FS-64 | 5 | 5 | 6 | 6 | 6 | 5 | 6+ | 6- | 5+ | - |
| Example FS-65 | 5 | 4 | 6 | 6 | 6 | 4 | 6+ | 6- | 4+ | - |
| Example FS-66 | 5 | 5 | 6 | 6 | 6 | 5 | 6+ | 6- | 5+ | - |
| Example FS-67 | 5 | 4 | 6 | 6 | 6 | 4 | 6+ | 6- | 4+ | - |
| Example FS-68 | 4 | 5 | 6 | 6 | 6 | 5 | 6+ | 6- | 5+ | - |
| Example FS-69 | 4 | 5 | 6 | 6 | 6 | 5 | 6+ | 6- | 5+ | - |
| Example FS-70 | 6 | 6 | 6 | 6 | 6 | 6 | 6+ | 6- | 6+ | - |
| Example FS-71 | 5 | 5 | 6 | 6 | 6 | 5 | 6+ | 6- | 5+ | - |
| Example FS-72 | 5 | 5 | 6 | 6 | 6 | 5 | 6+ | 6- | 5+ | - |
| Comparative Example FS-1 | Reference | 1 | 2 | 6 | 1 | - | 2+ | 1- | - | 1+ |
| Comparative Example FS-2 | 2 | 1 | 2 | 6 | 1 | - | 2+ | 1- | - | 1+ |
| Comparative Example FS-3 | 1 | 1 | 2 | 6 | 1 | - | 2+ | 1- | - | 1+ |
| Comparative Example FS-4 | 1 | 1 | 2 | 6 | 1 | - | 2+ | 1- | - | 1+ |
| Comparative Example FS-5 | 2 | 1 | 2 | 6 | 6 | - | 2+ | 6- | - | 1- |
| Comparative Example FS-6 | 1 | 1 | 2 | 6 | 6 | - | 2+ | 5- | - | 1- |
| Comparative Example FS-7 | 4 | 1 | 2 | 6 | 6 | 1 | 2+ | 6- | 1+ | - |
| Comparative Example FS-8 | 4 | 1 | 2 | 6 | 1 | 6 | 2+ | 1- | 6+ | - |

In Table 26 and Table 27, Y represents the solid color area of yellow, C represents the solid color area of cyan, MA represents the solid color area of magenta A, and MB represents the solid color area of magenta B. Additionally, Y×C represents the solid color overprint area of yellow × cyan, C×MA represents the solid color overprint area of cyan × magenta A, Y×MB represents the solid color overprint area of yellow × magenta B, and Y×MA represents the solid color overprint area of yellow × magenta A.

From the results in Table 26 and Table 27, it was confirmed that the active energy ray curable flexo printing ink set, which is an embodiment of the present invention, has high color reproducibility and good light resistance. In particular, when using a yellow ink including isoindoline compound (4) or isoindoline compound (5), the color reproducibility was higher and the light resistance was better. Additionally, when using a yellow ink including C.I. Pigment Yellow 180 with an optimal particle diameter, the color reproducibility was higher and the light resistance was better.

Moreover, when using a cyan ink including C.I. Pigment Blue 15:3 or C.I. Pigment Blue 15:4, the color reproducibility was higher and the light resistance was better.

Furthermore, when using magenta ink A including C.I. Pigment Red 122 with an optimal particle diameter or C.I. Pigment Violet 19 with an optimal particle diameter, the color reproducibility was higher and the light resistance was better.

Additionally, when using magenta ink B including DPP pigment with an optimal particle diameter or perylene pigment with an optimal particle diameter, the color reproducibility was higher and the light resistance was better.

In particular, in the yellow × magenta region, the printing ink set of the comparative example showed a significant change in hue towards blue (decrease in hue angle) in the light resistance test with ultraviolet irradiation, while in the light resistance test with white LED irradiation, the hue changed significantly towards yellow (increase in hue angle). In other words, it can be understood that the printing ink set of the comparative example exhibits different hue changes over time depending on the light source, making it difficult to obtain sufficient light resistance. In contrast, it can be understood that the printing ink set of the embodiment of the present invention achieves good light resistance regardless of the light source.

## Claims

**1.** A printing ink set, comprising:

a yellow ink comprising an isoindoline compound represented by following general formula (1) or C.I. Pigment Yellow 180 and a dispersion medium;
a cyan ink comprising a phthalocyanine pigment and a dispersion medium;
a magenta ink A comprising C.I. Pigment Red 122 or C.I. Pigment Violet 19 and a dispersion medium; and
a magenta ink B comprising a diketopyrrolopyrrole pigment represented by following general formula (101) or a perylene pigment represented by following general formula (201) and a dispersion medium,

[Chemical Formula 1]

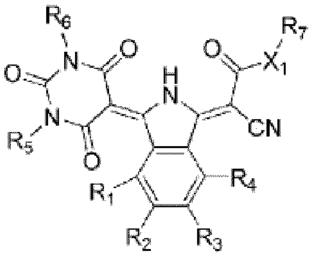

(1)

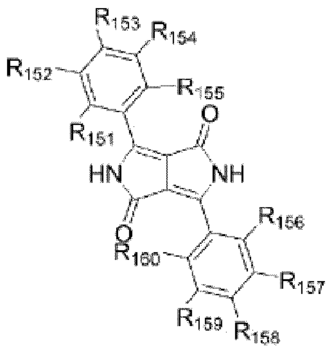

(101)

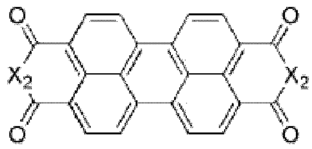

(201)

[in general formula (1), $R_1$ to $R_4$ each independently represent a hydrogen atom, an alkyl group, or an alkoxy group; $R_5$ and $R_6$ each independently represent a hydrogen atom or an alkyl group; $X_1$ represents -O- or -NH-; $R_7$ represents a hydrogen atom, an alkyl group, or an aryl group,
in general formula (101), $R_{151}$ to $R_{160}$ each independently represent a hydrogen atom, a halogen atom, an alkyl group, an alkoxy group, an alkylthio group, a cyano group, or an aryl group,
in general formula (201), $X_2$ represents -O- or -$NR_{201}$-; and $R_{201}$ represents a hydrogen atom, an alkyl group, or an aryl group which may have a substituent.]

**2.** The printing ink set according to claim 1, wherein the isoindoline compound represented by the general formula (1) comprises at least one compound selected from a group consisting of following formulas (4) and (5).

[Chemical Formula 2]

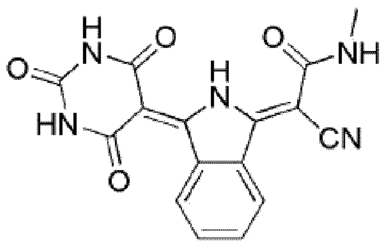

(4)

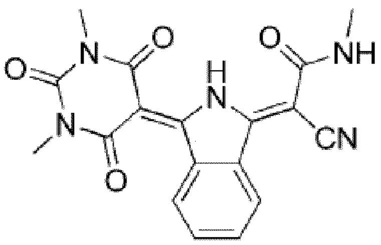

(5)

**3.** The printing ink set according to claim 1, which is used for gravure printing.

**4.** The printing ink set according to claim 1, which is used for flexo printing.

**5.** A printed matter, having a substrate and a printing layer formed from the printing ink set according to any one of claims 1 to 4.

**6.** A packaging material, comprising the printed matter according to claim 5.

**7.** A printed matter, having at least four types of image areas comprising yellow, cyan, and two types of magenta on a substrate, the printed matter comprising:

a yellow image area comprising an isoindoline compound represented by following general formula (1) or C.I. Pigment Yellow 180 and a dispersion medium;
a cyan image area comprising a phthalocyanine pigment and a dispersion medium;
a magenta image area A comprising C.I. Pigment Red 122 or C.I. Pigment Violet 19 and a dispersion medium; and
a magenta image area B comprising a diketopyrrolopyrrole pigment represented by following general formula (101) or a perylene pigment represented by following general formula (201) and a dispersion medium,

[Chemical Formula 3]

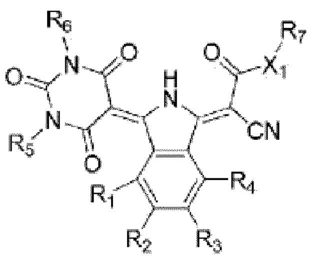

(1)

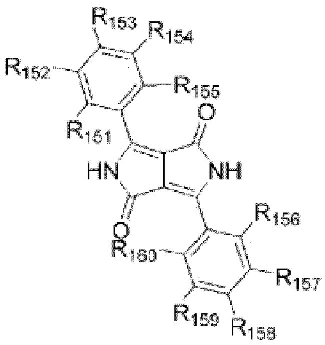

(101)

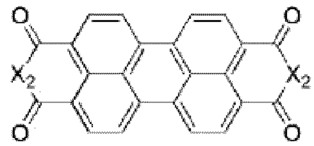

(201)

[in general formula (1), $R_1$ to $R_4$ each independently represent a hydrogen atom, an alkyl group, or an alkoxy group; $R_5$ and $R_6$ each independently represent a hydrogen atom or an alkyl group; $X_1$ represents -O- or -NH-; $R_7$ represents a hydrogen atom, an alkyl group, or an aryl group,
in general formula (101), $R_{151}$ to $R_{160}$ each independently represent a hydrogen atom, a halogen atom, an alkyl group, an alkoxy group, an alkylthio group, a cyano group, or an aryl group,
in general formula (201), $X_2$ represents -O- or -$NR_{201}$-; and $R_{201}$ represents a hydrogen atom, an alkyl group, or an aryl group which may have a substituent.]

**8.** A packaging material, comprising the printed matter according to claim 7.

## INTERNATIONAL SEARCH REPORT

International application No.
**PCT/JP2023/030996**

### A. CLASSIFICATION OF SUBJECT MATTER

***C09D 11/037***(2014.01)i; ***B41M 1/04***(2006.01)i; ***B41M 1/10***(2006.01)i; ***B41M 1/30***(2006.01)i
FI: C09D11/037; B41M1/30 D; B41M1/10; B41M1/04

According to International Patent Classification (IPC) or to both national classification and IPC

### B. FIELDS SEARCHED

Minimum documentation searched (classification system followed by classification symbols)

C09D11/037; B41M1/04; B41M1/10; B41M1/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-351928 A (EASTMAN KODAK CO.) 19 December 2000 (2000-12-19) entire text, all drawings | 1-8 |
| A | JP 2007-186697 A (SEIKO EPSON CORP.) 26 July 2007 (2007-07-26) entire text, all drawings | 1-8 |
| A | JP 2009-173853 A (SEIKO EPSON CORP.) 06 August 2009 (2009-08-06) entire text, all drawings | 1-8 |
| A | WO 2005/111159 A1 (SEIKO EPSON CORP.) 24 November 2005 (2005-11-24) entire text, all drawings | 1-8 |
| A | JP 2015-161887 A (RICOH CO., LTD.) 07 September 2015 (2015-09-07) entire text, all drawings | 1-8 |
| A | JP 2009-203333 A (FUJIFILM CORP.) 10 September 2009 (2009-09-10) entire text, all drawings | 1-8 |
| A | JP 2009-209270 A (FUJIFILM CORP.) 17 September 2009 (2009-09-17) entire text, all drawings | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2023** | **31 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/030996

C. DOCUMENTS CONSIDERED TO BE RELEVANT

| Category* | Citation of document, with indication, where appropriate, of the relevant passages | Relevant to claim No. |
|---|---|---|
| A | JP 2018-123182 A (DAINIPPON TORYO CO., LTD.) 09 August 2018 (2018-08-09) entire text, all drawings | 1-8 |

Form PCT/ISA/210 (second sheet) (January 2015)

**INTERNATIONAL SEARCH REPORT**
**Information on patent family members**

International application No.
**PCT/JP2023/030996**

| Patent document cited in search report | Publication date (day/month/year) | Patent family member(s) | Publication date (day/month/year) |
|---|---|---|---|
| JP 2000-351928 A | 19 December 2000 | US 6152999 B1<br>entire text, all drawings<br>EP 1048702 A1 | |
| JP 2007-186697 A | 26 July 2007 | US 2004/0103818 A1<br>entire text, all drawings<br>EP 1403334 A1<br>CN 1464900 A | |
| JP 2009-173853 A | 06 August 2009 | US 2009/0169834 A1<br>entire text, all drawings<br>EP 2075292 A1<br>CN 101469150 A | |
| WO 2005/111159 A1 | 24 November 2005 | US 2008/0047463 A1<br>entire text, all drawings<br>EP 1746138 A1<br>CN 1954041 A | |
| JP 2015-161887 A | 07 September 2015 | US 2015/0248074 A1<br>entire text, all drawings<br>CN 104880917 A | |
| JP 2009-203333 A | 10 September 2009 | (Family: none) | |
| JP 2009-209270 A | 17 September 2009 | (Family: none) | |
| JP 2018-123182 A | 09 August 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012136582 A
- JP 2006070190 A
- JP 2022136010 A
- JP 2023059717 A
- JP 58210084 A
- JP 2001 A
- JP 220520 A
- WO 2009081930 A
- WO 2011052617 A
- WO 2012102399 A
- JP 2017156397 A
- JP 2007226161 A
- WO 2016163351 A
- JP 2017165820 A
- JP 5753266 B
- JP 63264674 A
- JP H09272812 A
- JP H10245501 A
- JP H10265697 A
- JP 2007079094 A
- WO 2009025325 A
- JP 48054128 A
- JP H039961 A
- JP 2000273383 A
- JP 2011162662 A
- JP 2007314785 A
- JP 61246261 A
- JP H11199796 A
- JP 2003165922 A
- JP 2003168208 A
- JP 2004217842 A
- JP 2007 A
- JP 314681 A
- JP 2009057478 A
- JP 2003167112 A
- JP 2006291194 A
- JP 2008031281 A
- JP 2012226110 A
- JP 2012208329 A
- JP 2014005439 A
- JP 2001172520 A
- JP 2012172092 A
- JP 2004 A
- JP 307854 A
- JP 2002201377 A
- JP 2003171594 A
- JP 2005181383 A
- JP 2005213404 A
- JP 2020084130 A


### Non-patent literature cited in the description


- **W. HERBST** ; **K. HUNGER**. *Industrial Organic Pigments: Production, Properties, Applications*, 1993, 467-480